(19) Europäisches Patentamt
European Patent Office
Office européen des brevets

(11) **EP 2 312 375 A1**

(12) **EUROPEAN PATENT APPLICATION**
published in accordance with Art. 153(4) EPC

(43) Date of publication:
20.04.2011 Bulletin 2011/16

(51) Int Cl.:
*G02B 27/22* (2006.01)     *H04N 13/04* (2006.01)

(21) Application number: 09797715.1

(22) Date of filing: 15.07.2009

(86) International application number:
**PCT/JP2009/003350**

(87) International publication number:
**WO 2010/007787 (21.01.2010 Gazette 2010/03)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: 15.07.2008  JP 2008184339
24.09.2008  JP 2008243659
09.10.2008  JP 2008263286
17.10.2008  JP 2008269068
25.10.2008  JP 2008298766

(71) Applicants:
• YOSHIDA, Kenji
Bunkyo-ku
Tokyo 112-0002 (JP)
• IP Solutions, Inc.
Tokyo 112-0002 (JP)

(72) Inventor: YOSHIDA, Kenji
Bunkyo-ku, Tokyo, 1120002 (JP)

(74) Representative: Dunleavy, Kevin James
Knoble & Yoshida LLC
p/o De Vries & Metman
Overschiestraat 180
1062 XK  Amsterdam (NL)

(54) **NAKED EYE THREE-DIMENSIONAL VIDEO IMAGE DISPLAY SYSTEM, NAKED EYE THREE-DIMENSIONAL VIDEO IMAGE DISPLAY DEVICE, AMUSEMENT GAME MACHINE AND PARALLAX BARRIER SHEET**

(57)     The present invention realizes a naked eye three-dimensional video image display device that alleviates a jump point. In the naked eye three-dimensional video image display device of the invention, a slit of a parallax barrier is arranged in a zigzag or curved shape and the edge of the slit has a shape of an elliptic arc, so that a moderate view mix is generated to alleviate the jump point. Since a perforated parallax barrier is designed after an area to be viewed on a pixel arrangement surface is determined, the parallax barrier can be appropriately provided with an effect of the viewmix.

FIG.16A

FIG.16B

FIG.16C

FIG.16D

Description

## CROSS REFERENCE TO RELATED APPLICATIONS

This application claims priority under EPC, Article 87 based upon Japanese Patent Application No. 2007-230776, filed on August 9, 2007.

## FIELD OF THE INVENTION

The present invention relates to a naked eye three-dimensional display technique of a parallax barrier method.

## BACKGROUND OF THE INVENTION

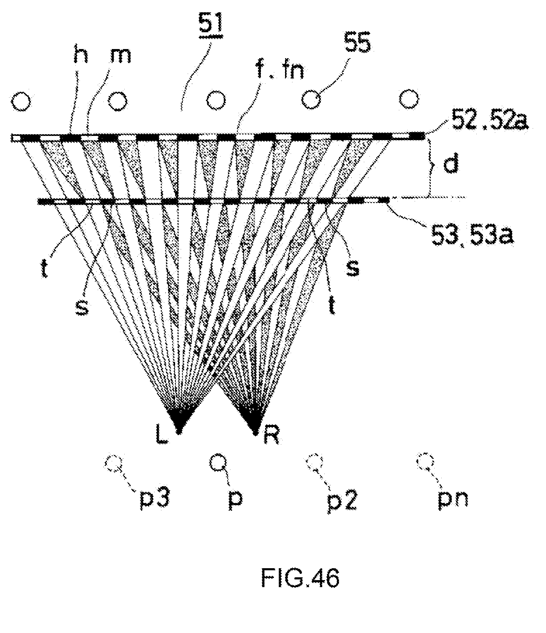

(A) As one typical three-dimensional video image display system, a three-dimensional video image display device of a parallax barrier method (51) has been known for long, as shown in Fig. 46, in which a raw image display panel (52) on which a raw image for three-dimensional image (f) where images for left and right eyes (h), (m) are drawn or imaged on a transparent film (52a) is provided is seen through a parallax barrier (53a) where a transparent part (t) and an opaque part (s) are alternatively aligned on a transparent plate (53) disposed before the raw image display panel (52) with a certain interval (d), whereby the raw image for three-dimensional image (f) can be seen as a three-dimensional video image from a viewpoint (p).

(B) In a conventional technique, a touch panel part also displays as a three-dimensional image.

(C), (E) Further, in a conventional technique, three subpixels, R, G, B, of a pixel for one viewpoint of a naked eye three-dimensional video image display device are arranged in a horizontal direction, and the edge of the corresponding slit of the parallax barrier is of a staircase pattern.

Furthermore, there is provided a technique in which, instead of arranging three subpixels in a horizontal direction, three or four R, G, B subpixels are arranged in an oblique direction. (For example, refer to Japanese Patent No. 4023626 declared on June 8, 2006)
Moreover, there is a technique in which the edge of the oblique slit of a parallax barrier is linear.

(F) In an amusement machine, such as a pachinko and a pachosro slot machine, an arcade game machine, a console game machine, or a PC game, powerful three-dimensional video images displayed depending on the playing content in addition to two-dimensional video images that are normally displayed on a monitor screen contribute encouraging a player's enthusiasm for playing the game.

Particularly, in an amusement machine, that arouses a passion for gambling, and contributes stimulating the player to continue playing the game.
In general techniques, the three-dimensional video image is displayed by providing a naked eye three-dimensional video image display unit of a parallax barrier method on an amusement machine.
(RTP-1) Conventionally, a naked eye three-dimensional display is formed by integrating a normal high definition display and a parallax barrier. A prevailing business model is manufacturing hardware and software for a naked eye three-dimensional display in house and selling them as an integrated system.

<A Method of Producing A Naked Eye Three-dimensional Display>

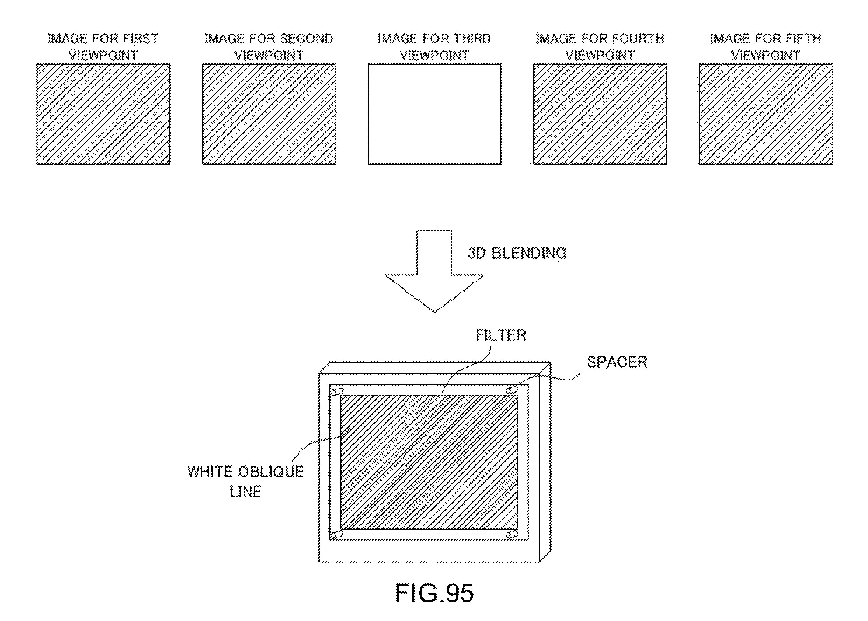

Fig. 95 shows a structure relating to the production of a naked eye three-dimensional display of a parallax barrier method. As shown in Fig. 95, the naked eye three-dimensional display is produced by providing a spacer before the normal display that displays an image and providing a reinforced glass on the back of which a parallax barrier is formed further before the spacer.
An appropriate three-dimensional effect can be attained within a predetermined area from which three-dimensional viewing is possible by providing an appropriate interval between the image display surface of the display and the parallax barrier using a spacer.
A naked eye three-dimensional display can be produced by appropriately adjusting the arrangement of the slit of the parallax barrier and the pixel for one viewpoint on the display, and then, fixing the display, spacer, and reinforced glass.

(RTP-2) Conventionally, when creating a parallax barrier, two steps are used, in which, a parallax barrier is, first, printed on a transparent thin film sheet, and the sheet is attached on a glass plate while adjusting the position.

(RTP-3) Also, since a high resolution wide display, such as a high definition display, is mainly used for the naked eye three-dimensional display, a plurality of content creators would share one naked eye three-dimensional display to check the three-dimensional effects of the content in the middle of creating the content.

(RTP-4) Further, a large naked eye three-dimensional display should be necessarily carried to make a presentation of the naked eye three-dimensional display to a customer.

Patent Documents

Japanese Unexamined Patent Application Publication No. 11-296124 (published on October 29, 1999)

Japanese Unexamined Patent Application Publication No. 2004-294861 (published on October 21, 2004)

Japanese Patent No. 4023626 (declared on June 8, 2006)

Japanese Unexamined Patent Application Publication No. 11-290520 (published on October 26, 1999)

Japanese Unexamined Patent Application Publication No. 2004-313562 (published on November 11, 2004)

Japanese Unexamined Patent Application Publication No. 2007-240559 (published on September 20, 2007)

## SUMMARY OF THE INVENTION

(B) However, there is a problem in which, if the touch panel part is also displayed as a three-dimensional image, the resolution is reduced as video images for a plurality of viewpoints are displayed, and thus, when displaying a menu for the touch panel, the menu cannot be finely displayed.

(C), (E) However, there is a weak point with the staircase patterned edge in the conventional techniques, in which, as each subpixel is a vertically long rectangle, that is, the long side is perpendicular, the edge also becomes perpendicular, and, as the result, the parallax barrier hides all the subpixels at once, and viewpoint transitions and jump points are noticeably perceived.

Further, even when using a parallax barrier with oblique slits, since an oblique line of certain obliquity angle is used to hide subpixels of vertically long rectangular shape, a delicate control to alleviate the viewpoint transitions and jump points cannot be performed.

It should be noted that the viewpoint transition refers to, for example, a transition from a state where the right eye is in visual contact with a pixel for a first viewpoint to a state where the right eye is in visual contact with a pixel for a second viewpoint.

It should be noted that the jump point refers to a place where when a subject person of image presentation moves from a place where the right eye is in visual contact with a video image for the sixth viewpoint for right eye and the left eye with a video image for the sixth viewpoint for left eye rightward to the place where the left eye is in visual contact with the video image for the sixth viewpoint for right eye and the right eye is in visual contact with the video image for the first viewpoint for left eye, thereby attaining an unappropriate three-dimensional effect. That is, a reverse phenomenon of the viewpoints.

(F) However, an amusement game machine equipped with a three-dimensional video image display device of a parallax barrier method has the following plurality of problems.

Firstly, since a three-dimensional video image strains the eyes of the player, the amusement game machine equipped with a naked eye three-dimensional video image display unit is not suitable for playing for a long period of time.

Secondly, since the parallax barrier reduces light transmission, the brightness is reduced when displaying a two-dimensional video image on a naked eye three-dimensional video image display unit.

To solve the first problem described above, Japanese Unexamined Patent Application Publication No. 2004-313562 (published on November 11, 2004) discloses a configuration to alleviate the strain on a player's eyes by making a three-dimensional video image any one of (i) less motions in images, (ii) less color saturation, (iii) less color intensity, and (iv) less sharpness, which are less stimulus to the player's eyes in terms of a visual perception than a two-dimensional video image.

According to this configuration, while the strain on the player's eyes can be relieved, there is a new problem in which the image quality and powerful effect of the three-dimensional video image is compromised.

To solve the second problem described above, Japanese Unexamined Patent Application Publication No. 2004-313562 (published on November 11, 2004) and Japanese Unexamined Patent Application Publication No. 2007-240559 (published on September 20, disclose a configuration in which light is transmitted through the entire surface of the parallax barrier when displaying a two-dimensional video image by using a liquid crystal element for the parallax barrier and controlling the liquid crystal element.

According to such a configuration, while reduction in brightness when displaying a two-dimensional video image can be prevented, the number of processes required for the production increases and the yield ratio is degraded, as the result, the increased production cost will be a new problem.

The variety of problems described above hamper the prevalence of the amusement game machines using a naked eye three-dimensional video image display unit.

The present invention solves the above described all problems at once. That is, firstly, the invention provides an amusement game machine equipped with a naked eye three-dimensional video image display unit without sacrificing the visual quality and powerful effect of a three-dimensional video image and, at the same time, without straining a player's eyes.

Secondly, the invention provides an amusement game machine equipped with a naked eye three-dimensional video image display unit that can prevent reduction of brightness when displaying a two dimensional video image and also be easily produced while keeping down the number of production processes.

Thirdly, the invention provides an amusement game machine with an added value that arouses a player's passion for gambling and encourages the player's enthusiasm for playing a game by using a naked eye three-dimensional video image display unit on an amusement game machine.

The object of the invention is to solve the above-described problems. Also, by solving the above-described problems, the object of the invention is to contribute the prevalence of amusement game machines using a naked eye three-dimensional video image display unit.

A plasma display is required to be provided with an electromagnetic wave shield made of electrically conductive material in front of the plasma panel to prevent a health hazard to a human body caused by electromagnetic waves.

Here, to produce a naked eye three-dimensional video image display device of a parallax barrier method using a plasma display, a parallax barrier is required to be provided further in front of the plasma panel, enlarging the whole device.

Further, as additional processes to produce a parallax barrier and incorporate the parallax barrier into the plasma display are additionally required, the yield of plasma display production that requires a plurality of expensive components becomes extremely degraded.

Therefore, if one component can function as both as an electromagnetic wave shield and a parallax barrier, it is convenient in a way that the number of processes can be reduced and the yield improves.

(RTP-1) However, manufacturing all the system of the naked eye three-dimensional display in house is similar to a case where the computer system market was dominated by a business model in which a major computer vender provides everything.

In the case of computer systems, productions of hardware and software are later separated and access to the market is opened, as the result, many participants to the market made the computer system production one major industry.

Likewise, the naked eye three-dimensional content related market is also expected to expand and develop by attaining participants specialized for hardware production, software production, content creation, or the like.

Further, it was difficult for a user to modify the naked eye three-dimensional display formed by integrating a parallax barrier for seeking different naked eye three-dimensional effects.

The invention is devised in consideration of the above-described problems. The object of the invention is to realize a low cost naked eye three-dimensional display by only adding a parallax barrier sheet as hardware to an existing laptop PC, television monitor, or the like, thereby realizing a parallax barrier sheet that can promote more participants who produce hardware, software and create contents to enter into the market, and expand and develop the naked eye three-dimensional display market.

Also, the invention is devised in consideration of the above-described problems. The object of the invention is to realize a parallax barrier sheet of which naked eye three-dimensional effect can be customized by a user by selecting a variety of parallax barrier sheets available in the market.

(RTP-2) However, in the process of attaching a thin film sheet printed with a parallax barrier onto a glass plate, there is a problem where the position adjustment is difficult and air bubbles are formed between the sheet and the glass plate.

The invention is devised in consideration of the above-described problem. The object of the invention is to realize a parallax barrier sheet that can be produced only by one process by directly printing a parallax barrier to the transparent plate without forming air bubbles.

(RTP-3) However, as an expensive naked eye three-dimensional display is required to be used when creating a content to check the three-dimensional effect, when a creator works from home, installing a naked eye three-dimensional display at home is financially and specially restricted.

The invention is devised in consideration of the above-described problem. The object of the invention is to increase the number of persons engaged in creating naked eye three-dimensional contents by allowing the content creators working from home to easily check three-dimensional effects of the naked eye three-dimensional contents with low cost using an existing working PC with low resolution, low processing capacity at their own home.

(RTP-4) However, it was not easy to carry around an expensive naked eye three-dimensional display to be used freely by everyone.

The invention is devised in consideration of the above-described problem. The object of the invention is to realize a parallax barrier sheet that can easily present the naked eye three-dimensional effect of a naked eye three-dimensional content at a customer's place only by carrying around, in addition to a normal mobile PC, a sheet of a parallax barrier appropriate to the screen size, resolution, processing capacity of the mobile PC.

In this way, a naked eye three-dimensional display is realized with a mobile telephone with improved resolution display, thereby realizing displaying of a naked eye three-dimensional content anytime and anywhere.

A naked eye three-dimensional video image display system of the invention comprises: a naked eye three-dimensional video image display device including a video image display unit that displays a two-dimensional video image and/or a three-dimensional video image, and a parallax barrier; and a touch panel that accepts a touch panel operation to the naked eye three-dimensional video image display device, wherein the touch panel comprises, on a glass surface, a touch surface that displays a menu video image and/or forms a menu image, and, in order to locate a position that is apart a predetermined distance required for the touch panel operation from an outer side of the glass surface within an appropriate range for three-dimensional viewing, the naked eye three-dimensional video image display device is equipped inside the glass surface with a predetermined distance from an inner side of the glass surface (that is, the distance to the appropriate range for three-dimensional viewing - the predetermined distance required for the touch panel operation).

It is preferable that the touch panel comprises, on a glass surface, a detachable thin display that forms a touch surface, for displaying a menu video image.

It is preferable that the touch panel comprises, on a glass surface, a detachable touch sheet printed with an icon, text, and the like that are formed by a photograph, graphic, or the like, as a menu image.

It is preferable that the touch panel comprises, on a glass surface, a detachable medium, paper controller or paper keyboard printed with an icon, text, and the like that are formed by a photograph, graphic, or the like, as a menu image, and the touch panel accepts a touch panel operation to the naked eye three-dimensional video image display device caused by touching and reading using an optical reading unit (a scanner) by an operator, of a dot pattern superimposed and formed on the medium, paper controller, or paper keyboard.

It is preferable that the parallax barrier is an electrically controlled parallax barrier that can electrically control ON or OFF of a parallax barrier function, turning ON the parallax barrier function when displaying a three-dimensional video image, and turning OFF the parallax barrier function when displaying a two-dimensional video image.

It is preferable that the electrically controlled parallax barrier is a liquid crystal parallax barrier that can control ON or OFF of the parallax barrier function by electrically controlling orientations of liquid crystal molecules.

It is preferable that ON or OFF of the electrically controlled parallax barrier is electrically controlled and switched based on a two-dimension/three-dimension switching instruction obtained by the video image display unit.

It is preferable that ON or OFF of the electrically controlled parallax barrier is electrically controlled and switched based on a two-dimension/three-dimension switching instruction by the touch panel operation.

The naked eye three-dimensional video image display device of the invention further comprises an imaging unit that images a nearby object, and, when the video image display unit controls a display state of the two-dimensional video image and/or three-dimensional video image, the control unit controls analyzing of the image as well as a video image captured by the imaging unit and displaying of a three-dimensional video image according to a result of the analyzing.

The naked eye three-dimensional video image display device of the invention is a naked eye three-dimensional video image display device that uses a parallax barrier, wherein an edge shape of a slit of the parallax barrier is of a shape in which elliptic arcs of a certain shape are continuously connected, the elliptic arcs correspond to pixels for one or a plurality of viewpoints that are arranged on a display and that form a viewable area to be viewed by a subject person of image presentation through the slit, and the elliptic arcs are connected on each horizontal line that divides each pixel in a horizontal direction.

The naked eye three-dimensional video image display device of the invention is a naked eye three-dimensional video image display device that uses a parallax barrier, wherein, among a plurality of slit parts and a plurality of barrier parts that comprise the parallax barrier, each of the slit parts is replaced by and made of a plurality of holes that are a visible light transmissive area and correspond to each pixel for naked eye three-dimensional display, a maximum area on a pixel arranging surface to be viewed, through the holes, by a subject person of image presentation at a best view point where the subject person of image presentation can attain a maximum naked eye three-dimensional effect, is defined as a rectangular area with a predetermined width and a predetermined height on the pixel arranging surface, the holes are arranged independently on the parallax barrier surface, a shape of the holes is a shape of an elliptic arc or a convex polygon with six or more even number vertices, the shape of the holes is a shape inscribed top, bottom, right, and left sides of an area that is a like Figure of the rectangular area and formed by intersections of a line segment that connects either left or right eye of the subject person of the image presentation at the best view point as a base point to the rectangular area with the parallax barrier surface, and an area on the pixel arranging surface that is viewed by the subject person of image presentation through the holes, with either left or right eye of the subject person of the image presentation at the best view point as a base point, forms an effective viewable area of a like Figure of the holes.

It is preferable that the parallax barrier is an electrically controlled parallax barrier that can electrically control ON or OFF of a parallax barrier function, turning ON the parallax barrier function when displaying a three-dimensional video image, and turning OFF the parallax barrier function when displaying a two-dimensional video image.

It is preferable that the electrically controlled parallax barrier is a liquid crystal parallax barrier that can control ON or OFF of the parallax barrier function by electrically controlling orientations of liquid crystal molecules.

It is preferable that ON or OFF of the electrically controlled parallax barrier is electrically controlled and switched based on a two-dimension/three-dimension switching instruction obtained by the video image display unit.

It is preferable that ON or OFF of the electrically controlled parallax barrier is electrically controlled and switched based on a two-dimension/three-dimension switching instruction by the touch panel operation.

It is preferable that the parallax barrier also functions as an electromagnetic wave shield.

It is preferable that the parallax barrier also functions as the electromagnetic wave shield by being formed of electrically conductive material.

It is preferable that the parallax barrier also functions as the electromagnetic wave shield by being formed with the electromagnetic wave shield superimposed thereon.

It is preferable that, when a length in a long axis direction of the slit or the visible light transmissive area exceeds a predetermined width required for blocking electromagnetic waves, the slit or the visible light transmissive area is divided into two or more areas by an electromagnetic wave shield.

The parallax barrier sheet of the invention is a parallax barrier sheet used with a display and attachable to and detachable from the display so that the display functions as a naked eye three-dimensional display, and the parallax barrier sheet comprises a transparent medium and a parallax barrier part formed on the transparent medium.

It is preferable that the transparent medium is made of glass or resin with a hardness that can retain planarity when being used.

It is preferable that the parallax barrier part is formed by being directly photogravured on the transparent medium.

It is preferable that the parallax barrier part is formed by, after forming the parallax barrier part on a thin film transparent sheet, adhering the thin film transparent sheet on the transparent medium.

It is preferable that a graphic, such as an advertisement, is added at least on a side of a subject person of image presentation within the parallax barrier part.

It is preferable that the parallax barrier part is black that blocks visible light.

It is preferable to further comprise a spacer for retaining an air gap (Z value) from an image display surface of the display to a mask surface of the parallax barrier, which was calculated to set an appropriate range for three-dimensional viewing and/or a best view point in relation with the naked eye three-dimensional display, between the parallax barrier and the image display surface.

It is preferable that the spacer is transparent.

It is preferable that the spacer is integratedly formed with the transparent medium using a same material as that of the transparent medium.

It is preferable that the spacer can easily change the air gap.

It is preferable that, when using the display as a normal two-dimensional display, a thickness of the spacer is adjusted to a first thickness, and, when using the display as a naked eye three-dimensional display, the thickness of the spacer is adjusted to a second thickness that is thinner than the first thickness.

It is preferable that at least part of the spacer is substituted by a thickness of the transparent medium.

It is preferable that the spacer is substituted by a frame of the display surface.

It is preferable that, when setting the appropriate range for three-dimensional viewing and/or the best view point, the parallax barrier part is formed by adjusting a width of a slit of the parallax barrier part instead of adjusting a thickness of the frame.

It is preferable that, when a slit of the parallax barrier part is formed obliquely to a horizontal line, an angle of the slit to the horizontal line is retained to always be a predetermined angle θ when attaching the parallax barrier part to the display.

It is preferable to comprise a protective unit for preventing the parallax barrier part from being scratched, peeled, and stained.

It is preferable that an index for calibration is formed on an image display surface of the display by making an image for one or two viewpoints white and an image for other viewpoints black, and calibration is performed by adjusting the index so that the index can be seen as a continuous line through a slit of the parallax barrier part.

It is preferable that a first index for calibration is formed on the transparent medium and a second index for calibration is formed on a frame of the display or an image display surface of the display, wherein, when setting the parallax barrier sheet on the display, calibration is performed by matching the first index and the second index.

It is preferable that the first index is a linear slit for calibration with a predetermined width provided horizontally and/or vertically at a predetermined position of the transparent medium, and the calibration is calibration done by adjusting a position of the transparent medium so that the second index that is a line displayed at a corresponding position on the image display surface can be seen without missing part.

The amusement game machine of the invention comprises a display unit; a naked eye three-dimensional video image display unit of a parallax barrier method including the parallax barrier according to either claim 6 or 7; a game control unit that controls a game content; an input unit that accepts operation by a player; a timer that measures elapsed time and/or continuous play time; and a video image control unit that controls an appearance count, display time, and/or popping out degree of a three-dimensional video image displayed by the naked eye three-dimensional video image display unit.

It is preferable that the video image control unit controls the appearance count, display time, and/or popping out degree of the three-dimensional video image by preparing a predetermined number of video images for naked eye three-dimensional display created by blending in advance predetermined video images for a plurality of viewpoints in accordance with a predetermined algorithm.

It is preferable that the video image control unit controls the appearance count, display time, and/or popping out degree of the three-dimensional video image by selecting a plurality of video images for respective viewpoints of a number corresponding to the parallax barrier from a plurality of video images for respective viewpoints prepared in advance and blending the selected plurality of video images in real time so that parallaxes of adjacent viewpoints become equal.

It is preferable that the video image control unit controls the appearance count, display time, and/or popping out degree of the three-dimensional video image by moving multiple cameras that are viewpoints for drawing three-dimensional computer graphics close to or apart from a drawing object and/or moving the drawing object close to or apart from the multiple cameras, or by moving positions of convergence points of the multiple cameras back and forth by changing orientations of the multiple cameras corresponding to the parallax barrier.

It is preferable that the video image control unit controls the popping out degree based on an input signal transmitted from the input unit.

It is preferable to further comprise a drive unit that moves the parallax barrier, and that the parallax barrier being a movable parallax barrier that covers at least part of a monitor surface of the display unit.

The amusement game machine of the invention comprises: a naked eye three-dimensional video image display unit of a parallax barrier method including a display unit and a movable parallax barrier using the parallax barrier according to either claim 6 or 7; a game control unit that controls a game content; an input unit that accepts operation by a player; a drive unit that moves the movable parallax barrier; and the movable parallax barrier that covers at least part of a monitor surface of the display unit.

It is preferable that the drive unit maintains a predetermined distance from the movable parallax barrier to the monitor surface by an appropriate distance maintaining unit that allows the movable parallax barrier to move up, down, and/or left, right and is disposed around the monitor surface.

It is preferable to further comprises an appropriate distance maintaining unit for maintaining a predetermined distance from the movable parallax barrier to the monitor surface, and that the movable parallax barrier is part of a rollable sheet including a transparent part to be overlaid on the monitor surface when the display unit displays a two-dimensional video image, and the drive unit rolls up the rollable sheet in up and down directions or left and right directions.

It is preferable that the appropriate distance maintaining unit comprising: a transparent planar plate that is disposed between the rollable sheet and the monitor surface; and a fixing unit that is disposed around the monitor surface and tightly fixes the rollable sheet to the transparent planar plate.

It is preferable that the transparent planer plate is provided with a plurality of fine pores, and the fixing unit is a suction unit that sucks the rollable sheet through the fine pores and tightly fixes the rollable sheet to the transparent planer plate.

It is preferable that the appropriate distance maintaining unit is a spacer and/or rail that is disposed around the monitor surface.

It is preferable that the drive unit is disposed around the monitor surface, and, depending on whether a video image displayed by the naked eye three-dimensional video image display unit is a three-dimensional video image or a two-dimensional video image, the drive unit moves the movable parallax barrier closer to the monitor surface to appropriately display a three-dimensional video image or moves the movable parallax barrier apart from the monitor surface to display a two-dimensional video image without missing part, by moving the movable parallax barrier back and forth.

It is preferable to further comprise a brightness control unit that controls brightness when displaying a three-dimensional video image.

It is preferable to further comprise a brightness control unit that controls brightness when displaying a three-dimensional video image.

It is preferable that the brightness control unit performs brightness control by increasing brightness when a video image displayed by the naked eye three-dimensional video image display unit is a three-dimensional video image, and decreasing brightness when a video image displayed by the naked eye three-dimensional video image display unit is a two-dimensional video image.

It is preferable that the brightness control is performed by controlling electrical current and/or electrical voltage supplied to a light source of the display unit.

It is preferable that the brightness control is video image color intensity calibration that increases color intensity of a video image in a three-dimensional video image area that is covered in the parallax barrier and decreases color intensity of a video image in a two-dimensional video image area that is not covered in the parallax barrier, thereby calibrating brightness difference between the three-dimensional video image area and the two-dimensional video image area due to the existence of the parallax barrier.

It is preferable that the video image color intensity calibration is calibration that performs image processing in real time to video image data temporarily stored in a frame buffer for reproducing a video image.

It is preferable to further comprise a two-dimensional video image display device for displaying a two-dimensional video image, and that the naked eye three-dimensional video image display unit displays only three-dimensional video images.

It is preferable that the naked eye three-dimensional video image display unit displays an image or video image that prompts operation, the game control unit controls a game, based on an algorithm defined in accordance with time of the operation and/or a method of the operation and an input signal transmitted from the input unit, and the video image control unit controls an appearance count, display time, and/or popping out degree of a three-dimensional video image in accordance with the control of the game by the game control unit.

It is preferable that the input unit is any one of a button, lever, slider, joystick, mouse, keyboard, jog dial, and touch panel, or a combination of a plurality thereof.

It is preferable to further comprise a detecting unit that detects a position of a ball for game and/or a trajectory of the ball for game, and that the game control unit controls a game based on a detected signal obtained from the detecting unit, and the video image control unit controls an appearance count, display time, and/or popping out degree of a three-dimensional video image in accordance with the control of the game by the game control unit.

It is preferable that the naked eye three-dimensional video image display unit displays an image or video image of a gimmick and/or decoration, and the game control unit controls a game based on: position information of a pixel of the display unit that forms the image or video image of the gimmick and/or decoration obtained from the video image control unit; and a detected signal obtained from the detecting unit.

It is preferable that the naked eye three-dimensional video image display unit is normally hidden from a player, yet appears when a predetermined appearing condition is satisfied.

It is preferable that the parallax barrier is of an arbitrary shape without being limited to a shape of the monitor screen.

It is preferable that a two-dimensional image is formed on at least part of a surface of a player side of the parallax barrier.

Advantageous Effects of the Invention

(B) As described above, as the naked eye three-dimensional video image display device of the invention comprises a video image display unit that displays two-dimensional/three-dimensional video images and a touch panel that accepts input by a user, the displayed two-dimensional/three-dimensional video image can be changed according to an instruction by a user input via the touch panel.

(C)As described above, unlike the case of a linear slit with which a displacement between the arrangement of a slit shape and the arrangement of a pixel is constant, if the arranged shape of the slit of the naked eye three-dimensional video image display device of the invention, that is, the shape of the central line of the slit, is a zigzag or a sinusoidally curved shape, displacement becomes large at some part and small at other part. That is, an advantage is provided in a zigzag or a sinusoidally curved shape that the displacement can be controlled during a half cycle during which the viewpoint passes, at a quarter cycle point, a corner of the zigzag shape or a point of maximum oscillation of the sinusoidally curved wave.

Further, by making the edge shape of the slit an elliptic arc, an advantage is provided that a moderate and adequate view mix is generated to alleviate a viewpoint transition and a jump point.

Further, as the edge shape is configured by the elliptic arc and a line segment that is part of a horizontal line dividing pixels of each line, an advantage is provided that, the clearest three-dimensional video image can be provided when a subject person of image presentation sees the three-dimensional video image in front of the device.

Further, as the areas of the view mixes positioned at left and right of the convergence point are smaller than the staircase patterned edge, an advantage is provided that the view mix in a horizontal direction is prevented to improve three-dimensional effects.

(E) In the parallax barrier of the invention, as described above, among a plurality of slit regions and a plurality of barrier regions that comprise the parallax barrier, each of the slit regions comprises, to replace a slit, a plurality of visible light transmissive areas corresponding to each pixel for naked eye three-dimensional display. The visible light transmissive areas are disposed independently from each other on the parallax barrier. The effective viewable area that is viewed through the visible light transmissive areas by either left or right eye of a subject person of image presentation at the best view point is of a shape that fits into a rectangular area defined with a predetermined width and a predetermined height in a manner the circumference of the effective viewable area being inscribed in top, bottom, left, and right sides of the rectangular area.

Therefore, as visible light transmissive areas on a parallax barrier is defined by generating a view mix, first defining a sub pixel area to be viewed by one eye at once to alleviate a jump point, and then, defining the visible light transmissive areas on the parallax barrier by back calculation, an advantage is provided that the shape of the most appropriate visible light transmissive area can be easily designed.

(F) As described above, firstly, the invention can provide an amusement game machine having a naked eye three-dimensional video image display unit that does not strain a player's eyes without compromising the image quality and powerful effect of a three-dimensional video image.

Secondly, an amusement game machine can be provided that has a naked eye three-dimensional display unit that prevents reduction of brightness when displaying a two-dimensional video image and can be easily produced by minimizing the number of processes.

Thirdly, an amusement game machine can be provided that realizes a naked eye three-dimensional video image display unit using the amusement game machine and has an additional value that arouses a player's passion for gambling and encourages the player's enthusiasm for playing a game.

(H) As described above, as the parallax barrier of the invention also functions as an electromagnetic wave shield and can be produced by one step process, a remarkable advantage is provided that a naked eye three-dimensional display using a plasma display can be easily produced.

(RTP) As described above, to have a display function as a naked eye three-dimensional display, the parallax barrier sheet of the invention is used with the display and attachable to and detachable from the display, and comprises a transparent medium and a parallax barrier formed on the transparent medium. Thus, advantages can be provided that the parallax barrier can be produced and supplied to a market separately from a naked eye three-dimensional display, and a user can use an existing low price display to see a naked eye three-dimensional video image, whereby a naked eye three-dimensional display is realized with low cost just by adding a parallax barrier sheet as additional hardware to an existing laptop PC or television monitor, a user can select a variety of parallax barrier sheets available in the market, a user can easily deliver a presentation of the naked eye three-dimension effect of a naked eye three-dimensional content at a customer's place only by carrying around, in addition to a normal mobile PC, a sheet of parallax barrier appropriate to the screen size, resolution, processing capacity of the mobile PC, naked eye three-dimensional display is possible with a mobile telephone with improved display resolution, and a naked eye three-dimensional contents can be displayed whenever and wherever.

**BRIEF DESCRIPTION OF THE DRAWINGS**

Figs. 1A to 1C show an overview of an embodiment of the invention. Fig. 1A is a block diagram of an example of a landscape-oriented floodlight unit. Fig. 1B is a block diagram of an example of a point light source type floodlight unit. Fig. 1C is a block diagram showing the configuration of the main components of a three-dimensional video image display device.

Figs. 2A to 2C show display modes of the three-dimensional video image display device of the invention. Fig. 1A is an example of "multi-view three-dimensional display mode." Fig. 2B is an example of "drawing and printing preview mode." Fig. 2C is an example of "mixed mode."

Fig. 3A to 3F show an overview of an embodiment of the invention. Fig. 3A is an example of skewered dumpling shaped slits. Fig. 3B is an example of circle shaped slits. Fig. 3C is an example of hole slits. Fig. 3D is an example of parallelogram shaped slits. Fig. 3E is an example of hexagonal shaped slits.

Figs. 4A and 4B show structural examples of the display unit of the invention. Fig. 4A is a structural example, the main components of which are a reinforced glass and an air gap part. Fig. 4B is a structural example, the main components of which are a protection sheet and a transparent material.

Figs. 5A to 5C show other structural examples of the display unit of the invention. Fig. 5A is an example comprising a backlight and a three-dimensional print part. Fig. 5B is an example using liquid crystal, plasma, or LED for light emitting image part 5d. Fig. 5C is an example in which the air gap part in the structural example shown in Fig. 5B is replaced with a transparent material.

Figs. 6A and 6B show a further variant of the display unit of the invention. Fig. 6A is a diagram showing attachable and detachable or rollable configuration. Fig. 6B is a diagram showing a configuration in which the three-dimensional print part or the like is rollable.

Figs. 7A and 7B show an example of the invention and are diagrams showing an example in which a dot pattern is superimposed and formed on an image drawn on the front a parallax barrier. Fig. 7A is an example where the slit is of skewered dumpling shape. Fig. 7B is an example where the slit is a hole.

Figs. 8A and 8B show an embodiment of the invention and are diagrams showing an example in which a parallax barrier and a touch panel are provided only on part of the display unit. Fig. 8A is a diagram showing an example where right side of the display unit is a three-dimensional display area provided with a parallax barrier. Fig. 8B is a diagram showing an example where the display unit comprises a touch panel, a normal monitor area, a three-dimensional video image display area, and a printed area.

Fig. 9 is a diagram showing a configuration relating to a production of a naked eye three-dimensional display of a parallax barrier method.

Figs 10A and 10B are diagrams showing an embodiment of combining the naked eye three-dimensional display and touch panel of the invention. Fig. 10A is a front view and Fig. 10B is a top view.

Figs. 11A and 11B are diagrams showing an overview of the touch panel of the invention. Fig. 11A is a diagram showing a configuration using an IR-LED and IR camera. Fig. 11B is an example of an image captured by the IR camera.

Fig. 12 is a diagram showing a touch panel of a normal image recognition method using the principle of triangulation.

Fig. 13 is a diagram showing a use situation of a system that combines the naked eye three-dimensional display and touch panel of the invention.

Figs. 14A to 14C are diagrams showing illustrative examples of the touch panel of the invention. Fig. 14A is a thin liquid crystal/organic electroluminescence touch panel. Fig. 14B is a pressure sensitive touch sheet. Fig. 14C is a dot sheet.

Figs. 15A and 15B are diagrams showing a configuration of the edge shape of the slit of the parallax barrier, which is an embodiment of the invention. Fig. 15A is a diagram showing the alignment sequence of subpixels. Fig. 15b is a diagram showing an example in which the edge is formed by circular arcs and straight lines.

Figs. 16A to 16D are diagrams showing configurations of the edge shape of the slit of the parallax barrier, which is an embodiment of the invention. Fig. 16A is an example where the edge is formed only by circular arcs. Fig. 16B is an example where the edge is formed only by elliptic arcs. Fig. 16C is another example where the edge is formed only by elliptic arcs. Fig. 16D is an example where the edge is formed only by spline curves.

Figs. 17A to 17C are diagrams showing other examples of the elliptic arc shaped slit. Fig. 17A shows the alignment sequence of subpixels. Fig. 17B shows a slit formed by connecting elliptic arcs. Fig. 17C shows the shape of a slit formed by connecting elliptic arcs in another way.

Figs. 18A to 18C are diagrams showing other examples of the arrangement of subpixels constituting a pixel and an elliptic arc shaped slit. Fig. 18A is another example of the arrangement of each subpixel. Fig. 18B shows an arrangement in which one elliptic arc is used to cover two pixels. Fig. 18C shows an arrangement in which three elliptic arcs are used to cover two pixels.

Figs 19A to 19C are diagrams showing an example in which three-dimensional video image data is divided into a two-dimensional part and a three-dimensional part and compressed, which is an embodiment of the invention. Fig. 19A is a diagram showing how to set a flag. Fig. 19B is a diagram showing how to divide one frame. Fig. 19C is a diagram showing the arrangements of cameras for five viewpoints.

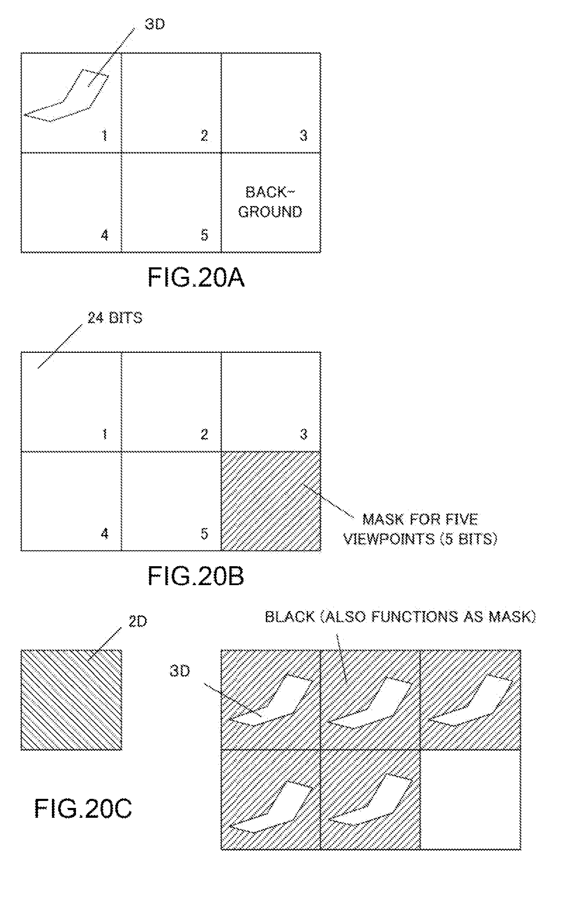

Figs. 20A to 20C are examples of dividing one frame of a file that stores an image, which is an embodiment of the invention. Fig. 20A is an example in which areas for respective viewpoints store only three-dimensional image parts and a background (2D) part is stored in a lower right area that also works as a mask. Fig. 20B is an example in which there are two-dimensional image and three-dimensional image areas for five viewpoints and a lower right area retains only mask information for five viewpoints (5 bits). Fig. 20C is an example in which another file is used for two-dimensional images, and each area of divided frames of a three-dimensional image file retains a black area for a three-dimensional image and a mask.

Fig. 21 is an example of dividing one frame of a file that stores an image and a format example of four viewpoints, which is an embodiment of the invention.

Fig. 22 is an example of dividing one frame of a file that stores an image and a format example of five viewpoints, which is an embodiment of the invention.

Fig. 23 is an example of dividing one frame of a file that stores an image and a format example of six viewpoints, which is an embodiment of the invention.

Fig. 24 is an example of dividing one frame of a file that stores an image and a format example of seven viewpoints, which is an embodiment of the invention.

Fig. 25 is an example of dividing one frame of a file that stores an image and a format example of eight viewpoints, which is an embodiment of the invention.

Fig. 26 is an example of a mask for compressing in a time direction, which is an embodiment of the invention.

Figs. 27A to 27C are diagrams showing a method of blending and compressing pixels for respective viewpoints, which is an embodiment of the invention. Fig. 27A is a diagram showing the arrangement of subpixels of respective pixels. Fig. 27B is a diagram showing the arrangement of pixels for k-th viewpoint before compression. Fig. 27C is a diagram showing the arrangement of the compressed image for k-th viewpoint.

Fig. 28 is a diagram showing a blending method of pixels for respective viewpoints, which is an embodiment of the invention.

Figs. 29A to 29C are diagrams showing a method of blending and compressing pixels for respective viewpoints, which is an embodiment of the invention. Fig. 29A is a diagram showing the arrangement of subpixels for respective pixels. Fig. 29B is a diagram showing the arrangement of pixels for k-th viewpoint before compression. Fig. 29C is a diagram showing the arrangement of the compressed image for k-th viewpoint.

Fig. 30 is a diagram showing a blending method of pixels for respective viewpoints, which is an embodiment of the invention.

Figs. 31A to 31C are diagrams showing a method of blending and compressing pixels for respective viewpoints, which is an embodiment of the invention. Fig. 31A is a diagram showing the arrangement of subpixels for respective pixels. Fig. 31B is a diagram showing the arrangement of pixels for k-th viewpoint before compression. Fig. 31C is a diagram showing the arrangement of the compressed image for k-th viewpoint.

Fig. 32 is a diagram showing a blending method of pixels for respective viewpoints, which is an embodiment of the invention.

Figs. 33A and 33B are diagrams illustrating each parameter relating to three-dimensional effects, which is an embodiment of the invention. Fig. 33A is a diagram showing a viewable area viewed by both eyes. Fig. 33B is a diagram showing a distance between convergence points.

Fig. 34 is a diagram illustrating each parameter relating to three-dimensional effects with a slit of elliptic arc shaped edge, which is an embodiment of the invention.

Figs. 35A and 35B are diagrams illustrating each parameter relating to three-dimension effects with a slit of elliptic arc shaped edge, which is an embodiment of the invention. Fig. 35A is an example in which left and right viewable areas abut each other. Fig. 35B is an example in which left and right viewable areas overlap each other.

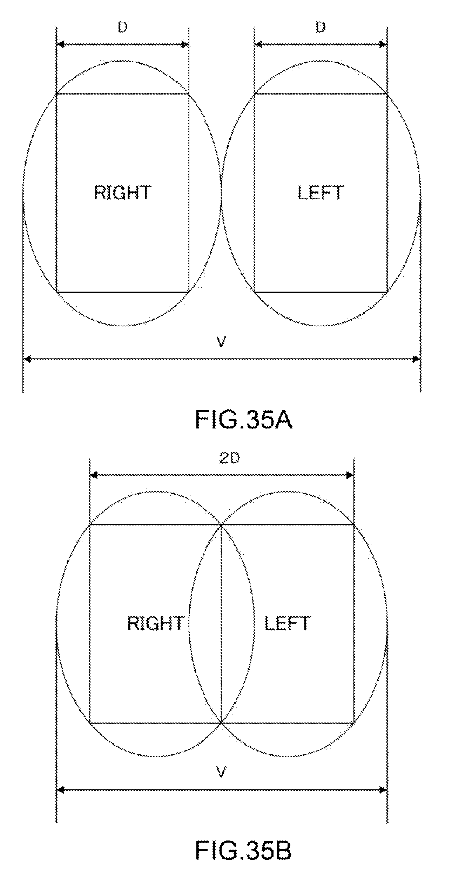

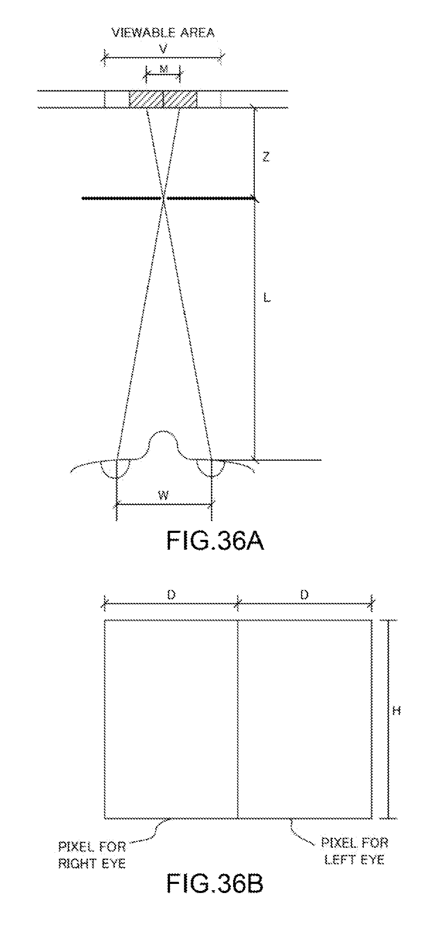

Figs. 35A and 35B are diagrams illustrating each parameter relating to three-dimension effects with a slit of elliptic arc shaped edge, which is an embodiment of the invention. Fig. 36A is a top view. Fig. 36B is a diagram showing the arrangement of pixels.

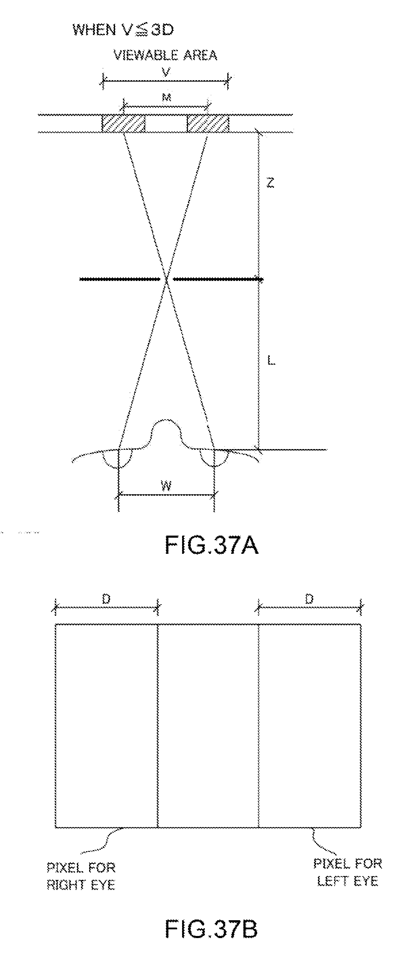

Figs. 37A and 37B are diagrams illustrating each parameter relating to three-dimension effects of a slit of elliptic arc shaped edge, which is an embodiment of the invention. Fig. 37A is a top view. Fig. 37B is a diagram showing the arrangement of pixels.

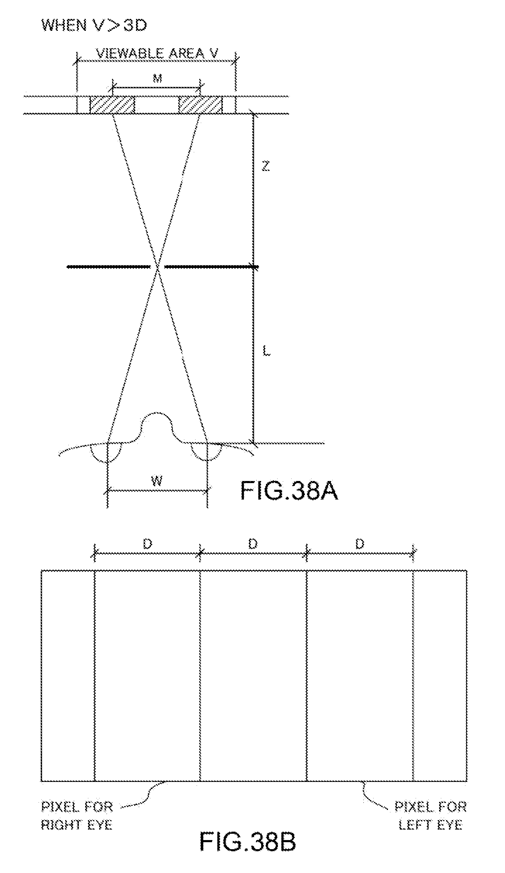

Figs. 38A and 38B are diagrams illustrating each parameter relating to three-dimension effects of a slit of elliptic arc shaped edge, which is an embodiment of the invention. Fig. 38A is a top view. Fig. 38B is a diagram showing the arrangement of pixels.

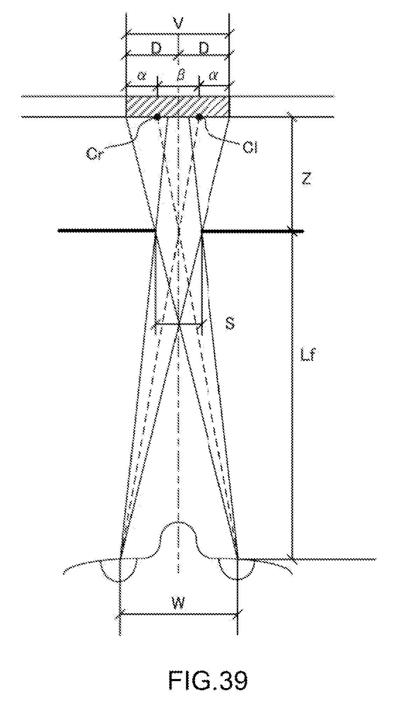

Fig. 39 is a diagram illustrating a viewable area, which is an embodiment of the invention.

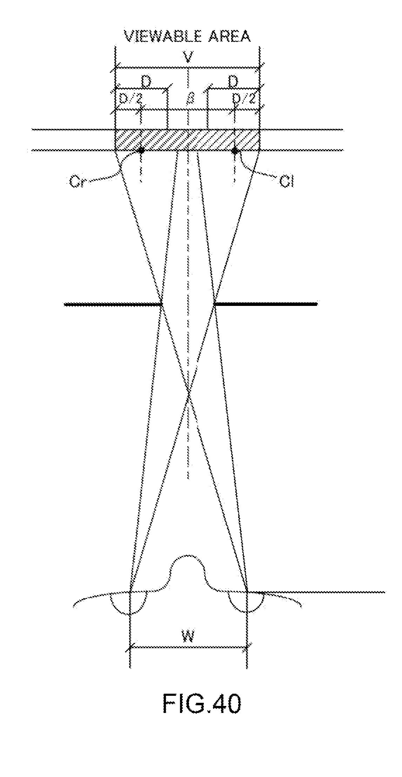

Fig. 40 is a diagram illustrating a viewable area, which is an embodiment of the invention.

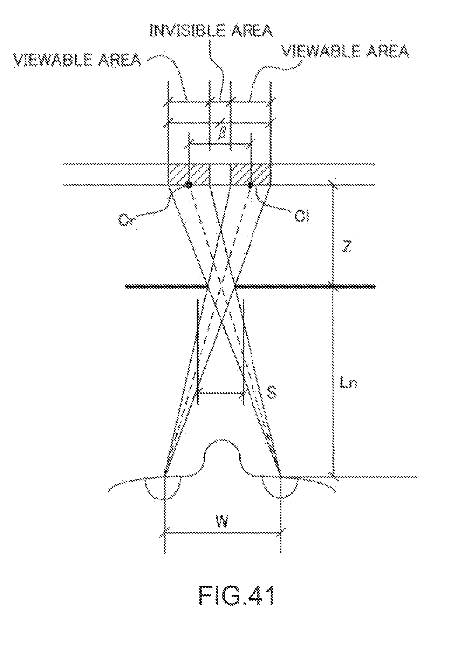

Fig. 41 is a diagram illustrating a viewable area, which is an embodiment of the invention.

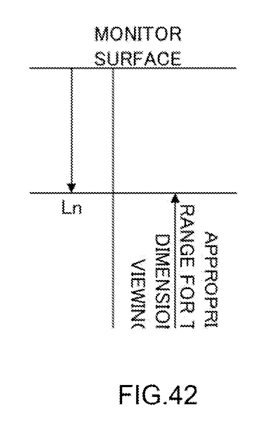

Fig. 42 is a diagram showing the range of an appropriate distance for three-dimensional viewing, which is an embodiment of the invention.

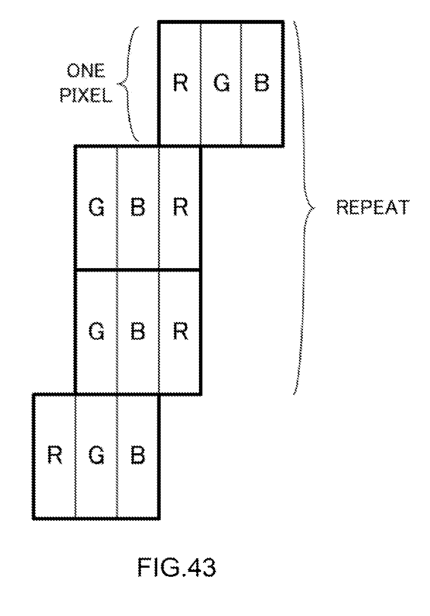

Fig. 43 is a diagram illustrating the arrangement of subpixels constituting one pixel, which is an embodiment of the invention.

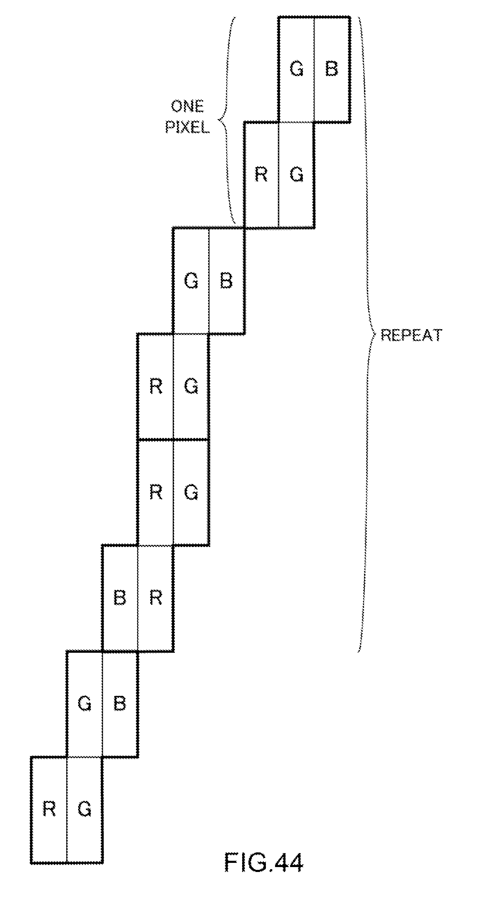

Fig. 44 is a diagram illustrating the arrangement of subpixels constituting one pixel, which is an embodiment of the invention.

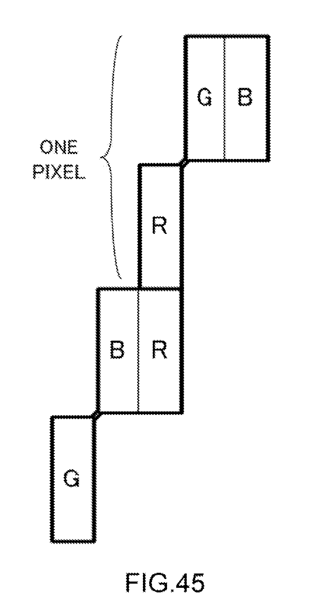

Fig. 45 is a diagram illustrating the arrangement of subpixels constituting one pixel, which is an embodiment of the invention.

Fig. 46 shows a conventional technique and is a diagram showing an overview of a three-dimensional video image display device of a parallax barrier method.

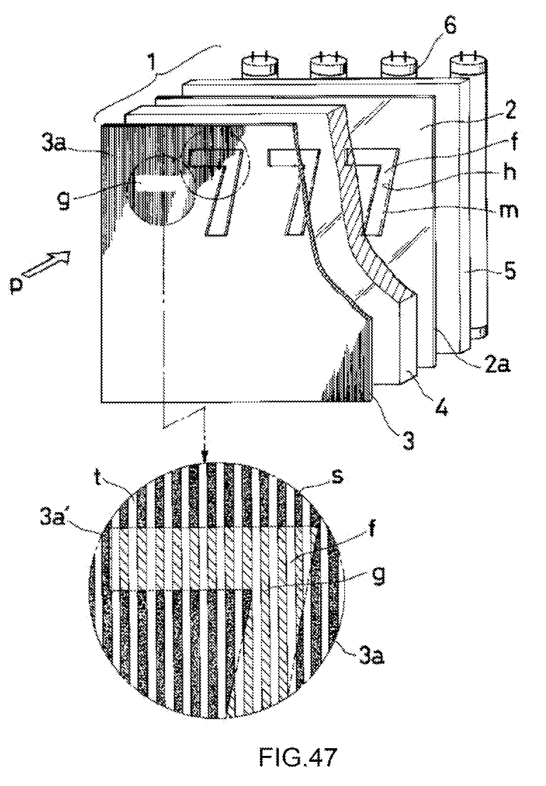

Fig. 47 shows a conventional technique and is a diagram showing an example in which a planar image is drawn at least on part of the parallax barrier area of a panel screen.

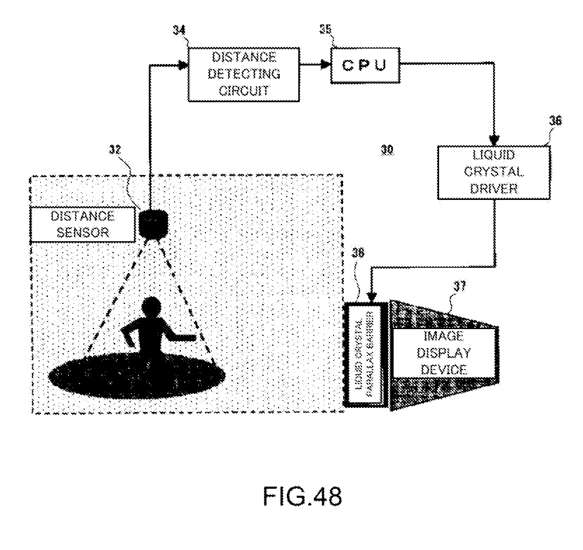

Fig. 48 shows a conventional technique and is a diagram showing a three-dimensional video image display device of a parallax method comprising a liquid crystal parallax barrier.

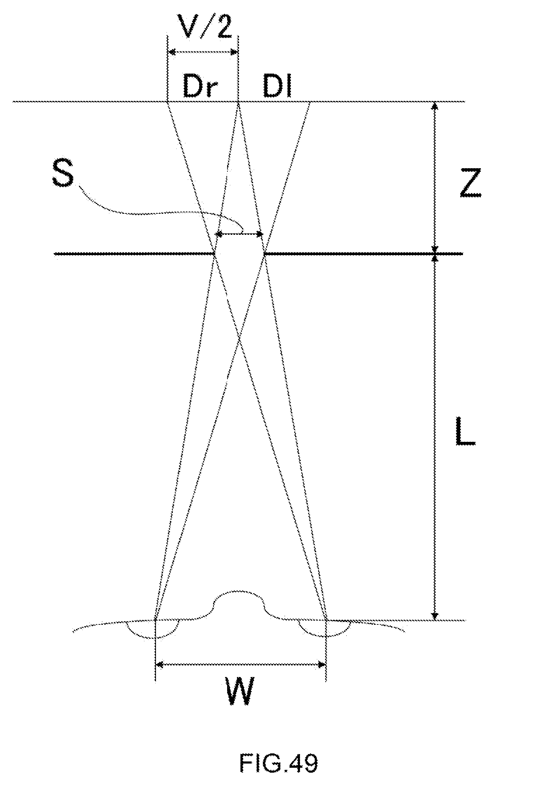

Fig. 49 shows an embodiment of the invention and is a diagram showing a relationship among an effective viewable area, a visible light transmissive area, and the position of one eye of a subj ect person of image presentation at a best view point.

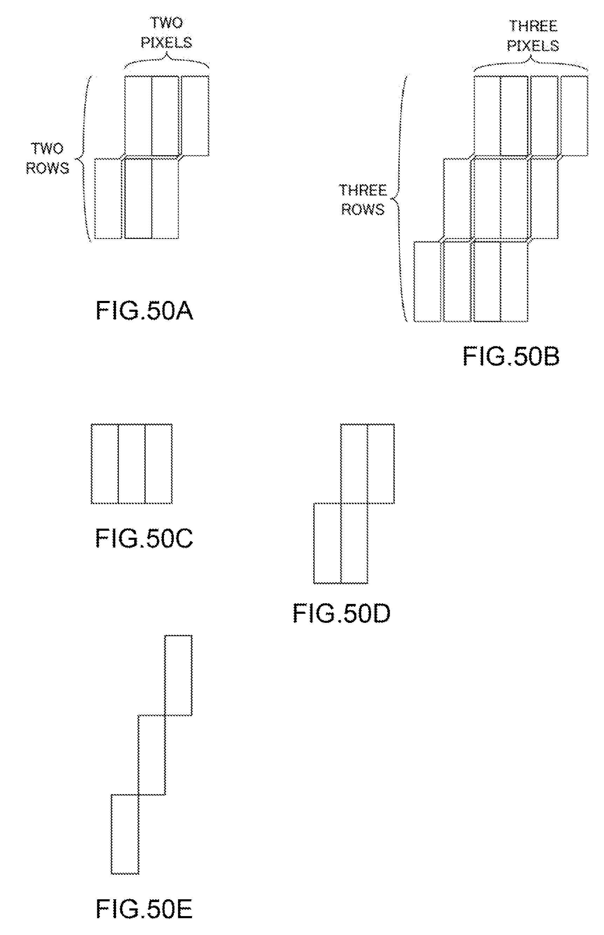

Figs. 50A to 50E show an embodiment of the invention and are diagrams showing the arrangements of subpixels in a variety of blending methods when calculating an average pixel width. Fig. 50A shows the arrangement of two pixels in two rows, three subpixels in each row. Fig. 50B shows the arrangement of three pixels in three rows, four subpixels in each row. Fig. 50C shows the arrangement of one pixel of three subpixels in a row. Fig. 50D shows the arrangement of one pixel of four subpixels in two rows. Fig. 50E shows the arrangement of one pixel of three subpixels in three rows.

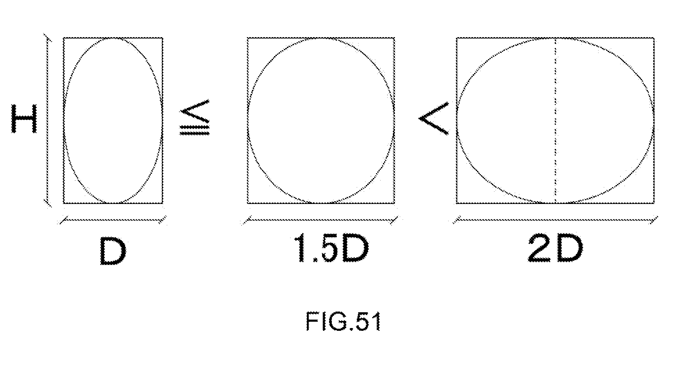

Fig. 51 shows an embodiment of the invention and is a diagram showing a size for designing an effective viewable area.

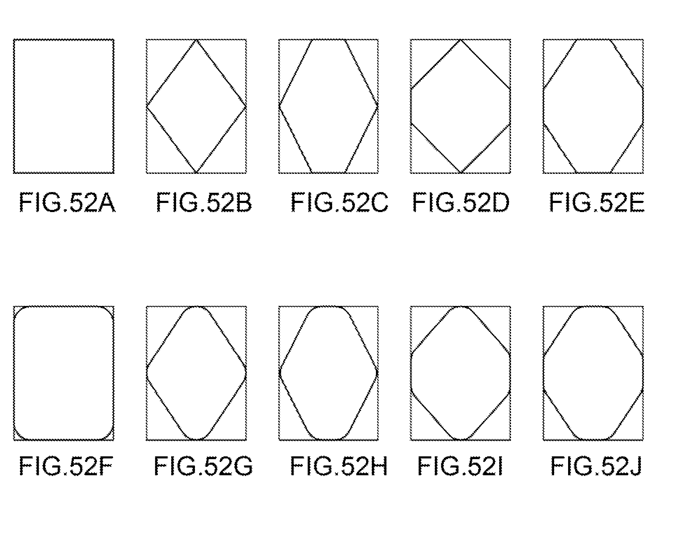

Figs. 52A to 52J show an embodiment of the invention, and are diagrams showing specific shapes of the visible light transmissive area. Fig. 52A is a diagram showing an example of rectangle. Fig. 52B is a diagram showing an example of rectangle (rhombus). Figs. 52C and 52D are diagrams showing examples of hexagons. Fig. 52E is a diagram showing an example of octagon. Figs. 52F to 52J are diagrams showing examples of variants of Figs. 52A to 52E and showing polygons, four corners of which are drawn as circular arcs.

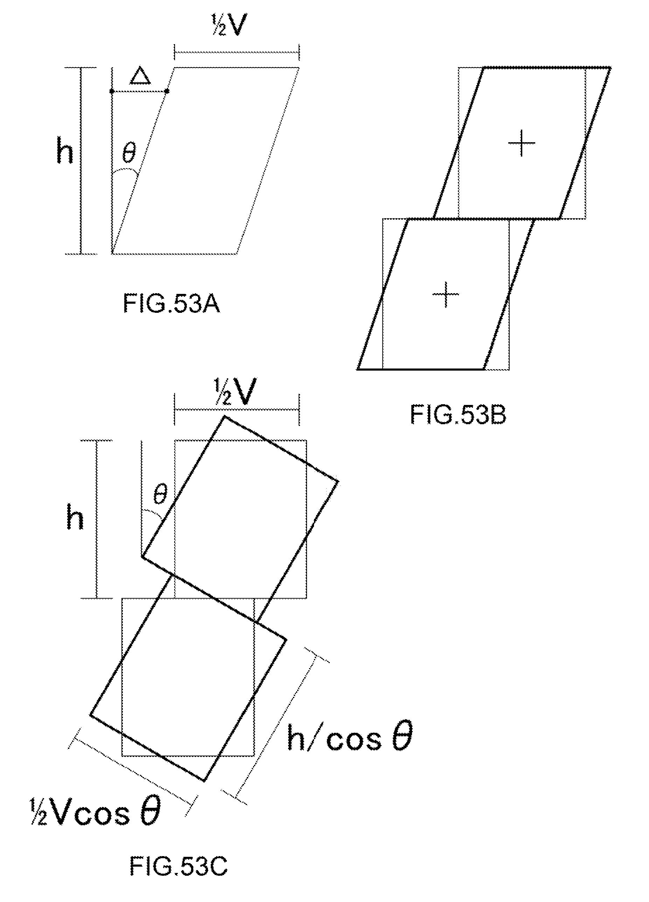

Figs. 53A to 53C show an embodiment of the invention. Fig. 53A is a diagram showing deformation from a rectangular area to a parallelogram. Fig. 53B is a diagram showing the central point of the deformation. Fig. 53C is a diagram showing deformation by rotating the rectangle area and expanding and contracting the sides thereof.

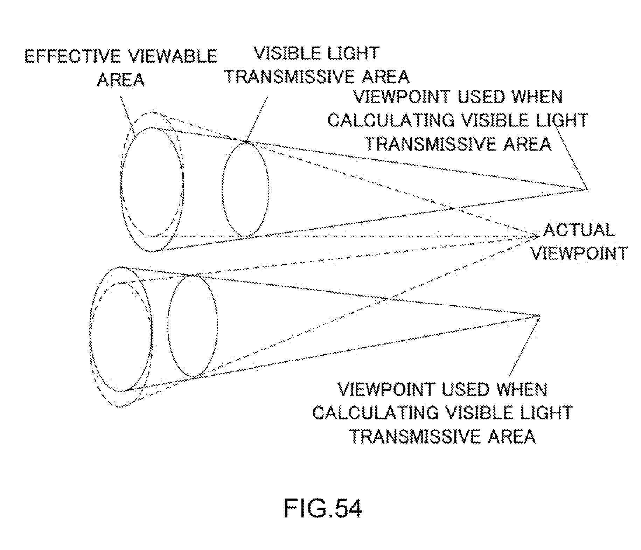

Fig. 54 shows an embodiment of the invention, and is a diagram showing a displacement in a vertical direction between a designed viewpoint and an actual viewpoint.

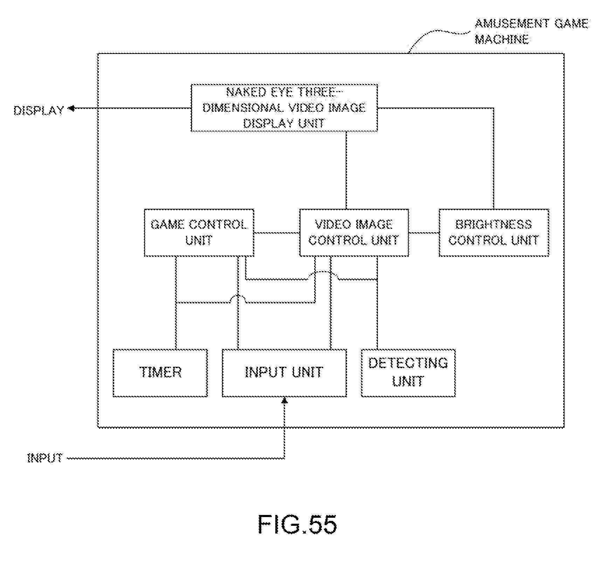

Fig. 55 is a block diagram showing the configuration of the amusement game machine of the invention.

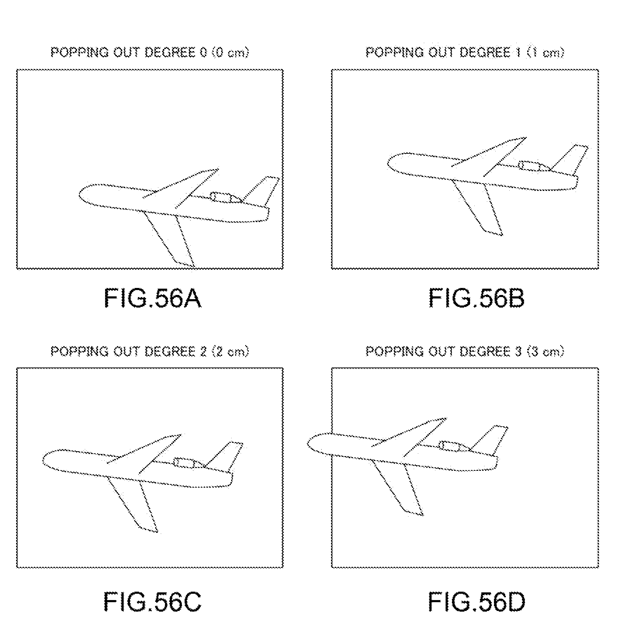

Fig. 56A to 56D are diagrams showing a first control method of the appearance count, display time, popping out degree of a three-dimensional video image of the invention.

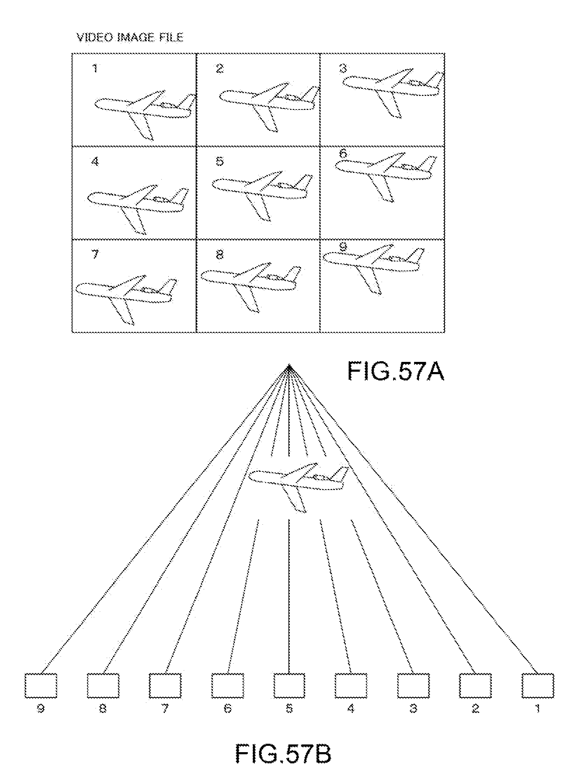

Fig. 57A and 57B are diagrams showing a second control method of the appearance count, display time, popping out degree of a three-dimensional video image of the invention.

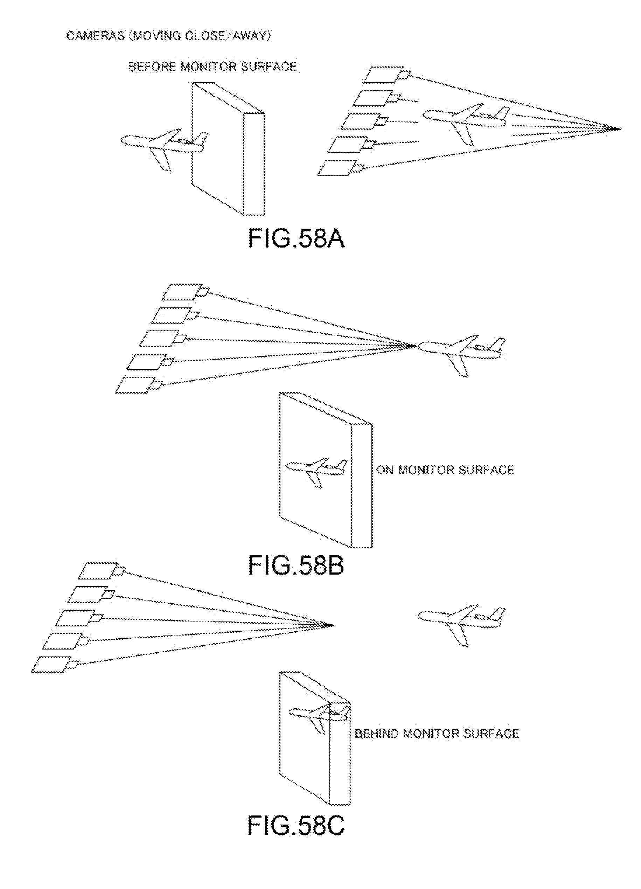

Fig. 58A to 58C are diagrams showing an embodiment of a third control method of the appearance count, display time, popping out degree of a three-dimensional video image of the invention.

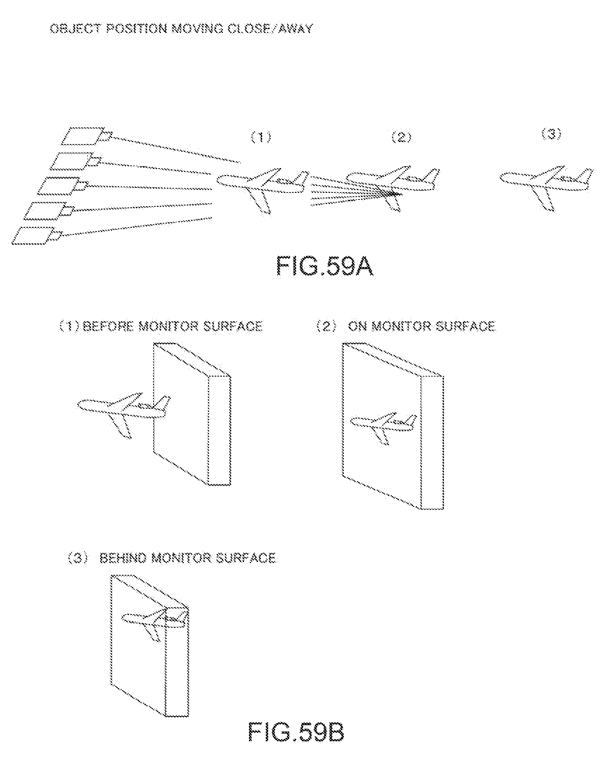

Fig. 59A and 59B are diagrams showing an embodiment of the third control method of the appearance count, display time, popping out degree of a three-dimensional video image of the invention.

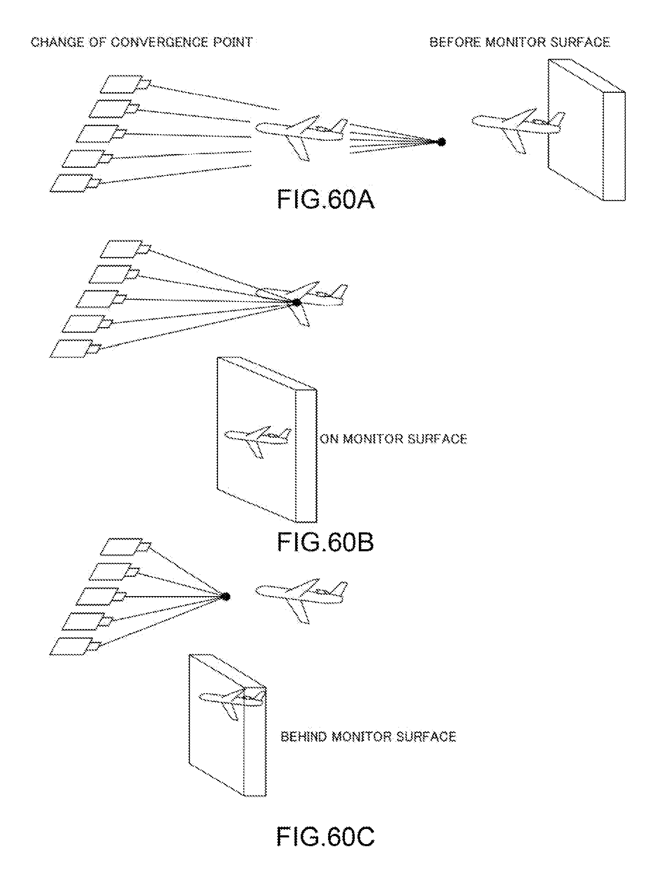

Fig. 60A to 60C are diagrams showing an embodiment of the third control method of the appearance count, display time, popping out degree of a three-dimensional video image of the invention.

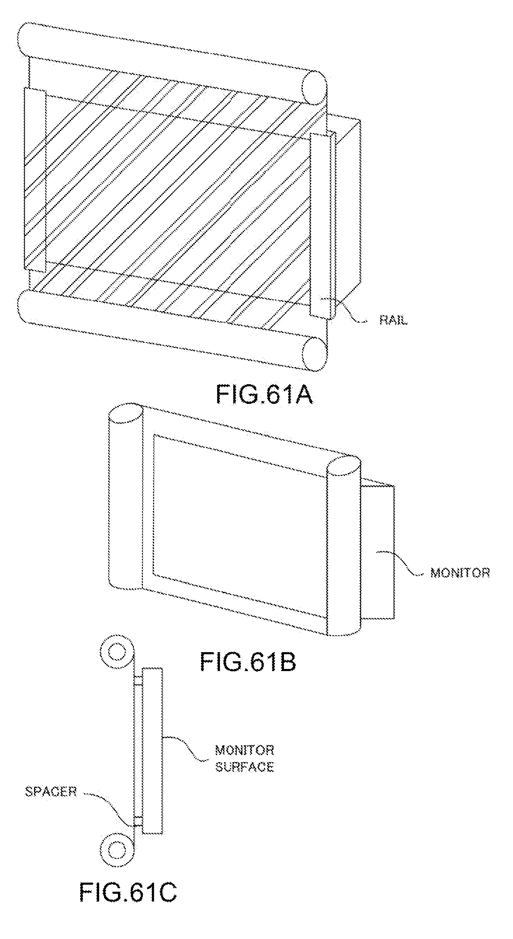

Figs. 61A to 61C are diagrams showing an embodiment of the movable parallax barrier of the invention.

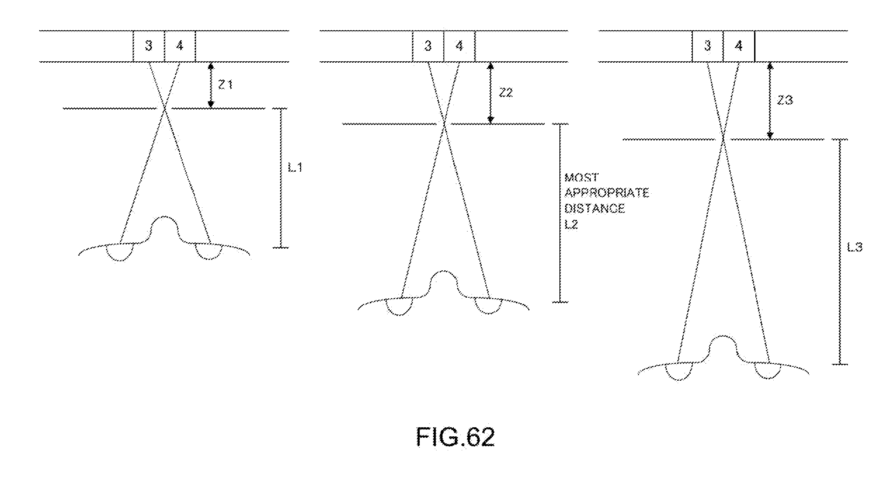

Fig. 62 is a diagram showing a relationship between an air gap from a monitor to a parallax barrier and a distance from the parallax barrier to the eyes of a subject person of image presentation (a player), in a naked eye three-dimensional video image display technique of a parallax barrier method.

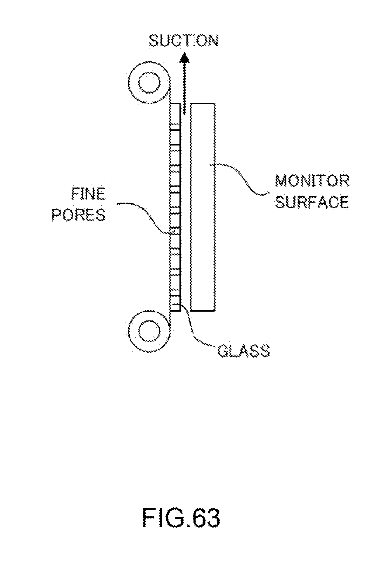

Fig. 63 is a diagram showing an embodiment of the movable parallax barrier of the invention.

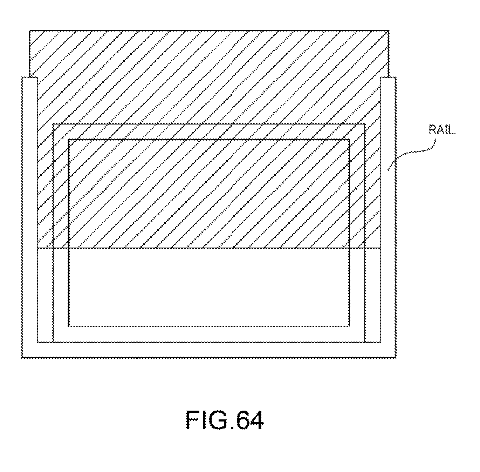

Fig. 64 is a diagram showing an embodiment of the movable parallax barrier of the invention.

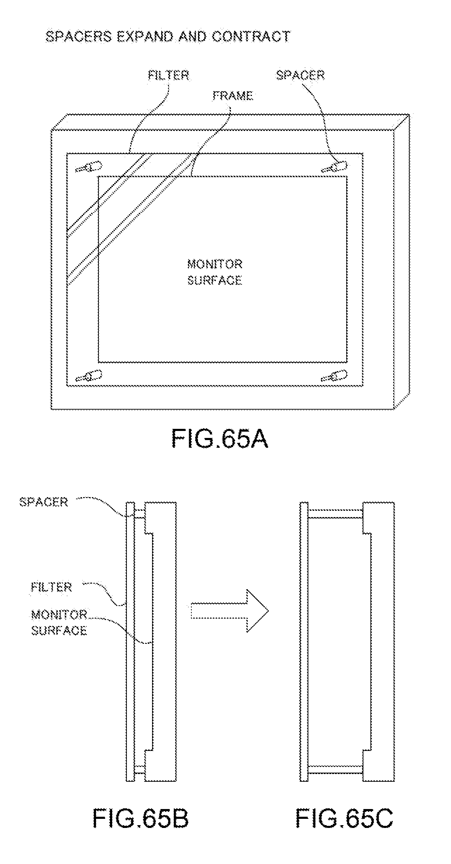

Figs. 65A to 65C are diagrams showing an embodiment of the movable parallax barrier of the invention.

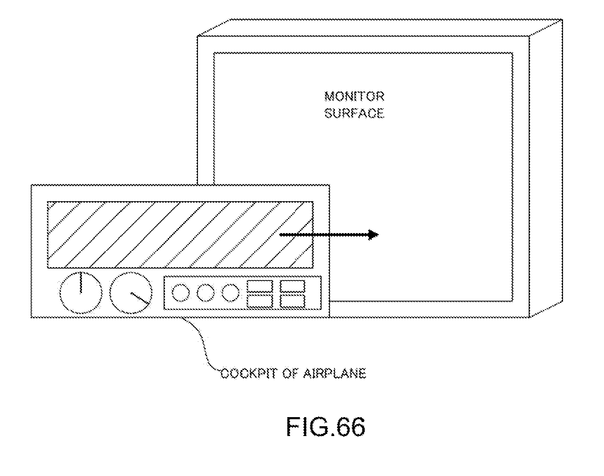

Fig. 66 is a diagram showing an embodiment of the parallax barrier of the invention.

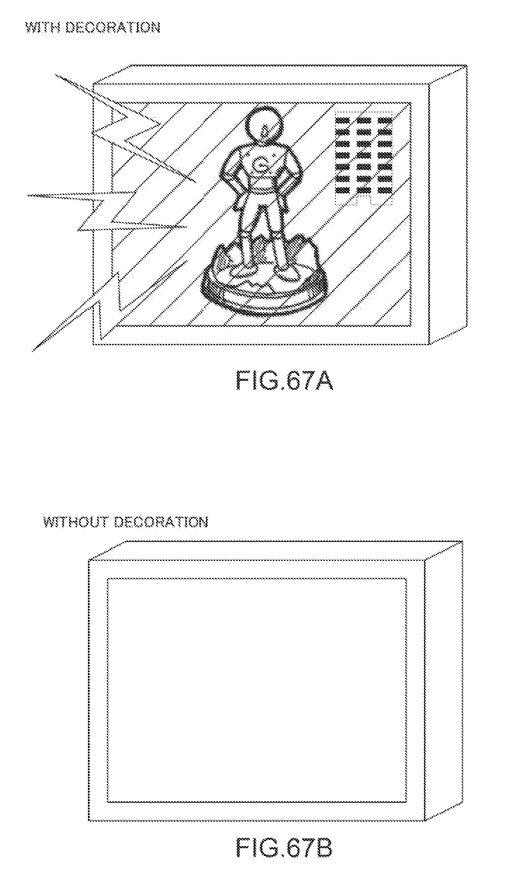

Figs. 67A and 67B are diagrams showing an embodiment of the parallax barrier of the invention.

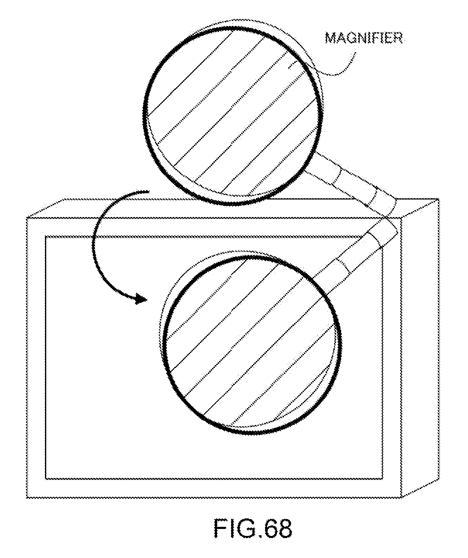

Fig. 68 is a diagram showing an embodiment of the movable parallax barrier of the invention.

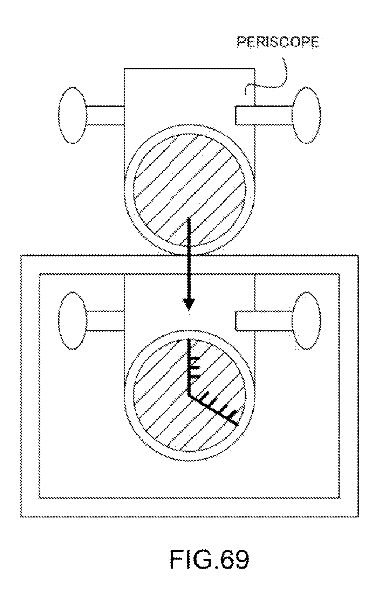

Fig. 69 is a diagram showing an embodiment of the movable parallax barrier of the invention.

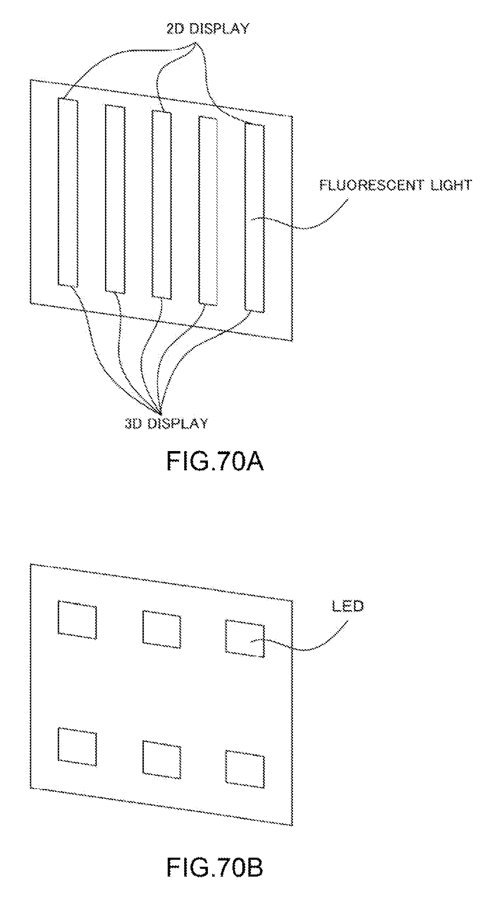

Figs. 70A and 70B are diagrams showing an embodiment of the brightness control unit of the invention.

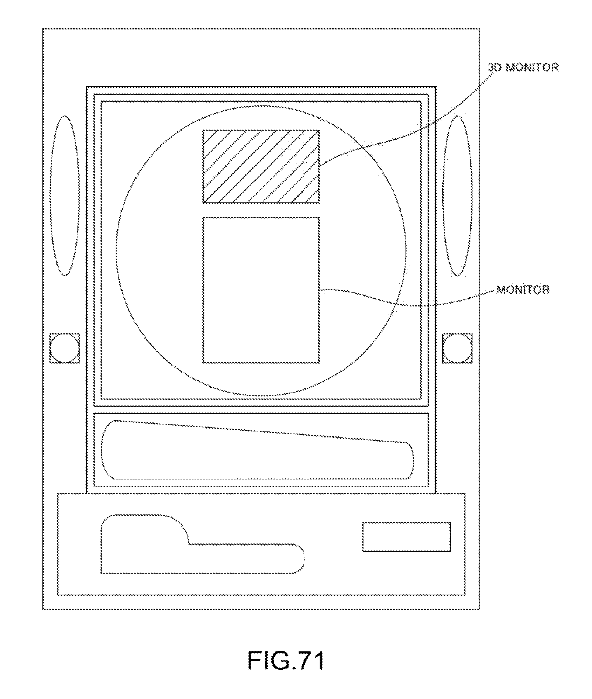

Fig. 71 is a diagram showing an embodiment of the amusement game machine of the invention.

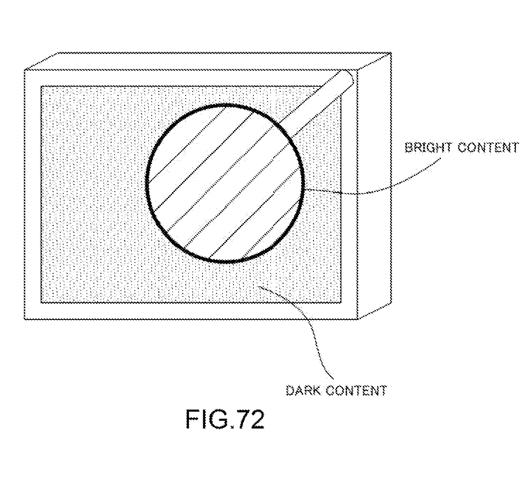

Fig. 72 is a diagram showing an embodiment of the brightness control unit of the invention.

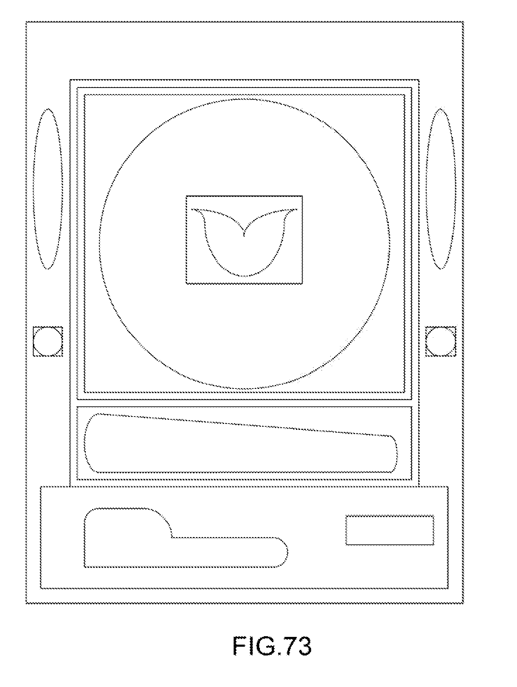

Fig. 73 is a diagram showing an embodiment of the amusement game machine of the invention.

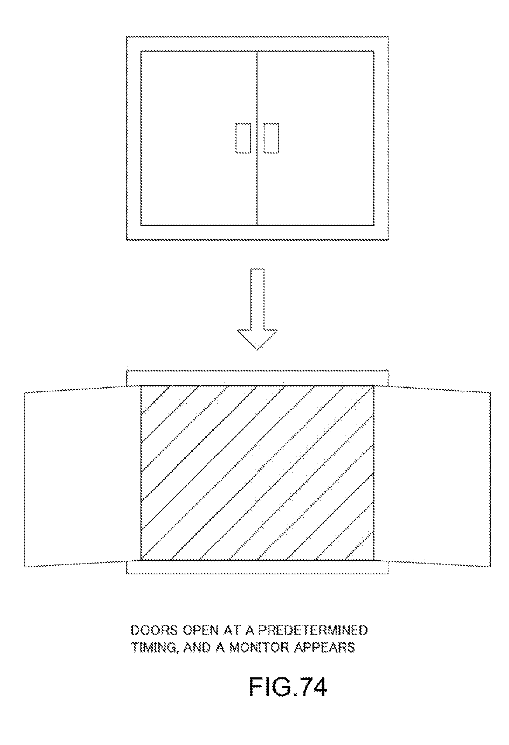

Fig. 74 is a diagram showing an embodiment of a naked eye three-dimensional video image display unit of the invention.

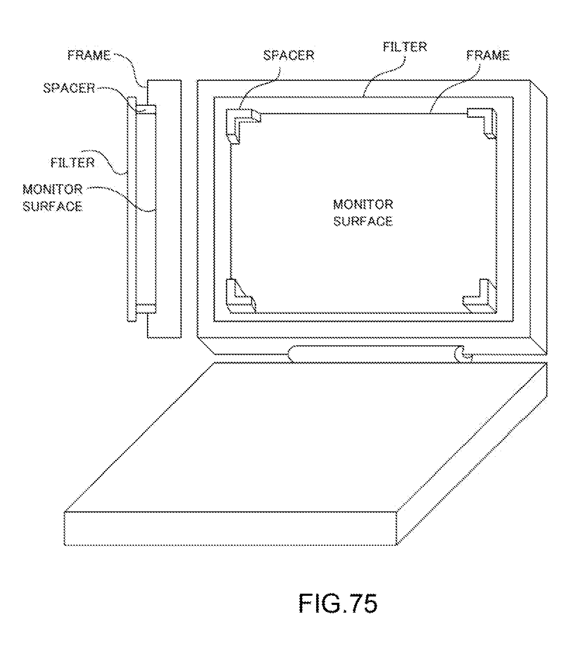

Fig. 75 is a perspective view and a section view of an example of a parallax barrier sheet using L-shaped spacers, which is an embodiment of the parallax barrier sheet of the invention.

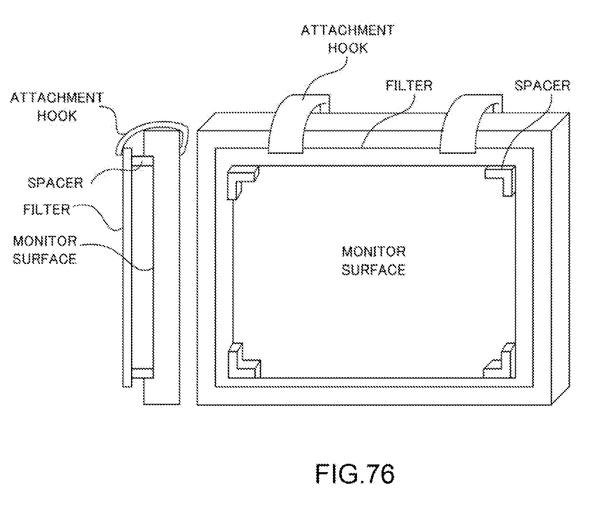

Fig. 76 is a perspective view and a section view of an example of a parallax barrier sheet using L-shaped spacers and clipping hooks, which is an embodiment of the parallax barrier sheet of the invention.

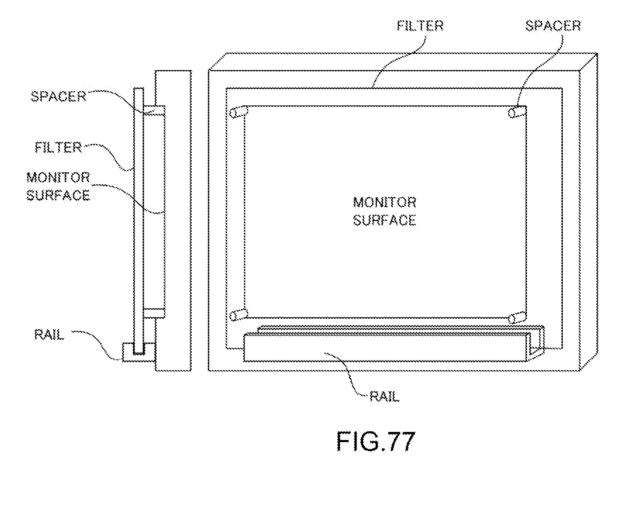

Fig. 77 is a perspective view and a section view of an example of a parallax barrier sheet using cylinder-shaped spacers and a rail (a sash bar), which is an embodiment of the parallax barrier sheet of the invention.

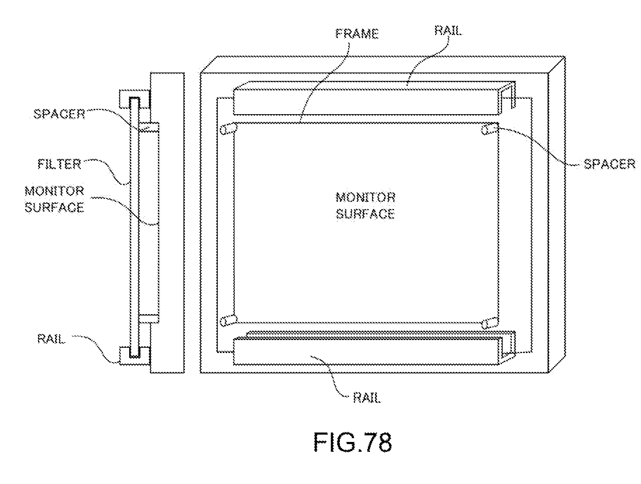

Fig. 78 is a perspective view and a section view of an example of a parallax barrier sheet using cylinder-shaped spacers and top and bottom rails (sash bars), which is an embodiment of the parallax barrier sheet of the invention.

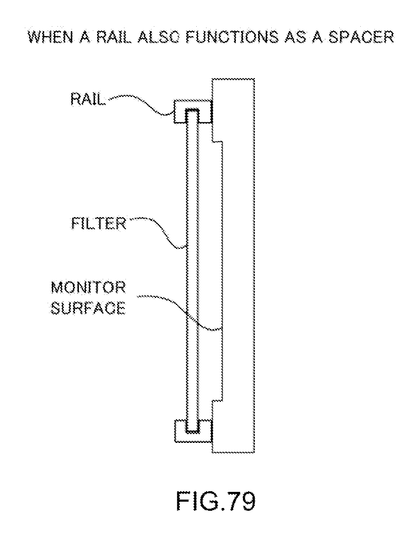

Fig. 79 is a section view of an example of a parallax barrier sheet in which top and bottom rails also function as spacers, which is an embodiment of the parallax barrier sheet of the invention.

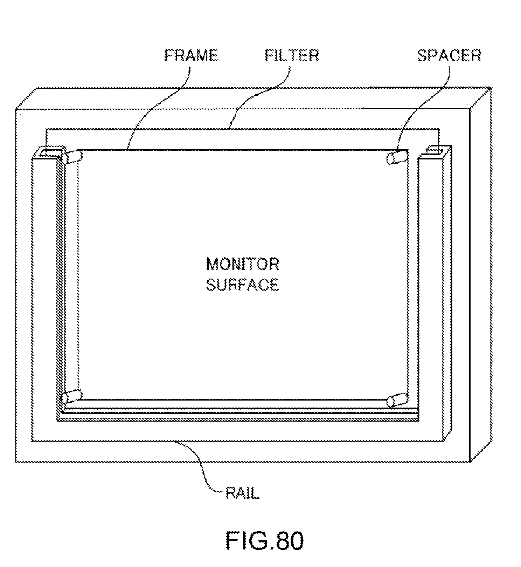

Fig. 80 is a perspective view of an example of a parallax barrier sheet using cylinder-shaped spacers and a U-shaped rail, which is an embodiment of the parallax barrier sheet of the invention.

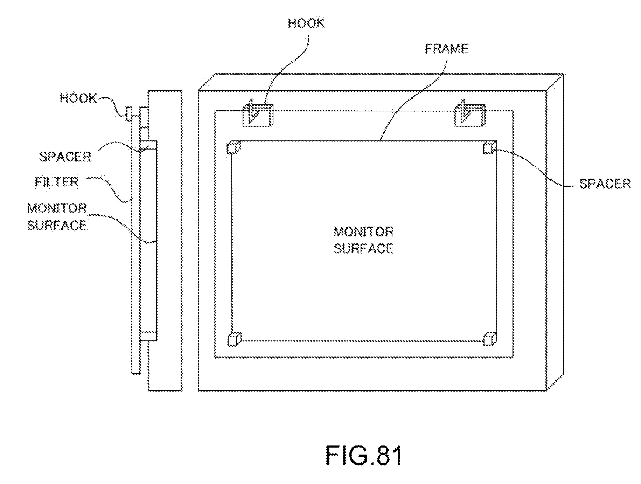

Fig. 81 is a perspective view and a section view of an example of a parallax barrier sheet using prismatic spacers and hooks, which is an embodiment of the parallax barrier sheet of the invention.

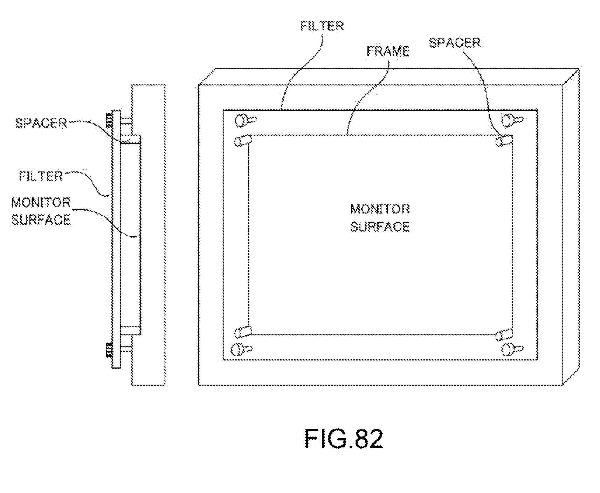

Fig. 82 is a perspective view and a section view of an example of a parallax barrier sheet using cylinder-shaped spacers and screw pins, which is an embodiment of the parallax barrier sheet of the invention.

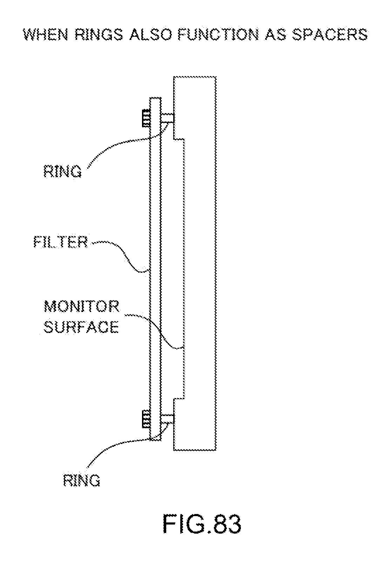

Fig. 83 is a section view of an example of a parallax barrier sheet using screw pins of which rings also function as spacers, which is an embodiment of the parallax barrier sheet of the invention.

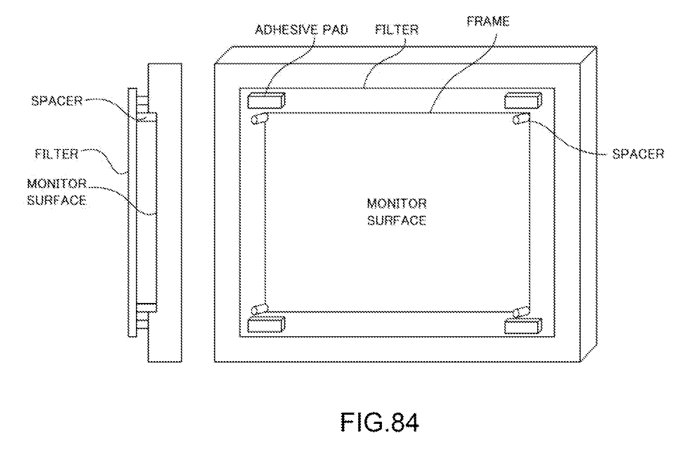

Fig. 84 is a perspective view and a section view of an example of a parallax barrier sheet using cylinder-shaped spacers and adhesive pads, which is an embodiment of the parallax barrier sheet of the invention.

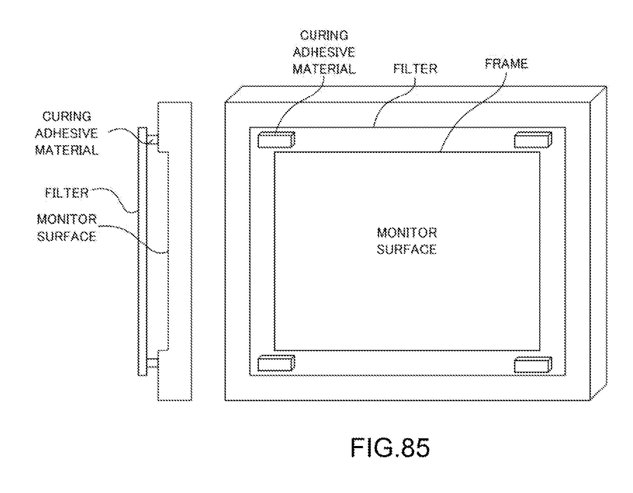

Fig. 85 is a perspective view and a section view of an example of a parallax barrier sheet using curing adhesive material that also functions as a spacer, which is an embodiment of the parallax barrier sheet of the invention.

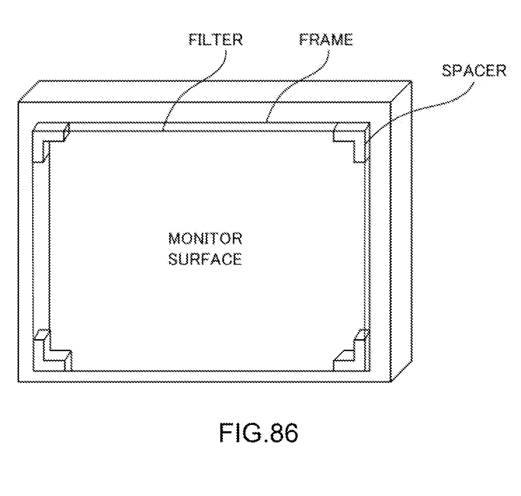

Fig. 86 is a perspective view of an example of a parallax barrier sheet using adhesive material on the monitor side surfaces of spacers, which is an embodiment of the parallax barrier sheet of the invention.

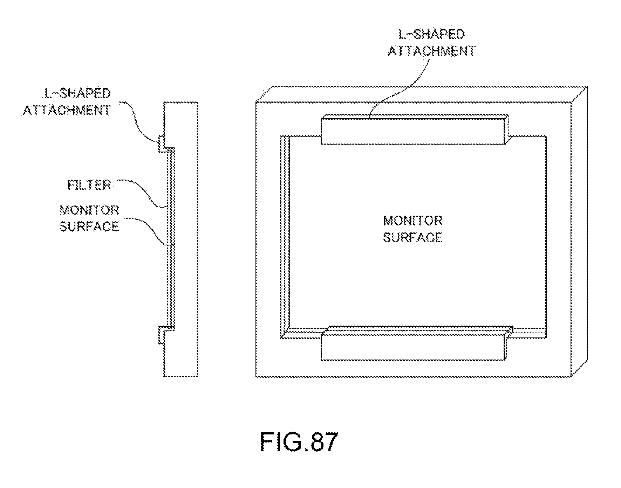

Fig. 87 is a perspective view and a section view of an example of a parallax barrier sheet using L-shaped attachments that also function as a spacer, which is an embodiment of the parallax barrier sheet of the invention.

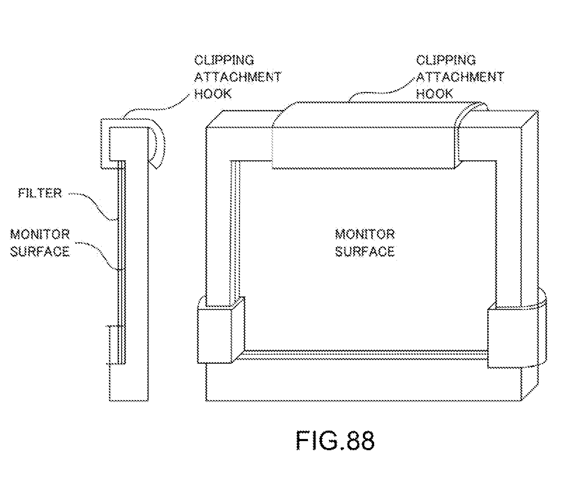

Fig. 88 is a perspective view and a section view of an example of a parallax barrier sheet using clipping hooks that also function as a spacer, which is an embodiment of the parallax barrier sheet of the invention.

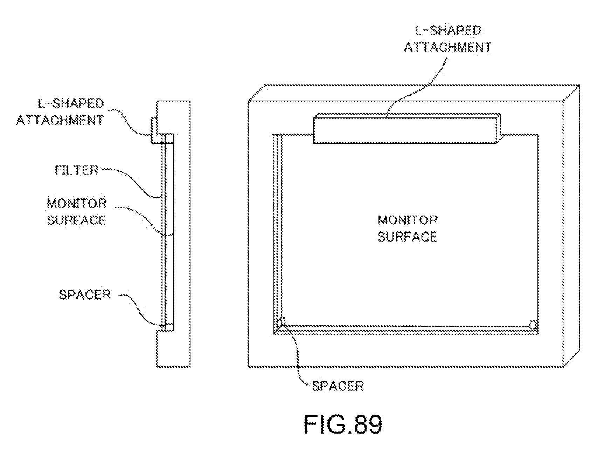

Fig. 89 is a perspective view and a section view of an example of a parallax barrier sheet using a combination of L-shaped attachments that also function as a spacer and cylinder-shaped spacers, which is an embodiment of the parallax barrier sheet of the invention.

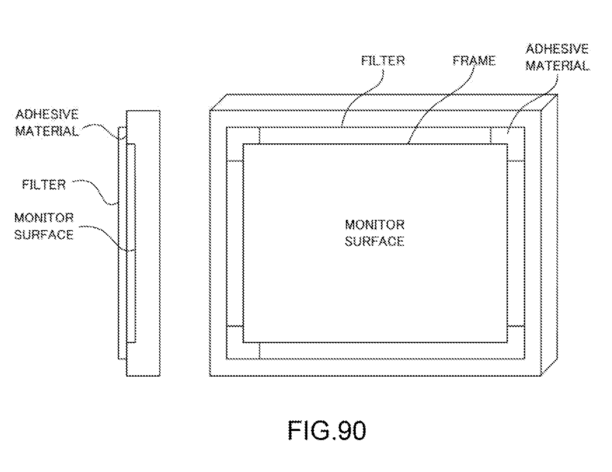

Fig. 90 is a perspective view and a section view of an example, in an embodiment of the parallax barrier sheet of the invention (a filter), showing a method of using a somewhat larger filter than the monitor surface and providing adhesive material on four corners thereof to attach the filter on the frame.

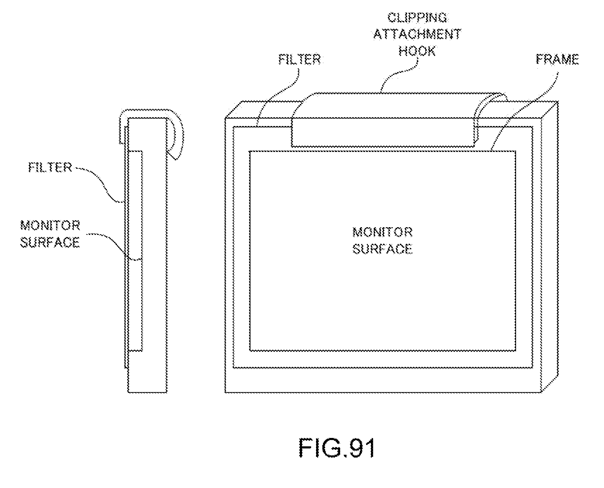

Fig. 91 is a perspective view and a section view of an example, in an embodiment of the parallax barrier sheet of the invention (a filter), using a somewhat larger filter than the monitor surface and clipping hooks instead of the adhesive material.

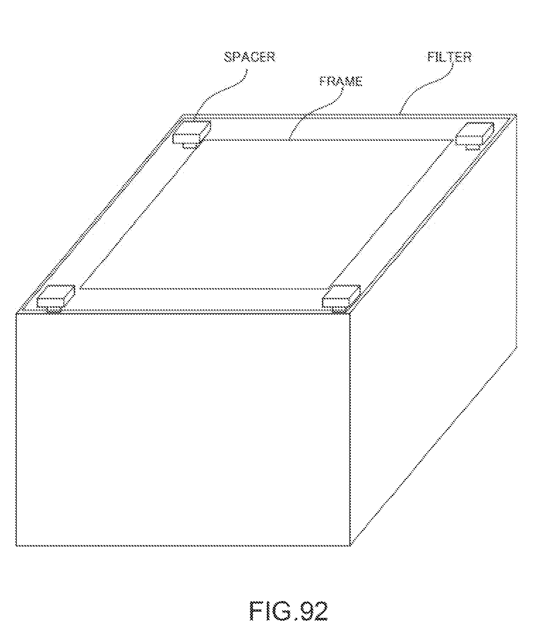

Fig. 92 is a perspective view, in an embodiment of the parallax barrier sheet of the invention (a filter), showing a method of attaching the filter to a table type display.

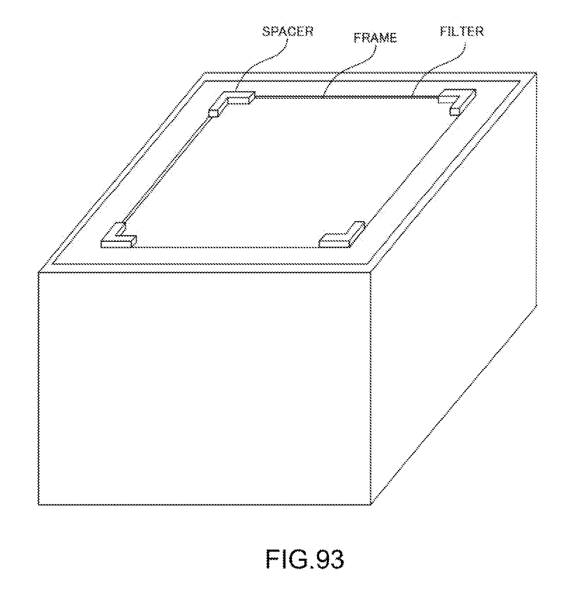

Fig. 93 is a perspective view, in an embodiment of the parallax barrier sheet of the invention (a filter), showing a method of mounting spacers on the four corners of the monitor surface of a table type display and placing the filter thereon.

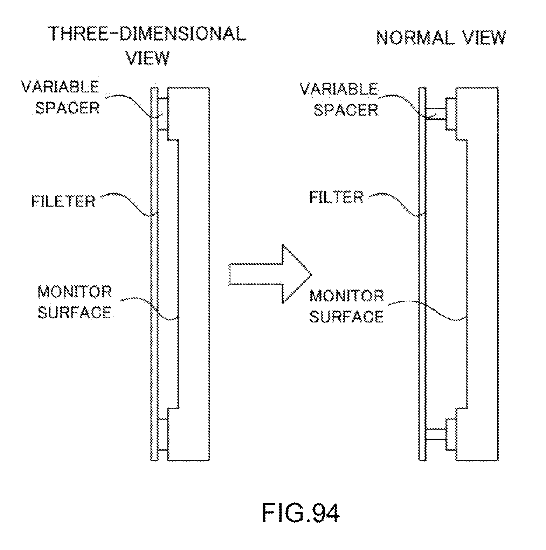

Fig. 94 is a diagram showing how viewing of three-dimensional display (three-dimensional view) and viewing of two-dimensional display (normal view) are switched when using a parallax barrier sheet of an embodiment of the invention.

Fig. 95 is a diagram showing calibration method of an embodiment of the invention.

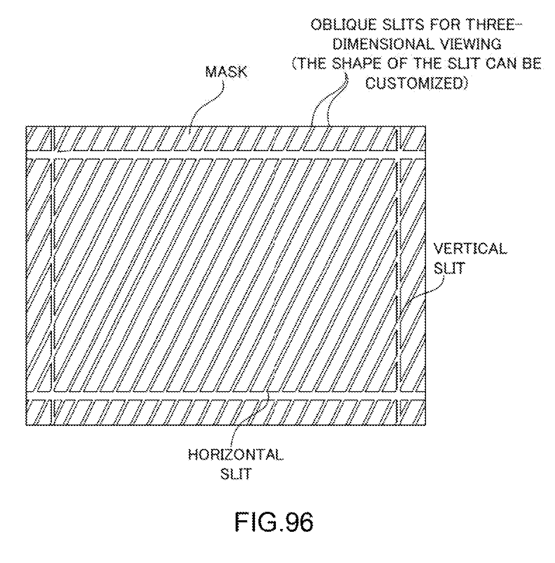

Fig. 96 is a diagram showing an example in which a slit for calibration is formed on a parallax barrier sheet, which is an embodiment of the invention.

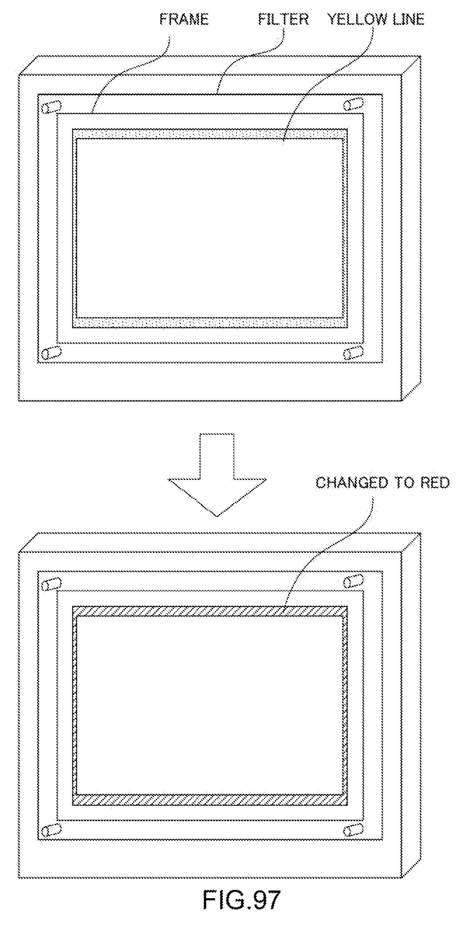

Fig. 97 is a diagram showing how a yellow line displayed on the monitor surface is changed to red by overlapping on a line for calibration formed on a filter surface, which is an embodiment of the invention.

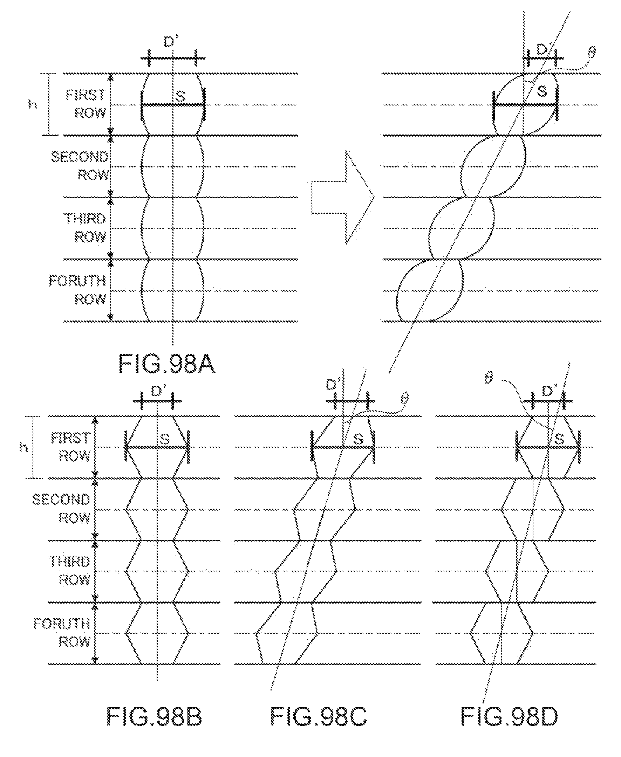

Figs. 98A and 98B are diagrams showing configurations of the edge shape of the slit of a parallax barrier, which is an embodiment of the invention. Fig. 98A is an example of an edge formed by skewing elliptic arcs. Figs. 98B to 98D are examples of edges formed by triangles.

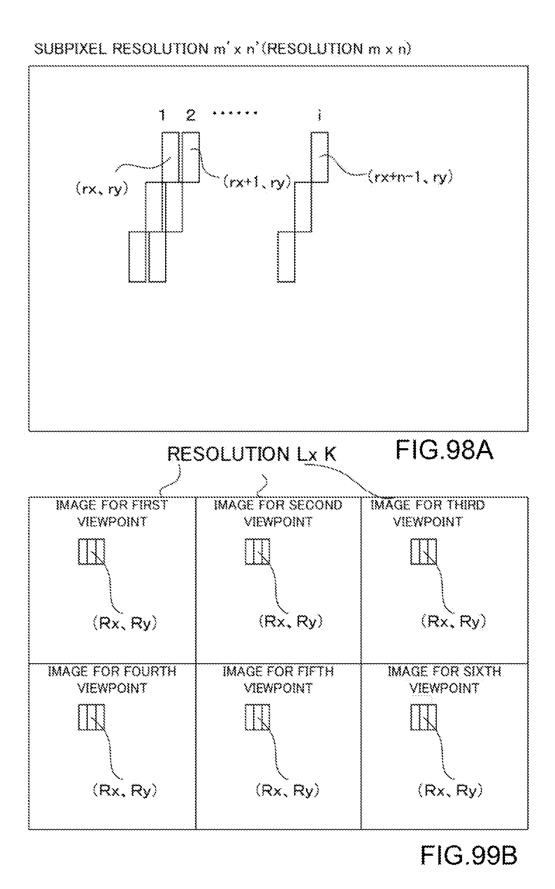

Figs. 99A and 99B are diagrams showing a blending method of an embodiment of the invention. Fig. 99A is a diagram showing the arrangement of pixels for respective viewpoints after blending. Fig. 99B is a diagram showing positions of corresponding pixels in images for respective viewpoints before blending.

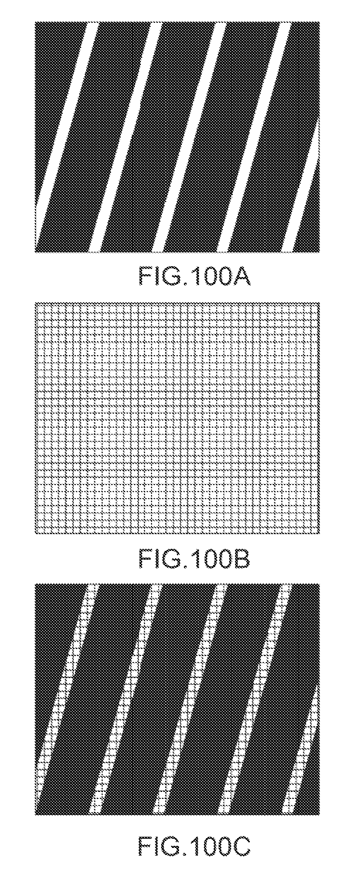

Figs. 100A to 100C are diagrams showing three embodiments of methods for forming the parallax barrier of the invention.

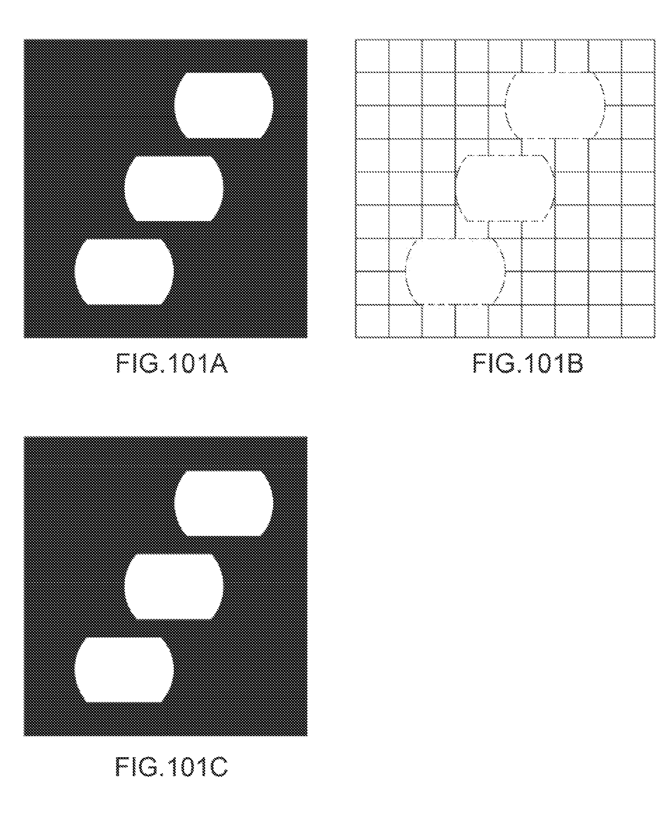

Figs. 101A to 101C are diagrams showing an embodiment of a method for forming the parallax barrier of the invention.

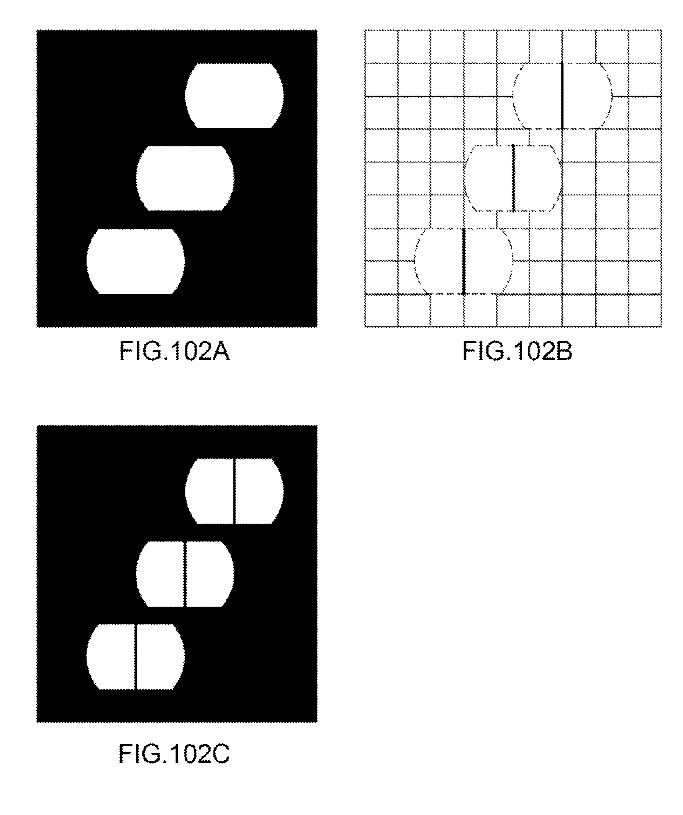

Figs. 102A to 102C are diagrams showing an embodiment of a method for forming the parallax barrier of the invention.

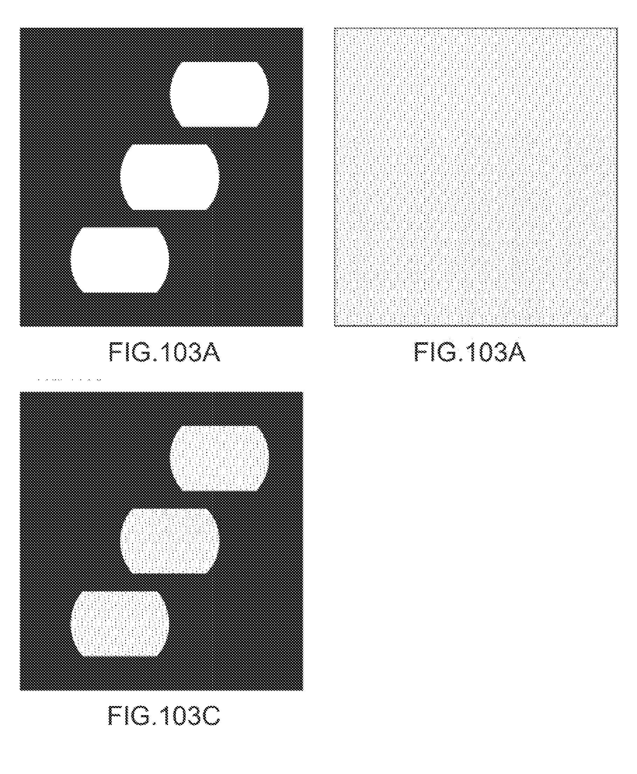

Figs. 103A to 103C are diagrams showing an embodiment of a method for forming the parallax barrier of the invention.

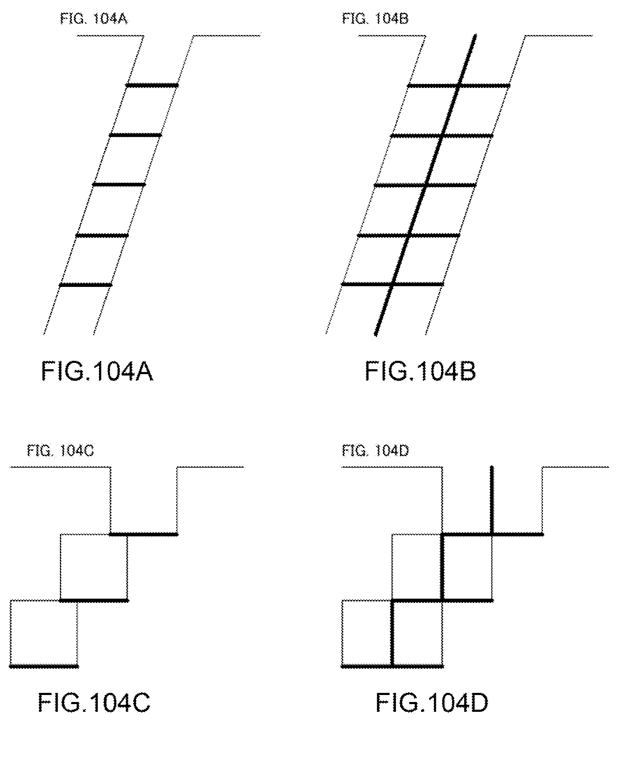

Figs. 104A to 104D are diagrams showing four embodiments of methods for forming the parallax barrier of the invention.

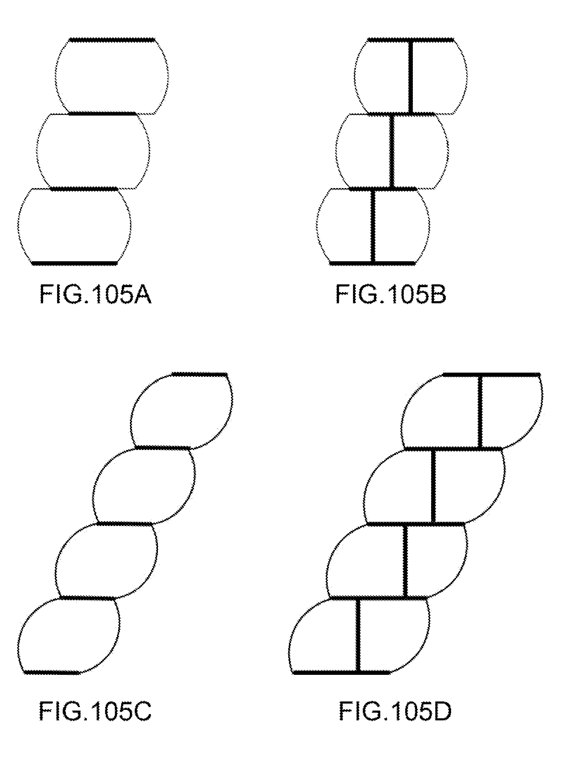

Figs. 105A to 105D are diagrams showing four embodiments of methods for forming the parallax barrier of the invention.

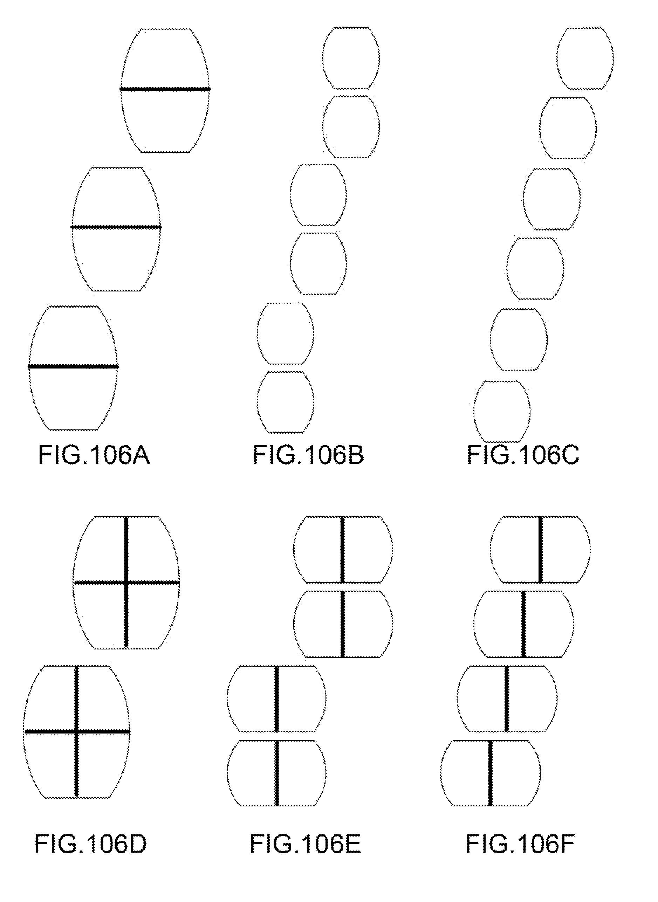

Figs. 106A to 106F are diagrams showing six embodiments of methods for forming the parallax barrier of the invention.

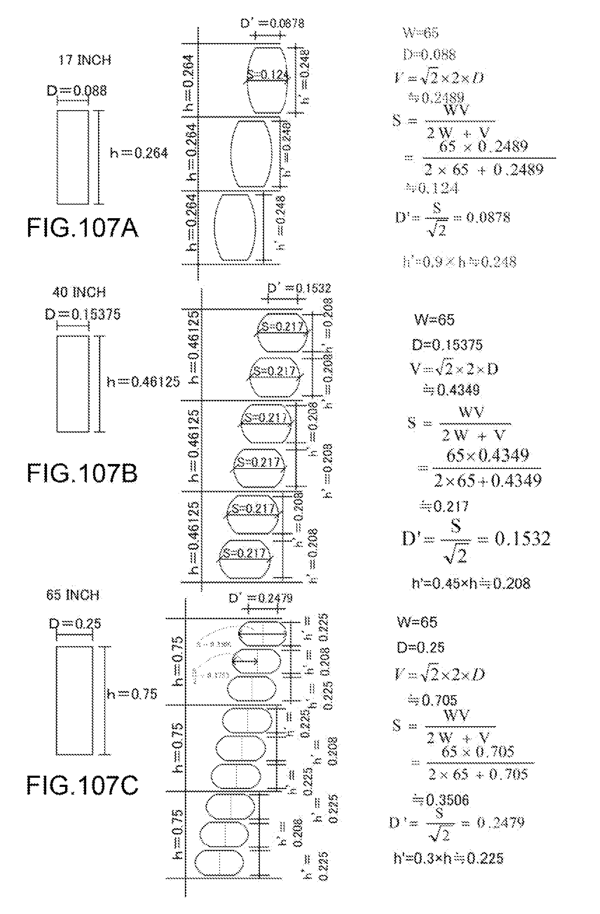

Figs. 107A to 107C are diagrams showing a method for calculating numerical values of the parallax barrier of the invention.

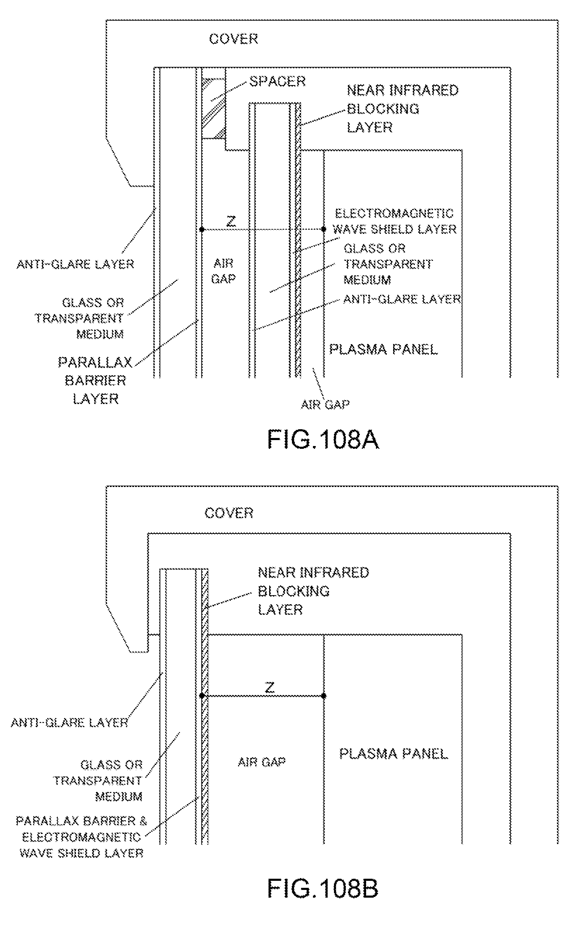

Figs. 108A and 108B are diagrams showing configurations of the plasma three-dimensional monitor of the invention.

Description of Numerals and Signs

1 THREE-DIMENSIONAL VIDEO IMAGE DISPLAY DEVICE

2 PARALLAX BARRIER

3 DRAWN IMAGE

4 FLOODLIGHT UNIT (FLOODLIGHT MEANS)

4b FLOODLIGT UNIT (FLOODLIGHT MEANS)

5 DISPLAY UNIT (DISPLAY MEANS)

5b LIGHT EMITTING IMAGE PART

6 CONTROL UNIT (CONTROL MEANS)

7 ILLUNINANCE SENSOR (EXTERNAL LIGHT DETECTING MEANS)

8 POSITION SENSOR (EACH DETECTING MEANS)

9 TOUCH PANEL

## DETAILED DESCRIPTION OF THE INVENTION

The following describes the embodiments of the invention.

<Overview>

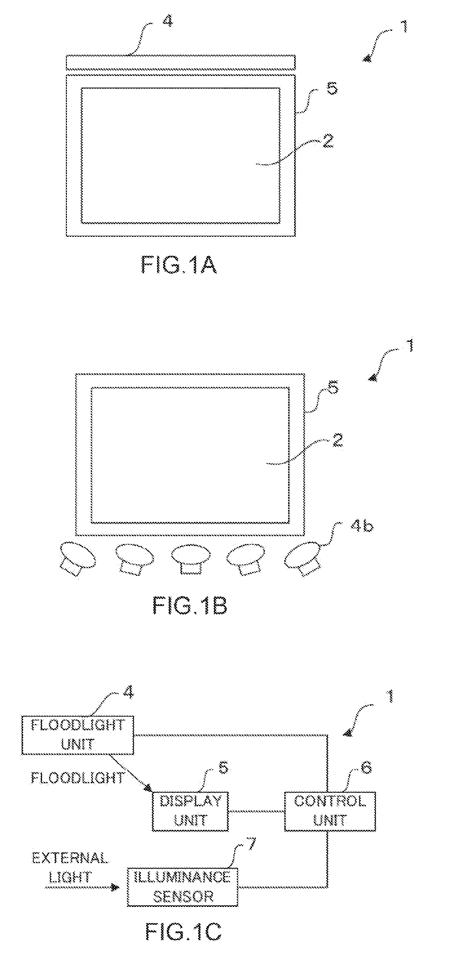

Figs. 1A to 1C show an overview of three-dimensional video image display device 1 of the invention. Figs. 1A and 1B are diagrams showing floodlight units (floodlight means) 4 and 4b that irradiates light for illumination to the front surface of parallax barrier 2 so that a subject person of image presentation can view image 3 drawn on the front surface of parallax barrier 2 even when external light is weak and a display unit (display means) 5a, and a position relationship therebetween.

Floodlight units 4 and 4b are used by being lit when external light is weak and in order that a subject person of image presentation can view image 3 drawn on the front surface of parallax barrier 2.

In an example shown in Fig. 1A, floodlight unit 4 is a horizontally long light source disposed above display unit 5. As a horizontally long light source, lined-up point light sources may be used, a linear light, such as a fluorescent, may be used, or a planar light, such as an organic electroluminescence, may be used.

In an example shown in Fig. 1B, floodlight unit 4b is lined-up point light sources. The shape, number, and arrangement of floodlight units 4 and 4b may not be limited to these examples and may be any shape, number, or arrangement, as long as a subject person of image presentation can view image 3 effectively according to the change of external light.

It should be noted that the difference between floodlight unit 4 and floodlight unit 4b is described as follows. That is, floodlight unit 4 only has a blind that hides floodlight unit 4b by covering floodlight 4b that is point light sources. Floodlight unit 4b is often used for a large billboard placed outside due to a cost issue.

Floodlight unit 4 and 4b may be placed at any of top, bottom, left, and right sides of display unit 5. Floodlight unit 4 and 4b may be provided on only one side or both sides.

The shape of floodlight unit 4 is preferably used in order to hide light, whether inside or outside, if appearance is focused in small or middle-sized three-dimensional video image display device 1.

Fig. 1C shows an overview a configuration of three-dimensional video image display device 1 of the invention. Three-dimensional video image display device 1 includes floodlight unit 4, display unit 5, control unit (control means) 6, and illuminance sensor (external light detecting means) 7.

Display unit 5 has a function similar to the one functions as a normal naked eye three-dimensional display, and includes light emitting image part 5d that displays a video image and parallax barrier 2 disposed in front thereof. Image 3, such as an advertisement, is drawn on the front surface of parallax barrier 2.

It should be noted that, when drawing image 3 on the front surface of parallax barrier 2, coloring for drawing may be done after coating with white on a normally black barrier surface.

As a basic function of display unit 5, light emitting image part 5d, such as a liquid crystal display, plasma display, organic electroluminescence display, LED display, behind parallax barrier 2 displays a video image for two-dimensional/three-dimensional display based on a video image signal transmitted from control unit 6. Light emitted by displaying and transmitted through the slit of parallax barrier 2 is perceived by a subject person of image presentation within an appropriate position for viewing a three-dimensional video image. Then, a naked eye three-dimensional video image is presented to the subject person of image presentation.

It should be noted that displayed video image does not have to be a video image for three-dimensional display, and may be, for example, a two-dimensional video image for compensating image 3 drawn on parallax barrier 2. Of course, image 3 can be compensated by a three-dimensional video image. If a video image is displayed for compensating a drawn image, a color that compensate image 3 may be displayed while curtailing brightness of the video image to prevent from damaging a texture of image 3.

The detailed configuration of display unit 5 is described later.

Floodlight unit 4 is a light source that can irradiate light to the front of parallax barrier 2 when it is lit. Floodlight unit 4 adjusts light intensity irradiating to the front of parallax barrier 2 based on a control signal from control unit 6. It will be appreciated that the irradiation direction and irradiation method may also be adjusted based on the control signal from control unit 6.

As an irradiation method, the light source may flash at a predetermined interval and color tone of irradiation light may be changed depending on the illuminating environment around three-dimensional video image display device 1 and/or the position of a subject person of image presentation.

Illuminance sensor 7 measures intensity of external light at the front of parallax barrier 2, and transmits the measured result to control unit 6. Illuminance sensor 7 may comprise one or a plurality of nondirectional sensors, a plurality of directional sensors in order to detect the incident direction of external light, or an appropriate combination of these sensors.

Control unit 6 controls a video image signal delivered to display unit 5 and floodlight unit 4 based on a measured result received from irradiation sensor 7. The details of what kind of control is performed is described later.

It should be noted that a video image delivered by control unit 6 to display unit 5 may be the one accumulated in advance in control unit 6 or the one input from outside. A video image input from outside may be accumulated in an independently provided storing unit (not shown), or received by a communication over a network or a wireless communication such as a broadcasting.

<Display Mode of Three-dimensional Video Image Display Device 1>

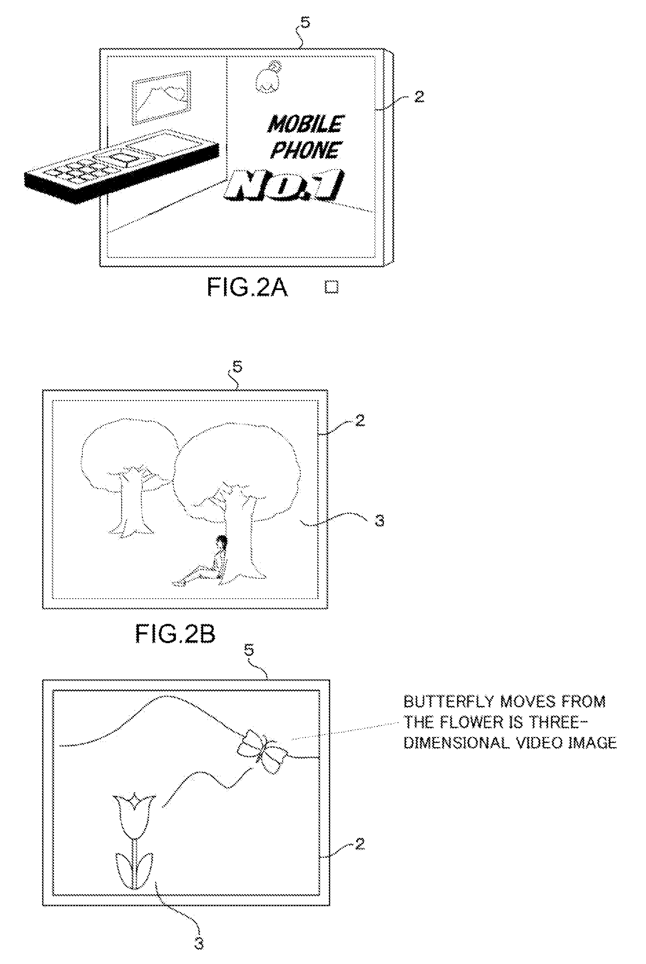

Figs. 2A to 2C are diagrams showing that three-dimensional video image display device 1 has mainly two modes: "multi-view three-dimensional display mode" and "drawing and printing preview mode." In a multi-view three-dimensional display mode shown in Fig. 2A, three-dimensional video image display device 1 operates as a naked eye three-dimensional display of a parallax barrier method. In a drawing and printing preview mode shown in Fig. 2B, three-dimensional video image display device 1 operates as a display panel that displays image 3 drawn on the front surface of parallax barrier 2.

In an example of "multi-view three-dimensional display mode" as shown in Fig 2A, display unit 5 displays an advertisement of a mobile telephone device. In this example, an mobile telephone device floating in air and the text of "No.1 mobile phone" are displayed as a three-dimensional video image approaching from the back of a room toward a viewer while the background of the room is created as a three-dimensional image and has a sense of depth.

In an example of "drawing and printing preview mode" shown in Fig. 2B, a tree and a person are drawn as image 3 on the front surface of parallax barrier 2.

It will be appreciated that, for the display mode, "multi-view three-dimensional display mode" and "drawing and printing preview mode" may be totally switched, or, as described later, "mixed mode" that mixes both display modes may be used to effectively advertise to a subject person of image presentation by combining two-dimensional images/three-dimensional video images.

In an example of "mixed mode" shown in Fig. 2C, a mountain and a flower are drawn as image 3 on the front surface of parallax barrier 2 on display unit 5. Then, only a butterfly is displayed as a three-dimensional video image and the butterfly flies in three-dimensional space with the flower as the point of origin.

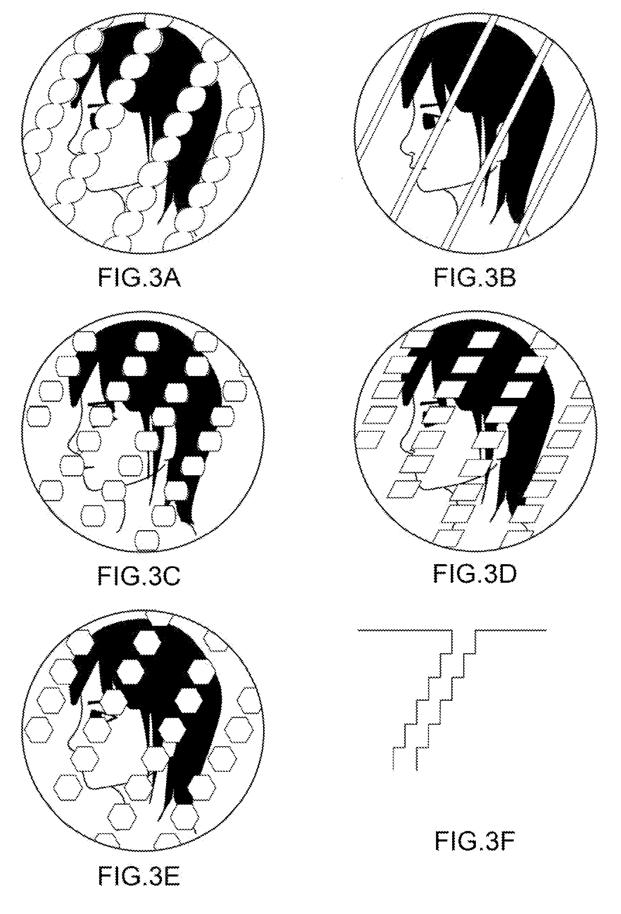

It should be noted that, as shown in Fig. 3A, the front surface of parallax barrier 2 may be a mirror surface. In this configuration, if position sensor 8 (not shown) is provided just as a conventional technique, surprise can be provided to a subject person of image presentation by converting the figure of the person to another image.

This is because a subject person of image presentation moving closer to three-dimensional video image display device 1 recognizes that the front surface of parallax barrier 2 is a normal mirror as the figure of him- or her-self is reflected on the front surface of parallax barrier 2 at first.

Further, the entire surface including the slit part of parallax barrier 2 may be a magic mirror to easily make the front surface of parallax barrier 2 a mirror surface, while the image becomes darker as the light transmits through the magic mirror when light emitting image unit 5d emits light.

In such a configuration, as a magic mirror may be installed in front of parallax barrier 2 at production of display unit 5, the entire mirror surface can be easily even than when leaving out slit part and making only the front surface of parallax barrier 2 a mirror surface.

Next, when control unit 6 detects that a subject person of image presentation entered within an appropriate position for viewing a three-dimensional video image using position sensor 8, control unit 6 presents a three-dimensional video image (for example, a skeleton) to the subject person of image presentation, whereby the subject person of image presentation recognizes the three-dimensional video image instead of the figure of him- or her-self reflected on the mirror.

When employing this configuration, intensity of light from display unit 5 may be as strong as or stronger than the level with which the figure of a subject person of image presentation reflected on the front surface of parallax barrier 2 actually disappears and only a three-dimensional video image is recognized.

It should be noted that the shape of the slit of parallax barrier 2 may be a skewered dumpling shape as shown in Fig. 3A, an oblique straight line as shown in Fig. 3B, a lantern shaped hole as shown in Fig. 3C, a parallelogram hole as shown in Fig. 3D, a hexagonal hole as shown in Fig. 3E, or an inclined staircase shape as shown in Fig 3F. The details of the shape of the slit are described later.

<Control Method of Display Unit and Floodlight Unit>

The details of how control unit 6 controls display unit 5 and floodlight unit 4 are described as follows.

Control unit 6 controls floodlight unit 4 and display unit 5 in consideration of a position, light volume, and the like, of external light, so that effective advertisement can be provided to a subject person of image presentation by combining two-dimensional images and three-dimensional video images. Specific examples are described below.

If, for example, sunlight is assumed as the external light, as the position of the sun changes from a sunrise in east to a sunset in west, illuminance sensor 7 measures the position and the intensity of the incident light, then, two-dimensional/three-dimensional video image displayed on display unit 5 and the illuminating method of floodlight unit 4 may be controlled according to the position and the intensity.

If an LED display or the like that can control lighting on/off per pixel is used, the pixels of a part exposed to direct sunlight entered through the slit of parallax barrier 2 may be lit off and the pixels of a part that is not exposed to direct sunlight under the shade of parallax barrier 2 may be lit on, thereby cutting off power consumption.

In addition, the intensity of sunlight is weak in morning and afternoon, and strong in daytime.

Therefore, when used for an outdoor advertisement, display unit 5 may not be lit in daytime and only image 3 on parallax barrier 2 may be shown. Employing such a configuration can cut off the power consumed by three-dimensional video image display device 1 in daytime.

Even in daytime, a video image may be displayed on display unit 5 to compensate image 3 so that the slit part of parallax barrier 2 is not shown as black.

The front surface of parallax barrier 2 may be controlled to be irradiated by illumination of floodlight unit 4 in morning and afternoon. Alternatively, the brightness of a video image displayed by display unit 5 may be controlled based on a measured result of external light by illuminance sensor 7, and whether or not displaying a naked eye three-dimensional video image may be determined depending on the brightness around three-dimensional video image display device 1.

A three-dimensional video image may be automatically displayed only when all conditions are satisfied in which an external light and time period condition during which a naked eye three-dimensional video image can be presented to a subject person of image presentation and the video image is intended to the person, and image 3 may be automatically displayed in other cases.

Detailed controls may be carried out, for example, intermediary writing for a slight change of the surroundings, such as external light.

That is, the point of three-dimensional video image display device 1 of the invention is providing light, controlling reflection light thereof and a luminous object, such as a liquid crystal display, and switching them.

It will be appreciated that, as the intensity of sunlight varies due to the weather, if it is cloudy in the daytime, the same control as the one in the morning and afternoon can be carried out for the light emitting intensity of display unit 5.

By displaying on display unit 5 the same image as drawn or printed image 3, it is possible to emphasize and show image 3 to a subject person of image presentation even when the amount of sun light is small.

It should be noted that illuminance sensor 7 may measure light intensity for each frequency band when measuring the intensity of external light. For example, b y employing this configuration, when red elements occupying in sunlight increases in morning and afternoon, display unit 5 may display two-dimensional/three-dimensional video images using most effective color tones.

Further, an effective advertisement can be provided to a subject person of image presentation by providing position sensor 8 just as a conventional technique and controlling a video image displayed on display unit 5 and illumination of floodlight unit 4 according to the position of the subject person of image presentation.

Furthermore, a camera (imaging means) may be used to capture an object near three-dimensional video image display device 1 (a person, animal, car, or the like), and control unit 6 may analyze the captured image and control to display a three-dimensional video image according to the analysis result (other person, animal, character, skeleton, or the like) on display unit 5 together with the captured image.

For example, if a subject person of image presentation walking in front of three-dimensional video image display device 1 sees display unit 5, a control may be done in which, in addition to the figure of the person, a butterfly may be perceived in spring and a dragonfly may be perceived in autumn as a three-dimensional video image.

<Appropriate Use Method>

A three-dimensional image can be most effectively viewed on a naked eye three-dimensional display when the front surface of parallax barrier 2 is black and only light through the slit of parallax barrier 2 is perceived by a subject person of image presentation. Therefore, the color tone of image 3 is preferably dark color.

Further, it is difficult to perform naked eye three-dimensional display outside during daytime as brightness of the pixels for three-dimensional display viewed through the slit of parallax barrier 2 is very low. Therefore, if a naked eye three-dimensional image is intended to be displayed during daytime, it is suitable for a showroom, with which three-dimensional video image display device 1 is placed indoor and naked eye three-dimensional display is performed for a subject person of image presentation indoor or outdoor.

Furthermore, if three-dimensional video image display device 1 is placed indoor and a subject person of image presentation also stays indoors, a three-dimensional video image can be effectively displayed by controlling indoor lighting using floodlight unit 4. It should be noted that, even in such a case, indoor lighting is preferably controlled to be turned down at least when a displayed content becomes a three-dimensional video image so that the three-dimensional video image is viewed clearly.

<Combination of A Two-Dimensional Image and A Three-dimensional Video Image>

The following describes, with relation to two-dimensional image 3 drawn on the front surface of parallax barrier 2 and a three-dimensional video image displayed as naked eye three-dimensional image, anteroposterior relationship of the two dimensional image and three-dimensional video image perceived by a subject person of image presentation.

For example, in the afternoon, by displaying a naked eye three-dimensional video image on display unit 5 while lighting printed image 3 using floodlight unit 4, the naked eye three-dimensional video image can be popped out. The subject person of image presentation can clearly perceive that the three-dimensional effect of the naked eye three-dimensional video image locates before printed image 3. This is because the eyes of human beings can distinguish a drawn realistic image that the person perceives by the reflecting light from the three-dimensional effect of a video image that a person perceives by the emitted light by the elements.

In this way, the combination of a drawn realistic two-dimensional image and a three-dimensional image floating before the drawn surface of the two-dimensional image can present more realistic three-dimensional effect comparing with a combination of a projected two-dimensional image and a three-dimensional image floating before the displayed surface of the two-dimensional video image.

That is, even a subject person of image presentation who is accustomed to three-dimensional video images, can be given surprise and thrill since a three-dimensional display object can be presented as popping out by the naked eye three-dimensional effect before a real picture or photograph.

Further, using a three-dimensional video image having black background and bright foreground, the subject person of image presentation can see the bright foreground as well as a background picture or an advertising display of image 3 on the black background part.

In this way, by combining the picture of an advertising display of drawn image 3 and a video image displayed as a naked eye three-dimensional image, a variety of effects can be rendered including obtaining an effect of a three-dimensional image floating before the advertising display and an effect of disappearing the advertising display by inhibiting a person from perceiving reflecting light from the advertising display by strengthening light of the video image.

Further, by adjusting brightness of a two-dimensional image and a three-dimensional video image, a subject person of image presentation can perceive that a position of the three-dimensional video image is before the two-dimensional image or behind the two-dimensional image.

<Details of The Configuration of Display Unit 5>

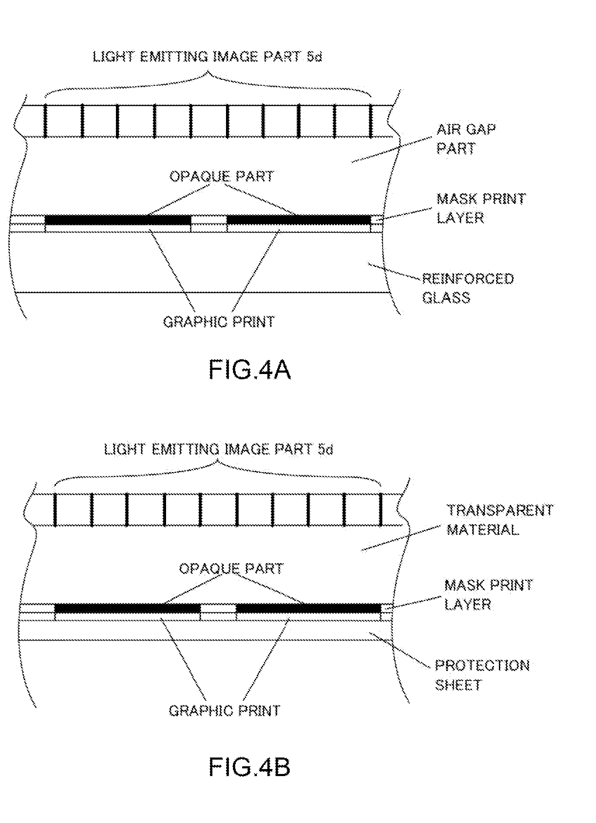

Figs. 4A and 4B show a section view of the details of the configuration of display unit 5.

In an example shown in Fig. 4A, display unit 5 includes a reinforced glass, graphic print, mask printed layer, air gap part, and light emitting image part 5d, in the order closer to a subject person of image presentation.

In an example shown in Fig. 4B, display unit 5 includes a protection sheet, graphic print, mask printed layer, transparent material, and light emitting image part 5d, in the order closer to a subject person of image presentation.

As is understood from Figs. 4A and 4B, when using a combination of a reinforced glass and air gap part, the reinforced glass should have an appropriate thickness to be strong enough. Further, when using a combination of a protection sheet and transparent material, the protection sheet can be thin as the strength of display unit 5 is retained by transparent material. It will be appreciated that the configuration of display unit 5 may be a combination of a thin reinforced glass and transparent material.

Image 3 is drawn as a graphic print. The graphic print part may be a mirror surface.

The mask print layer comprises opaque part that limits light directions by blocking light emitted from light emitting image part 5d and transparent part (a slit) that transmits light.

Light emitting image part 5d is an array of pixels that displays an two-dimensional video image and/or an three-dimensional video image, that is, a display.

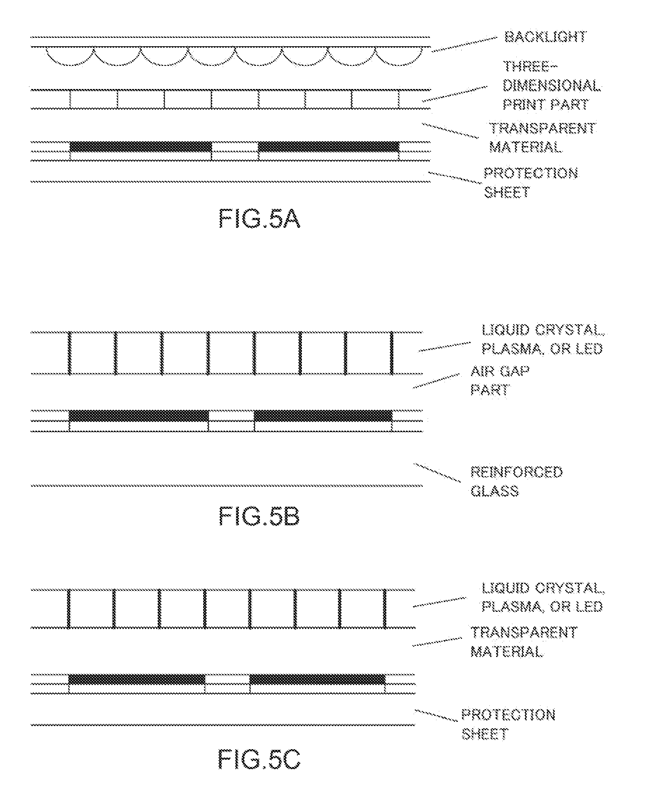

Figs. 5A to 5C show a configuration example of another display unit 5 in a section view.

Fig. 5A shows an example in which light emitting image part 5d comprises a backlight and a three-dimensional print part and transparent material is used to fill between mask print layer and the three-dimensional print part. It will be appreciated that a combination of an air gap part and reinforced glass may be used instead of the combination of transparent material and protection sheet.

Fig. 5B is an example in which liquid crystal, plasma or LED is used for light emitting image part 5d and an air gap part is provided between light emitting image part 5d and a mask print layer.

Fig. 5C is an example in which the air gap part shown in the configuration example of Fig. 5B is replaced with transparent material. As strength is given by replacing air gap to transparent material, a thick reinforced glass can be replaced with a thin protection sheet.

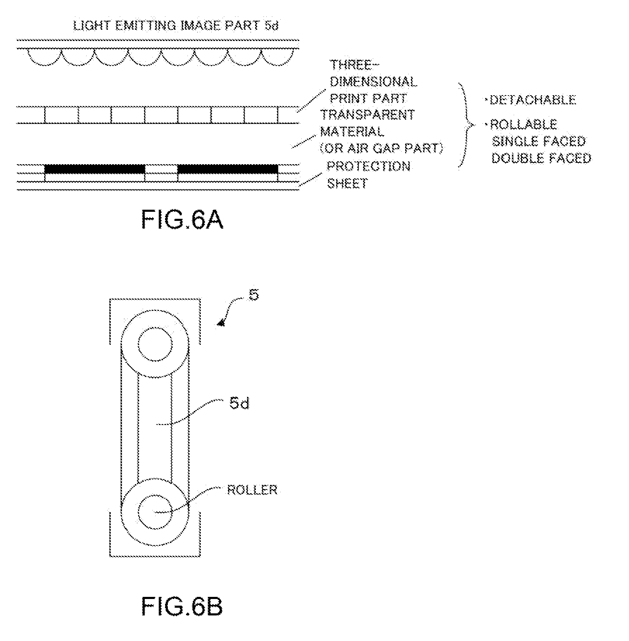

Figs. 6A and 6B show further variants of display unit 5.

Fig. 6A is a diagram showing a configuration in which a three-dimensional print part, transparent material, mask print layer, graphic print, protection sheet or the like is made attachable and detachable or rollable.

The configuration of Fig. 6A is seemingly similar to the example shown in Fig. 5A. However, only three-dimensional print part, or transparent material, mask print layer, graphic print, protection sheet, or the like in addition to the three-dimensional print part, are made attachable and detachable or rollable.

If the three-dimensional print part or the like is attachable and detachable, flexibility is not required, however, if the three-dimensional print part or the like is rollable, flexibility is required so that the three-dimensional print part or the like can be wind up by a roller.

It should be noted that transparent material may be an air gap part.

Fig. 6B is a diagram showing that only three-dimensional print part is rollable or three-dimensional print part, transparent material, mask print layer, graphic print and protection sheet are rollable. Fig. 6B is a diagram showing at least the three-dimensional print part, among three-dimensional print part, mask print layer, graphic print layer, protection/reinforced sheet shown in Fig. 6A, moves between rollers provided at the edges of the body of display unit 5 by rotation of the rollers.

It should be noted that if at least the three-dimensional part is rollable, as described above, an image may be viewed only from the front of three-dimensional video image display device 1, or as shown in Fig. 6B, an image may also be viewed from behind three-dimensional video image display device 1.

<Embodiment Where A Motion Is Used As A Trigger>

The following describes a case in which display is controlled, triggered by the motion of a subject person of image presentation.

The above configuration describes a case in which position sensor 8 detects that a subject person of image presentation enters in a predetermined appropriate position for viewing three-dimensional video image to effectively display a video image. Further, using a variety of sensors, when a subject person of image presentation performs a motion, such as riding, touching, and moving closer, display is controlled, triggered by the motion, to perform, for example, an attraction of popping out three-dimensional image. A timer may measure time and control display content accordingly.

For example, three-dimensional video image display device 1 may be part of a floor. According to this configuration, the floor is made of reinforced glass and normally looks like marble stone or tile, if someone gets closer, the floor can be controlled to pop out a three-dimensional image, become a pond, or present a carp in a pond.

Three-dimensional video image display device 1 may be provided with a pressure sensor therebefore. In such a configuration, if a subject person of image presentation is on the pressure sensor, three-dimensional video image display device 1 ahead the walking direction of the person shows a river or other three-dimensional images along the direction in which the person is walking.

Further, in a restaurant, a three-dimensional guide may be displayed ahead a guest (a subject person of image presentation) to guide the guest to a sheet. In this case, as three-dimensional display cannot be seen from a lateral direction, other guests will not get confused. The three-dimensional guide may be used at a plurality of guiding branches of a pathway, or may be used to guide a guest inside a wide room.

For example, three-dimensional video image display device 1 may be part of a door. According to this configuration, three-dimensional video image display device 1 may be controlled to pop out a three-dimensional image at the moment when a person grips the knob of the door.

For example, three-dimensional video image display device 1 may be used as a mirror. According to this configuration, while three-dimensional video image display device 1 normally reflects a figure of a subject person of image presentation, when the person looks in the mirror or touches the mirror, three-dimensional video image display device 1 may be controlled to pop out a skeleton.

For example, a microphone maybe used as a sensor. According to this configuration, three-dimensional video image display device 1 may be controlled to cause a wall to approach a subject person of image presentation by being activated by a sound emitted by the person.

For example, three-dimensional video image display device 1 may be part of an automatic vending machine. In this configuration, if a person moves closer to three-dimensional video image display device 1, three-dimensional video image display device 1 is controlled to pop out a three-dimensional image.

For example, three-dimensional video image display device 1 may be part of a mechanism clock. According to this configuration, when a predetermined time comes, three-dimensional video image display device 1 may be controlled to pop out a three-dimensional image.

For example, three-dimensional video image display device 1 may be part of a game machine. According to this configuration, three-dimensional video image display device 1 can be controlled to make an image in the foreground suddenly becomes a three-dimensional image according to the scenario of the game.

For example, three-dimensional video image display device 1 may be part of an elevator. According to this configuration, if a person rode on the elevator, three-dimensional video image display device 1 may be controlled to display a three-dimensional image in the elevator.

For example, three-dimensional video image display device 1 may be incorporated in a train. Three-dimensional video image display device 1 may control a video image by detecting that a person rode on the train just as the elevator, or control a naked eye three-dimensional video image displayed according to the incident direction of external light that changes according to the movement of a train car.

<Forming A Dot Pattern on A Parallax Barrier>

Three-dimensional video image display device 1 may be used in combination with a mechanism in which a dot pattern having information is formed by being superimposed on a text or a photograph on a medium surface and the information is retrieved from the superimposing dot pattern when a user touches the text or photograph using a scanner as disclosed in Patent No. 3706385 and Patent No. 3771252.

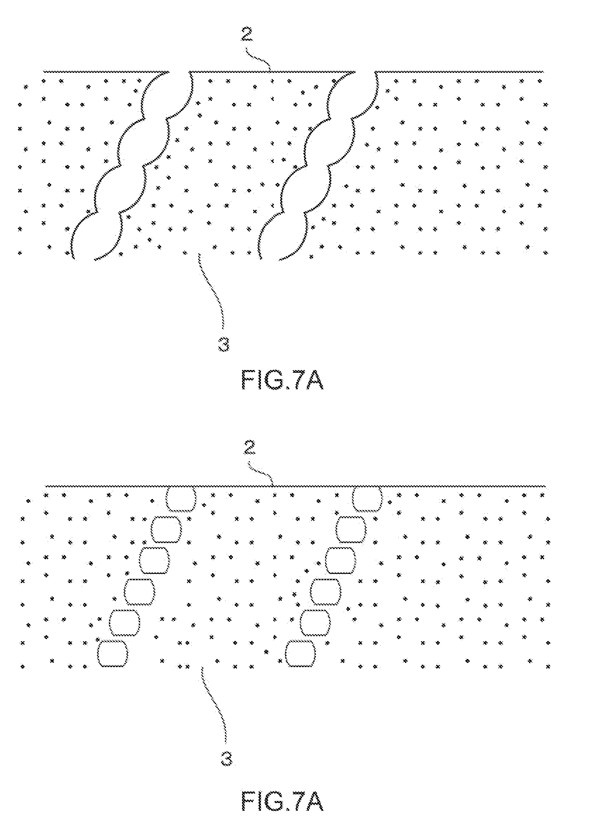

Specifically, as shown in Figs. 7A and 7B, a dot pattern is formed by being superimposed on image 3 drawn on the anterior surface of parallax barrier 2. As information retained by a dot pattern, it is preferable to use XY coordinate values representing a position on the surface of parallax barrier 2 of three-dimensional video image display device 1.

It should be noted that Fig. 7A shows a case in which the slit is of a skewered dumpling shape and Fig. 7B shows a case in which the slit is a hole.

Further, as another specific example, a dot pattern may be formed without distinguishing the entire surface of parallax barrier 2, that is, without distinguishing opaque part drawn with image 3 from transparent slit part that transmits light from light emitting image part 5d located therebehind.

This configuration is effective, when forming parallax barrier 2 and using a process of forming opaque part of parallax barrier 2 on a transparent component by drawing, printing or other methods. That is, when forming a dot pattern, a normal dot pattern forming method can be used to form a dot pattern without distinguishing transparent slit part from opaque part on which image 3 is formed, simplifying the production process.

For example, this configuration is effective in a production method in which opaque part of parallax barrier 2 is formed on the front surface of a transparent sheet, that is, the other surface of light emitting image part 5d, then, a dot pattern layer including a slit part is formed thereon, and the sheet is attached on the back surface of a reinforced glass or protection sheet that is disposed further anterior, that is, on the surface of light emitting image part 5d side thereof.

Further, compared with a configuration of forming a dot pattern only on image 3, as a dot pattern is also formed on slit part, the dot pattern can be reliably read out even if the position touched by a user using a scanner is on the slit part.

It should be noted that the transparent component forming a dot pattern may be an infrared reflective sheet; the opaque part of parallax barrier 2 may be formed using non-carbon (that does not absorb infrared rays) material; and each dot of the dot pattern may be formed with carbon black (infrared absorbing material). Opaque part may be painted with white before forming a dot pattern and image 3 may be drawn thereon.

Further, if the paint is too thick, opaque part (a mask part) of parallax barrier 2 may be formed with black non-carbon material, white base may be painted thereon, a dot pattern may be formed over the entire surface thereof with carbon black, and image 3 may be drawn thereon using non-carbon ink.

In these configurations, a dot pattern can be optimally read out using a scanner.

It should be noted that, as for information represented by a dot pattern, a dot pattern may represent XY coordinates, information corresponding to the content of image 3 (for example, each drawn character), or both thereof.

For example, suppose a bear and a dog are drawn as image 3, if a user touches the dog using a scanner pen of Bluetooth or the like, the content of image 3 (a dog) is recognized as specified and the display may be controlled to display a video image relating to a dot, or if a user touches behind the dog, XY coordinates positioned behind the dog are retrieved and the display may be controlled to move the displayed dog backward.

Using this configuration, for example, if a subject person of image presentation touches a desired position on a parallax barrier using a scanner, what is touched in the video image by the person is recognized based on the XY coordinate values of the touch position and the displayed video image when being touched. In this way, images can be controlled including changing a video image for displaying next.

<Embodiment Combining with A Touch Panel>

The above description illustrates three-dimensional video image display device 1 used as an interactive interface by forming a dot pattern on the front surface of parallax barrier 2 and touching an image/video image using a scanner by a subject person of image presentation.

Alternatively, a displayed content and a lighting method of floodlight unit 4 may be controlled by touching a drawn image and displayed video image on three-dimensional video image display device 1 with a finger of a subject person of image presentation.

In this configuration, an optical touch panel (not shown) is attached over the entire area of the front surface of display unit 5, that is, the side facing a subject person of image presentation. Parallax barrier (three-dimensional mask) 2 for naked eye three-dimensional display is attached on part of the optical touch panel.

In this way, as the touch panel has an area that is larger than the area of parallax barrier 2 and covers an image relating to image 3 drawn on the front surface of parallax barrier 2 yet drawn outside the area of parallax barrier 2, an interactive interface can be realized using an image outside the area of parallax barrier 2 in addition to image 3 and a naked eye three-dimensional video image.

It should be noted that the image outside the parallax barrier 2 may be an image drawn by printing or other methods, or a video image displayed by another video image display device.

It will be appreciated that image 3 may be drawn on the front surface of parallax barrier 2, or may not be drawn. If image 3 is not drawn, a subject person of image presentation perceives only the displayed two-dimensional/three-dimensional video image and touches the optical touch panel to perform a desired input operation.

It should be noted that the touch panel may be optically driven or pressure driven.

<Embodiment of Providing A Touch Panel Only on Part of A Display Unit>

The description above illustrates a touch panel provided on the entire surface of display unit 5 and covers the entire surface of parallax barrier 2. Alternatively, a touch panel may be provided only part of display unit 5.

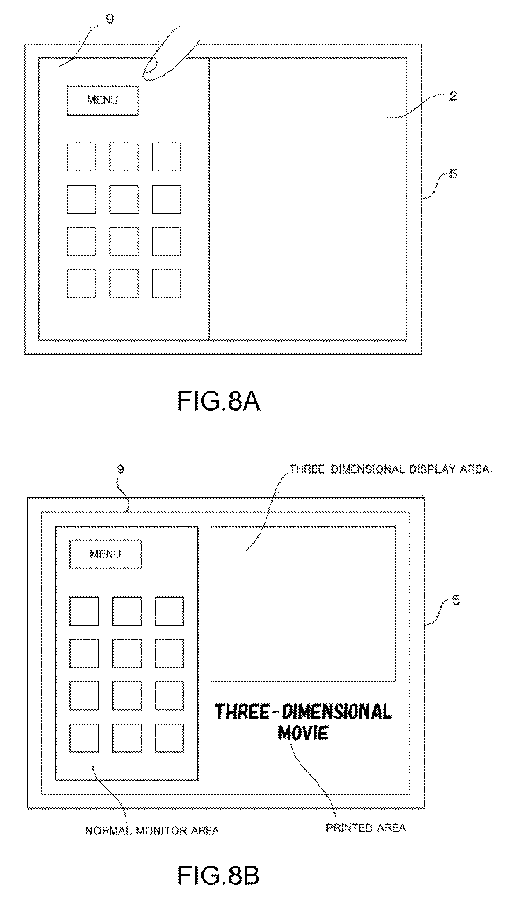

Figs. 8A and 8B show an example in which parallax barrier 2 and touch panel 9 are provided only part of display unit 5.

In an example shown in Fig. 8A, the right side of display unit 5 is a three-dimensional display area and provided with parallax barrier 2. The left side of display unit 5 is a menu area and not provided with parallax barrier 2 yet provided with optical or pressure sensitive touch panel 9. It should be noted that touch panel 9 may be provided in the three-dimensional display area.

In this way, by dividing the area of display unit 5 into a three-dimensional display area and a menu area, three-dimensional display becomes possible and, at the same time, small texts can be displayed as a menu.

With display unit 5 of a parallax barrier method with a plurality of viewpoints, pixels for a plurality of view points are required to be arranged in a horizontal direction, thus the number of pixels for one viewpoint decreases and, while three-dimensional effects can be attained, the resolution is degraded. Although images that can be seen beautifully even with degraded resolution without a sense of discomfort, such as a photograph, are preferably displayed as three-dimensional image, images that are hard to decipher due to degraded resolution, such as small texts, are preferably displayed separately from the three-dimensional display area.

Therefore, a menu area that is often displayed with small texts is not provided with parallax barrier 2 and the display method of the image is by two-dimensional video image or printing.

It should be noted that, as an example shown in Fig. 8B, display unit 5 may comprise touch panel 9 that covers display unit 5, a normal monitor area on the left side of display unit 5 that displays menu and the like, a three-dimensional video image display area on the upper right side of display unit 5, and print area on the lower right side of display unit 5 that is printed with a text such as "three-dimensional movie."

In this way, by dividing the front surface of display unit 5 into functional areas, a display method optimized to each function can be employed. Further, by such dividing, even large display unit 5 can incorporate low cost small components, thereby reducing a production cost of display unit 5.

<Embodiment Using A Detachable Touch Panel>

It should be noted that touch panel 9 may be a printed type other than a monitor type. An optical touch panel, or a pressure sensitive touch panel (used for a printed type) is used for touch panel 9.

Monitor type touch panel 9 is transparent and used by being superimposed on a menu displayed by display unit 5. Printed type touch panel 9 is used by printing the photograph of a menu on the front surface or the back surface of transparent touch panel 9, or drawing the photograph of a menu directly on touch panel 9.

When using monitor type touch panel 9, a grid sheet disclosed in Japanese Patent Application No. 2007-230776 may be used. This grid sheet realizes the function of touch panel by touching with a scanner an invisible fine dot pattern formed on a transparent sheet that is used by being superimposed on a monitor screen.

When using a printed type touch panel 9, touch panel 9 may be fixed on display unit 5 or detachable from display unit 5.

For example, detachable touch panel 9 may be configured using a paper keyboard and a paper controller disclosed in Japanese Patent No. 4019114, Patent No. 4042065 and the like.

These paper keyboard and paper controller are media, such as a paper on which keys of a keyboard or buttons of a remote controller are superimposed and printed with a dot pattern. Information allocated to the buttons and keys is read out by touching the buttons or keys on the paper keyboard or paper controller with a pen-shaped scanner, thereby executing a function corresponding to read information, such as switching images.

It should be noted that, in addition to the above function, the paper keyboard and paper controller of the invention may be printed or drawn with a series of product photographs or the like. The paper keyboard and paper controller may be media on which icons of photographs and graphics or the like are drawn or printed.

In this configuration, if a subject person of image presentation selects a product that the person wants to know the details, the details are displayed three-dimensionally.

<Grid Sheet Also Functioning as Parallax Barrier>

In three-dimensional video image display device 1, a parallax barrier may also function as a conventional grid sheet.

It should be noted that how to use an infrared reflection layer, infrared diffusion layer, and infrared diffuse reflection layer as components of a grid sheet that also functions as a parallax barrier is the same as the method for a conventional grid sheet.

In the above-described configuration, as a grid sheet also functions as a parallax barrier, the production cost can be decreased compared with when producing them as separate components.

<Production Method of A Naked Eye Three-dimensional Display>

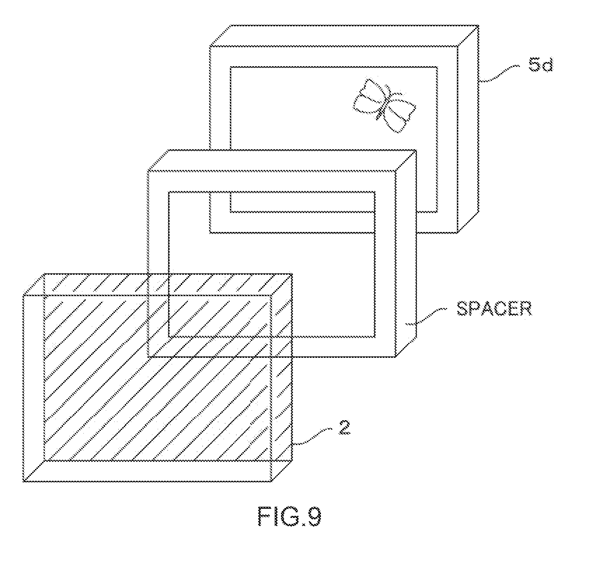

First, Fig. 9 shows a configuration relating to production of a naked eye three-dimensional display of a parallax barrier method. As shown in Fig. 9, a naked eye three-dimensional display is produced by providing a spacer on the front surface of a normal display (a light emitting image part) 5d that displays an image, then providing a reinforced glass on the back surface of which is formed parallax barrier 2 on further front surface thereof.

By setting an appropriate space between the image display surface of display 5d and parallax barrier 2 using a spacer, an appropriate three-dimensional effect can be attained in a predetermined three-dimensionally viewable area.

A naked eye three-dimensional display can be produced by fixing display 5d, spacer, and reinforced glass after adjusting the arrangement of the slit of parallax barrier 2 and the arrangement of the pixels for a viewpoint on display 5d.

<Another Embodiment Combining A Touch Panel>

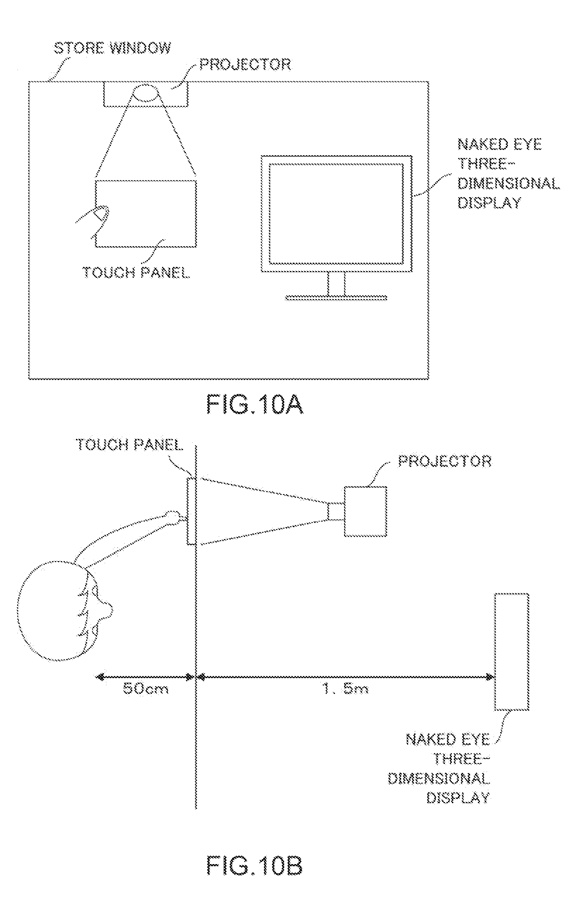

With reference to Figs. 10A and 10B, another embodiment is described that combines a naked eye three-dimensional display and a touch panel.

Fig. 10A is a front view of this configuration. The whole figure is the window of a store window, and a touch panel is provided on part thereof. A video image, such as a menu, is projected to the touch panel from inside the store window. A naked eye three-dimensional display is provided at the back on the right side of the store window.

Fig. 10B is a top view of this configuration and is a diagram showing the position relationship among a subject person of image presentation, touch panel, and naked eye three-dimensional display. Fig. 10B is an example in which an appropriate position for viewing a three-dimensional video image of the naked eye three-dimensional display is 2 m away from the front of the naked eye three-dimensional display.

In the above-described embodiment in which one area of display unit 5 is divided into a three-dimensional video image display area and a menu area provided with a touch panel, display unit 5 should be placed within a reach of a subject person of image presentation, thus, a naked eye three-dimensional display with which an appropriate position for viewing a three-dimensional video image is approximately 50 cm away from the front surface thereof should be used.

Closer the appropriate position for viewing a three-dimensional video image to the naked eye three-dimensional display is, smaller the popping out degree of a three-dimensional image, thereby halving the three-dimensional effect. To show a three-dimensional video image to a subject person of image presentation other than the touch panel operator, a large screen naked eye three-dimensional display is required. Thus, the installing position of a naked eye three-dimensional video image display should have a certain distance from a crowd of people.

However, if the configuration completely separates the arrangement of a touch panel and the arrangement of a naked eye three-dimensional display, the naked eye three-dimensional display can be installed at an appropriate position for viewing a three-dimensional video image.

<Details of A Touch Panel>

The details of a touch panel used for a store window or the like are described below.

While a touch panel of a type that is used to cover on a liquid crystal display or the like can be used, there is a problem that sensors and wires should be provided on the glass surface, thereby degrading visual quality of the store window.

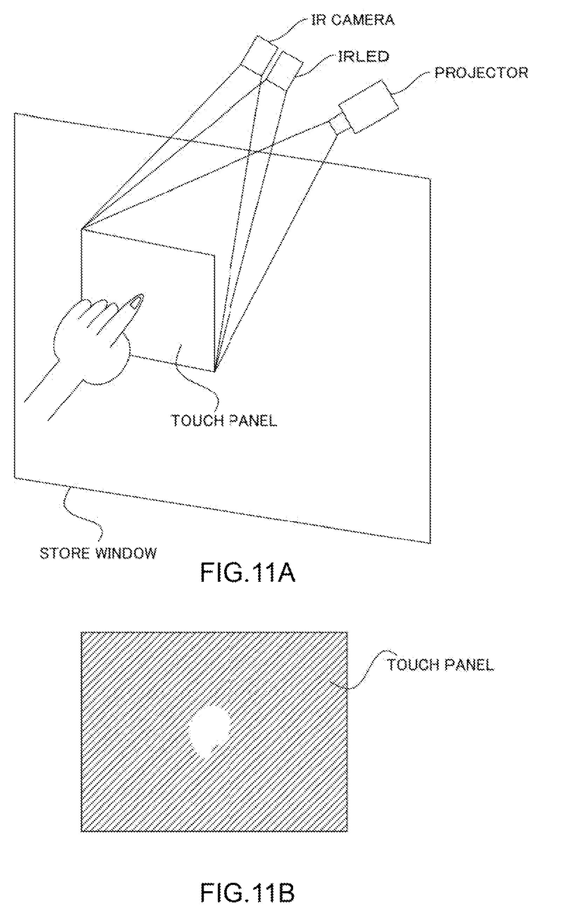

Therefore, as shown in Fig. 11A, a configuration using a touch panel using an IR-LED and an IR camera is preferable.

In this configuration, a video image (e.g., a menu) is projected from a projector using visible light to a predetermined area (a touch panel area) of a store window. Further, infrared rays (IR) are irradiated to the touch panel area from the IR-LED. As the irradiated infrared rays are transmitted through the touch panel, a black image is captured by the IR-camera.

It should be noted that a projector may also function as the IR-LED. In this configuration, the projector irradiates infrared rays to a predetermined area of a store window.

When a touch panel operator touches on a touch panel, infrared rays are diffusely reflected only off the touch position. This diffuse reflection is captured by the IR-camera.

Fig. 11B shows an example of the image captured by the IR camera when a touch panel operator touches on the touch panel. The whole image is black, and only the touched position shows white. While, of course, the image includes infrared rays that are diffusely reflected off fingers near the touch panel other than the finger in contact with the touch panel surface, misrecognition can be prevented by a method such as adjusting a focal point distance.

A touch position on the touch panel can be detected by analyzing an image captured by the IR-camera.

In this way, outputting an image and detecting a touch operation can be performed without providing a sensor and a wire on the surface or around the touch panel (or a transparent material on which a touch panel is installed).

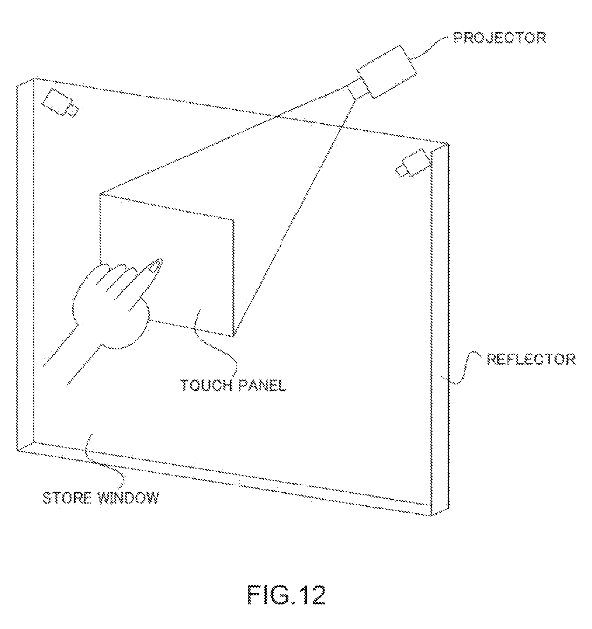

It should be noted that the touch panel may be realized by a normal image recognition method using the principle of triangulation as shown in Fig. 12. When using this approach, cameras installed upper left and upper right corners capture the position of a finger, and a reflector or the like is preferably installed around the store window so that the finger can be easily distinguished from the background.

It should be noted that the touch panel of this configuration may be a grid sheet. In this configuration, if there is a glass in front of an exhibited object, for example, at a science museum, art museum, aquarium, zoo and the like, the detailed explanation of the exhibited object can be provided to visitors or three-dimensional video images can be shown to the visitors by touching a grid sheet attached on the glass surface using a scanner. The scanner may be a pen of Bluetooth that is capable of outputting a sound.

For example, at a zoo, if a polar bear does not move due to hot temperature, by showing an actively moving three-dimensional video image of a polar bear instead, visitors' satisfaction is increased thereby constantly increasing the number of visitors who become repeaters.

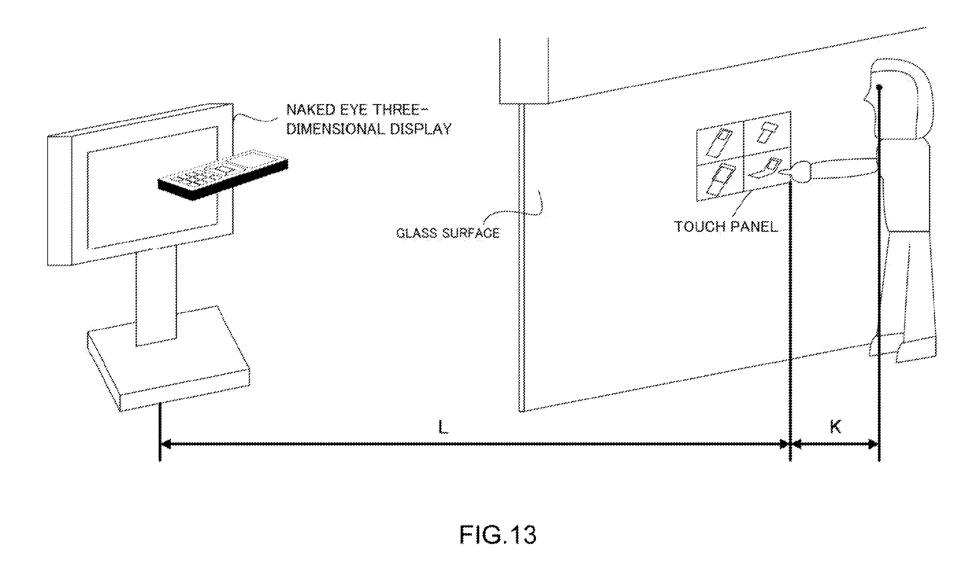

Figs. 13 to 14C are diagrams illustrating an embodiment in which a naked eye three-dimensional video image display and a touch panel are combined.

Fig. 13 is a perspective view of this configuration, and is a diagram showing a position relationship among a subject person of image presentation, a touch panel, and a naked eye three-dimensional video image display. The whole figure is the window or a store window (a glass surface), and a touch panel is installed on part thereof. A naked eye three-dimensional video image display is installed at the back on the right side of the store window. An appropriate position for viewing a three-dimensional video image of the naked eye three-dimensional video image display is L + K.

In the above-described embodiment in which one area of display unit 5 is divided into a three-dimensional video image display area and a menu area provided with a touch panel, display unit 5 should be placed within a reach of a subject person of image presentation, thus, a naked eye three-dimensional display with which an appropriate position for viewing a three-dimensional video image is approximately 50 cm away from the front surface thereof should be used.

Closer the appropriate position for viewing a three-dimensional video image to the naked eye three-dimensional video image display is, smaller the popping out degree of a three-dimensional image, thereby halving the three-dimensional effect. To show a three-dimensional video image to a subject person of image presentation other than the touch panel operator, a large screen naked eye three-dimensional display is required. Thus, the installing position of the naked eye three-dimensional video image display should have a certain distance from a crowd of people.

However, if the configuration separates the arrangement of a touch panel and the arrangement of a naked eye three-dimensional display, the naked eye three-dimensional display can be installed at an appropriate position for viewing a three-dimensional video image.

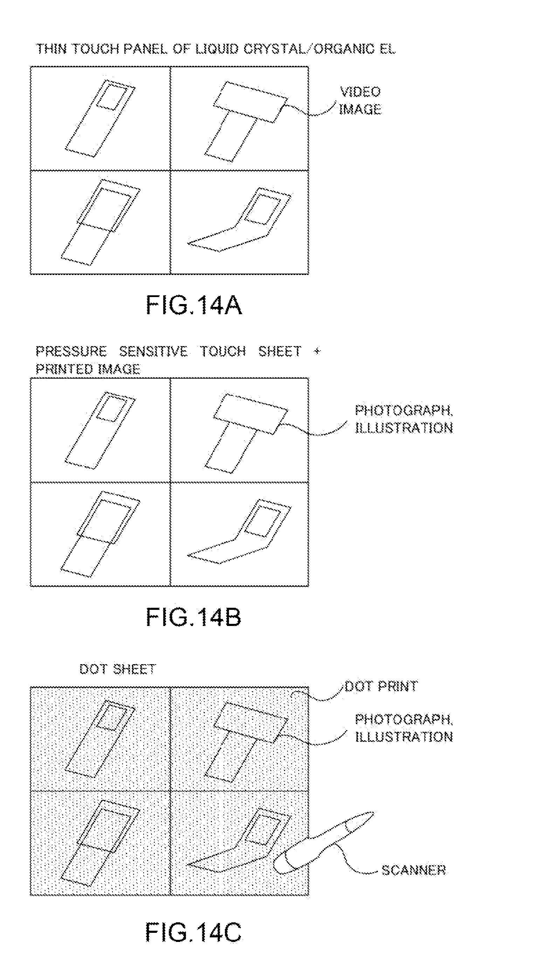

Fig. 14A to 14C are diagrams illustrating the details of the touch panel.

Fig. 14A is an example using a thin touch panel of liquid crystal or organic electroluminecsence. In this case, a projector is provided inside the store window, and the projector projects video images using visible light to the touch panel. The details are as described with reference to Figs. 11A and 11B.

Fig. 14B is an example of a pressure sensitive touch sheet. The pressure sensitive touch sheet is a sheet shaped touch panel and can be printed with a photograph or an illustration.

Fig. 14B is such a pressure sensitive touch panel printed with four kinds of photographs of mobile telephones.

Fig. 14C is an example in which a dot sheet is used as a touch panel. The dot sheet is a medium, such as a paper or sheet, on which a product photograph and the like are superimposed and printed with a dot pattern. In this embodiment, the photograph of a mobile phone is superimposed and printed with a dot pattern on a medium. When a subject person of image presentation touches the photograph with a scanner, information allocated to the photograph is read out and a video image corresponding to the read information is displayed on a naked eye three-dimensional display.

It should be noted that, in this embodiment, anything that has a function as a touch panel, such as other touch panel or a grid sheet, may be used without limitation to the touch panel described with reference to Figs. 14A to 14C. For example, an electrostatic touch panel may also be used.

<Details of Circular Arc Slit (1)>

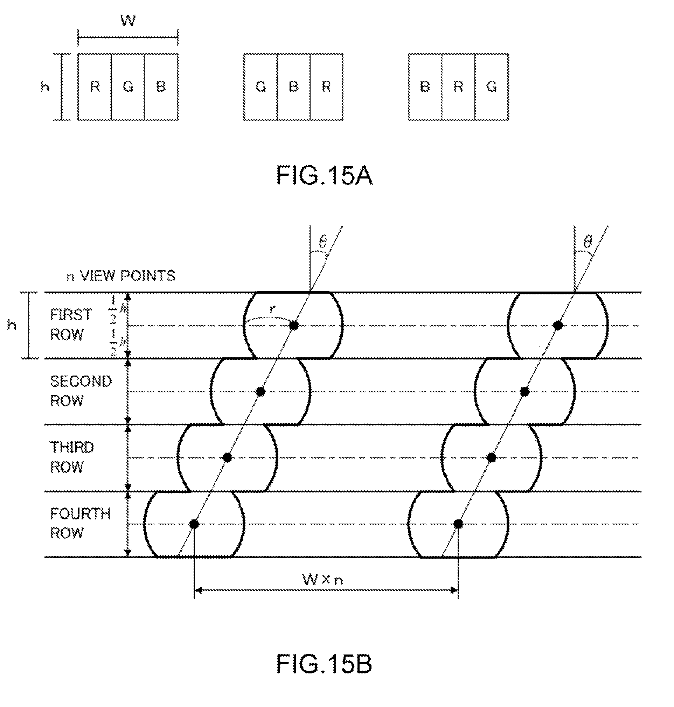

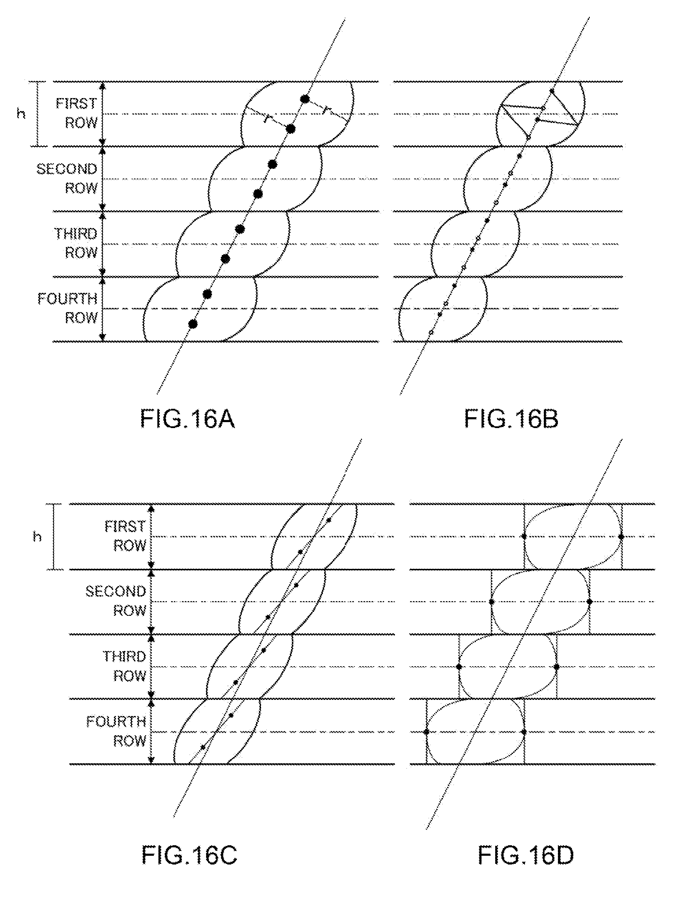

The details of a configuration in which the edge shape of the slit of parallax barrier 2 described above is a circular arc shape with reference to Figs. 15A and 15B, and a configuration in which the edge shape of the slit is an elliptic arc shape with reference to Figs. 16A to 16D.

Fig. 15A shows the arrays of subpixels, R, G, B in one pixel.

It should be noted that, while pixel, picture element, image element are normally used under the same meaning and one pixel comprises a plurality of subpixels, in the following description, a unit area of one color is referred to as a subpixel, and a unit area of a collection of subpixels R, G, and B is referred to as a pixel or an image element. That is, one pixel comprises three subpixels of R, G, and B.

That is, an example shown in Fig. 15A comprises three subpixels of R, G, and B of a pixel in a horizontal direction. Subpixels are lined up in the order of R, G, and B from the left side in the left example; G, B, R from the left in the middle example; and B, R, G from the left in the right example. The size of one pixel is height h and width W.

With reference to Fig. 15B, the position of each circle forming a slit is described as follows.

First, the position of the central point of each circle in a vertical direction within each row is on the centerline of each row, and the distance from each border of each row in height direction is half the height h, that is, 0.5h.

It should be noted that the position of the central point of each circle in a horizontal direction cannot be sweepingly specified as the arrangement of the position of the central point in a horizontal direction in one pixel differs depending on what kind of three-dimensional effect is to be expressed. In the example of Fig. 15B, the central point of each circle in each row is shifted using inclination θ, provided, however, the distance between the central points of circles in a horizontal direction is W x n in an setting in which there are n viewpoints to width W of a pixel.

Further, radius r of each circle is also a parameter and should be determined after calculating desirable three-dimensional effects, and thus, cannot be sweepingly specified. If the number of viewmixes is large, radius r also becomes large. If the number of viewmixes is small, radius r also becomes small. Of course, r depends on the size of pixels, and r relates to the size of pixels and the degree of a viewmixe (the degree of a three-dimensional effect).

The circular arcs of rows are connected by a line that is a border of each row. Pixels of each row is preferably separated by a line in a horizontal direction that is a border of each row, that is, a parting line of each row. In this configuration, viewmixes are appropriately controlled and a sense of discomfort caused by viewpoint transitions and jump points are alleviated, which allows presenting images with enhanced three-dimensional effects to a subject person of image presentation.

It should be noted that, in the configuration in which only one side of a circular arc in a row extends to another row, pixels for other viewpoints used for viewmixes in a viewable area viewed by left and right eyes become imbalanced, and the three-dimensional image looks twisted.

Fig. 16A shows an example of another slit, the edge of which is a circular arc shape. In this example, the edge of the slit is a shape in which circular arcs are directly connected on a parting line in a horizontal direction that is a boarder of rows. This example is different from the example of Fig. 15B in which a line connects circular arcs, in whether or not part of the parting line is included as a line segment comprising the edge.

To connect circular arcs on the parting line, the central point of a circular arc constituting the right edge of the slit and the central point of the circular arc constituting the left edge of the slit should be displaced in each row.

Therefore, the central point of the right circular arc is shifted upward on the center line of the slit from the intersection of the center line of each row and the center line of the slit, and the central point of the left circular arc is shifted downward on the center line of the slit.

Fig. 16B shows another example of a slit whose edge is of an elliptic arc shape. In this example, the edge of the slit is a shape in which elliptic arcs are directly connected on a parting line in a horizontal direction that is a border of rows.

In this example, the intersection of a center line of each row and a long axis of an ellipse is shown as the center of the ellipse. As a parameter that determines the degree of a three-dimensional effect, the eccentricity of an ellipse ($0 <$ eccentricity $< 1$, eccentricity = a distance between focal points/longest diameter) is also considered in addition to the above-described parameters for circle. The eccentricity of an ellipse cannot be sweepingly determined since the eccentricity is calculated based on a desirable three-dimensional effect.

Similarly to the case of connecting circular arcs, among two focal points that determine an elliptic arc, one for an elliptic arc on the right side shifts upward on the center line of a slit and one for an elliptic arc on the left side shifts downward.

It should be noted that, while elliptic arcs are directly connected on a parting line of rows in Fig. 16B, elliptic arcs may be connected through a parting line of each row similarly to the example of Fig. 15B.

The feature of the invention is, in each row of an array of pixels that constitutes a display, using a slit that expands the most in a horizontal direction along the center line of each row to attain even smoother viewpoint transitions in a horizontal direction.

Figs. 16C and 16D are diagrams showing a configuration example of another slit having such a feature.

Fig. 16C shows an example of another slit in which the edge of the slit is of an elliptic arc shape. In this example, the edge shape of the slit is a shape in which elliptic arcs of an ellipse inscribed in a parallelogram formed by predetermined four points are directly connected on parting lines in a horizontal direction that are borders of rows.

In a certain row, these four points are, a point shifted rightward and a point shifted leftward on the upper parting line of the row by a predetermined distance A from the intersection of the parting line and the center line of the slit, and a point shifted rightward and a point shifted leftward on the lower parting line of the row by the predetermined distance A from the intersection of the lower parting line and the center line of the slit.

It should be noted that Fig. 16C shows that the long axis of an ellipse has a different inclination from the center line of the slit, and shows the positions of two focal points of the ellipse.

It should be noted, in Fig. 16C, while elliptic arcs are directly connected on a parting line of rows, similarly to the example shown in Fig. 15B, elliptic arcs may be connected through a parting line of each row.

In a configuration shown in Fig. 16D, the edge shape of a slit is spline curves connected on a parting line of each row. This spline curve is calculated as a spline curve that passes through predetermined three points.

In a certain row, these three points are a point shifted rightward on the upper parting line of the row by a predetermined distance A from the intersection of the upper parting line and the center line of the slit, a point shifted rightward on the center line of the row by a predetermined distance B (B>A) from the intersection of the center line of the row and the center line of the slit, and a point shifted rightward on the lower parting line of the row by a predetermined distance A from the intersection of the lower parting line of the row and the center line of the slit.

The spline curve of right side is made by these three points and the spline curve of left side is made as a symmetrical spline curve to the right spline curve with respect to the intersection of the center line of the slit and the center line of the row as the center.

The feature of the invention is, in a slit using elliptic arcs or spline curves, the connecting point is always positioned on a parting line of rows. In this way, a twist of a three-dimensional image can be dissolved as the above example, and continuous viewmixing in a viewpoint transition in a vertical direction allows to smoothly see the pixels of the next row attaining a three-dimensional effect.

<Details of Elliptic Arc Slit (2)>

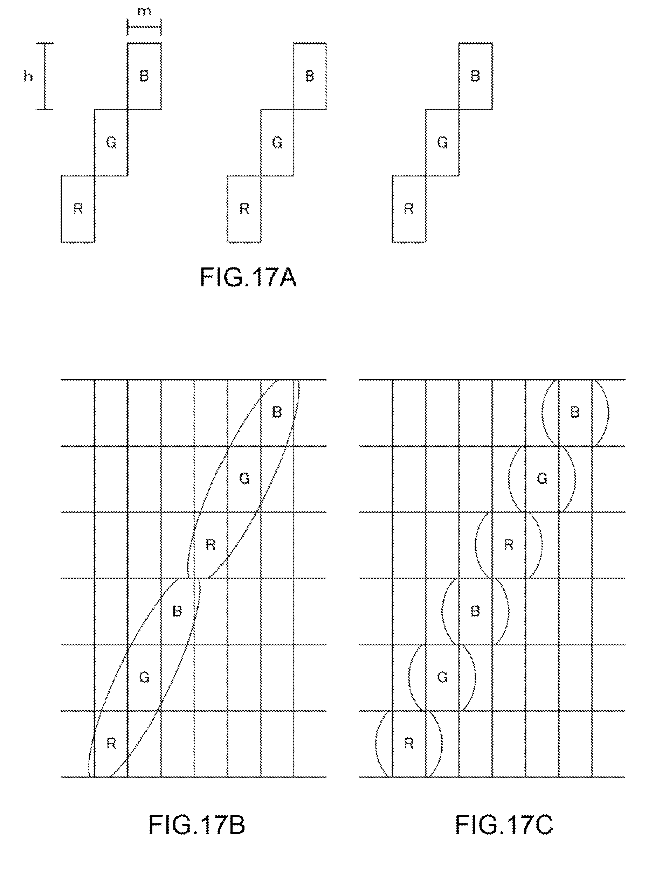

Figs. 17A to 17C show another example of an elliptic arc shaped slit. This example differs from the above-described example in the arrangement position of each subpixel that constitutes a pixel. That is, while subpixels line up in a horizontal direction in the above-described example, subpixels that constitute a pixel obliquely line up in this example as shown in Fig. 17A.

It should be noted that height h of a row is height h of a subpixel, and the width of a pixel is three times as much the width m of one subpixel. In this configuration, a resolution in a horizontal direction can be increased three times as much.

In this configuration, as one pixel is long in an oblique direction, the slit of connected circles cannot be used and the slit of connected ellipses, each of which surrounds the whole one pixel constituted by three subpixels as shown in Fig. 17B, is used.

Further, as shown in Fig. 17C, the shape may be connected ellipses, each of which surrounds each subpixel constituting one pixel.

It should be noted that Figs. 17B and 17C also describe a part that is actually hidden by opaque part of parallax barrier 2 and not viewed by a subject person of image presentation, for understanding of the invention, which is true in the other drawings of this specification.

Also, it should be noted, in any one of the diagrams, although, in some cases, all subpixels to be viewed are illustrated to reproduce a viewed state accurately through the slit of parallax barrier 2, in other cases, part of subpixels that is indeed viewed is not shown or the arrangement of a subpixel is shifted as far as that does not affect description, or a combination of subpixels that constitutes a pixel is shown.

<Details of Elliptic Arc Slit (3)>

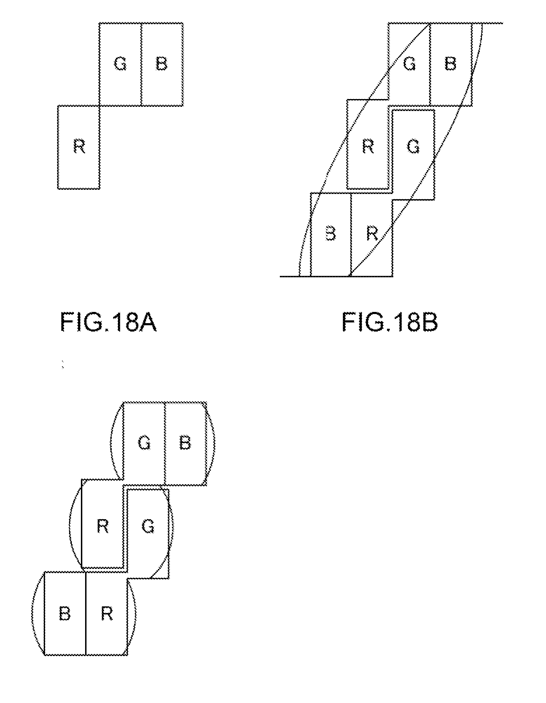

Fig. 18A shows another example of the arrangement of subpixels. In this example, a subpixel of R is located at lower left and subpixels of G and B are lined up in parallel and located upper right of R. The arrangement of such subpixels may be a slit of a shape of connected plurality of drops.

Fig. 18B shows the arrangement in which one ellipse is used to cover two pixels among elliptic arc shaped slits used when combining two pixels.

Also, Fig. 18C shows the arrangement in which three ellipses are used to cover two pixels among elliptic arc slits used when combining two pixels.

It should be noted that the edges of the slits shown in Figs. 18B and 18C may be a configuration in which arcs are connected through a line that is a border of rows in a horizontal direction as shown in Fig. 15B.

<Alleviating Jump Points (Displacements between A Slit And A Pixel Array)>

A jump point means an inversion phenomenon that happens when seeing at least an image for the first viewpoint and at least an image for n-th (n = the number of viewpoints) viewpoint with a different eye between left and right eyes (a phenomenon in which a close object looks far and a far object looks close).

To alleviate this inversion phenomenon, the arrangement of pixels that looks normal through a slit and the arrangement of pixels that causes an inversion phenomenon through the slit may be mixed and viewed. In this way, as a viewmix is caused and viewed images are averaged, while the image becomes somewhat hard to see, a complete inversion phenomenon can be avoided. It should be noted that the number of viewpoints may be increased to decrease the number of jump points.

<Conditions for Alleviating Jump Points>

To alleviate a jump point, the following the following three points are required.

The first point is to differentiate the number of subpixels that constitute pixels for each row.

The second point is, even through the number of subpixels in a row direction constituting one pixel is the same, when arranging subpixels constituting one pixel over a plurality of rows, arranging the subpixels by differentiating the displacement methods, for example, by shifting one subpixel or two subpixels in a staircase pattern.

The third point is a slit shape (the arranged shape of the whole slit and the edge shape of the slit).

<Occurrence Rate of Viewmixes in A Variety of Edge Shapes>

In general, the following two events happen when a viewmix occurs.

That is, (1) to dissolve jump points, a viewmix in a vertical direction is generated by eliminating the inversion phenomenon by simultaneously seeing averaged pixels for different viewpoints in a vertical direction along a slit (specifically speaking, pixels for the same viewpoint viewed along the slit is shifted between when a subject person of image presentation sees from above and when a subject person of image presentation sees from below, or pixels viewed along the slit are differentiated as pixels for other viewpoints by arranging the shape of the whole slit), (2) a view mix in a horizontal direction is generated while jump points are not dissolved.

When moving in a horizontal direction, naturally, a subject person of image presentation sees not only images for viewpoints corresponding to the position of the person, but also adjacent images that are averaged by a viewmix. In this way, the images change smoothly.

A disadvantage of an oblique slit is as follows.

That is, if the arranged direction of an oblique slit is from upper right to lower left, the triangle areas of a subpixel (hereafter, referred to as a triangle area) at lower left and upper right (if the direction of the slit is from upper left to lower right, at upper left and lower right) are seen.

In a viewpoint transition in a horizontal direction, the triangle area appears in a viewmix or disappears from a viewmix.

Particularly, if pixels are viewed over upper and lower rows according to the position of the eyes, sometimes, a slightly larger parallax occurs and the image can be seen double due to a viewmix caused by the triangle areas of other rows located left and right of the convergence point.

It should be noted that, when straight lines are drawn from the left and right eyes of a subject person of image presentation through the center of a slit to the image display surface, the convergence point of the left eye is an intersection of the straight line drawn from the left eye and the image display surface and the convergence point of the right eye is an intersection of the straight line drawn from the right eye and the image display surface.

However, in a staircase patterned slit, a viewmix occurs evenly over the width of subpixels. In a viewpoint transition in a horizontal direction, the area of newly viewed subpixels linearly expands, generating view mixes in a certain rate.

If the edge shape of a slit is an elliptic arc shape, as the area that generates a viewmix located left and right of the convergence point is smaller than a case in which the edge shape is a staircase pattern, the three-dimensional effect is strong. There is an advantage that, in a viewpoint transition in a horizontal direction, as a viewmix happens from the most expanded part, the area of newly viewed subpixels gradually expands in an upward curve, generating viewmixes.

In a slit with an elliptic arc shaped edge, a difference between a configuration in which elliptic arcs are connected on parting lines and a configuration in which elliptic arcs are connected including part of parting lines is that, when seeing by moving viewpoints in a vertical direction, the former configuration in which elliptic arcs are continuous can generate viewmixes beautifully and smoothly.

<Details of Viewmixes>

First, a configuration can be considered in which a viewpoint transition in a horizontal direction can be smoothly performed using an oblique staircase patterned slit for pixels lined up by shifting obliquely to allow a wider area than the width of pixels for a viewpoint to be a viewable area, and also, by adjusting the width of the slit to allow viewmixes to easily occur.

Next, a configuration can be considered in which, using an oblique linear slit for pixels lined up by shifting obliquely, a viewmix occurs from the upper portion and lower portion of either left or right of the slit (depending on the direction of the slit).

Further, a configuration can be considered in which, using a slit of a shape of an obliquely expanded elliptic arc for pixels lined up by shifting obliquely, viewmixes occur from left and right inflated parts of the elliptic arc. In this configuration, the amount of viewmixes can be easily controlled with the arrangement in which one row in a horizontal direction corresponds to one elliptic arc.

<Oblique Slit>

There are two methods for using oblique slits.

One method is a method in which different number of subpixels in a horizontal direction are used to express one pixel. Specifically, one or two subpixels are used in a horizontal direction. If one subpixel is used, subpixels for other viewpoints can also be seen, generating viewmixes and alleviating jump points.

Another method is a method in which, while the same thing is done as the above method, the edge shape of the slit is devised so that one subpixel gradually appears.

It should be noted that, while a zigzag shape is described as an example in the above description, the slit may be of a curved shape so that the pixels for respective viewpoints are arranged to almost follow a sinulsoidally curve corresponding to the slit whose center line follows the sinusoidal curve.

<A Method for Compressing A Naked Eye Three-dimensional Image (1)>

The following describes one of the compression methods.

As the first point to be focused, as there is a difference between two-dimensional images and three-dimensional images, therefore, different compression methods should be used.

The first compression method is as follows.

As a two-dimensional image perceived as being arranged on a monitor screen (since the image is not a three-dimensional image, it is naturally perceived as an image on a monitor screen. Photographed images are mostly used.) does not exhibit a parallax, the image can be completely compressed using a normal compression method. The same image can be displayed from the first viewpoint to the sixth viewpoint.

The second compression method is as follows.

Conventionally, as only an uncompressed file can deal with an image for three-dimensional part that is perceived as popping out, separately created images are blended on a real time basis. However, this method has a flaw that requires a large amount of resources for calculations. Particularly, high definition video images are difficult to be dealt with.

It should be noted that blending refers to a method in which image data for all viewpoints are mixed and arranged on one frame buffer so that the image can be seen three-dimensionally when viewed through the slit of a parallax barrier. This is also referred to as RGB mapping.

Therefore, what you have to do is appropriately compressing the blended images. In this way, the images are not required to be blended in a real time. The invention of the application is the invention of a method used when reproducing a compressed file.

Normally, two-dimensional photographed images are displayed on a monitor screen, and three-dimensional computer graphics (CG) are displayed before the monitor screen. That is, a parallax is not required be considered for the two-dimensional photographed images perceived on a position of a monitor screen. Thus, as there is no parallax for a video image to be displayed as a two-dimensional video image, the image can be compressed normally and, when extracting the image, the same display content can be arranged as the display content of pixels for all viewpoints. In this way, the image can be compressed.

For three-dimensional part, after setting an image for a certain viewpoint as a reference image, differences from the reference image are taken for images for other viewpoints.

The method for taking differences is preferably taking a difference of adjacent images, that is, taking a difference between an image for the first viewpoint and an image for the second viewpoint, then, taking a difference between the image for the second viewpoint and an image for the third viewpoint. If differences are always taken with reference to the image for the first viewpoint, for example, the difference between an image for the first viewpoint and an image for the sixth viewpoint becomes too large.

The reference image may be an image for the first viewpoint, or, if there are six viewpoints altogether, an image for the sixth viewpoint may be used, or an image for the third viewpoint in the middle may be used to take differences between adjacent viewpoints in a direction toward the first viewpoint and in a direction toward the sixth viewpoint.

As the next point to be focused, the number of pixels for three-dimensional part is small. That is, the area for three-dimensional part is small.

Therefore, the third compression method described below can be used.

For example, if the number of pixels is 300 x 300, the total is 90,000 pixels. As colors are expressed by 24 bits, there are 17,000,000 colors. If there are 90,000 pixels, it is not required to use 24 bits.

For example, if the number of pixels is 200 x 200, the total is 40,000 pixels. The number of 40,000 is smaller than the number of 65,000 that is expressed by 16 bits.

That is, how much ever the number of colors is large, the maximum is the number expressed by 16 bits. Even if the colors expressed by each pixel are different, only 16 bits are used.

Normally, it is unlikely that all 200 x 200 pixels are different. Further, a similar color can be approximated using an existing color.

Therefore, color information is expressed using only 8 bits, using a color lookup table. Each entry of this table registers a correspondence of a color number to R, G, and B values.

For example, color number 1 corresponds to R value of 20, G value of 36, B value of 120. Then a color having similar R, G, and B values can be approximated using this color number 1.

In this way, three-dimensional part data can be compressed.

Further, as the fourth compression method, compression of three-dimensional part in a time axis direction can be considered.

If the displayed three-dimensional image does not change with time, even a parallax of the image for respective viewpoint is large, data can be compressed in a time direction. As the compression method, for example, a method similar to MPEG may be used.

Two-dimensional and three-dimensional image data compressed using the above-described each compression method is extracted at reproduction, then, synthesized, and reproduced.

<Image Format (1)>

A three-dimensional video image is configured by superimposing a three-dimensional video image on part of a two-dimensional video image that covers most of the screen surface. To distinguish and process a two-dimensional image and a three-dimensional image, information is required to determine which part is two-dimension and which part is three-dimension. To that end, a mask can be used.

A mask may be 1 bit, which is referred to as a mask bit, hereafter.

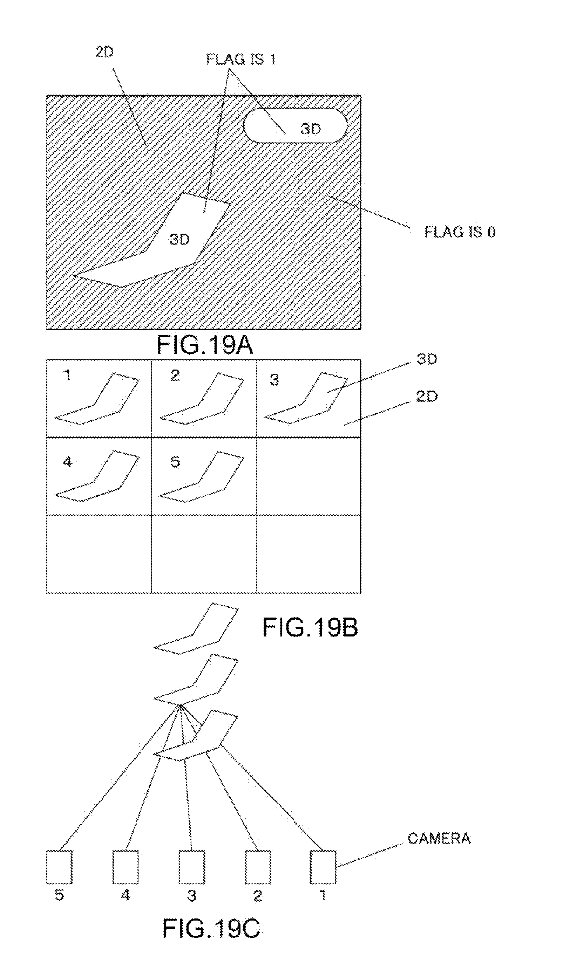

For example, as shown in Fig. 19A, in one piece of displayed image, a mask bit of each pixel is 1 for three-dimensional image part and a mask bit of each pixel is 0 for two-dimensional image part. In this example, a mobile telephone part in the middle and a logo part at upper right are three-dimensional images.

That is, if a mask bit is 0, blending process becomes easy, as an image for the first viewpoint to, for example, an image for the fifth viewpoint may have the same pixel information. If a mask bit is 1, image data for respective viewpoints from the first viewpoint to the fifth viewpoint is required to be blended in the corresponding area.

For example, as shown in Fig. 19B, the frame of one screen of an AVI file used for recording is divided into 3 x 3 areas, then stores images for the first viewpoint, second viewpoint, and third viewpoint from the left in the first row from the top, and stores images for the fourth viewpoint and fifth viewpoint from the left in the second row from the top.

Then, among these five images, only the part where mask bit is 1 may be blended.

It should be noted that, as shown in Fig. 19C, if there are the first to fifth viewpoints, images for respective viewpoints can be obtained by disposing five cameras for respective viewpoints and capturing images.

If the mobile telephone is placed on the camera side, the image pops out before the screen. If the mobile telephone is placed at the center, there is no three-dimensional effect. If the mobile telephone is placed far from the camera, the image recedes to the back.

If image data is, for example, an AVI file, and AVI data for respective viewpoints is allocated to each area of the divided areas in Fig. 19B, AVI data for three-dimensional video images that does not interfere each other can be made.

Using the above-described mask bit, which part of an image for respective viewpoint is three-dimensional can be determined only with the information amount of 1 bit per pixel.

<Image Format (2)>

While, in the above-described image format, image areas for respective viewpoints in one frame have a two dimensional image, a three-dimensional image, and a mask bit, each divided image area may separately has a three-dimensional image or two-dimensional image.

For example, as shown in Fig. 20A, there could be a format in which the frame is divided into two rows and three columns, areas for respective viewpoints store only an image of three-dimensional part, and the background (two-dimensional) part stores a mask in the lower right area to simultaneously functions as a mask. It should be noted that, instead of using the area retaining mask information to also function as the background part of the image areas to store everything in one image, one piece of image and an image for mask that stores only mask information may be separately prepared.

It should be noted, to divide a three-dimensional part and a two-dimensional part without using mask information, for example, in an image area only for three-dimensional part, a part other than three-dimension image part may use black with which R, G, and B values are all 0, and the three-dimensional part may use black with which R, G, and B values are other than 0 for distinction.

Fig. 20C is an example of a format in which a separate file stores a two-dimensional image, and each area of divided areas of a frame in a three-dimensional image file has a three-dimensional image and a black area that also functions as a mask.

Further, a two-dimensional image part of a background may also functions as mask information as described above or three-dimensional images for respective viewpoints may retain mask information.

The part used for two-dimensional image may record only general mask information that is common for all viewpoints, and image areas for respective viewpoints may have different mask information for respective viewpoints.

As three-dimensional images for respective viewpoints also have mask information, more accurate image synthesizing and blending can be performed.

As the background image part retains mask information, for example, for five viewpoints, 5 bits per pixel are used for mask information.

If it is difficult to retain both 5-bit mask information and primary background information in the same image area, a format described in "Image format (1)" may be applied to use a format comprising two-dimensional image and three-dimensional image areas for five viewpoints and an area at lower right that retains mask information for five viewpoints (5 bits) as shown in Fig. 20B.

It should be noted that only an active three-dimensional part may be created by CG and blended on a real time basis. Real time in three-dimensional images means calculating and displaying a picture in 1/30 seconds or 1/60 seconds. In this case, after creating a three-dimensional CG using a normal CG engine in real time, the CG may be entered into divided areas for a three-dimensional image part of the above-described six divided area format.

One frame may be divided into nine and images for eight viewpoints may be entered thereinto. At this time, as the remaining divided area becomes useless, instead of evenly dividing three rows, for example, when the height of the first row and second row is 1, by determining the height of the third row 2/3, images for eight viewpoints can be stored using all areas. In the case of nine viewpoints, the frame may be evenly divided.

In this way, even when the number of viewpoints is smaller than the number of divided areas, image areas can be efficiently used by inserting a two-dimensional image or mask information into the empty divided area.

<Image Format (3)>

When using a mask, it is preferable that a photographed image is used. If two-dimensional images enter all areas of the above-described divided areas, the displacement from a three-dimensional part is different for each image for respective viewpoint. Therefore, for the different displacement part, the image for respective viewpoint should be referred to.

For example, it is considered that a part that is supposed to be viewed is hidden in an image for the first viewpoint. If a general mask is used, "displacement" part that is indeed necessary should be considered.

Therefore, a two-dimensional image should be placed in a divided area. In addition, a mask is also required.

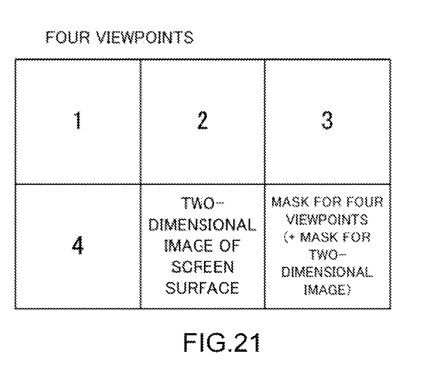

Fig. 21 is an example of a format of four viewpoints. The frame is divided into six areas which store three-dimensional images for four viewpoints, two-dimensional images to be perceived as an image displayed on a position of a screen surface, mask information for four viewpoints (which may include mask information for two-dimensional images).

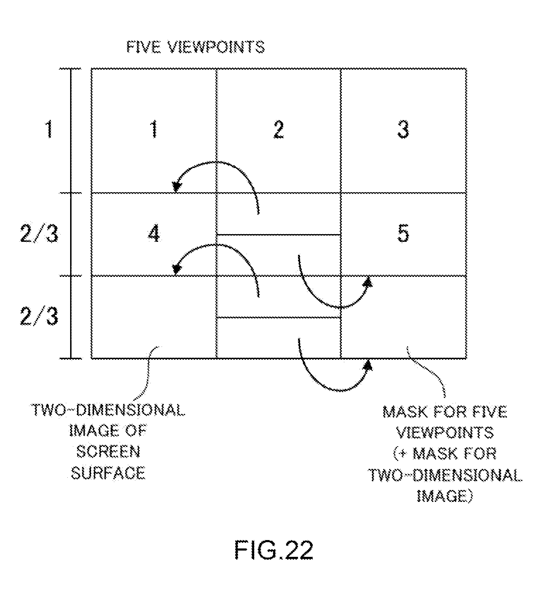

Fig. 22 is an example of a format for five viewpoints. If the height of the first row is "1," the height of the second row and third row is "2/3." Then, the middle areas of the second row and third row are vertically divided and the height becomes "1/3." By adding these "1/3" height parts to the areas at both ends, areas for five viewpoints, a two-dimensional image positioned on the surface of a screen, mask information for five viewpoints (which may include mask information for two-dimensional images) are obtained.

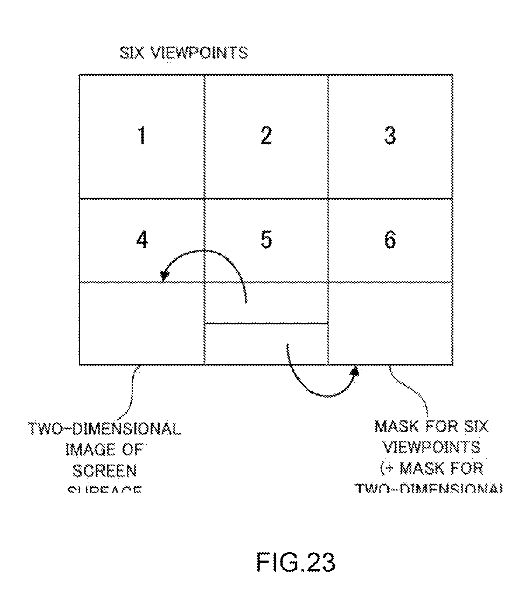

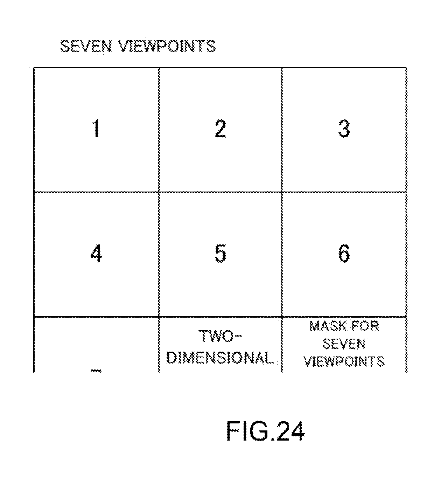

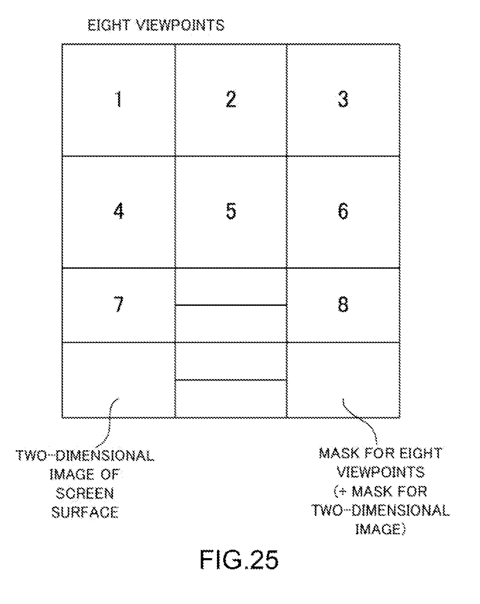

The same thing is true with a format example for six viewpoints as shown in Fig. 23, a format example for seven viewpoints as shown in Fig. 24, and a format example for eight viewpoints as shown in Fig. 25. It should be noted that if all images are three-dimensional images, a two-dimensional image positioned on a screen surface is not required.

Using such a format, images can be blended without time and effort.

<Considerations When Compressing Mask Information>

The above described formats are about integrated AVI files that store AVI files of images for respective viewpoints in divided areas. As data is compressed in an AVI file, a mask position is displaced by compression processing and extraction processing.

Thus, it is important to create the original image so that the mask information becomes accurate after extraction processing. Also, preprocessing information may be created so that each bit becomes a mask after extraction.

It should be noted that the above description is applied to a lossy compression. If a lossless compression is used, the mask information may be compressed and extracted as is.

<Flag in Mask>

Some video images do not have a three-dimensional image. In such a case, for example, if a format of five viewpoints is used, three-dimensional image parts for the first to fifth viewpoints and mask information for five viewpoints are not required.

Thus, by providing a flag indicating that there is no three-dimensional image in a mask and setting the flag, extraction and blend processing relating to a three-dimensional image part can be omitted and only a two-dimensional video image may be displayed as a video image.

< A Method for Compressing A Naked Eye Three-dimensional Image (2)>

A method for compressing a video image in a time direction using a mask is described. Hereafter, this mask is referred to as a time direction compression mask.

This is a compression method using a time direction compression mask for respective viewpoint that indicates that a pixel has the same pixel value (R, G, B) as the one of the previous frame by comparing in a time direction in an image.

In the above description, a mask is used for a two-dimensional image. Further, in some cases, even a three-dimensional image part, if it is a background, does not change regardless of time. For example, there may be a fish (active three-dimensional video image) swimming in a coral sea (a three-dimensional video image that has depth but still).

Using this compression method, if a flag that indicates information that there is no change in time direction is in a time direction compression mask, the pixel information of the previous frame can be used as is and new pixel information is not required.

For example, if the time direction compression flag of a certain pixel is set as 1, that indicates that the pixel information has changed, and if 0, a frame buffer does not have to be updated for that part.

<Compression of A Time Direction Compression Mask (1)>

The following describes the method for compressing a time direction compression mask itself. The compression is a compression in a scanline direction.

In a predetermined scanline, the number of mask pixels is defined in the head of the mask area.

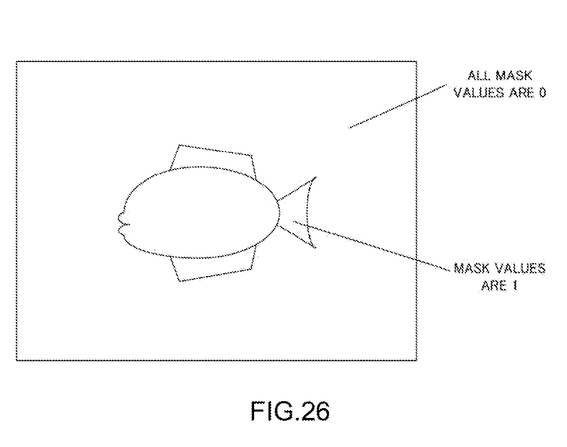

As shown in Fig. 26, the time direction compression mask is 1 for fish part and 0 for all the other part. Since only the fish moves, only pixels for fish part should be updated.

<Relationship among A View Mix, Popping Out Degree, and Color Definition>

Circular arcs (elliptic arcs) are formed according to the following guidelines.

First, if the diameter of a circular arc is large, the viewmix area expands and the displacement of images at a jump point decreases, thereby decreasing positions from which it is hard to see the image. However, the popping out degree becomes small and the whole image becomes somewhat fuzzy.

Next, if the diameter is small, the viewmix area decreases and the displacement of images at a jump point increases, thereby clarifying the positions from which it is hard to see the image. However, the popping out degree becomes large and the image becomes clear.

<Blending and Compression (1)>

If a display with high definition resolution (1920 x 1080) is used for displaying a naked eye three-dimensional image, the following can be used as a blending method of pixels for respective viewpoints.

It should be noted that, in the following description, a case in which there are six viewpoints is considered as an example.

First of all, the first example of a pixel configuration and a blending method is described.

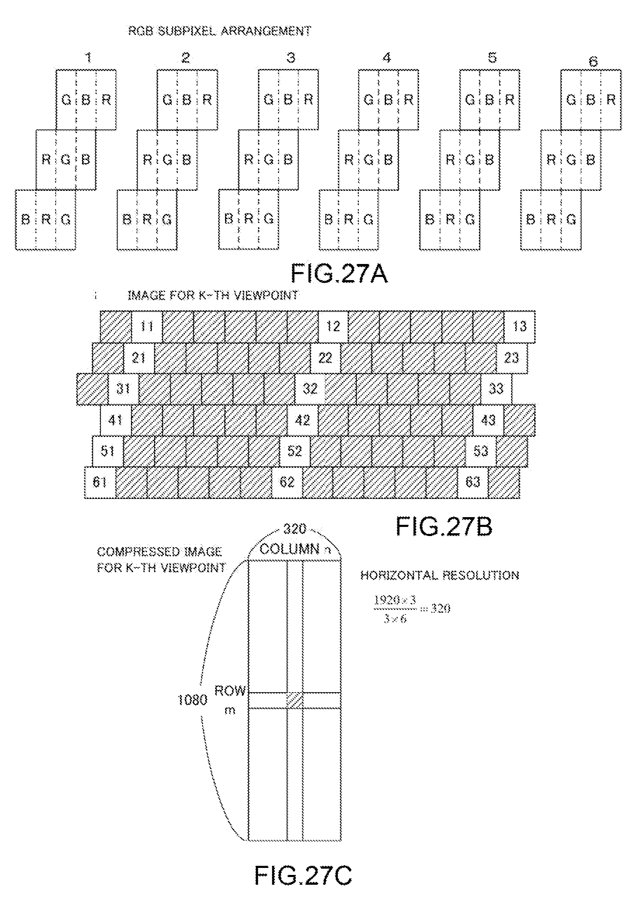

Subpixels, R, G, and B constituting a pixel for respective viewpoint is arranged in a way in which R, G, B subpixels constituting one pixel are arranged in one row as shown in the example of Fig. 27A. In this example, while pixels for respective viewpoints are separately drawn in a horizontal direction so that the arrangement of subpixel for six viewpoints is easy to understand, the pixels are, in practice, continuous in a horizontal direction.

It should be noted that, in Fig. 27A, for example, the arrangement of subpixels constituting pixels for the first viewpoint is in the order of G, B, R from the left in the first row from the top, in the order of R, G, B from the left in the second row, and in the order of B, R, G from the left in the third row.

Fig. 27B shows the arrangement of pixels in an image for k-th viewpoint before compression. For example, the indication of "11" represents a pixel positioned at the first row in the first column of the image after compression.

Fig. 27C shows a compressed image of the image shown in Fig. 27B after eliminating a part for other viewpoints than k-th viewpoint (indicated with oblique lines in Fig. 27B).

In this blending method, the resolution of a compressed video image before blending can be calculated by the following calculation.

The resolution of the display in a horizontal direction is 1920, and the number of viewpoints is six. As this blending method uses three subpixels to express one pixel per row, the following calculating formula is considered.

$$(1920 \times 3)/(3 \times 6) = 320$$

That is, 320 can be used for the resolution in a horizontal direction of a compressed image.

Further, the resolution in a vertical direction of the display is 1080, and, as the number of viewpoint is 1 in vertical direction and one row is used to express one pixel per column, the resolution in a vertical direction remains as 1080.

As shown in Fig. 27C, a pixel for k-th viewpoint among pixels of row m and column n of a compressed image is expressed as $_kP_{mn}$.

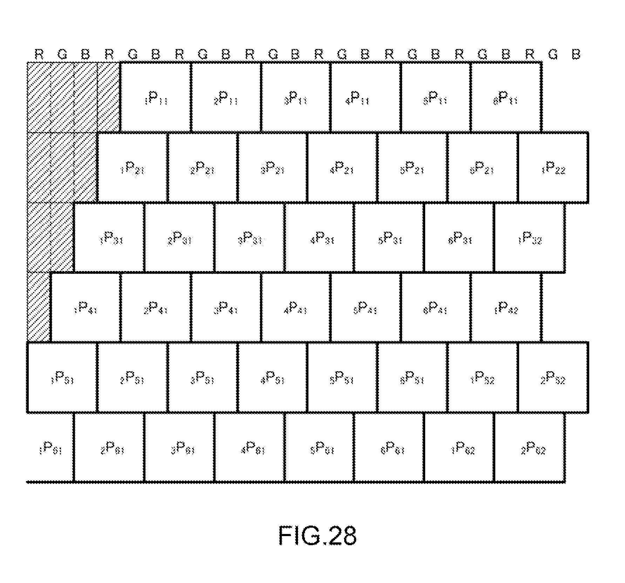

Fig. 28 specifically shows the arrangement of a subpixel unit.

Similarly to the first example of pixel configuration and blending method, the arrangement of the pixel for k-th viewpoint as shown in Fig. 27B is carried out. For example, pixels of "11," "21," and "31" are arranged in the same column and pixels of "41," "51," and "61" are arranged in a column at left of the column.

<Blending and Compression (2)>

Next, the second example of a pixel configuration and a blending method is described.

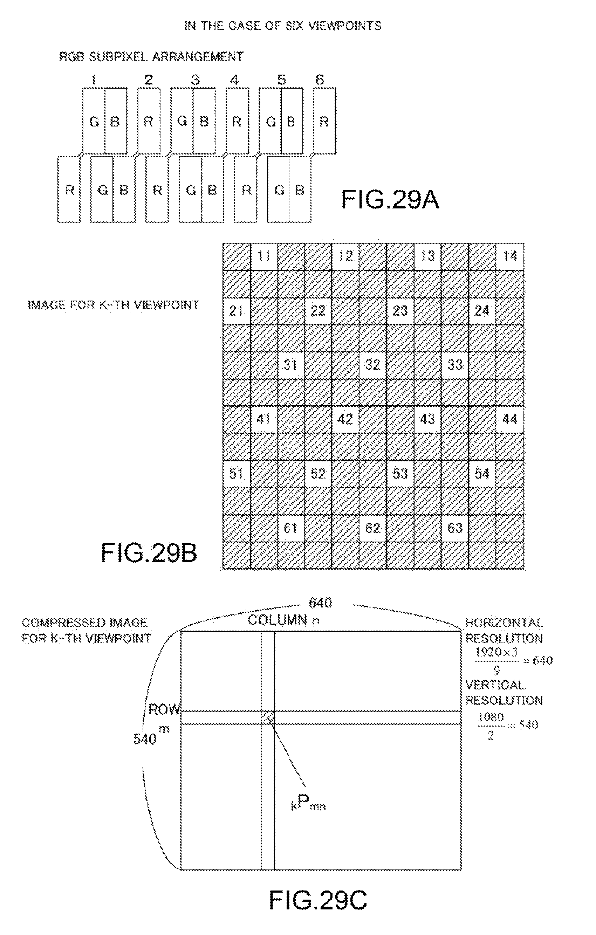

R, G, B subpixels constituting a pixel for respective viewpoint are arranged, as shown in Fig. 29A, straddling over two rows. In a pixel for the first viewpoint, subpixel R is arranged in the second row, subpixel G is arranged at upper right of subpixel R in the first row, and subpixel B is arranged at right of subpixel G. In a pixel for the second viewpoint at right of the pixel for the first viewpoint, subpixels G and B are arranged from the left and R is arranged at upper right thereof.

In this example, while, pixels for respective viewpoints are separately drawn for better understanding of the arrangement of subpixels for six viewpoints, the pixels are indeed continuous in a horizontal direction.

Fig. 29B shows the arrangement of pixels of an image for k-th viewpoint before compression.

Fig. 29C shows a compressed image of the image shown in Fig. 29B after eliminating a part for other viewpoints than k-th viewpoint (indicated with oblique lines in Fig. 29B).

In this blending method, the resolution of a compressed video image before blending can be obtained by the following calculation.

The resolution of the display in a horizontal direction is 1920, and viewpoints are six. As this blending method uses nine subpixels to express six pixels per row, the following calculating formula is considered.

$$(1920 \times 3)/9 = 640$$

That is, 640 can be used for the resolution in a horizontal direction of a compressed image.

Further, the resolution in a vertical direction of a display is 1080, and, as the number of viewpoint is 1 in a vertical direction and two rows are used to express one pixel per column, the resolution in a vertical direction becomes half, whereby the following calculating formula is considered.

$$1080/2 = 540$$

As shown in Fig. 29C, a pixel for k-th viewpoint among pixels of row m and column n of a compressed image is expressed as $_kP_{mn}$.

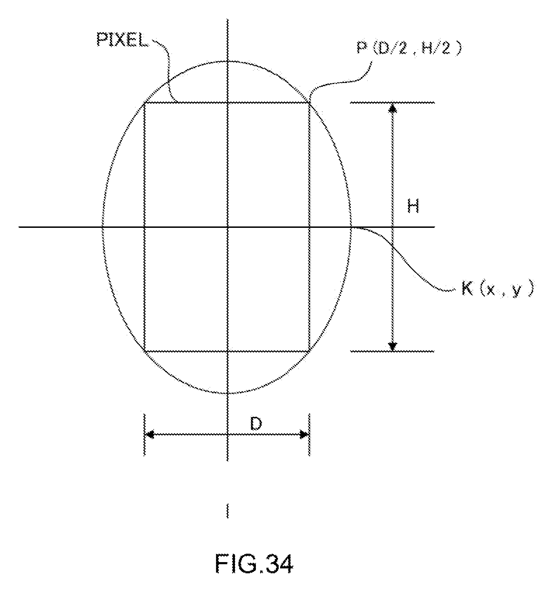

Fig. 34 specifically shows the arrangement of a subpixel unit.

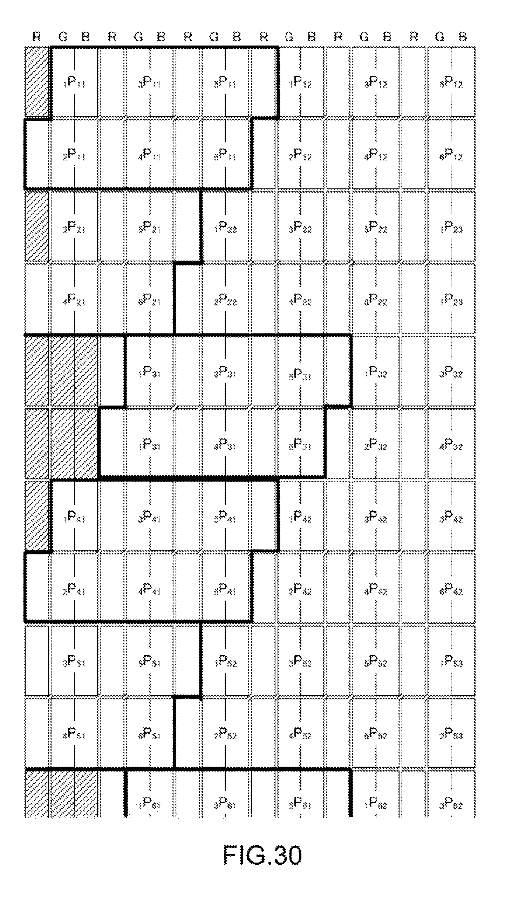

Further, Fig. 30 shows a correspondence between one pixel of a compressed image and a subpixel group corresponding to the one pixel after blended on a high definition display.

As shown in Fig. 30, in the arrangement of pixels of a certain column of a compressed image, this blending method shifts a subpixel group of the second row by the amount of three subpixels leftward with reference to the subpixel group of the first row, and shifts a subpixel group of the third row by the amount six subpixels rightward with reference to the subpixel group of the second row.

A subpixel group of the third row is shifted by the amount of three subpixels rightward with reference to the subpixel group of the first row.

To resolve this displacement, a pixel for k-th viewpoint is arranged as shown in Fig. 29B. For example, a pixel of "21" is arranged two rows down and one column left from "11", and a pixel of "31" is arranged two rows down and two columns right from "21."

<Blending and Compression (3)>

Next, the third example of a pixel configuration and a blending method is described.

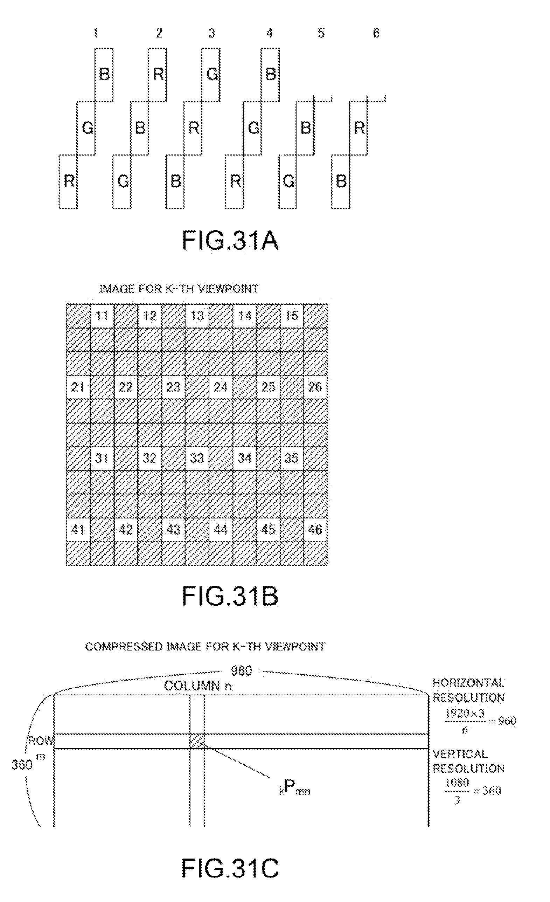

As shown in Fig. 31A, subpixels, R, G, and B constituting a pixel for respective viewpoint are arranged to straddle over three rows. In a pixel for the first viewpoint, subpixel R is arranged in the third row from the top, subpixel G is arranged upper right of subpixel R in the second row, and subpixel B is arranged upper right of subpixel G. In a pixel for the second viewpoint, subpixels are arranged in the order of G, B, and R from the bottom. While, in this example, pixels for respective viewpoints are separately drawn in a horizontal direction for better understanding of the arrangement of subpixels for six viewpoints, subpixels are indeed continuous in a horizontal direction.

Fig. 31B shows the arrangement of pixels in an image for k-th viewpoint before compression. For example, the indication of "11" represents a pixel arranged on the first row and first column of the image after compression.

Fig. 31C shows a compressed image of the image shown in Fig. 31B after eliminating a part for other viewpoints than k-th viewpoint (indicated in oblique lines in Fig. 31B).

In this blending method, the resolution of a compressed video image before blending can be obtained by the following calculating formula.

The resolution in a horizontal direction of the display is 1920, the number of viewpoints is six. While three subpixels are used above to express one pixel per row, this blending method uses only one subpixel, thus, the resolution is three times as much. The following calculating formula is considered.

$$1920 \times 3/6 = 960$$

That is, 960 can be used as the resolution in a horizontal direction of a compressed image.

Further, the resolution in a vertical direction of the display is 1080, and the number of viewpoint in a vertical direction is 1. While one row is used above to express one pixel per row, this blending method uses three rows, thus, the resolution in a vertical direction becomes one third. The following calculating formula is considered.

$$1080/3 = 360$$

That is, 360 can be used as the resolution in a vertical direction of a compressed image.

As shown in Fig. 31C, among pixels of row m column n of a compressed image, a pixel for k-th viewpoint is represented as $_kP_{mn}$.

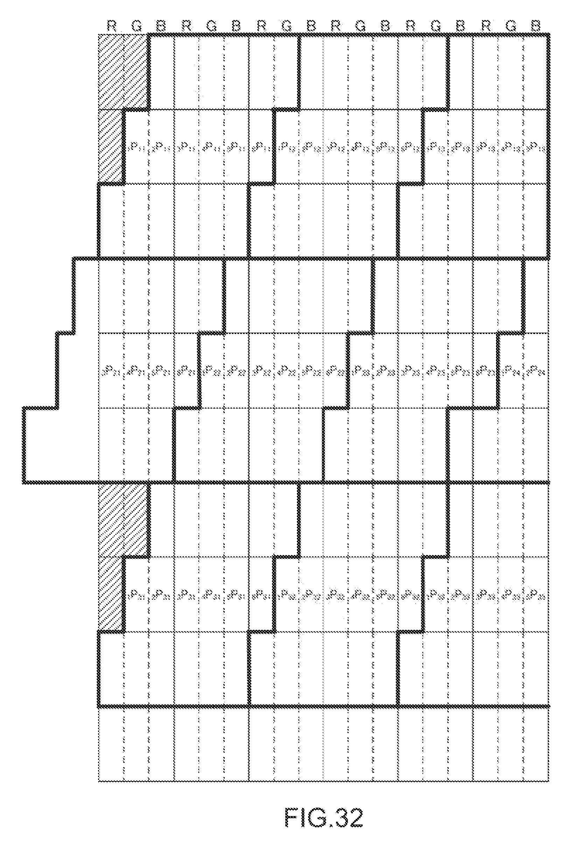

Fig. 32 specifically shows the arrangement of a subpixel unit.

Further, Fig. 32 shows a correspondence between one pixel of a compressed image and a subpixel group corresponding to the one pixel after blended on a high definition display.

As shown in Fig. 32, this blending method shifts a subpixel group of the second row by the amount of three subpixels leftward with reference to the subpixel group of the first row, and shifts a subpixel group of the third row by the amount of three subpixels rightward with reference to the subpixel group of the second row. There is no displacement in a horizontal direction between the subpixel groups of the first row and third row.

To resolve this displacement, a pixel for k-th viewpoint is arranged as shown in Fig. 31B. For example, a pixel of "21" is arranged three rows down and one column left from a pixel of "11," and a pixel of "31" is arranged three rows down and one column right from the pixel of "21."

<Relationship Among Related Parameters>

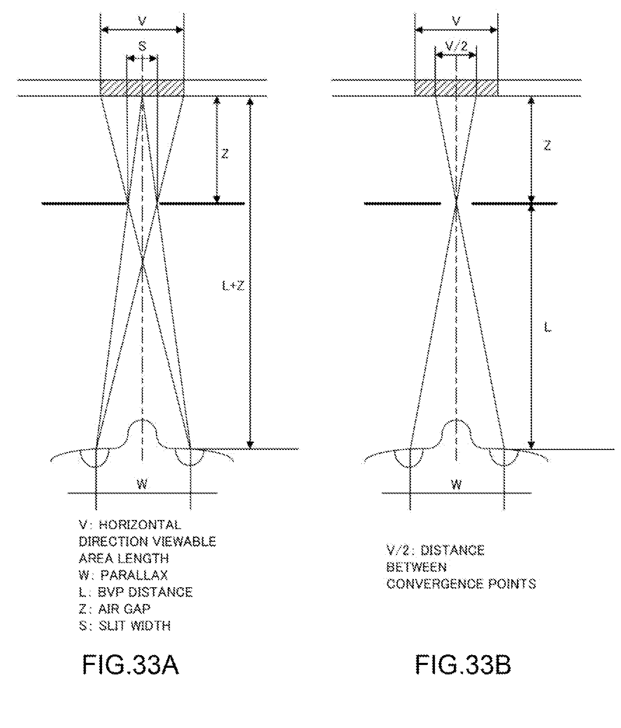

The relationship between parameters relating to the degree of visual three-dimensional effect is described with reference to Fig. 33.

The following method may be used to determine air gap Z from the image display surface (the surface of light emitting image part 5d) to the parallax barrier surface.

In order to determine air gap Z, a position where subject people of image presentation are expected to generally gather is determined and set as the best view point, and the distance from the monitor surface of the naked eye three-dimensional display device (a parallax barrier surface) to the best view point is set as best view point distance (BVP distance) L.

Further, the following method may be used to determine slit width S that is the width in a horizontal direction of the slit of the parallax barrier.

In order to determine air gap Z, an area in a horizontal direction of a displayed image on the image display surface that is viewed through the slit by both left and right eyes of a subject person of image presentation is set as horizontal direction viewable area length V.

The gap between left and right eyes is defined as parallax W. Parallax W is set as 65 mm for Europeans, 70 mm for Asians, and 50 mm to 60 mm for children.

Fig. 33A shows a position relationship among air gap Z, BVP distance L, slit width S, horizontal direction viewable area length V, and parallax W.

Further, convergence points and distance between convergence points V/2 are determined by the following method.

First, the positions of both eyes of a subject person of image presentation are set to the state as shown in Fig. 33A. The state as shown in Fig. 33A is a state in which a horizontal direction viewable area viewed by the right eye and a horizontal direction viewable area viewed by the left eye are continuous without overlapping.

For example, if a subject person of image presentation gets close to a naked eye three-dimensional display device from the state as shown in Fig. 33A, both of the horizontal direction viewable areas are not continuous and are apart. Also, if the subject person of image presentation moves away from the naked eye three-dimensional display device from the state as shown in Fig. 33A, both of the horizontal direction viewable areas overlap each other.

Next, as shown in Fig. 33B, straight lines are drawn from both left and right eyes of the subject person of image presentation through the center of the slit to the image display surface. The intersection of the line drawn from the left eye with the image display surface is the convergence point of the left eye, and the intersection of the line drawn from the right eye with the image display surface is the convergence point of the right eye. Each convergence point is positioned in the middle of the horizontal direction viewable area of each eye.

Therefore, the distance between the convergence points of left and right eyes becomes V/2.

So far, each parameter is defined. Now, air gap Z and slit width S are calculated.

As is understood from Fig. 33B, there is a relationship between Z:L and (V/2):W as expressed by the following calculating formula.

$$\frac{Z}{L} = \frac{V}{2W}$$

Therefore, air gap Z is expressed by the following calculating formula (1).

$$Z = \frac{VL}{2W} \cdots (1)$$

Also, as is understood from Fig. 33A, there is a relationship between S:W and Z:(L+Z) as expressed by the following calculating formula.

$$\frac{S}{W} = \frac{Z}{L+Z}$$

Therefore, slit width S is expressed by the following calculating formula (2).

$$S = \frac{ZW}{L+Z} \cdots (2)$$

If formula (1) is substituted into formula (2), the following equation is obtained.

$$S = \frac{VLW}{2W\left(L + \dfrac{VL}{2W}\right)}$$

Therefore, slit width S is expressed by the following formula (3).

$$S = \frac{VW}{2W+V} \cdots (3)$$

To set horizontal direction viewable area length V, if an elliptic arc slit is used, an elliptic arc calculating formula is resolved in which a pixel of width D and height H constituted by one or a plurality of subpixels that expresses one or a plurality of viewpoints on one or a plurality of scanlines (rows) fits into the elliptic arc in the horizontal direction viewable areas viewed by left and eight eyes. (Refer to Fig. 34)
It should be noted that fitting into means a state in which the pixel touches the elliptic arc in a way that the outermost circumference of the pixel does not overflow the elliptic arc.
The elliptic arc is expressed by the following formula (4).

$$\frac{x^2}{a^2} + \frac{y^2}{b^2} = 1 \cdots (4)$$

Here, if the horizontal to vertical ratio of a pixel is used for the ratio of b to a, b = (H /D)a. If this formula is substituted into formula (4), the following calculating formula (5) can be obtained.

$$\frac{x^2}{a^2} + \frac{y^2}{\left(\dfrac{H}{D}a\right)^2} = 1 \cdots (5)$$

Therefore, the following calculating formula (6) can be obtained.

$$a^2 = x^2 + \frac{y^2}{\left(\dfrac{H}{D}\right)^2} \cdots (6)$$

If P(D/2, H/2) is substituted into calculating formula (6), the following calculating formula is obtained.

$$a^2 = \left(\frac{D}{2}\right)^2 + \frac{\left(\dfrac{H}{2}\right)^2}{\left(\dfrac{H}{D}\right)^2}$$

$$a^2 = 2\left(\frac{D}{2}\right)^2$$

Therefore, the following calculating formula (7) can be obtained.

$$a = \sqrt{2}\,\frac{D}{2} \cdots (7)$$

If calculating formula (7) is substituted into calculating formula (5), the following calculating formula (8) is obtained.

$$\frac{x^2}{\dfrac{D^2}{2}} + \frac{y^2}{\dfrac{H^2}{2}} = 1 \cdots (8)$$

Here, as y = 0 in K(x, y) that indicates the maximum width of the elliptic arc in a horizontal direction, the following calculating formula is obtained from calculating formula (8).

$$x^2 = \frac{D^2}{2}$$

Therefore, the following calculating formula(9) is obtained.

$$x = \sqrt{2}\,\frac{D}{2} \cdots (9)$$

As shown in Fig. 35A, if the maximum width of the elliptic arcs of the viewable areas viewed by left and right eyes is set so that the pixels touches the elliptic arcs in the middle of the viewable areas, the following calculating formula is obtained based on the result of calculating formula (9).

$$V = 4 \times \sqrt{2}\,\frac{D}{2}$$

Therefore, horizontal direction viewable area length V can be obtained by the following calculating formula (10).

$$V = \sqrt{2}\,2D \cdots (10)$$

Further, as shown in Fig. 35B, if the pixels of viewable areas viewed by left and right eyes share borders in the middle of the viewable areas, horizontal direction viewable area length V can be obtained by the following calculating formula (11) based on the result of calculating formula (9).

$$V = 2 \times \left( \sqrt{2}\,\frac{D}{2} + \frac{D}{2} \right)$$

$$= \frac{\left(\sqrt{2}+1\right)}{2}\,2D \;\cdots\;(11)$$

The characteristics of the configuration example shown in Fig. 35A are that, while as pixels for different viewpoints can be firmly viewed by both left and right eyes, the three-dimensional effect is powerful, however, in consequence, especially images popping out toward the front are sometimes slightly hard to see.

On the other hand, the characteristics of the configuration example shown in Fig. 35B are that, while pixels for different viewpoints are completely viewed by left and right eyes, the three-dimensional effect slightly decreases as part of the pixels overlap when being viewed. However, in this case, the popping out images are also viewed smoothly.

In any of these configuration examples, the most appropriate range of horizontal direction viewable area length V is the following range, since the most appropriate three-dimensional effect can be provided to a subject person of image presentation positioned at a best view point.

That is,
the range is from

$$V = \frac{\left(\sqrt{2}+1\right)}{2}\,2D$$

$$\approx 1.205 \times 2D$$

to

$$V = \sqrt{2}\,2D$$

$$\approx 1.41 \times 2D$$

However, while it becomes somewhat hard to see, if the three-dimensional effect is desired to be further enhanced, horizontal direction viewable area length V may be set to exceed V ≈ 1.41 x 2D.

Further, while the three-dimensional effect somewhat decreases, if smooth view is preferred, horizontal direction viewable area length V may be set to be less than V ≈ 1.205 x 2D.

If oblique linear slits are used, a mean value of the above two values, V ≈ 1.3 x 2D, is preferably used as the most recommended value.

It will be appreciated that in any of the cases, if a subject person of image presentation moves closer to the naked eye three-dimensional display device than the best view point, the three-dimensional effect is enhanced and the image becomes hard to be seen. If the subject person of image presentation moves further closer and goes over the limiting point of parallax, the image can no longer be recognized as a three-dimensional image. Also, if the subject person of image presentation moves away from the naked eye three-dimensional display device than the best view point, the three-dimensional effect decreases. If the subject person of image presentation moves further away, the three-dimensional effect completely disappears.

The characteristics of a slit having elliptic arc shaped edge (elliptic arc slit) are that when a subject person of image presentation moves horizontally toward the naked eye three-dimensional display device, the viewpoint transition can be done very smoothly by gradually showing the image of next viewpoint.

While the above-described calculating method of horizontal direction viewable area length V is a method utilizing the characteristics of the elliptic arc slit, the above-described appropriate three-dimensional effect can be similarly obtained even with oblique strip shaped slits or oblique staircase patterned slits using the calculating method of horizontal direction viewable area length V.

It should be noted that in the example shown in Figs. 36A and 36B, the following formula is obtained.

$$L = \frac{M - W}{Z}$$

If adjacent pixels are viewed by left and right eyes, M = 2D and the following formula is obtained.

$$L = \frac{DW}{Z}$$

Next, a case where V ≤ 3D is shown in Figs. 37A and 37B.

If pixels positioned at the both ends of the viewable area are seen by left and right eyes, M = V - D, and the following formula is obtained:

$$L = \frac{(V - D)W}{Z}$$

Next, Figs. 38A and 38B show the case in which V > 3D, L is expressed by the following formula.

$$L = \frac{2DW}{Z}$$

<Calculation of Maximum Distance for Three-dimensional Viewing>

Next, maximum distance Lf up to which from the monitor surface (a mask surface) an appropriate three-dimensional effect can be obtained is calculated.

As shown in Figs. 29A to 29C, the minimum horizontal direction viewable area length V where left and right eyes can see at least pixels for different viewpoints is 2 x (pixel width D). Here, if the convergence points of the left and right eyes are Cr and Cl, a distance from Cr, Cl to the left end or right end of the viewable area, whichever closer, is α, and a distance between the convergence points of the left and right eyes is β, the following formula can be obtained.

$$L_f \beta = ZW \cdots (12)$$

Here, β is:

$$\beta = 2D - 2\alpha \cdots (13)$$

Also, α is:

$$\frac{\alpha}{L_f + Z} = \frac{\dfrac{S}{2}}{L_f}$$

As the result, the following formula can be obtained.

$$\alpha = \frac{S(L_f + Z)}{2L_f} \cdots (14)$$

If calculating formula (14) is substituted into calculating formula (13), the following formula can be obtained.

$$\beta = 2D - \frac{S(L_f + Z)}{L_f} \cdots (15)$$

The formula can be obtained.
Next, if calculating formula (15) is substituted into calculating formula (12), the following formula can be obtained.

$$L_f \left( 2D - \frac{S(L_f + Z)}{L_f} \right) = ZW$$

Therefore, the following formulas can be obtained.

$$2DL_f - SL_f - SZ = ZW$$

$$L_f = \frac{Z(W + S)}{2D - S} \cdots (16)$$

A position that is apart by this appropriate distance for three-dimensional viewing Lf is the limit that left and right eyes can see pixels for different viewpoints. Then, if a subject person of image presentation is farther than this distance, the three-dimensional effect significantly decreases and gradually looks like a two-dimensional image.

Here, it goes without saying that a person with larger parallax than designed parallax W can obtain a three-dimensional effect even farther apart from the monitor surface, and a person with small parallax, such as children, can obtain a three-dimensional effect only from closer than the distance.

Similarly, if the face of a person does not face forward to the monitor surface, the effective parallax becomes small and a three-dimensional effect can be obtained only from closer than the distance.

Therefore, when designing a parallax barrier, the above-described calculating formulas can be back-calculated based on the appropriate distance for three-dimensional viewing until which position a designer desires to show the three-dimensional image.

<Calculation of Minimum Distance for Three-dimensionally Viewing>

Next, minimum distance Lf from which to the monitor surface (a mask surface) an appropriate three-dimensional effect can be obtained is calculated.

As this calculation largely differs depending on a method for creating content, it is difficult to form a calculating formula in terms of optics. When a subject person of image presentation moves in parallel with the monitor surface while transiting viewpoints by generating viewmixes in which pixels for a plurality of viewpoints and/or part thereof are averaged as pixels for one viewpoint, if there is a large parallax between adjacent images for different viewpoints, the viewmix does not occur and the person sees double.

Thus, when creating a content, an object is not disposed in a way the object pops out just before the eyes of a subject person of image presentation as in stereoscopic images taken by two cameras and is disposed slightly before the convergence point of the camera by suppressing the three-dimensional effect, then is rendered by photograph imaging or CG.

However, such a treatment impairs the stagecraft of a photographic object and camerawork. While, when three-dimensionally imaging and rendering with two cameras for stereoscopic images, the distance between the cameras is approximately 65 mm just as the parallax of a person, with naked eye three-dimension, adjacent cameras are apart approximately 2 to 3 cm for imaging to respond to natural stagecraft of the object and cameras.

As described above, if the distance between the adjacent cameras when imaging and rendering is set approximately 2 to 3 cm, and, as shown in Fig. 40, in a state where pixels of width D are disposed at the left and right ends of a viewable area, if the distance between the centers of the pixels is $\beta$, the distance Ln from the monitor surface (a mask surface) to a subject person of image presentation as shown in Fig. 41 is as follows:

$$L_n = \frac{ZW}{\beta} \cdots (17)$$

Here, since $\beta = V - D$, the following formula can be obtained:

$$L_n = \frac{ZW}{V - D} \cdots (18)$$

The formula can be obtained.

This calculating result is generally the same as the result of when the distance between the adjacent cameras when imaging and rendering is set approximately 2 to 3 cm, and thus, it is sufficiently usable as a calculating formula of an appropriate distance for three-dimensional viewing under this creation conditions.

If the person moves closer to the monitor surface from this distance, the image becomes hard to see since the parallax becomes strong, and the person cannot focus into the image and sees double or triple.

Here, if a child with small parallax turns the face either slightly left or right to the monitor surface and sees the image, the child still can attain a three-dimensional effect even when moving further closer to the monitor surface.

It should be noted that, to design a parallax barrier under the condition in which the image is desired to be seen from a certain point, the design can be back calculated from the calculation formulas based on the distance.

Therefore, as shown in Fig. 42, the appropriate range for three-dimensional viewing is in the range from appropriate distance for three-dimensional viewing Ln to appropriate distance for three-dimensional viewing Lf.

<Embodiment Using Parameters 1>

In this embodiment, a 40-inch full high definition display with the resolution of 1920 x 1080 is used. As one inch is 25.4 mm, the width of the display screen of this display is calculated as follows.

$$25.4 \times 40 \times \frac{16}{\sqrt{16^2 + 9^2}} \approx 885.5194\,mm$$

Therefore, the width of subpixels R, G, and B is calculated as follows.

$$\frac{885.5194}{1920 \times 3} \approx 0.1537\,mm$$

Suppose BVP distance L is 2.5 m from the monitor surface, parallax W is 65 mm, and the number of parallax is 6.

As shown in Fig. 43, if a pixel for one viewpoint is expressed by three horizontally continuous subpixels in one row, the optimal range of horizontal direction viewable area length V is in the following range:

$$V = 2 \times (1.205 \sim 1.41) \times (0.1537 \times 3)$$

$$\cong 1.1113 \sim 1.3003\,mm$$

Therefore the air gap Z is in the following range:

$$Z= (1.1113\sim1.3003)\times 2500/ (2\times65)$$

$$\cong 21.3712\sim 25.0058mm$$

Slit width S is in the following range:

$$S= (1.1113\sim1.3003)\times 65/ (2\times65+ (1.1113\sim1.3003))$$

$$\cong 0.5509\sim0.6437mm$$

As the number of viewpoints is 6, the total of the mask width in a horizontal direction and the horizontal width of a slit per unit becomes the following value. It should be noted that the mask width is the width of opaque part between slits.

$$6\times0.1537\times3= 2.7666mm$$

therefore, the mask width is in the following range:

$$2.7666- (0.5509\sim0.6437)$$

$$= 2.2157\sim 2.1229mm$$

Here, appropriate range for three-dimensional viewing Ln to Lf from the monitor surface (mask surface) where V = 1.3 x 2D is obtained as follows:

V can be calculated by the following calculation:

$$V = 1.3 \times 2 \times 0.1537 \times 3$$

$$\approx 1.1989 \, mm$$

Z can be calculated by the following calculation:

$$Z = \frac{1.1989 \times 2500}{2 \times 65}$$

$$\approx 23.0558 \, mm$$

S can be calculated by the following calculation:

$$S = \frac{1.1989 \times 65}{2 \times 65 + 1.1989}$$
$$\approx 0.5940 \; mm$$

Thus, Ln can be calculated by the following calculation:

$$L_n = \frac{23.0558 \times 65}{1.1989 - 0.1537 \times 3}$$
$$\approx 2031 \; mm$$

Also, Lf can be calculated by the following calculation:

$$L_f = \frac{23.0558 \times (65 + 0.5940)}{2 \times 0.1537 \times 3 - 0.5940}$$
$$\approx 4608 \; mm$$

Therefore, Ln is approximately 2.0 m, and Lf is approximately 4.6 m.
As the result, the appropriate range for three-dimensional viewing is approximately 2.0-4.6 m from the monitor surface.

<Embodiment Using Parameters 2>

As shown in Fig. 44, when expressing a pixel for one viewpoint by the total of four subpixels using two rows of two continuous horizontal subpixels per row, appropriate range of horizontal direction viewable area length V is in the following range.

$$V = 2 \times (1.205 \sim 1.41) \times (0.1537 \times 2)$$

$$\cong 0.7408 \sim 0.8669 \, mm$$

Therefore, air gap Z is in the following range:

$$Z = (0.7408 \sim 0.8669) \times 2500/(2 \times 65)$$

$$\cong 14.2462 \sim 16.6712 \text{mm}$$

Slit width S is in the following range:

$$S = (0.7408 \sim 0.8669) \times 65/(2 \times 65 + (0.7408 \sim 0.8669))$$

$$\cong 0.3683 \sim 0.4306 \text{mm}$$

As the number of viewpoints is 6, the total of the mask width in a horizontal direction and the horizontal width of a slit becomes the following value.

$$6 \times 0.1537 \times 2 = 1.8444 \text{mm}$$

Therefore, the mask width is in the following range:

$$1.8444 - (0.3683 \sim 0.4306)$$

$$= 1.4761 \sim 1.4138 \text{mm}$$

Here, appropriate range for three-dimensional viewing Ln to Lf from the monitor surface (mask surface) where V = 1.3 x 2D is obtained as follows:

V can be obtained by the following calculation:

$$V = 1.3 \times 2 \times 0.1537 \times 2$$

$$\approx 0.7992 \, mm$$

Z can be obtained by the following calculation:

$$Z = \frac{0.7992 \times 2500}{2 \times 65}$$

$$\approx 15.3692 \, mm$$

S can be obtained by the following calculation:

$$S = \frac{0.7992 \times 65}{2 \times 65 + 0.7992}$$
$$\approx 0.3972 \ mm$$

Thus, Ln can be obtained by the following calculation:

$$L_n = \frac{15.3692 \times 65}{0.7992 - 0.1537 \times 2}$$
$$\approx 2031 \ mm$$

Also, Lf can be obtained by the following calculation:

$$L_f = \frac{15.3692 \times (65 + 0.3972)}{2 \times 0.1537 \times 2 - 0.3972}$$
$$\approx 4619 \ mm$$

Therefore, Ln is approximately 2.0 m, and Lf is approximately 4.6 m.
As the result, the appropriate range for three-dimensional viewing is approximately 2.0-4.6 m from the monitor surface (mask surface).

<Embodiment Using Parameters 3>

As shown in Fig. 45, if pixels for one viewpoint is expressed by the total of three subpixels in two rows, that is, two horizontally continuous subpixels per row in the first row and one subpixel per row in the second row, appropriate range of horizontal direction viewable area length V is in the following range.
It should be noted that the number of subpixels used in a horizontal direction is average 1.5.

$$V = 2x \ (1.205 \sim 1.41)x \ (0.1537x1.5)$$

$$\cong 0.5556 \sim 0.6502 mm$$

Therefore, air gap Z is in the following range:

$$Z = (0.5556 \sim 0.6502) \times 2500/(2 \times 65)$$

$$\cong 10.6846 \sim 12.5038\text{mm}$$

Slit width S is in the following range:

$$S = (0.5556 \sim 0.6502) \times 65/ (2 \times 65 + (0.5556 \sim 0.6502))$$

$$\cong 0.2766 \sim 0.3235\text{mm}$$

As the number of viewpoints is 6, the total of the mask width in a horizontal direction and the horizontal width of a slit is the following value.

$$6 \times 0.1537 \times 1.5 = 1.3833\text{mm}$$

Therefore, the mask width is in the following range:

$$1.3833 - (0.2766 \sim 0.3235)$$

$$= 1.1067 \sim 1.0598\text{mm}$$

Here, appropriate range for three-dimensional viewing Ln to Lf from the monitor surface (mask surface) where V = 1.3 x 2D is obtained as follows:

V can be obtained by the following calculation:

$$V = 1.3 \times 2 \times 0.1537 \times 1.5$$

$$\approx 0.5994 \, mm$$

Z can be obtained by the following calculation:

$$Z = \frac{0.5994 \times 2500}{2 \times 65}$$

$$\approx 11.5269 \, mm$$

S can be obtained by the following calculation:

$$S = \frac{0.5994 \times 65}{2 \times 65 + 0.5994}$$

$$\approx 0.2983 \, mm$$

Thus, Ln can be obtained by the following calculation:

$$L_n = \frac{11.5269 \times 65}{0.5994 - 0.1537 \times 1.5}$$

$$\approx 2031 \, mm$$

Also, Lf can be obtained by the following calculation:

$$L_f = \frac{11.5269 \times (65 + 0.2983)}{2 \times 0.1537 \times 1.5 - 0.2983}$$

$$\approx 4623 \, mm$$

Therefore, Ln is approximately 2.0 m, and Lf is approximately 4.6 m.

As the result, the appropriate range for three-dimensional viewing is approximately 2.0-4.6 m from the monitor surface (mask surface).

<Supplementary Note for Embodiments Using Parameters>

As above, calculations for designing a parallax barrier are carried out based on the calculation of horizontal direction viewable area length V using the characteristics of an elliptic arc slit.

It should be noted that as the edge shape of a slit, in addition to the elliptic arc shape, a variety of slits, such as an oblique strip shape or oblique staircase patterned shape, may also be used.

<Characteristics of the Elliptic Arc Edge Shape>

Using an elliptic arc for the edge shape of a parallax barrier, if a subject person of image presentation does not move a viewpoint, pixels for intended viewpoint as well as part of pixels for other viewpoints at both ends of the pixels for the intended viewpoint are viewed so that viewmixes are to be generated.

The feature is that the elliptic arc is formed in a way in which if the image is farther away and the parallax becomes larger, the area of the image becomes smaller.

If the edge is of a staircase patterned, the view is affected even when parallax becomes far.

As the elliptic arc shape decreases viewmixes with pixels for other viewpoints that are apart from the convergence point, simply stated, the point is that the edge generates a viewmix while suppressing generation of parallax.

As described above, when a subject person of image presentation sees the image from close to the monitor, the person sees outer pixels more than intended pixels.

That is, as pixels for other viewpoints on left and right of the convergence point are viewed particularly when seen from close, in some cases, the image is not focused into. Thus, in such a case, if the edge shape of a slit is an elliptic arc, influence to the viewmix by pixels for other viewpoints that are far from the convergence point decreases.

Conventionally, in a range from a certain distance Ln to a certain distance Lf, a subject person of image presentation can view three-dimensional images, and if the person moves away from the monitor surface farther than distance Lf, three-dimensional effect is lost and two-dimensional images are viewed, whereby, images can be always viewed. However, if the subj ect person of image presentation moves closer to the monitor surface than distance Ln, the image becomes invisible.

As described above, the slit of the invention with which edge shape is an elliptic arc shape is an advantageous technique when a subject person of image presentation sees an image from very close position to the monitor.

<Perforated Parallax Barrier>

It is considered that the slits, that is an area transmitting visible light for naked eye three-dimensional viewing, of a parallax barrier are continuous and the edge shape is a linear, elliptic arc, spline curve, or the like. However, to cause a naked eye three-dimensional effect using a parallax barrier, the following another configuration may be used.

The configuration is disposing of a plurality of visible light transmissive areas that are independent and correspond to one or a plurality of blended subpixels, and the visible light transmissive areas play a roll of the slits of a parallax barrier, instead of the slits that are literally continuous visible light transmissive areas. In short, the visible light transmissive areas of the invention are a plurality of holes provided, as areas that transmit visible light, on a surface that does not transmit visible light.

<Overview of the Design of A Perforated Parallax Barrier>

As shown in Fig. 49, first, a subject person of image presentation is assumed as positioned at the best view point. If the width of a single eye's effective viewable area is D (according to the above description, single eye's horizontal direction viewable area length is 1/2 V), the width of visible light transmissive area is S, the distance from a pixel arranging surface to a parallax barrier is Z, and the distance from the parallax barrier to the best view point is L, $S/D = L/(L + Z)$, and, thus, $S = LD/(L + Z)$.

It should be noted that positioning at the best view point means that the following three conditions are all satisfied. That is: (1) the right eye of a subject person of image presentation views effective viewable area Dr on a pixel arranging surface through the slits of a parallax barrier, and the left eye of the subject person of image presentation views effective viewable area Dl on the pixel arranging surface through the slits of the parallax barrier; (2) the effective viewable area Dr and effective viewable area Dl abut each other; and (3) the effective viewable area Dr and effective viewable area Dl do not overlap each other.

Next, the effective viewable area of each eye is determined on the pixel arranging surface. The effective viewable area can be obtained by the average pixel width (described later) and the height of subpixels constituting one pixel.

Next, a rectangular area that corresponds to the effective viewable area determined on the pixel arranging surface, on a parallax barrier is determined. This rectangular area corresponds to a cross-section of a quadrangular prism formed by connecting the one eye of a subject person of image presentation and the effective viewable area at the parallax barrier, and is a like figure as the effective viewable area.

Next, a visible light transmissive area inscribed in the top and bottom and/or left and right sides of the rectangular area is determined.

Next, a predetermined plurality of visible light transmissive areas are disposed on the pixel arranging surface in accordance with the arrangement of subpixels blended for naked eye there-dimensional display.

It should be noted that, as an option, the visible light transmissive area may be deformed in accordance with deformation where the left and right sides of the rectangular area are obliquely inclined to form a parallelogram while the height of the rectangular area is retained. As the deformation from the rectangular area to the parallelogram is easy, the rectangular area can be easily deformed whatever the shape of the visible light transmissive area in the rectangular area may be. At the same time, by obliquely deforming the visible light transmissive area, a perforated parallax barrier can be designed to more appropriately support the blending arrangement of even greater number of subpixels

That is, designing of a visible light transmissive area is performed using a local coordinate system, while, when arranging each visible light transmissive area on a parallax barrier, the central point of the visible light transmissive area is arranged using an absolute coordinate system over the whole surface of the parallax barrier.

It should be noted that, when determining a visible light transmissive area on a parallax barrier based on the effective viewable area on a pixel arranging surface, the size in a vertical direction of the visible light transmissive area may be identical to the one of an effective viewable area, instead of being the like figure thereas. This configuration can retain a continuity in a vertical direction of a three-dimensional image viewed by a subject person of image presentation.

< Method of Calculating The Average Pixel Width>

The following describes a calculation method of average pixel width D used in the description of a designing method of a visible light transmissive area. Average pixel width D is an average number of subpixels in a horizontal direction constituting one pixel for one viewpoint among the arrangements of blended subpixels for three-dimensional images on the pixel arranging surface of a display.

It should be noted that, if the arrangements of subpixels constituting pixels for respective viewpoints differ for each viewpoint, the number of pixels of a minimum unit that combines different arrangements are used for calculation.

For example, in an example shown in Fig. 50A, two among three subpixels constituting one pixel are in one row, and the rest one subpixel is arranged in a vertically adjacent row.

As the number of subpixels constituting two pixels is six, the number of rows is two, and the number of pixels is two, average pixel width D is (the number of subpixels constituting two pixels)/(the number of rows x the number of pixels) = 6/(2 x 2) = 3/2.

Also, in an example shown in Fig. 50B, as the number of subpixels constituting three pixels is 12, the number of rows is three, and the number of pixels is three, average pixel width D is 12/(3 x 3) = 4/3.

In an example shown in Fig. 50C, average pixel width D is obviously 3.

In an example shown in Fig. 50D, average pixel width D is obviously 2.

In an example shown in Fig. 50E, average pixel width D is obviously 1.

<Method for Designing A Visible Light Transmissive Area>

The following describes details of a method for designing each visible light transmissive area in a perforated parallax barrier.

(1) First, average pixel width D is obtained from the average number and size of subpixels in a horizontal direction constituting one pixel. Suppose the width of the subpixel is P and the height of the subpixel is H, and the average number of subpixels in a horizontal direction in one pixel is $\alpha$, average pixel width D can be obtained from $D = \alpha P$.

(2) Next, if the horizontal direction viewable area length of the pixel is V, the single eye's horizontal direction viewable area length is 1/2 V.

Here, for three-dimensional viewing, at least part of pixels including the average pixel width is required to be viewed by one eye. This is because the three-dimensional effect cannot be attained if pixels for different two viewpoints cannot be viewed separately.

Further, it is also required that the total width of two pixels cannot be viewed from one eye. This is because if pixels for two viewpoints are viewed from one eye, the image is seen double.

Therefore, the range of a value that the single eye's horizontal direction viewable area length 1/2V (= 0.5V) can take is $D \leq 1/2V < 2D$.

(3) Next, as the value of single eye's horizontal direction viewable area length 1/2V ranges $D \leq 1/2V < 2D$, the value is preferably 1/2V = 1.5D using 1.5D as the mean value of the values of both ends.

It should be noted that the multiplier factor of average pixel width D differs depending on the shape of a visible light transmissive area, a blending method of subpixels, and a connecting method of upper and lower pixels (the relationship of arranged positions between adjacent pixels).

Specifically, if average pixel width is small, the multiplier of D is small. Depending on a connecting method of pixels, greater the inclinations of the arrangements of the plurality of visible light transmissive areas are compared with the inclinations of the arrangements of a plurality of subpixels in one pixel, greater the multiplier of D becomes.

It should be noted that, in a shape in which both ends are tapered, farther left and right pixels are apart with reference to the convergence point of pixels for one viewpoint of one eye, smaller the viewable pixel area becomes and smaller the influence of jump points to a generated viewmix becomes, thereby appropriately decreasing jump points.

(4) Next, rectangular area SA is formed to house single eye's effective viewable area SEVA whose width is horizontal direction viewable area length 1/2V and height does not exceed H. Part of single eye's effective viewable area SEVA becomes an area viewed by one eye through a visible light transmissive area that is replaceable with a slit.

It should be noted that Fig. 51 shows sizes when designing an effective viewable area.

As, larger the single eye's effective viewable area SEVA is, the decrease of brightness that is a drawback of the parallax barrier improves, the height of rectangular area SA housing single eye's effective viewable area SEVA is preferably height H to retain brightness of a naked eye three-dimensional display.

(5) Next, the shape of a visible light transmissive area housed in rectangular area SA is preferably bilaterally and/or vertically symmetric. This is because, in this way, the pixels positioned at left and right ends are evenly viewed and stable viewmixes are generated, thereby decreasing eyestrain inherent to three-dimensional viewing.

Further, by making a plurality of visible light transmissive areas arranged in a vertical direction the same shape, continuity of the images can be retained.

It should be noted that, to express three-dimensional images sharply, when the viewpoint of a subject person of image presentation moves, the change rate of decreasing single eye's effective viewable area SEVA becomes preferably larger with the convergence point of one eye moves away from the central point to left or right.

To decrease jump points and retain the brightness of a display, the area of visible light transmissive area is preferably large. Therefore, to express three-dimensional images sharply, decrease jump points, and retain the brightness of a display, altogether, the shape of the visible light transmissive area is preferably has the above two conditions.

<Specific Shapes of Each Visible Light Transmissive Area>

As described above, conditions that each visible light transmissive area should satisfies are determined in a plurality of visible light transmissive areas that are replaceable with slits and formed on a parallax barrier.

Next, a specific example of the shape of each visible light transmissive area that satisfies these conditions is described. It should be noted that, as far as three-dimensional effects are not impaired, the shape of all visible light transmissive areas may be the same shape, or the shape of each visible light transmissive area may be different.

To attain sharper three-dimensional images, decrease jump points by viewmixes that do not strain eyes, and retain the brightness of the display, it is preferable that the change rate of decreasing single eye's effective viewable area SEVA is large even when the convergence point of one eye moves away from the central point to left or right, the area of visible light transmissive area is as large as possible, and the edge shape of the visible light transmissive area is bilaterally or vertically symmetric.

The shape of each visible light transmissive area may be an elliptic arc, triangle, rhombus, or other polygons having even number of corners, such as a hexagon or octagon, or a shape like a spiky ball.

Further, the shape may be a polygon of which corners are drawn using circular arcs of a predetermined circumference ratio.

It will be appreciated that, when arranging the shape of an elliptic arc, rhombus, polygon having even number of corners, and shape like a spiky ball, the shape preferably arranged bilaterally and/or vertically symmetric.

Figs. 52A to 52J show a specific example of a visible light transmissive area. Fig. 52A is a diagram showing an example of rectangle. Fig. 52B is a diagram showing an example of rectangle (rhombus). Figs. 52C and 52D are diagrams showing examples of hexagon. Fig. 52E is a diagram showing an example of octagon. Figs. 52F to 52J are diagrams showing examples of variants of Figures of Figs. 52A to 52E and showing polygons, of which corners abutting four sides of rectangular area SA are drawn with circular arcs of a predetermined circumference ratio.

It should be noted that when deforming the rectangular area to a parallelogram, the visible light transmissive area is not going to be bilaterally or vertically symmetric. Even in such a case, it is preferable to set a visible light transmissive area so that the area becomes bilaterally and/or vertically symmetric when setting the visible light transmissive area in the rectangular area before deformation.

<Details of Deformation of A Rectangular Area>

When deforming a rectangular area to a parallelogram, the left and right sides of the rectangular area are obliquely inclined while the height of the rectangular area is retained to form a parallelogram.

Here, suppose the degree of oblique inclination is angle θ, the inclination of the arrangement of a pixel for respective viewpoint, that is, the inclination of the arrangement of a visible light transmissive area on a parallax barrier, is angle θ1, and the inclination of the arrangement of subpixels in one pixel is angle θ2 (where a plurality of subpixels constituting a pixel are arranged over two or more rows), angle θ preferably ranges from upright, that is, angle 0 to either angle θ1 or θ2, which ever is larger.

Also, to attain naked eye three-dimensional effects as much as possible, angle θ is particularly preferably between angle θ1 and angle θ2.

As shown in Fig. 53A, suppose the coordinates of a certain point of a rectangular area before deformation is $(x, y)$, the coordinates after deformation is $(x + y \tan\theta, y)$.

It should be noted that, as shown in Fig. 53B, the actual deformation is performed by shifting upper side and lower side of the rectangular area in opposite directions by the same amount while keeping the position of the central point of the rectangular area.

It should be noted that, as shown in Fig. 53C, the rectangular area maybe deformed by rotating with the central point as the axis and adjusting the length of the long sides and short sides, instead of deforming to a parallelogram.

In such a deformation, it is preferable to expand and contract the rectangular area so that viewable area length 1/2V is retained as the width in a horizontal direction and vertically adjacent rectangular areas are connected, by setting the width of the rectangular area 1/2Vcosθ and the height h/cosθ in a state where the rectangular area is rotated by angle θ.

<Arranging A Plurality of Visible Light Transmissive Areas>

The plurality of visible light transmissive areas may be arranged on a straight line in a vertical direction or on an oblique straight line, or in a zigzag shape as described above.

However, a blending method of subpixels for respective viewpoint is required to be adjusted depending on the arrangement state of the plurality of visible light transmissive areas. It should be noted that a specific blending method is described later.

<Specific Example of A Perforated Parallax Barrier>

Specific embodiments of a perforated parallax barrier are described with three cases of blending arrangements. Further, two patterns of rectangular areas (a square and a parallelogram) per one case of blending method are described. In the following example, the shape of a visible light transmissive area is an elliptic arc.

It should be noted that the characteristics when a rectangular area is a parallelogram are that: a viewmix is realized even when a visible light transmissive area is narrow to clearly show a three-dimensional image; a three-dimensional effect can be maintained up to a jump point when transiting viewpoints in a horizontal direction; and the jump point can also be somewhat alleviated.

However, the visible light transmissive area becomes asymmetry, which is considered to sometimes cause eyestrain.

In case 1, visible light transmissive areas are connected in a vertical direction so that the inclination of the arrangement of the visible light transmissive area corresponding to the blended arrangement constituted by three subpixels in three rows becomes the same as the inclination of the arrangement of subpixels constituting pixels.

Therefore, while the popping out degree of the three-dimensional image is large and the image looks clear, if the viewpoint slightly moves in a horizontal direction, the three-dimensional image becomes hard to be seen.

<How To Calculate A Visible Light Transmissive Area>

To calculate a visible light transmissive area on a parallax barrier based on the effective viewable area on a pixel arranging surface, the visible light transmissive area that is a like figure as the effective viewable area is calculated with reference to either left or right eye of a subject person of image presentation at the best view point.

Here, while the visible light transmissive area can be the like figure in a horizontal direction without a problem, the visible light transmissive area becomes a state as shown in Fig. 54A to be the like figure in a vertical direction.

In Fig. 54A, elliptic arcs drawn by solid lines and located on the left side of Fig.54A indicate two effective viewable areas on a pixel arranging surface at designing. Small elliptic arcs drawn by solid lines at right thereof indicate two visible light transmissive areas formed on a parallax barrier.

Among three viewpoints on the right side of Fig. 54A, upper and lower viewpoints are used for designing each visible light transmissive areas. The viewpoint in the middle is for viewing an actual image.

It should be noted that if a rectangular area housing the effective viewable area is deformed by being deformed to a parallelogram or rotating, contracting or expanding, it is preferable to maintain the height of the effective viewable area in a vertical direction by extending in a longitudinal direction (long side direction).

<Parameters Involved in Selecting>

It should be noted that when selecting a blending method, the player (blend processing program) refers to a table that describes, for example, parallax barrier sheets created and distributed in advance in combination with blending methods, and selects the blending method based on the type of the installed parallax barrier sheet.

When producing a parallax barrier sheet for a specific display, the parallax barrier sheet is produced with parameters of the resolution and pixel width of the display and the number of viewpoints of the multiple viewpoints.

<Method for Producing A Parallax Barrier Sheet>

Normally, a parallax barrier comprises a mask surface that does not transmit visible light, and a slit surface that transmits visible light. Forming only a mask surface while leaving a slit surface forms a parallax barrier.

The parallax barrier sheet of the invention may be formed by directly printing the mask surface of a parallax barrier on a transparent media (direct printing by a laser printer or offset print).

In this way, one process can be eliminated compared with a method in which a parallax barrier is first printed on a transparent thin film sheet, and then, the transparent thin film sheet is attached on a transparent media. Also, contraction and expansion of the transparent thin film sheet is not required to be considered, provided, however, when directly forming a parallax barrier on a transparent medium, appropriate control should be performed so that the inclination of the slit of the parallax barrier in relation to the transparent media becomes a desired value.

It should be noted that gravure printing is preferably used to directly form a parallax barrier on a transparent medium.

It will be appreciated that, just as the conventional technique, a parallax barrier sheet may be produced by a method in which a parallax barrier is first formed on a transparent thin film sheet, and then, the transparent thin film sheet is attached on a transparent medium.

It should be noted that the printing may be performed by exposure in which a photographic film (a negative) is directly burned. In this method, as a parallax barrier is formed by directly exposing to light, a parallax barrier of extremely high precision can be directly formed on a transparent sheet, that is, a negative film.

With a perforated parallax barrier, this method is particularly effective as it is like a punching metal.

It will be appreciated that, not only when forming the parallax barrier sheet of the invention but also when forming a normal parallax barrier, the configuration of using a parallax barrier also as an electromagnetic wave shield is effective from a perspective that the number of components and production processes can be reduced.

<Configuration of The Amusement Game Machine>

As shown in Fig. 55, the amusement game machine of the invention comprises an input unit, detecting unit, timer, game control unit, video image control unit, brightness control unit, and naked eye three-dimensional video image display unit.

The input unit accepts operation by a player of the amusement game machine, and transmits an input signal to the game control unit and video image control unit.

The detecting unit detects a position and/or trajectory of a ball for game on the board surface of the amusement game machine. Further, the detecting unit may also detect the existence of a player. The detecting unit transmits the detected result as a detected signal to the game control unit and video image control unit.

The timer measures playtime of the amusement game machine and transmits a timer signal to the game control unit and video image control unit.

The game control unit controls the game content of the amusement game machine and transmits a control signal to the video image control unit.

The video image control unit controls a three-dimensional video image or a two-dimensional video image in accordance with operation on the input unit by a player, elapsed predetermined playtime measured by the timer, and the control result of the game by the game control unit, then, transmits a video image signal to the naked eye three-dimensional video image display device. Further, the video image control unit transmits a switching signal that switches between displaying of a three-dimensional video image and displaying of a two-dimensional video image to the brightness control unit.

The brightness control unit controls the brightness based on switching between displaying of a three-dimensional video image and displaying of a two-dimensional video image or other conditions, then, transmits a brightness control signal to the naked eye three-dimensional video image display unit.

The naked eye three-dimensional video image display unit displays a video image based on the video image signal, as well as changes the brightness based on the brightness control signal.

<Control of The Appearance Count, Display Time, and Popping Out Degree of A Three-dimensional Video Image>

Watching three-dimensional video images for long hours greatly strains eyes. To save eyestrain, the appearance count, display time, and popping out degree of a three-dimensional video image may be reduced. That is, video images may be controlled so that a powerful three-dimensional video image is displayed as intended at the beginning of viewing the three-dimensional video image or playing the game, with the elapse of continuous playtime, the appearance count, display time, and popping out degree of the three-dimensional video image is gradually reduced, then, after a predetermined time when a player's eyes are presumably get tired is elapsed, the three-dimensional video image is stopped being displayed and a two dimensional video image is displayed.

The following describes a representative control method of the appearance count, display time, and popping out degree of a three-dimensional video image in the invention.

Figs. 56A to 56D are diagrams illustrating blended video images created according to respective popping out degrees. Fig. 56A shows a video image with the popping out degree 0 (0 cm), that is, a two-dimensional video image. Fig. 56B shows a three-dimensional video image with the popping out degree 1 (1 cm). Fig. 56C shows a three-dimensional video image with the popping out degree 2 (2 cm). Fig. 59D shows a three-dimensional video image with the popping out degree 3 (3 cm). As the first control method for reducing the appearance count, display time, and popping out degree of a three-dimensional video image, there is a control method that prepares a plurality of blended video images created with a predetermined appearance count, display time, and popping out degree in advance, then, selectively reproduces the blended video images. The blended video images used in such a control method normally have to be compressed reversibly, which results in enormous data amount, as the compression rate is low.

Figs. 57A and 57B are diagrams illustrating video images for a plurality of respective viewpoints. Fig. 57A shows video images for respective viewpoints in which an object is captured using a plurality of cameras for respective viewpoints. As can be seen from Fig. 57A, in each video image for each viewpoint, the position of the object is slightly shifted. Fig. 57B shows the position relationship between the object and a plurality of cameras for respective viewpoints. As can be seen from Fig. 57B, the plurality of cameras for respective viewpoints are disposed with even interval. As the second control method for reducing the appearance count, display time, and popping out degree of a three-dimensional video image, there is a control method that prepares a predetermined number of plurality of video images in advance, then, blends the video images on a real time basis. In such a control method, video image files for respective viewpoints may be compressed irreversibly, which is optimal. In the second control approach, required video images are selected and blended from video images for a plurality of viewpoints so that parallax between adjacent viewpoints becomes the same. If the number of views of a parallax barrier is five, and the number of video images for respective viewpoints prepared in advance is nine, the popping out degree can be set in three levels. In the case of Figs. 57A and 57B, when viewpoints 1, 3, 5, 7, and 9 are selected, as the parallax of each viewpoint becomes maximum, the popping out degree also becomes maximum. When viewpoints 3, 4, 5, 6, and 7 are selected, as the parallax of each viewpoint becomes minimum, the popping out degree also becomes minimum. When viewpoints are all the same, for example, all the viewpoints are 5, the parallax of each viewpoint becomes 0 and the video image does not pop out, that is, the video image becomes a two-dimensional video image. When the appearance count and display time of a three-dimensional video image are required to be reduced, time of a scene during which viewpoints are all the same and blended, that is, two-dimensional video image time, may be made long.

Figs. 58A to 58C are diagrams illustrating the popping out degree controlled by moving cameras (multiple cameras) closer to/away from the object. Fig. 58A shows a state in which the cameras move closer to the object, and in this state, as the object is located before the convergence point of the cameras, the object is seen as popping out before the monitor surface. Fig. 58B shows a state in which the object is adjusted to the convergence point of the cameras by moving the cameras closer to/away from the object, and in this state, the object is seen on a monitor surface, that is, seen as a two-dimensional video image. Fig. 58C shows a state in which the cameras move apart from the object, and in this state, the object is located behind the convergence point of the cameras and the object is seen at the back of the monitor surface.

Figs. 59A and 59B are diagrams illustrating control of the popping out degree by moving the object closer to/away from the cameras. Fig. 59A shows the states of disposing the camera at three stage positions, that is, (1) before the convergence point, (2) at the convergence point, (3) behind the convergence point, by moving the object closer to/away from the cameras. Fig. 59B shows the popping out degrees of the object depending on each disposition state of the object: (1) when the object is moved closer to the cameras and disposed before the convergence point, the object is seen as popping out from the monitor surface; (2) when the object is disposed at the convergence point, the object is seen on a monitor surface as a two-dimensional video image; (3) when the object is moved away from the cameras and disposed behind the convergence point, the object is seen behind the monitor surface.

Figs. 60A to 60C are diagrams illustrating control of the popping out degree controlled by changing the orientations of the cameras. Fig. 60A shows a state in which the orientations of the cameras are changed so that the convergence point comes behind the object, in which state the object is seen as popping out before the monitor surface. Fig. 60B shows a state in which the orientations of the cameras are changed so that the convergence point is adjusted to the object, in which state the object is seen on the monitor surface, that is, as a two-dimensional video image. Fig. 60C shows a state in which the orientations of the cameras are changed so that the convergence point comes before the object, in which state the object is seen at the back of the monitor surface.

As the third control method for reducing the appearance count, display time, and popping out degree of a three-dimensional video image, there is a control method that renders video images for a plurality of viewpoints on a real time basis. The third control method as an embodiment is further divided into three patterns of control methods.

Firstly, the cameras are moved closer/apart from the object. When the cameras are moved closer to the object, the object is seen as popping out before the monitor surface, and when the cameras are moved apart from the object, the object is seen at the back of the monitor surface.

Secondly, the object is moved closer or apart from the cameras. When the object is moved closer to the cameras, the object is seen as popping out, and when the object is apart from the cameras, the object is seen at back of the monitor surface.

Thirdly, the position of the convergence point is changed by changing the orientations of the cameras. When the convergence point is located behind the object, the object is seen as popping out before the monitor surface, and when the convergence point is located before the object, the object is seen at back of the monitor surface. When the convergence point overlaps the object, the object is seen on the monitor surface, that is, as a two-dimensional video image. To reduce the appearance count and display time of three-dimensional video images, the number and time for rendering two-dimensional video images may be increased by the above-described control.

The appearance count, display time, and popping out degree of a three-dimensional video image may not only be reduced but also be increased according to elapsed playtime. For example, a three-dimensional video image with large popping out degree is controlled to be displayed when a predetermined time when a player presumably ends the game is elapsed by measuring from the beginning time of play, announcing the player advantageous information such as a change of odds in pachinko, which arouses a passion for gambling and largely stimulates the player to continue playing the game.

In addition to controls by the control unit in the above-described three types of embodiments, a player may arbitrary manipulate the popping out degree of a three-dimensional image. Manipulation may be performed using an input unit (input means) provided on the amusement game machine. Input means may be a button, rotating knob, or sliding knob, for controlling the popping out degree, or a config mode in the game. The player may reduce the popping out degree when feeling eyestrain, or increase the popping out degree when feeling to see more powerful video image.

It should be noted that the control method of the appearance count, display time, and popping out degree of a three-dimensional video image in the invention is not limited to the above-described embodiments, and allows a variety of changes based on required embodiments.

<Movable Parallax Barrier>

A representative configuration of the movable parallax barrier of the invention is described below.

It should be noted that it is preferable to configure the opaque area and visible light transmissive area of a parallax barrier by making slits a plurality of elliptic arcs as described above, or continuously arranging a plurality of holes that are visible light transmissive areas (without limiting to these configurations).

The first configuration shown in Figs. 61A to 61C is a rollable parallax barrier sheet in which a parallax barrier part forming a parallax barrier and a transparent part that transmits light for displaying two-dimensional video images are continuously arranged.

Reels of a parallax barrier sheet are disposed on top and bottom or left and right around the monitor surface. As the reels roll up the parallax barrier sheet, either the parallax barrier part or transparent part comes in front of the monitor.

Further, as shown in Fig. 62, the parallax barrier sheet is required to calibrate unevenness and retain appropriate air gap Z between the sheet and the monitor surface. The air gap Z is calculated based on distance L between the eyes of a player and the parallax barrier. The parallax barrier sheet of the first configuration calibrates unevenness by being supported by spacers as shown in Fig. 61C or rails as shown in Fig. 61A.

In another embodiment of the first configuration as shown in Fig. 63, a transparent plate, such as a glass, that transmits light is disposed between the monitor surface and the parallax barrier sheet.

The transparent plate is provided with microscopic pores, and, as a suction unit (suction means) disposed around the monitor sucks in the parallax barrier sheet, the parallax barrier sheet is in close contact with the transparent plate to calibrate unevenness.

The second configuration as shown in Fig.64 is a plate-type parallax barrier that moves by being supported by rails.

Rails are disposed around the monitor and the parallax barrier can display a three-dimensional video image by moving through the space of the rails and ahead the monitor surface. The rails also play a roll of a spacer that retain appropriate distance Z between the parallax barrier and the monitor surface.

The third configuration as shown in Figs. 65A to 65C is a plate-type parallax barrier that moves back and forth by spacers with an expansion and contraction function disposed around the monitor surface.

The parallax barrier moves to the first position shown in Fig. 65B and the second position shown in Fig. 65C by contraction and extension of the spacers. At the first position, the distance between the parallax barrier and the monitor surface is appropriate distance Z for displaying three-dimensional video images. At the second position, the distance between the parallax barrier and the monitor surface is an appropriate distance for displaying two-dimensional video images.

The following describes other characteristics of the parallax barrier.

Two-dimensional images may be formed on the surface of the parallax barrier.

According to Fig. 66, as the surface of the parallax barrier is formed with a two-dimensional image that imitates the operating sheet of an airplane, and the parallax barrier is formed on the window part, only such a window part displays three-dimensional video images. The two-dimensional image is formed by ink that transmits light, and thus, does not interfere when displaying three-dimensional video images, which allows greater flexibility in designing an amusement game. Particularly, by forming a two-dimensional image all over the parallax barrier as shown in Figs. 67A and 67B, a player perceives as if the display device does not exist on the board surface of the amusement game machine. A three-dimensional video image shown in such a condition surprises the player, arousing the player's enthusiasm for playing the game.

Further, the shape of the parallax barrier is not limited to the shape of the monitor and may take arbitrary shape, which allows greater flexibility in designing an amusement game and arouses a player's enthusiasm for playing the game. According to Fig. 68, the external figure of the parallax barrier is of a shape of a magnifier, and, as the parallax barrier is formed on the part imitating the lens part, only the lens part displays three-dimensional video images. According to Fig. 69, the external figure of the parallax barrier is of a shape of a periscope, and, as the parallax barrier is formed on the part imitating the observation window part, only the observation window part displays three-dimensional video images.

As described above, allowing to form two-dimensional images on the surface of a parallax barrier and the shape thereof to be free results in dramatically increasing flexibility in designing an amusement game machine and creating other contents, arousing a designer's desire for imagination, which, in turn, contributes in prevailing amusement game machines equipped with naked eye three-dimensional display means.

It should be noted that the configuration of the parallax barrier of the invention is not limited to the above-described configurations, and allows a variety of changes based on required embodiments.

<Brightness Control>

The brightness control unit (brightness control means) of the invention is described below.

Figs. 70A and 70B show a backlight in the display device used with the amusement game machine of the invention. The backlight is configured by arranging a plurality of fluorescent lights as shown in Fig. 70A or a plurality of LEDs as shown in Fig. 70B. With the naked eye three-dimensional video image display unit (naked eye three-dimensional video image display means) of a parallax barrier method, as the brightness decreases due to the parallax barrier, it is effective to compensate the decrease in brightness by increasing electric voltage or electric current supplied to the backlight. It should be noted that, for a display device that does not have a backlight and has another component as the light source, electric voltage or electric current supplied to the light source may be increased.

As shown in Fig. 71, a double monitor type may be employed, in which a monitor for displaying three-dimensional video images and a monitor for displaying two-dimensional video images are separately provided. Since a parallax barrier is not equipped on the monitor for displaying two-dimensional video images, the brightness naturally does not decrease.

Here, if a movable parallax barrier and a double monitor type are employed, a difference arises in brightness between when displaying three-dimensional video images and when displaying two-dimensional video images. Such a difference in brightness is calibrated by lighting only some of the fluorescent lights or LEDs when displaying two-dimensional images, and lighting all the fluorescent lights or LEDs when displaying three-dimensional video images.

Also, the difference in brightness can be calibrated by increasing electric voltage and electric current supplied to the light source when displaying three-dimensional video images than when displaying two-dimensional video images.

Further, by increasing the color intensity of three-dimensional video images displayed on part of the monitor covered by the mask part of a magnifier-shaped parallax barrier and lowering the color intensity of two-dimensional video images displayed by other part of the monitor, a player see the three-dimensional video images bright by the function of the pupils, as the result, the difference in brightness is calibrated.

While, as for the color intensity, video images may be initially created so that the brightness difference between three-dimensional video images and two-dimensional video images can be calibrated, it is more preferable to perform image processing in real time to video image data temporarily accumulated to a frame buffer for reproducing a video image.

<Pachinko Machine Equipped with Naked Eye Three-dimensional Video Image Display Means>

Fig. 73 shows a pachinko machine equipped with a naked eye three-dimensional video image display unit that is an embodiment of the invention.

According to such a pachinko machine, three-dimensional video images are displayed by a naked eye three-dimensional video image display unit in the timing such as (1) when starting a game by inserting a coin or a prepaid card to the pachinko machine, (2) when starting changing odds when a ball for game enters in a gimmick on the board surface, (3) when becoming a reach state as the result of the change of odds, (4) when hitting a jackpot as the result of the change of odds, and (5) when changing odds, which arouses a player's passion for gambling and encourages the player's enthusiasm for playing a game.

Further, three-dimensional video images may be displayed with varying appearance count, display time, and/or popping out degree in accordance with the result of the mini game played by a player. The naked eye three-dimensional video image display unit displays an image or video image that prompts the player to operate. The displayed image or video image indicates an instruction to the player, such as the kind of input unit that the player is to operate, the timing of operation, and the number of operations. If the player operates the input unit and can correctly input pursuant to such an instruction, the game control unit (game control means) performs a control that is advantageous to the player, such as hitting a jackpot or changing odds, and a corresponding three-dimensional video image is displayed. In this way, the mini game adds lively actions in playing the game and powerful three-dimensional video images can be displayed depending on the result of the game, which encourages the player's enthusiasm for playing a game.

The input unit used with the amusement game machine of the invention may be a button, lever, slider, joystick, mouse, keyboard, jog dial, touch panel, or the like, but not be limited thereto.

As shown in Fig. 74, as a stagecraft of a pachinko machine, the naked eye three-dimensional video image display unit may be hidden by a decoration. In such a case, appearing of the naked eye three-dimensional video image display unit when satisfying conditions, such as a ball for game enters into a gimmick, or a predetermined continuous playtime has elapsed, surprises a player and encourages the player's enthusiasm for playing a game.

Further, in such a pachinko machine, it is possible to use a three-dimensional video image as one kind of gimmick. The pachinko machine is provided with a detecting unit (detecting means) that can detect all over the board surface, and the detecting unit detects the position of a ball for game that moves on the board surface in a certain time interval, then transmits each detected signal to the game control unit. The game control unit determines whether or not the position of the ball for game and the position of a gimmick displayed as a three-dimensional video image at a predetermined timing, based on the detected signal and the position information of pixels that display the gimmick obtained from the video image control unit. When the position of the gimmick displayed as a three-dimensional video image matches the position of the ball for game in the determining process, the game control unit performs a control, for example, the change of odds, yet, when not matching, the game control unit does not perform a control, such as the change of odds. In this way, while the three-dimensional video image can display the result of the control by the game control unit, the three-dimensional video image can be one element for controlling the game, which enhances the added value.

Further, the game control unit can define the position and timing at which the three-dimensional video image displays a gimmick in advance, instead of retrieving the position information of pixels that display the gimmick from the video image control unit. In this way, the determining process can be simplified.

It should be noted that the amusement game machine of the invention is not limited to the pachinko machine as described above, and may vary in many ways according to required embodiments.

In this way, according to the invention, an amusement game machine equipped with a value-added naked eye three-dimensional video image display means can be provided, saving eyestrain, maintaining brightness when displaying two-dimensional video images, arousing a player's passion for gambling, and encouraging the player's enthusiasm for playing a game.

<Attachable and Detachable Type>

Embodiments of the invention are described with reference to Fig. 75 to Fig. 99B as follows.

It should be noted that the feature of the invention is that, even with a cheap display with SVGA (800 x 600) class low resolution and screen size of some 14 inch and a PC equipped with low priced CPU, a naked eye three-dimensional content can be enjoyed by easily and detachably adding the parallax barrier sheet of the invention and using a pixel blending method for naked eye three-dimensional display with limited number of pixels.

The present application focuses on the description of hardware, and thus, the pixel blending method for naked eye three-dimensional display with limited number of pixels is not described.

<Thickness of Spacers>

The point to be noted when calculating the thickness of spacers, that is, air gap Z between the display surface and the parallax barrier surface, and forming the spacers according to the calculating result, is precisely a protection layer of the display surface, that exists further above the surface on which pixels are arranged.

As the calculation is to obtain the distance from the pixel surface, the thickness of actually creating spacers should be air gap Z taken away the thickness of the protection layer of the display surface.

<Substituting with the Thickness of Transparent Medium>

It should be noted that at least part of the thickness of the spacers may be substituted by the thickness of the transparent medium configuring the parallax barrier sheet. This is because the thickness of the transparent medium is adjusted relatively easily in its producing process.

However, in such a case, when providing a parallax barrier sheet on a display, the parallax barrier is required to be formed on the side of a subject person of image presentation of the transparent medium with a certain thickness.

While it is described later, for example, when using a level difference between the monitor surface and the frame as part of spacers, the rest of the air gap is compensated by the thickness of the transparent medium. Also, the part taken away the thickness of the transparent medium may be provided as the thickness of a variety of spacers described below.

<A Representative Example of Spacers>

Fig. 75 shows a specific example when using L-shaped spacers. In this example, a case is assumed in which the monitor surface of the display is surrounded by the frame and the level of the monitor surface is lower than the frame.

Spacers attached to a filter (i.e., a parallax barrier sheet) are adjusted on the corners of the frame of the display so that the filter does not rotate to attach the filter on the display by a predetermined detachable method.

Also, a filter may be attached on spacers fixed on the corners of the frame by a predetermined detachable method.

«When Air Gap Is Larger than A Level Difference»

Next, with reference to Figs. 76 to 88, an attachment method when the thickness of the spacers is larger than the thickness of the level difference of the frame (a level difference between the frame surface and the monitor surface of the display).

Fig. 76 shows an example of a method of clipping the filter. In this example, spacers are adjusted and attached to the corners of the frame. The clipping attachment hook may be attached any sides of up, down, left, and right of the filter and display.

Fig. 77 shows an example of a method that places a film on a rail (also referred to as a guide rail, or a sash bar). In this example, a rail is attached on the frame and a filter is placed on the rail. As the filter is maintained as horizontal by placing the filter on the rail, the spacers and the corners of the frame are not necessarily adjusted.

It should be noted that the shape of spacers may be L-shape, cylindroid, rectangular cylinder, or any other shape as long as a predetermined thickness can be maintained.

If a laptop PC is used, it is possible to extend the vertical length of the parallax barrier sheet and let the keyboard surface below the display surface play a roll of a sash bar as the most simplified configuration.

It should be noted that a clipping attachment hook may be used to clip and fix the upper part of the parallax barrier sheet to the upper part of the display surface so that the parallax barrier sheet does not fall down to the side of a subject person of image presentation.

Fig. 78 shows an example in which rails are provided on top and bottom of the monitor surface of the display. In this example, as the rails are attached on the top and bottom of the monitor surface, the filter can be firmly fixed. The filter is inserted from the side by sliding through the slot of the rails.

It should be noted that, while spacers are used in the example shown in Fig. 78, the spacers may not be used and the function of the spacers may be substituted by the position of the slot of the rails as shown Fig. 79.

It should be noted that, while, in the example shown in Fig. 78, the rails have the same length as the width of the monitor surface, the rails may be provided only in the vicinity of the monitor as long as the filter can be fixed.

Fig. 80 shows a method for installing a filter by sliding the filter through the slot of the rails from above. In this example, the rails are disposed to form a U shape with the upper part left blank.

It should be noted that the spacers may not be used in the same way as the above example, or the rails may be provided only in the vicinity of the four corners of the monitor surface.

As a method for installing a parallax barrier sheet on the display surface, a guide rail type retaining means may be provided on both left and right sides of the display, and a stopper may be provided on the bottom of the display surface so that the parallax barrier sheet inserted over the display surface along the guide rails stops at an appropriate position.

The stopper may be the same shape as the guide rails at left and right of the display screen and, as a whole, a U-shaped guide rail may be used.

Fig. 81 shows a method for hanging a filter by providing hooks at two parts on the upper part of the display. Pores that fit the hooks are made at two parts on the filter to hang the filter by inserting the hooks into the pores.

If the hooks are accurately attached, there is no need for calibration.

Fig. 82 shows a method for screwing the filter on the display. Pores are made on the four corners of the filter to fix the filter on the frame by screwing pins or the like to the pores.

It should be noted, as shown in Fig. 83, instead of providing spacers, rings may be attached to the pins to also function as spacers.

Fig. 84 shows a method for attaching a filter on a display using adhesive pads. Elastic and detachable material is used for the adhesive pads. The pads are adhered by pressing so that a distance can be retained between the monitor surface and the parallax barrier surface by the spacers. The spacers, monitor surface, and parallax barrier surface are in close contact by tensile force of the adhesive pads and air gap Z is appropriately maintained.

It should be noted that, in the mechanism, detachable suction cups may be used instead of the adhesive pads.

Fig. 85 shows a method for attaching a filter on a display using curing adhesive material. In this example, the curing adhesive material also functions as a spacer.

«When Air Gap Is Smaller than Level Difference»

Next, the following describes an attaching method when the level difference between the monitor surface and the frame surface is larger than air gap Z. It should be noted that the parallax barrier surface of a transparent medium is required to be made so that the parallax barrier surface is fit into the monitor surface within the frame.

Fig. 86 shows a method in which adhesive material is provided on the monitor surface side of L-shaped spacers attached on the filter, so that the filter can be detachably attached to the monitor. By providing spacers correctly adjusted to the corners of the frame, calibration of the filter can be skipped.

Also, spacers can be fixed on the corners of the frame and adhesive material is provided on the filter side of the spacers, so that the filter can be detachably attached to the monitor.

Fig. 87 shows a method for detachably attaching a filter using L-shaped attachments. In this example, the L-shaped attachments are configurations in which the L-shaped attachments are fitted on the top and bottom of the frame and have slots for retaining the filter or attached to the filter. These L-shaped attachments are attached to the top and bottom of the filter, and the L-shaped attachments are fitted into the frame of the display as is.

It should be noted that the L-shaped attachments may be attached on the left and right of the filter.

Fig. 88 shows a method of attaching a filter using clipping attachment hooks that also work as spacers. In this example, the clipping attachment hook is starting from the part that is in contact with the monitor surface, forming a slot for retaining the filter at an appropriate position or being attached to the filter, then extending along the external side of the display to the back side thereof, to clip the display.

These clipping attachment hooks may be attached at least two parts or more, such as on the top and bottom of the monitor surface. While the clipping attachment hooks may be attached anywhere, it is more stable to attach the clipping attachment hooks at opposing parts of the monitor surface.

Fig. 89 shows a method for attaching a filter in combination with an L-shaped attachment and cylindrical spacers. In this example, the upper L-shaped attachment also functions as a spacer, and, on the bottom, the cylindrical spacers are attached on the filter to detachably fit the filter in the frame.

It should be noted that the L-shaped attachment may be attached on the bottom and the cylindrical spacers may be attached on the top.

Further, the clipping attachment hook as shown in Fig. 88 may be used instead of the L-shaped attachment.

<<When Adjusting A Slit Width According To The Level Difference>>

So far, a method is described for calculating air gap Z to attain an appropriate best view point and an appropriate range for three-dimensional viewing, and adjusting the position of the parallax barrier surface to realize the calculated air gap.

On the other hand, by changing the way of thinking, the following describes a method for actively using a level difference between the monitor surface and the frame of the display as a given condition, and using this level difference instead of a spacer.

It should be noted that to attain an appropriate best view point and an appropriate range for three-dimensional viewing with given air gap Z, firstly, appropriate slit width S is calculated by substituting horizontal direction viewable area length V and parallax W into the following calculating formula (3).

$$S = \frac{VW}{2W + V} \quad \cdots \quad (3)$$

Further, the following formula (19) can be obtained from the formula (1).

$$L = \frac{2WZ}{V} \quad \cdots \quad (19)$$

Next, best view point distance (BVP distance) L is calculated by substituting horizontal direction viewable area length V, air gap Z that totals: the thickness of a protection layer from the pixel displaying surface to the monitor surface; a level difference between the monitor surface and the frame surface of the display; and a distance from the frame surface to the parallax barrier surface (if a parallax barrier is formed on the monitor side of the filter, the value is 0), and parallax W into the above formula.

Here, if a predetermined BVP distance L is needed to be set, horizontal direction viewable area length V is calculated by the following formula (20) based on formula (1).

$$V = \frac{2WZ}{L} \quad \cdots \quad (20)$$

Next, an RGB blending method that has horizontal direction viewable area length V' corresponding to this horizontal direction viewable area length V is selected to reproduce a naked eye three-dimensional video image, whereby the existing level difference of the display frame can be substituted as a spacer and an appropriate naked eye three-dimensional video image can be reproduced using the predetermined best view point.

It will be appreciated that a predetermined BVP distance L may be set by controlling air gap Z using a spacer.

If a predetermined best view point is set without setting an appropriate blending method, horizontal direction viewable area length V changes and the three-dimensional effect (the popping out degree) and the definition of the three-dimensional image somewhat change. However, depending on the use purpose, this setting can sufficiently cater to actual usage.

By forming a parallax barrier based on slit width S calculated by the above calculating method, an appropriate best view point and an appropriate range for three-dimensional viewing can be obtained, and, at the same time, a naked eye three-dimensional display using the level difference between the monitor surface of the display and the frame thereof, as a spacer, can be configured.

<A Method for Attaching A Filter Using A Level Difference>

Fig. 90 shows a method of using a filter somewhat larger than the monitor surface, providing adhesive material on the four corners of the filter, and attaching the filter on the frame.

It should be noted that the position at which the adhesive material is provided is not necessarily the four corners, and may be one or more points that overlap with the frame, provided, however, if there is not much space to provide the adhesive material, it is preferable to provide on upper part of the filter in consideration of the gravity force.

Fig. 91 shows an example of using a clipping attachment hook instead of adhesive material.

<Attaching to A Table Type Display>

Fig. 92 shows a method for attaching a parallax barrier sheet to a table type display, that is, a display whose screen surface faces upward and set as a table.

This table style display is used for a purpose of controlling an image or video image to be displayed on the display by being placed a game card thereon, and recognizing the card from the display side. This display comprises a screen panel for a rear projector and a projector that projects images from below.

In this example, just as the case of screwing normal screws or bolts, the spacers are hollow and coaxial with pins or bolts. These spacers are installed on the filter, and the pins or bolts are screwed through the spacers to the frame to fix the filter thereon.

Fig. 93 shows a method for providing spacers on the four corners of the monitor surface and placing a filter thereover.

It should be noted that the display facing upward may be a normal monitor.

It will be appreciated that the parallax barrier sheet may also be used by being superimposed on the monitor surface of a tablet PC.

<Switching Viewing of Three-dimensional Display and Viewing of Two-Dimensional Display>

Fig. 94 illustrates how viewing of normal two-dimensional display and viewing of three-dimensional display with a naked eye three-dimensional effect are switched by adjusting the air gap.

In the above example, when a subject person of image presentation wants to see two-dimensional display, the person adjust the screws or pins to expand the air gap up to the position appropriate for two-dimensional display. If the person wants to see three-dimensional display, the person narrows the air gap to an appropriate distance.

While the above configuration is most applicable when using screws or pins, other attaching methods can also be used.

The number of pixels viewed through one slit increases and pixels hidden by the mask of the parallax barrier decrease by expanding the air gap and the distance from the slit to the monitor surface, whereby information, such as small characters, may be sharply viewed without a problem even in two-dimensional display.

That is, when using the display as a normal two-dimensional display, the thickness of the spacers is adjusted to the first thickness (for normal display), and when using the display as a naked eye three-dimensional display, the thickness of the spacers is adjusted to the second thickness (for naked eye three-dimensional display) that is thinner than the first thickness.

It should be noted that, when adjusting the thickness, if the spacer is configured by screws or pins, it is preferable that the adjusting person who is manually moving the filter feels click on the hand at the position where the thickness is appropriate so that accurate thickness position can be adjusted.

<Calibration (Standard Use)>

Calibration of a parallax barrier sheet installed on a display is displaying horizontal and vertical lines (second index) and oblique lines (second index) on the display, and adjusting them with the horizontal and vertical lines of the filter (first index) and the oblique lines of the filter seen through the slit (first index) of the parallax barrier.

Calibrating using these methods makes the calibration easy and accurate.

The monitor surface may display horizontal lines and vertical lines, or instead of displaying these lines, the calibration may be done by adjusting the horizontal lines and vertical lines of the frame and the filter.

It should be noted that, the calibration may be done, instead of horizontal and vertical lines, by displaying dots (second index) on the four corners of the monitor surface and overlapping them over dots (first index) formed on the filter.

It should be noted that the calibration may be done only by using oblique lines.

If the calibration is conducted using these methods, the calibration can be done easily and accurately.

Further, a three-dimensional image for calibration may be displayed and a subject person of image presentation may adjust the image while determining whether an appropriate three-dimensional effect can be obtained.

<Calibration (For Multiple Viewpoints)>

For a naked eye three-dimensional display for a plurality of viewpoints (multiple viewpoints), the following methods can be used for calibration.

(Method A)

1. Images for multiple viewpoints are prepared. In the images, pixels for two viewpoints in the middle or pixels for either one viewpoint of the two viewpoints are white for even number viewpoints, and pixels for one viewpoint in the middle or pixels for one viewpoint in the middle and pixels for either one viewpoint of left and right are white for odd number viewpoints. Other pixels are black.

2. The images prepared in the previous step are retrieved, and the displayed image is adjusted to the slits of the parallax barrier.

In this method, calibration is done by forming an index for calibration on the image display surface of a display by making pixels for a certain viewpoint (preferably one or two viewpoints) white and images for other viewpoints black, and adjusting a parallax barrier sheet to set at the position where the index can be seen as a continuous line when seen through the slits of the parallax barrier. It is important that the index is seen as a continuous line.

Fig. 95 is a diagram illustrating this calibration process. When blending images for multiple view naked eye three-dimensional display for five viewpoints, an image for the third viewpoint is made white, and images for the first, second, fourth, and fifth viewpoints are made black. After three-dimensional blending, as only the pixels for the third viewpoint appear as white line, the slits of a parallax barrier sheet is adjusted to the white line for adjusting the position.

(Method B)

1. A line adjusted to the width of a certain slit is displayed using a predetermined color at the corresponding position of the slit, then adjusted to the slit.

(Method C)

In this method, a line (first index) is provided as a slit for calibration of a predetermined width in a horizontal and/or vertical direction at a predetermined position on a transparent medium, and the transparent medium is adjusted so that a line (second index) displayed on an image display surface at the position corresponding to the slit can be seen without missing. It is important that there is no missing part.

1. A slit for calibration is formed on at least a predetermined left or right vertical line of a filter and/or at least a predetermined upper or lower horizontal line thereof.

2. A vertical line and/or horizontal line is displayed using a predetermined color on the monitor surface at a position corresponding to the slit for calibration, then adjusted to the slit for calibration formed on the filter.

It should be noted that, as the above-described slit for calibration, a slit-shaped penetration slot may be formed on a transparent medium. However, it is preferable to form a slit for calibration by not forming a mask surface that does not transmit visible light at the position on which the slit for calibration is formed, that is, the position is left in a state where visible light is transmitted, similarly to the case of the slits of a parallax barrier.

Fig. 96 shows how horizontal and vertical slits are formed as slits for calibration on a filter. It should be noted that, in Fig. 96, the slits for parallax barrier are oblique.

(Method D)

This is a method for using a translucent line for calibration on the slit for calibration of above-described method C.

1. A line for calibration is drawn on a filter using inconspicuous translucent color.

2. The position of the filter is accurately adjusted as the color of the line changes when the line overlaps a line of a predetermined color displayed on the monitor surface.

In this method, the color of the line for calibration is preferably not a color that absorbs red emitted from the monitor surface and preferably a color that changes when overlapping another color.

For example, if the color of the line for calibration is pale yellow and the color of the line displayed on the monitor is red, when both colors overlap, pale yellow changes to red and the overlapping can be recognized.

Fig. 33 shows how the yellow line displayed on the monitor surface changes to red by overlapping the line for calibration formed on the filter surface.

If not forming a slit for calibration, when lines overlap, the part of the line for calibration is zoomed in and the line for calibration turns a dashed red line, as the result, overlapping can be observed. The line is viewed as a dashed line because, for example, if a horizontal line for calibration is used in combination with the oblique slits of a parallax barrier, there are parts that block light by the mask surface and parts where light enters through the oblique slits.

(Method E)

1. To improve accuracy, a vertical line is displayed using only any one color of R, G, and B on the monitor surface and aligned. If only any one color is used, the width of one subpixel in a horizontal direction is used for alignment instead of the width of one pixel totaling R, G, and B subpixels, that is, precision of one third of the width of one pixel can be used for alignment.

< A Method of Producing A Parallax Barrier Sheet>

A parallax barrier is normally composed of a mask surface that does not transmit visible light and a slit surface that transmits visible light. A parallax barrier is formed by forming only the mask surface while leaving the slit surface.
The parallax barrier sheet of the invention may be formed by directly printing the mask surface of a parallax barrier on a transparent medium.
In this method, one process can be eliminated compared to the method of printing a parallax barrier first on a transparent thin film sheet, and then, attaching the transparent thin film sheet on a transparent medium. However, when directly forming a parallax barrier on a transparent medium, appropriate control is required so that the inclination of the slit of the parallax barrier to the transparent medium becomes a desired value.
It is preferable to use gravure printing when directly forming a parallax barrier on a transparent medium.
Of course, similarly to the conventional technology, a parallax barrier sheet may be produced by a method of first forming a parallax barrier on a transparent thin film sheet, and then, attaching the transparent thin film sheet to a transparent medium.

<The Mask Surface Color of A Parallax Barrier>

When forming the mask surface of a parallax barrier on a transparent medium, the mask surface is preferably black to maximize the naked eye three-dimensional effect.

<Adding A Graphic on A Mask Surface>

However, in some cases, a graphic, such as an advertisement, illustration, or parallax barrier identification information, is desired to be added on a parallax barrier sheet even somewhat sacrificing the naked eye three-dimensional effect.
In such a case, the graphic may be directly printed at least on a mask surface facing a subject person of image presentation, the graphic may be printed over a mask surface that is printed with black ink, or the graphic may be printed over a mask surface that is printed with white ink superimposed over a mask surface that is printed with black ink. It should be noted that, if visible light can be completely blocked by the white printing, the black printing can be eliminated.
It should be noted that, as the graphic is required to be formed so as to be viewed by a subject person of image presentation, when forming a parallax barrier on the opposite side of the side of the subject person of image presentation, for example, in the method with the largest number of processes described above, the graphic is printed on the back surface, white color is printed thereover, then, black color is printed thereover. In this case, similarly, if visible light can be completely blocked by the white printing, the black printing can be eliminated

<A Method for Retaining Angle θ in Oblique Slits>

The following describes oblique slits of a parallax barrier, each of which has predetermined angle θ with reference to the horizontal direction of the display.
Conventionally, a parallax barrier is printed on an expansive transparent thin film sheet that is tailored to the size of 47 inch display or the like, then the sheet is carefully adhered to a glass plate so that the angle θ of the slits is accurately formed.
However, without using a transparent thin film sheet, if a parallax barrier is directly printed on a glass plate that is retained at an appropriate position, the process of adhering the transparent thin film sheet on the glass plate while adjusting angle θ can be eliminated.
As the printing is done directly on the glass, angle θ of the slits is appropriately retained. Since the glass plate is hard, if only the glass plate is appropriately retained with reference to the display surface, angle θ can be reliably retained with reference to the pixel arrangement of the display surface.

<Material of A Transparent Medium and Spacers>

It should be noted that any material can be used for a transparent medium that forms a parallax barrier, instead of glass, as long as the material does not cause deformation by the weight of the parallax barrier sheet or wind pressure. For example, transparent resin, such as acrylic plate, may be used,

Also, with regard to the thickness of a parallax barrier sheet, the parallax barrier sheet is required to have a strength and hardness only for retaining planarity when attached on a display, and, although depending on how to be attached on the display, material that allows the sheet to be rolled when carrying and storing may be used.

If the material of spacers is transparent, the spacers do not bring a feeling of strangeness when combined with the transparent medium, and even when placing the spacers on the monitor surface, images of the places where the spacers are placed can also be seen.

Further, the spacers may be integratedly formed with the transparent medium using the same material as the transparent medium. If the spacers are integratedly formed, the time and effort for adhering the spacers on the transparent medium can be eliminated as well as the strength of the parallax barrier sheet can be enhanced.

<Recognizing A Parallax Barrier Sheet and Selecting A Corresponding Blending Method>

It should be noted that, on the laptop PC side that reproduces naked eye three-dimensional contents, the type of the installed parallax barrier sheet may be identified, and the most appropriate blending method may be selected among a plurality of blending methods prepared in accordance with the characteristics of the installed parallax barrier sheet. Selecting of the blending method is described later.

<Using Both Sides of A Parallax Barrier Sheet>

As a parallax barrier is formed on one side of a transparent medium with a certain thickness, such as a glass plate, the air gap (Z value) can be changed as much as the thickness of the transparent medium, depending on whether the parallax barrier forming surface is installed on the display side or on the side of a subject person of image presentation.

Therefore, with only one parallax barrier sheet, two kinds of naked eye three-dimensional effects, specifically, two kinds of combinations of best view points and appropriate ranges for three-dimensional viewing can be selected.

It should be noted that, depending on the arranged shape and edge shape of the slits of a parallax barrier, the installing method is required to be appropriately recognized and the blending method of three-dimensional contents to be displayed is required to be adjusted.

For example, in the case of oblique slits, when the parallax barrier sheet is installed so that the parallax barrier forming surface is close to the display, if the slits are arranged from lower left to upper right, when the transparent medium is turned over, the slits are arranged from lower right to upper left.

<Protecting A Parallax Barrier Sheet>

Since the parallax barrier sheet is not a conventional embedded type, the sheet is likely to be scratched, peeled off, or stained on the surface when using, carrying, and storing. Therefore, a protection film (protection means) may be formed on the surface of the parallax barrier sheet, or the parallax barrier sheet may be stored in a protection case (protection means).

It should be noted that, if a parallax barrier sheet is produced by the method of forming a parallax barrier on a transparent thin film sheet and attaching the parallax barrier forming side of the transparent thin film sheet to a transparent medium, the transparent thin film sheet itself becomes as a protection film, thereby saving time and effort to separately form a protection film.

<Addressing The Space Limitation of A Laptop PC>

When installing a parallax barrier sheet of the invention on an existing laptop PC, what should be considered is the size of a space between the display surface and the keyboard surface when the display surface is closed.

Depending on the model of a laptop PC, when the display surface is closed, the space between the display surface and keyboard surface is small, then, the laptop PC cannot be physically closed in a state where a parallax barrier sheet or a tool for retaining the sheet on the display surface is installed.

To attain three-dimensional effects in such a case, the three-dimensional effects can be easily attained just with time and effort of placing the parallax barrier sheet on a display surface when the laptop PC is open.

<The Parallax Barrier Sheet Also Functions As A Grid Sheet>

A grid sheet is a transparent sheet on which surface a dot pattern is formed, and the dot pattern formed on the sheet is recognized when the sheet is touched by a pen-shaped scanner reading the coordinate value of the touch position.

It is also possible to form this dot pattern on the parallax barrier sheet of the invention so that the parallax barrier sheet also functions as a grid sheet.

As dots are not viewed at all when overlapping over a display that emits light, a dot pattern can be formed regardless of whether the place where a dot pattern is formed is a mask surface or slit surface, which it is favorable since the dot pattern formed in this way can be easily read by a pen-shaped scanner.

In this way, only by preparing appropriate software, a normal display can function as a naked eye three-dimensional display as well as a touch panel used with a pen-shaped scanner.

<Other slit shapes>

Figs. 98A to 98D further describe other slit shapes.

Fig. 98A shows a method of first forming an ellipse whose long axis is vertical, then inclining the long axis by inclination θ so that the whole shape of the slit is an oblique slit and the edge shape is an elliptic arc. The width of the widest part of the slit is slit width S, and the width of the thinnest part is slit width D'.

The formula for obtaining the ellipse is expressed by the above formula (4). Here, if the long axis of the ellipse is placed at the center of the ellipse formula and inclined by inclination θ, and if y is static among x and y constituting an elliptic arc, x moves horizontally by x = ytanθ.

Thus, the elliptic arc formula after moving horizontally becomes the following formula:

$$\frac{(x - y\tan\theta)^2}{a^2} + \frac{y^2}{b^2} = 1$$

Here, elliptic arc slits can be formed by connecting both ends of the elliptic arcs of respective rows at the connecting points on parting line D'.

Figs. 98B to 98D show an example of a slit whose edge shape is a triangle.

The triangle edge shown in Fig. 98B has slit width S on the centerline of each row, and two even sides of an isosceles triangle are formed from the vertex toward the upper and lower parting lines to form slit width D'.

The triangle edge shown in Fig. 98C is the above triangle edge inclined by inclination θ. While slit width S and D' are maintained, the lengths of the two sides of the triangle are different.

In the triangle edge shown in Fig. 98D, while the slit is inclined using inclination θ as the arranged shape of the whole slit, triangle edges are not deformed and slide horizontally on parting lines to be connected by straight lines on the parting lines.

In each row, it is important that the edges on both left and right sides of the slit are symmetrical to display a beautiful three-dimensional image. For example, when using triangle edges, the configuration of Fig. 98B or 98D is most preferable. Using this configuration, three-dimensional effects with no distortion can be obtained. As a beautiful three-dimensional image can be viewed, the effect of alleviating eyestrain can also be expected.

Of course, the configuration of Fig. 98C can be said nearly symmetric and naked eye three-dimensional display can be appropriately carried out.

Also, as described above, the area of a parallax barrier that transmits visible light may be a plurality of continuously arranged holes that are visible light transmissive areas, instead of the slits.

<A Method for Picking Up R, G, and B from An Original Image>

Fig. 114 shows how to pick up R, G, and B from an original image.

Fig. 114A shows a subpixel arrangement example for naked eye three-dimensional display after blending. In this display, the resolution is m x n, subpixels constituting one pixel are arranged over three rows, and three subpixels are arranged in a horizontal direction, thereby forming subpixel resolution of m' (=3m) x n' (=3n).

Here, rx is assumed as a subpixel coordinate in an x direction, ry is assumed as a subpixel coordinate in a y direction, and, in a pixel for one viewpoint at an arbitrary position, coordinates of a subpixel located upper right of the pixel are assumed as (rx, ry). To obtain R, G, and B values of the pixel from the original image shown in Fig. 99B, the subpixel coordinates are converted into percentage coordinates.

Percentage coordinates (r'x, r'y) are expressed by the following formula.

$$r'x = rx/m'$$

$$r'y = ry/n'$$

Pixel coordinates (Rx, Ry) of a pixel for one viewpoint at the same position as these coordinates (r'x, r'y) are expressed by the following formula.

$$Rx = int \, (Lr'x)$$

$$Ry = int \, (Kr'y)$$

Here, L and K are from resolution L x K of the original images for respective viewpoints as shown in Fig. 99B.

In this way, the images for naked eye three-dimensional display are blended by obtaining R, G, and B values from the same pixel coordinates (Rx, Ry) of images for respective viewpoints, and sequentially arranging subpixels for the first viewpoint to subpixels for a predetermined viewpoint from left to right.

Further, if a display requires an electromagnetic wave shield just as a plasma display panel, a parallax barrier sheet can also function as an electromagnetic wave shield.

Further, if a display requires an electromagnetic wave shield just as a plasma display panel, a parallax barrier sheet can also function as an electromagnetic wave shield.

If the parallax barrier sheet also functions as an electromagnetic wave shield, there is no need to separately prepare an electromagnetic wave shield or form the electromagnetic wave shield by another process.

Particularly, it is advantageous to have both functions when forming a parallax barrier sheet and an electromagnetic wave shield by printing, as both the parallax barrier and electromagnetic wave shield can be formed in one step of printing process.

It should be noted that, when forming a parallax barrier sheet and an electromagnetic wave shield by printing, the parallax barrier sheet and electromagnetic wave shield may be directly formed on a transparent medium, such as a glass plate or acrylic plate, or the parallax barrier sheet and electromagnetic wave shield may be printed on a thin film transparent sheet once and then the thin film transparent sheet may be attached on the transparent medium.

The following three patterns of methods can be used for printing and ink.

(A) There is a method for printing a parallax barrier area using an ink that has a characteristic that does not transmit visible light (e.g., carbon black) for separating from visible light transmissive area as shown in Fig. 100A, then printing an electromagnetic wave shield using an ink that has a characteristic that does not transmit electromagnetic waves (e.g., an ink including metal for shielding) as shown in Fig. 100B. The result looks like the one as shown in Fig. 100C. In this case, the visible light transmissive area may be printed with an ink having a characteristic that does not transmit electromagnetic waves, provided, however, the printing is required to be considered in a way it does not affect or mitigate affecting the effect of transmitting visible light.

(B) There is a method for printing a visible light transmissive area as thin vertical and horizontal lines just as a normal electromagnetic wave shield using an ink that has a characteristic that does not transmit electromagnetic waves, then printing an area that does not transmit visible light as a plane using the same ink so that visible light does not transmit. In this method, printing can be done using only one mechanical and one kind of ink. The result looks like as shown in Fig. 100C.

(C) There is a method for printing a visible light transmissive area as thin vertical and horizontal lines just as a normal electromagnetic wave shield using an ink that has a characteristic that does not transmit electromagnetic waves, then printing an area that does not transmit visible light using carbon black or the like that has a characteristic that blocks electromagnetic waves instead of expensive ink having a characteristic that does not transmit electromagnetic waves. Although large volume of ink is required for the part printed as a plane, costs can be reduced using low priced carbon black. The result looks like as shown in Fig. 100C.

(D) Further, utilizing the fact that each area of visible light transmissive area of the parallax barrier is small, there may be a printing method just like a punching metal, in which printing of electromagnetic wave shield on the visible light transmissive area using an ink that has a characteristic that does not transmit electromagnetic waves is eliminated. In such a case, the parallax barrier and electromagnetic wave shield can be formed in one printing process using one kind of ink having both characteristics of not transmitting visible light and electromagnetic waves.

This method is particularly advantageous for a perforated parallax barrier, as it is similar to a punching metal.

It will be appreciated that the configuration of functioning both as the parallax barrier and electromagnetic wave shield is advantageous not only when forming the parallax barrier sheet of the invention but also when forming a normal parallax barrier, from a perspective that the number of components and production processes can be reduced.

<Embodiments of Electromagnetic Wave Shield in A Perforated Parallax Barrier>

An existing standard of electromagnetic wave shield is used for the standard of the mesh of an electromagnetic wave shield formed on the parallax barrier sheet of the invention.

For example, in the standard of an electromagnetic wave shield film made by Dai Nippon Printing Co., Ltd, the opening width (a pitch) of the mesh is defined as approximately 200 $\mu$m and the line width is defined as approximately 10 $\mu$m.

Further, as a conventional technique, a technique relating to a mesh type electromagnetic wave shield disclosed in Japanese Patent Application No. 2006-234683 of Dai Nippon Printing Co., Ltd and described in Japanese Unexamined Patent Application Publication No. 2008-60280.

According to this application publication, the opening width of a mesh is preferably 120 $\mu$m or more in consideration of permeability of emitted light of a display. The line width of the mesh is thought preferably 5 $\mu$m or more.

Further, a technique relating a mesh type electromagnetic wave shield disclosed in Japanese Patent Application No. 2006-140559 of Fujifilm Holdings Corporation and described in Japanese Unexamined Patent Application Publication No. 2007-311646 may be used.

According to this application publication, the opening width of a mesh is optimally 250 $\mu$m to 350 $\mu$m when used for a transmissive electromagnetic wave shield film.

In consideration of each application publication described above, the opening width of the mesh as the electromagnetic wave shield of the invention is designed basically as approximately 200 $\mu$m to 250 $\mu$m, and the shape of the mesh is a rectangle generally close to a square.

However, the above-described opening width and shape of the mesh is only one example for convenience of explanation of the invention, and, of course, can vary in many ways according to required embodiments.

Here, in the invention, a mesh type electromagnetic wave shield is not actually necessarily printed on a transparent material. If slits or holes of a parallax barrier that are divided with equivalent width to the opening width of the mesh are formed, the slits or holes can also function as electromagnetic wave shield. While the mask part of the parallax barrier can be formed using an ink having a characteristic that does not transmit an electromagnetic wave, it goes without saying that the mesh type electromagnetic wave shield may also be superimposed and printed thereon.

<Application to A Variety of Parallax Barrier Sheets>

Fig. 101A is a perforated parallax barrier for a small monitor, and Fig. 101B is a mesh of electromagnetic wave shield. Fig. 101A is an example of a block for printing using an ink that does not transmit visible light, and Fig. 101B is an example of a block for printing over Fig. 101A using an ink that has a characteristic of blocking electromagnetic waves. It should be noted that the dashed line parts are virtual lines indicating the opening part and not formed on the block. Fig. 101C is an example of a block for printing using an ink that has a characteristic of blocking electromagnetic waves.

Fig. 102A is a perforated parallax barrier for a middle sized monitor, and Fig. 102B is a mesh of an electromagnetic wave shield. Fig. 102A is an example of a block for printing using an ink that does not transmit visible light, and Fig. 102B is an example of a block for printing over 102A using an ink that has a characteristic of blocking electromagnetic waves. It should be noted that the dashed line parts are virtual lines indicating the opening part and not formed on the block. Fig. 102C is an example of a block printed with an ink that has a characteristic of blocking electromagnetic waves.

It should be noted that the lines at the center of the holes of Figs. 102B and 102C are to divide the holes as the width of the holes exceeds a predetermined pitch for blocking electromagnetic waves.

Fig. 103A is a perforated parallax barrier and Fig. 103B is a glass or transparent sheet on which thin metal film that transmits visible light is provided. This is an example of functioning both as a parallax barrier and an electromagnetic wave shield, in which Fig. 103C is formed by printing Fig. 103A using an ink that does not transmit visible light, and superimposing and attaching Fig. 103B on top of or below Fig. 103A.

Figs. 104A to 105D are examples of partitioning slits in a horizontal direction and/or in a vertical direction so that the slits of the parallax barrier become a predetermined width required for blocking electromagnetic waves.

Figs. 106A to 106F are examples of, when the intended height of the holes exceeds the predetermined width, forming holes so that the holes become the predetermined width either by forming a plurality of holes or partitioning the holes.

<Three-Dimensional Plasma Monitor>

Figs. 107A to 107C are diagrams illustrating a configuration of a three-dimensional plasma monitor which is one of the embodiments of the invention.

Fig. 107A is a diagram illustrating a configuration of a three-dimensional plasma monitor in which a transparent component on which is printed a parallax barrier having a predetermined strength is newly attached to an existing plasma display.

In the three-dimensional plasma monitor of Fig. 107A, the transparent component is fixed by a cover that covers the whole three-dimensional plasma monitor.

Also, spacers are provided on the frame beside the panel of the plasma display so that appropriate air gap Z for displaying three-dimensional images can be maintained between the panel side surface of the plasma panel and the parallax barrier.

However, if the frame beside the panel of the plasma display has sufficient thickness for maintaining appropriate air gap Z, spacers are not required to be provided.

The electromagnetic wave shield layer and near-infrared blocking layer on the monitor surface side a glass attached on the monitor may be formed in the reverse order. Also, the anti-glare layer and electromagnetic wave shield layer or near-infrared blocking layer may be combined to form one layer.

Fig. 107B is a diagram illustrating a configuration of a three-dimensional plasma monitor incorporating, in a production process, a transparent component with a predetermined strength on which is printed a parallax barrier.

In the three-dimensional plasma monitor of Fig. 107B, the transparent component is fixed to the monitor so that appropriate air gap Z for displaying three-dimensional images can be maintained between the panel side surface of the plasma panel and the parallax barrier.

Further, the transparent component is printed, in addition to the parallax barrier, with an electromagnetic wave shield by the above-described method. The parallax barrier may also function as the electromagnetic wave shield as described above, or the electromagnetic wave shield may be additionally superimposed and printed on the transparent component, separately from the parallax barrier.

The anti-glare layer may be formed by being combined with a near-infrared blocking layer.

<Electrically Controlled Parallax Barrier>

The parallax barrier used in the invention may be an electrically controllable parallax barrier (switch parallax barrier) of which function as a parallax barrier can be ON or OFF by electrical control (switch control).

That is, when displaying a three-dimensional video image, the parallax barrier functions to cause a parallax to a subject person of image presentation, while when displaying a two-dimensional video image, the parallax barrier is not required and the parallax barrier preferably thoroughly transmits visible light.

Therefore, reduction of brightness when displaying two-dimensional video images can be prevented by electrically controlling the parallax barrier to turn ON the parallax barrier when displaying three-dimensional video images and turn OFF the parallax barrier when displaying two-dimensional video images.

As a specific embodiment of the electrically controlled parallax barrier, the parallax barrier is preferably turned ON or OFF by controlling the orientation of liquid crystal. That is, a liquid crystal display is used as a parallax barrier.

(A1) The naked eye three-dimensional video image display device of the invention is a naked eye three-dimensional video image display device that displays three-dimensional video images by a parallax barrier method to solve the above described problem, and comprises a parallax barrier on which a two-dimensional image is drawn or printed and a display unit that displays two-dimensional and/or three-dimensional video images.

According to the above-described configuration, even when the display unit does not display video images, the two-dimensional image drawn on the front of the wide parallax barrier can be presented to a subject person of image presentation, which provides an advantage in which the display unit can be used as a display device even when the display unit is not emitting light in operation.

(A2) The naked eye three-dimensional video image display device of the invention preferably further comprises an external light detecting unit that detects a state of external light that enters into the parallax barrier, and a control unit that controls a state of the two-dimensional and/or three-dimensional video image displayed by the display unit at least based on the state of the external light detected by the external light detecting unit.

An advantage is provided in which the control unit detects the state of external light, that is, the state of surrounding light when a subject person of image presentation views a drawn or printed two-dimensional image or a displayed two-dimensional and/or three-dimensional video image, and displays an optimal video image according to the conditions via the display unit, thereby displaying video images optimal for viewing to the subject person of image presentation.

Therefore, another advantage is provided that the power consumption can be reduced.

(A3) The naked eye three-dimensional video image display device of the invention preferably further comprises a floodlight unit that projects light to the front of the parallax barrier, an external light detecting unit that detects the state of external light that enters into the parallax barrier, and a control unit that controls a display state of the two-dimensional image projected by the floodlight unit at least based on the state of the external light detected by the external light detecting unit.

An advantage is provided in which the control unit detects the state of external light, that is, the state of surrounding light when a subject person of image presentation views a drawn or printed two-dimensional image or a displayed two-dimensional and/or three-dimensional video image, and illuminates optimal illumination to the front of the parallax barrier according to the conditions via the floodlight unit, thereby displaying video images optimal for viewing to the subject person of image presentation.

(A4) The naked eye three-dimensional video image display device of the invention preferably further comprises a floodlight unit that projects light to the front of the parallax barrier, an external light detecting unit that detects a state of external light that enters into the parallax barrier, and a control unit that controls a display state of the two-dimensional and/or three-dimensional video image displayed by the display unit and controls a display state of the two-dimensional image projected by the floodlight unit at least based on the state of the external light detected by the external light detecting unit.

An advantage is provided in which the control unit detects the state of external light, that is, the state of surrounding light when a subject person of image presentation views a drawn or printed two-dimensional image or a displayed two-dimensional and/or three-dimensional video image, displays an optimal video image according to the conditions via the display unit, and illuminates optimal illumination according to the conditions via the floodlight unit, thereby displaying video images and presenting images optimal for viewing to the subject person of image presentation.

(A5) In the naked eye three-dimensional video image display device of the invention, the control of the display state of the two-dimensional and/or three-dimensional video images according to the conditions of external light may preferably include the control of displaying colors that compensate the two-dimensional images.

As the control unit displays colors that compensate the image drawn or printed on the front of the parallax barrier when controlling the display state, an advantage is provided that the two-dimensional image is more appropriately expressed.

(A6) In the naked eye three-dimensional video image display device of the invention, when controlling the display state, the control unit detects time, approaching of a subject person of image presentation, touching of the subject person of image presentation on a door knob or the like, and/or stepping of the subject person of image presentation onto the floor by each corresponding detecting unit, and controls the display state. In the case of detecting that the subject person of image presentation steps onto the floor surface, the floor surface is preferably installed immediately before and/or behind the naked eye three-dimensional video image display device, or installed so that the floor surface becomes the display surface of the naked eye three-dimensional video image display device.

An advantage is provided that more appropriate display can be carried out to the subject person of image presentation, as the control unit comprises a clock, a motion sensor that detects approach of a subject person of image presentation, a contact sensor that detects contact of a subject person of image presentation on a door knob or the like, and/or a pressure sensitive sensor that detects stepping on the floor of the subject person of image presentation, and changes video image displays according to the input signal from these sensors.

(A7) The naked eye three-dimensional video image display device of the invention further comprises an imaging unit that images nearby objects, and, when controlling the display state, the control unit performs controls of analyzing the image with the video image captured by the imaging unit, and displaying three-dimensional video images according to the analysis result.

The nearby objects include a still object, moving object, living creature, and especially, a subject person of image presentation.

An advantage is provided in which the control unit can perform a variety of displays by presenting images of a subject person of image presentation and the like captured by the imaging unit as part of three-dimensional video images to the subject person of image presentation.

(A8) In the naked eye three-dimensional video image display device of the invention, the front surface of the parallax barrier is preferably a mirror, instead of drawing or printing a two-dimensional image, or a magic mirror over the whole surface of the parallax barrier.

If the front surface of the parallax barrier is a mirror, an advantage is provided in which, when the figure of a subject person of image presentation himself/herself is reflected on the mirror, the person can simultaneously view a display by the display unit.

In addition, if the whole surface of the parallax barrier is a magic mirror, an advantage is provided in which the same effects of making the surface mirror can be obtained as well as the production can be easy.

(A9) In the naked eye three-dimensional video image display device of the invention, the whole surface of the parallax barrier including the slit part is preferably formed with a dot pattern that can reproduce information that is recorded by reading with a scanner.

While the slit part should be a configuration that transmits emitted light by the display unit, the dot pattern is fine enough not to impair viewing of video images and a touch position can be determined by touching a video image display surface of the naked eye three-dimensional video image display device using a scanner for reading a dot pattern, an advantage is provided in which displayed video images or the like can be changed in accordance with the touch position.

(B10) The naked eye three-dimensional video image display device of the invention is a naked eye three-dimensional video image display device that displays three-dimensional video images by a parallax barrier method to solve the above problem, and comprises a video image display unit that displays two-dimensional/three-dimensional video images and a touch panel that accepts input by a user.

According to the above configuration, an advantage is provided in which displayed two-dimensional/three-dimensional video images can be changed in accordance with the instruction of a user input via the touch panel.

As a further advantage, while, normally, the position of a best view point from which effective three-dimensional effects can be obtained is limited with a naked eye three-dimensional video image display device, as the best view point is determined with an assumption that a subject person of image presentation operates the touch panel, that is, the position from which the subject person of image presentation sees the image is within a reach of the person from the touch panel, an advantage is provided in which a video image with the strongest three-dimensional effect can be presented to the subject person of image presentation.

(B11) In the naked eye three-dimensional video image display device of the invention, preferably, the video image display unit is divided into the first area that displays two-dimensional/three-dimensional video images and the second area that displays only two-dimensional video images, the parallax barrier covers at least the first area, and the touch panel covers at least the second area.

As the touch panel part only displays two-dimensional video images, the touch panel part is not required to display three-dimensional images for multiple viewpoints, and only have to display video images of high resolution dedicated for two-dimensional display, an advantage is provided that the menu or the like of the touch panel can be precisely displayed.

(B12) In the naked eye three-dimensional video image display device of the invention, preferably, the front surface of the parallax barrier is drawn or printed with a two-dimensional image.

By drawing or printing a two-dimensional image on the front surface of the parallax barrier, an advantage is provided in which, even when video images are not displayed by the naked eye three-dimensional video image display device, the two-dimensional image can be presented to a subject person of image presentation.

(B13) In the naked eye three-dimensional video image display device of the invention, preferably, the touch panel is a grid sheet.

The grid sheet realizes the function of a touch panel by touching, using a scanner, an invisible and fine dot pattern formed on a transparent sheet that is used by being superimposed on the monitor screen.

If the touch panel is configured using the grid sheet, an advantage is provided in which, by touching on the sheet using a dedicated scanner, the touch position on the touch panel can be detected.

(B14) In the naked eye three-dimensional video image display device of the invention, preferably, the grid sheet also functions as the parallax barrier.

The grid sheet is a configuration in which a dot pattern is formed by printing or other methods on a transparent sheet, and the parallax barrier is also a configuration in which a barrier is formed by printing or other methods on a transparent sheet. Therefore, an advantage can be provided in which, by causing one component to perform both functions, the number of components is reduced and production cost can be reduced.

(B15) In the naked eye three-dimensional video image display device of the invention, the touch panel is a medium, paper controller, or paper keyboard that is detachable from the video image display unit and printed with icons and the like formed by a photograph, graphic, and the like.

The paper keyboard and the paper controller is a medium, such as a paper, on which keyboard keys and controller buttons are superimposed and printed with a dot pattern. By touching the buttons or keys on the paper keyboard and paper controller using a pen shaped scanner, information allocated to the buttons and keys is read out, and a function corresponding to the read information, such as switching images, may be carried out.

By configuring the touch panel using a paper keyboard, paper controller, or the like, an advantage is provided in which a medium printed with fine photographs and the like can be used as a touch panel.

(B16) In the naked eye three-dimensional video image display device of the invention, the touch panel preferably comprises a transparent or translucent video image projecting screen, instead of the second area, that is formed on the glass surface of a store window or the like to display video images, such as a menu, a projector that projects visible light to the video image projecting screen, a light source that irradiates invisible light to the area of the video image projecting screen from behind the video image projecting screen, an imaging unit that captures, from behind the touch panel, the invisible light reflected by a touch by a user on the touch panel, and an analysis unit that calculates the touch position on the touch panel touched by the user by analyzing the captured image.

The touch panel is divided into parts that are activated by visible light and parts that are activated by invisible light.

The parts that are activated by visible light are: a projector that projects a video image, such as a menu, to a subject person of image presentation, that is, the operator of the touch panel; and a video image projecting screen that displays the video image projected from the projector. This video image projecting screen is formed on the glass surface of a store window or the like, and has a similar function as the one of the second area. The subject person of image presentation views the menu or the like projected on the screen using visible light by the projector and, based on the viewed content, touches the video image projecting screen surface, that is the touch panel.

The parts that are activated by invisible light are: the light source; the video image projecting screen that is a screen to be touched by a subject person of image presentation; an imaging unit that captures the invisible light reflected off by the touch of a user on the touch panel; and an analysis unit.

Most of the invisible light irradiated from behind the video image projecting screen surface by the light source normally transmits the screen. However, if a subject person of image presentation, that is, the operator of the touch panel touches the video image projecting screen surface, invisible light does not transmit the part of the touch position and is diffusely reflected. As the imaging unit images the video image projecting screen surface from behind the video image projecting screen surface, the diffuse reflection part can be captured. Then, when the analysis unit analyzes the captured image, which area is touched among the areas of the video image projecting screen surface is recognized.

An advantage is provided in which which menu or the like is selected by the subject person of image presentation can be recognized, based on the image projected on the video image projecting screen surface when touching and the coordinates of the input touch position.

Further, on the video image projecting screen surface that is provided instead of the second area, is provided an area where only video images, such as a menu, are displayed, and other components can be provided behind and apart from the video image projecting screen surface, thereby providing an advantage in which the touch panel can be flexibly installed.

(B 17) The naked eye three-dimensional video image display device of the invention is preferably installed so that a subject person of image presentation located in front of the store window is within the appropriate range for three-dimensional viewing as well as installed behind the store window.

As the naked eye three-dimensional video image display device is installed where maximum three-dimensional effects can be attained with relation to the position of a subject person of image presentation in front of the store window as well as installed inside the store window or behind the store window, an advantage is provided in which most effective three-dimensional video image can be presented to the touch panel operator or a crowd of subject people of image presentation.

(B18) In the naked eye three-dimensional video image display device of the invention, the touch panel preferably accepts inputs of drawing control to the first area and/or drawing control to the second area.

The input by the subject person of image presentation to the touch panel is used for controlling two-dimensional/three-dimensional drawing. That is, there are a case in which a display is controlled so that the image displayed on the touch panel surface changes when the touch panel is touched and a case in which a display is controlled so that a video image displayed in the three-dimensional image display area changes when the touch panel is touched.

In this way, an advantage is provided in which input to a touch panel can be used for both controlling display of a two-dimensional menu or the like on the touch panel surface and controlling display on the three-dimensional display surface.

(C19) The naked eye three-dimensional video image display device of the invention is a naked eye three-dimensional video image display device that displays three-dimensional video images by a parallax barrier method for a plurality of viewpoints to solve the above problems. The arranged shape of the slit of the parallax barrier is a zigzag shape formed by a plurality of line segments or a sinusoidally curved shape, and pixels for respective viewpoints are also arranged in a zigzag shape or curved shape in accordance with the arranged shape of the slit.

In the case of the conventional oblique slits, as the inclinations of the oblique lines are constant, an appropriate viewmix can be realized only when the arrangement of pixels for respective viewpoints is slightly changed. However, if the pixels are arranged by an appropriate method, equivalent effects can be obtained by changing the slits.

If the arranged shape of the slit, that is, the shape of the centerline of the slit is a zigzag shape or sinusoidally curved shape, a displacement between the arrangement of the slit shape and the arrangement of the pixels becomes large in some part and small in other part, unlike the case of linear slits with which the displacement is constant.

That is, the zigzag shape or sinusoidally curved shape provides an advantage in which a displacement can be controlled during a half cycle during which light passes through the corner of the zigzag shape or the point of maximum oscillation of the sine wave at a quarter cycle point.

(C20) To solve the above problems, in the naked eye three-dimensional video image display device of the invention, elliptic arcs of a certain shape, that are disposed on a display and form a viewable area viewed by a subject person of image presentation through the slit, corresponding to one or a plurality of viewpoints, are preferably continuously connected.

By making the edge shape of the slit elliptic arc, an advantage is provided in which general and appropriate viewmixes are generated and transition of viewpoints and jump points are alleviated.

(C21) In the naked eye three-dimensional video image display device of the invention, the arranged shape of the slit of the parallax barrier is preferably a vertically arranged line, obliquely arranged line, a zigzag shape formed by repetition of a plurality of line segments, or sinusoidally curved shape.

By making the arranged shape of the slit a vertically arranged line, obliquely arranged line, zigzag shape formed by repetition of a plurality of line segments, or sinusoidally curved shape, a variety of viewmixes are generated, and thus, an advantage is provided in which even the viewpoint of a subject person of image presentation moves, generation of moderate and appropriate viewmixes can be easily controlled.

(C22) In the naked eye three-dimensional video image display device of the invention, the elliptic arcs are preferably connected on each horizontal line that divides each pixel in a horizontal direction.

By connecting the elliptic arcs configuring the edge of the slit on each horizontal line that divides each pixel in a horizontal direction, an advantage is provided in which three-dimensional effects perceived when moving viewpoints in a vertical direction can be smooth.

Further, as the area of viewmixes located at left and right of the convergence point is smaller than the staircase patterned edge, an advantage is provided in which three-dimensional effects can be enhanced while suppressing viewmixes in a horizontal direction.

It should be noted that, regarding the convergence point, when lines are drawn from left and right eyes through the center of the slit to an image display surface, the convergence point of the left eye is an intersection of a line drawn from the left eye and the image display surface, and the convergence point of the right eye is an intersection of a line drawn from the right eye and the image display surface.

(C23) To solve the above problems, the naked eye three-dimensional video image display device of the invention is a naked eye three-dimensional video image display device that displays three-dimensional video images by a parallax barrier method for a plurality of viewpoints. The arranged shape of the slit of the parallax barrier is obliquely arranged lines, and the edge shape of the slit is a shape in which elliptic arcs of a predetermined shape corresponding to pixels for one or a plurality of viewpoints that are disposed on the display and form a viewable area viewed by a subject person of image presentation through the slit and a line segment that is part of each horizontal line dividing pixels in a horizontal direction are continuously connected.

As the shape of the edge is configured by an elliptic arc and a line segment that is part of a horizontal line dividing pixels of each row, an advantage is provided, in which, when a subject person of image presentation sees a three-dimensional video image in front of the device, the clearest three-dimensional video image can be provided.

Further, as the area of viewmixes located at left and right of the convergence point is smaller than the staircase patterned edge, an advantage is provided in which three-dimensional effects can be enhanced while suppressing viewmixes in a horizontal direction.

(C24) In the naked eye three-dimensional video image display device of the invention, the arranged shape of the slit of the parallax barrier is preferably a zigzag shape formed by repetition of a plurality of line segments or sinusoidally curved shape, instead of a line arranged in an oblique direction.

As a variety of viewmixes are generated by making the arranged shape of the slit a zigzag shape formed by repetition of a plurality of line segments or sinusoidally curved shape, an advantage is provided in which even the viewpoint of a subject person of image presentation moves, generation of viewmixes can be easily controlled as moderate and appropriate.

(E26) To solve the above problems, the parallax barrier of the invention is a parallax barrier for a naked eye three-dimensional video image display where, among a plurality of slit areas and a plurality of barrier areas configuring the parallax barrier, each slit area is configured by a plurality of visible light transmissive areas corresponding to respective pixels for naked eye three-dimensional video image display, instead of one slit, the visible light transmissive areas are arranged individually on the parallax barrier, and the effective viewable area viewed through the visible light transmissive areas by either left or right eye of the subject person of image presentation at the best view point is a shape housed in a rectangular area determined with a predetermined width and a predetermined height in a way that the circumference of the effective viewable area touches the upper, lower, left, and right sides of the rectangular area.

Normally, in a naked eye three-dimensional display of a parallax barrier method, slits that are a continuous visible light transmissive area are formed on a parallax barrier by being corresponded to the arrangement of pixels for respective viewpoints. In this invention, instead of continuous thin slits, holes that are independent visible light transmissive areas are formed by being corresponded to the arrangement of pixels for respective viewpoints.

Then, when designing visible light transmissive areas that are holes, a rectangular area of a predetermined size is calculated on a pixel arranging surface, an effective viewable area housed in the rectangular area is calculated, and a like figure as the effective viewable area viewed from the best view point is plotted on a parallax barrier assuming that the eyes of a subject person of image presentation are located at the best view point.

It should be noted that the best view point is a position from which a subject person of image presentation can attain maximum naked eye three-dimensional effects. At this position, a rectangular area corresponding to the right eye of the subject person of image presentation and a rectangular area corresponding to the left eye of the person abut yet do not overlap each other.

According to the above configuration, as a subpixel area to be viewed by one eye at once for generating a viewmix and alleviating a jump point is first determined, and a visible light transmissive area on a parallax barrier is determined by back calculation therefrom, an advantage is provided in which the shape of most appropriate visible light transmissive area can be easily designed.

(E27) In the parallax barrier of the invention, the shape of the rectangular area is a horizontally deformed parallelogram, and the shape of the effective viewable area is preferably deformed in accordance with the deformation.

By deforming the rectangular area to a parallelogram, an appropriate effective viewable area can be made by the inclination of the arrangement of pixels for respective viewpoints and/or the inclination of the arrangement of subpixels within one pixel.

Further, even through the effective viewable area is of a complexed shape, as the coordinate conversion used when deforming the rectangular area from a vertically long rectangular to a parallelogram is used for deforming the effective viewable area, an advantage is provided in which the effective viewable area of a complexed shape can be easily deformed.

(E28) In the parallax barrier of the invention, preferably, the range of the inclination of the parallelogram is from vertical to the inclination of the arrangement of the visible light transmissive area $\theta 1$, or, when a plurality of subpixels constituting one pixel are arranged over two rows or more, as the inclination of the arrangement of subpixels within one pixel is $\theta 2$ and, the range of the inclination of the parallelogram is from vertical to a larger one of the inclination $\theta 1$ and inclination $\theta 2$.

(E29) In the parallax barrier of the invention, preferably, if the inclination of the arrangement of the visible light transmissive area is $\theta 1$ and, when a plurality of subpixels constituting one pixel are arranged over two rows or more, the inclination of the arrangement of subpixels within one pixel is $\theta 2$, the range of the inclination of the parallelogram is preferably between the inclination $\theta 1$ and inclination $\theta 2$.

(E30) In the parallax barrier of the invention, the shape of the effective viewable area is preferably vertically symmetric and/or bilaterally symmetric.

(E31) In the parallax barrier of the invention, the shape of the effective viewable area is preferably an elliptic arc, or a polygon with even number of corners, such as a rectangular, hexagon, and octagon.

(E32) In the parallax barrier of the invention, the corners of the polygon with even number of corners are preferably curved lines drawn by arcs of a predetermined circumference ratio.

(E33) In the parallax barrier of the invention, when using average pixel width D calculated from the arrangement of subpixels constituting one pixel of a three-dimensional image in the display pixel arranging surface of the naked eye three-dimensional display, the predetermined width of the rectangular area is preferably ranged from average pixel width D or more to less than twice the average pixel width D.

(E 34) In the parallax barrier of the invention, the maximum value of the predetermined height of the rectangular area is preferably the height of subpixels constituting one pixel of a three-dimensional image in the display pixel arranging surface of the naked eye three-dimensional display.

(E35) In the parallax barrier of the invention, with reference to either left or right eye of a subject person of image presentation at the best view point, the visible light transmissive area is preferably a like figure in a horizontal direction as the effective viewable area and the same shape in a vertical direction as the effective viewable area.

Generally, if homologous deformation is conducted with reference to a certain point, deformation of expanding or contracting in horizontal and vertical directions is conducted. However, if a visible light transmissive area that is a like figure as the effective viewable area on a pixel arranging surface is calculated with reference to either left or right eye of a subject person of image presentation at the best view point, the spacing in a vertical direction between visible light transmissive areas becomes too wide. Therefore, homologous deformation is conducted only in the x coordinate in the local coordinates of the visible light transmissive area and no deformation is done in the y coordinate, thereby maintaining the appropriate spacing between visible light transmissive areas in a vertical direction, and when the viewpoint moves in a vertical direction, appropriate naked eye three-dimensional effects can be obtained without bringing a feeling of strangeness.

(E36) To solve the above problems, the naked eye three-dimensional video image display device of the invention comprises the parallax barrier.

(F1) The amusement game machine of the invention comprises a naked eye three-dimensional video image display unit of a parallax barrier method having a display unit and a parallax barrier, a game control unit that controls the game content, an input unit that accepts operation from a player, a timer that calculates elapsed time and/or continuous playtime, and a video image control unit that controls the appearance count, display time, and/or popping out degree of a three-dimensional video image displayed by the naked eye three-dimensional video image display unit based on the elapsed time and/or the continuous playtime.

According to the above configuration, the video image control unit controls to display powerful three-dimensional video images from the starting of playing the amusement game machine until a certain time, and after the certain time is elapsed, display a three-dimensional video image with reduced appearance count, display time, and/or popping out degree compared with the time when the playing is started, thereby providing an advantage in which a stress on the eyes of the player is alleviated.

Further, the video image control unit cannot only reduce but also increase the appearance count, display time, and/or popping out degree of a three-dimensional video images according to elapsed time and/or continuous play time.

That is, by controlling to increase the appearance count, display time, and/or popping out degree of a three-dimensional video image when the elapsed time and/or continuous playtime reaches a predetermined time, an advantage is provided that arouses a player's passion for gambling, and encourages the player to continue playing the game.

Here, the amusement game machine means any game machine or a game that is played using a display unit, including an amusement machine, such as, a pachinko and a pachosro slot machine, arcade game machine, console game machine, PC game, online game for PC, and the like.

(F2) The video image control unit of the invention preferably controls the appearance count, display time, and/or popping out degree of a three-dimensional video image by preparing a predetermined number of video images for naked eye three-dimensional display that are created by blending a predetermined plurality of video images for viewpoints in advance based on a predetermined algorithm.

According to the above configuration, by preparing a plurality of three-dimensional video images of a predetermined appearance count, display time, and/or popping out degree, and selectively displaying these video images when displaying three-dimensional video images, appropriate three-dimensional display can be conducted according to the elapsed time and/or continuous play time.

(F3) The video image control unit of the invention preferably controls the appearance count, display time, and/or popping out degree of the three-dimensional video images by selecting, from a plurality of video images for respective viewpoints prepared in advance, a plurality of video images for viewpoints of the viewpoint number corresponding to the parallax barrier so that the parallax of adjacent viewpoints becomes the same and blending the video images in real time.

According to the above configuration, an optimal three-dimensional display can be performed according to the elapsed time/continuous playtime, by blending in real time a plurality of video images for respective viewpoints prepared in advance in accordance with a required appearance count, display time, and/or popping out degree.

(F4) The video image control unit of the invention controls the appearance count, display time, and/or popping out degree of the three-dimensional video images by moving the position of the convergence point of multiple cameras back and forth by moving the multiple cameras that are viewpoints for drawing a three-dimensional computer graphic closer to/apart from the drawing object, and/or moving the drawing object closer to/apart from the multiple camera, or changing the orientations of a plurality of multiple cameras corresponding to the parallax barrier.

According to the above configuration, an optimal three-dimensional display can be conducted according to the elapsed time and/or continuous playtime by drawing a plurality of video images for respective viewpoints in real time in accordance with a required appearance count, display time, and/or popping out degree.

(F5) The video image control unit of the invention preferably controls the popping out degree based on the input signal transmitted from the input unit.

According to the above configuration, an advantage is provided in which a player can immediately reduce the popping out degree of three-dimensional video images when a player feels eyestrain during playing the game by arbitrary changing the popping out degree of the three-dimensional video images. Further, an advantage is provided in which, when a player feels like enjoying more powerful three-dimensional video images, the popping out degree may be increased encouraging the player's enthusiasm for playing the game.

(F6) The amusement game machine of the invention preferably further comprises a drive unit for moving the parallax barrier, and the parallax barrier is a movable parallax barrier that covers at least part of the monitor surface of the display unit.

(F7) The amusement game machine of the invention comprises a naked eye three-dimensional video image display unit of a parallax barrier method having a display unit and a movable parallax barrier, a game control unit that controls the game content, an input unit that accepts operation by a player, a drive unit that moves the movable parallax barrier, and the movable parallax barrier that covers at least part of the monitor surface of the display unit.

According to the above configuration, an advantage is provided in which reduction of the brightness when displaying two-dimensional video images can be prevented in the naked eye three-dimensional video image display unit by moving the parallax barrier.

Further, as the parallax barrier itself does not have to have a special configuration apart from being movable, an amusement game machine comprising a naked eye three-dimensional video image display that provides the above advantage can be provided with a simplified configuration and reduced number of processes.

(F8) The drive unit of the invention preferably maintains a predetermined distance from the movable parallax barrier to the monitor surface by an appropriate distance maintaining unit that enables moving of the movable parallax barrier vertically and/or horizontally and is disposed around the monitor surface.

According to the above configuration, by moving the movable parallax barrier vertically and/or horizontally, an advantage is provided in which reduction of the brightness when displaying two-dimensional video images is prevented since the light from the monitor surface is not blocked.

(F9) The amusement game machine of the invention preferably further comprises an appropriate distance maintaining unit for maintaining a predetermined distance from the movable parallax barrier to the monitor surface, the movable parallax barrier is part of a rollable sheet that includes transparent part to be superimposed over the monitor surface when the display unit displays two-dimensional video images, and the drive unit rolls up the rollable sheet in a vertical direction or horizontal direction.

According to the above configuration, an advantage is provided in which, when a transparent part is superimposed over the monitor surface by rolling up the rollable sheet, as the light from the monitor surface is not blocked any more, reduction of the brightness when displaying two-dimensional video images can be prevented.

Further, by making the parallax barrier a rollable sheet, an advantage is provided in which moving of the parallax barrier can be realized with small space.

(F10) The appropriate distance maintaining unit of the invention preferably comprises a transparent planar plate disposed between the rollable sheet and the monitor surface and a fixing unit that is disposed around the monitor surface and fixes the rollable sheet to the transparent planar plate in close contact.

According to the above configuration, an advantage is provided in which unevenness of the rollable sheet can be calibrated by having the rollable sheet in close contact to the planar plate, thereby maintaining an appropriate distance between the movable parallax barrier part of the rollable sheet and the monitor surface.

(F11) In the amusement game machine of the invention, preferably, the transparent planar plate of the invention is provided with a plurality of fine pores, and the fixing unit is a suction unit that sucks the rollable sheet through the fine pores and fixes the rollable sheet to the transparent planar plate in close contact.

According to the above configuration, by sucking the rollable sheet by the suction unit through a plurality of fine pores provided on the planar plate, an advantage is provided in which the planar plate and the rollable sheet are more reliably in close contact and an appropriate distance between the movable parallax barrier part of the rollable sheet and the monitor surface can be more reliably maintained.

(F12) The appropriate distance maintaining unit of the invention is preferably spacers and/or a rail disposed in the vicinity of the monitor surface.

According to the above configuration, as the unevenness of the rollable sheet can be calibrated by spacers and/or a rail, an advantage is provided in which an appropriate distance between the movable parallax barrier part of the rollable sheet and the monitor surface can be maintained.

(F13) In the amusement game machine of the invention, preferably, the drive unit of the invention is disposed in the vicinity of the monitor surface and, by moving the movable parallax barrier back and forth based on whether the video image displayed by the naked eye three-dimensional video image display unit is a three-dimensional video image or two-dimensional video image, the drive unit moves the movable parallax barrier closer to the monitor surface to appropriately display a three-dimensional video image and moves the movable parallax barrier apart from the monitor surface to display a two-dimensional video image without missing part.

According to the above configuration, as the volume of light that reaches to a player increases when displaying two-dimensional video images, an advantage is provided in which reduction of the brightness when displaying two-dimensional video images is prevented.

(F14) The amusement game machine of the invention preferably further comprises the brightness control unit that controls the brightness when displaying three-dimensional video images.

(F15) The amusement game machine of the invention preferably further comprises the brightness control unit that controls the brightness when displaying three-dimensional video images.

According to the above configuration, an advantage is provided in which reduction of the brightness due to a parallax barrier is prevented by controlling the brightness itself.

(F16) The brightness control unit of the invention conducts the brightness control that increases the brightness when the video image displayed by the naked eye three-dimensional video image display unit is a three-dimensional video image, and decreases the brightness when the video image displayed by the naked eye three-dimensional video image display unit is a two-dimensional video image.

According to the above configuration, an advantage is provided in which a difference in the brightness between when displaying a three-dimensional video image and when displaying a two-dimensional video image caused by moving a movable parallax barrier is calibrated by increasing the brightness when displaying a three-dimensional video image and decreasing the brightness when displaying a two-dimensional video image.

(F17) Brightness control of the invention is preferably performed by controlling electric current and/or electric voltage supplied to the light source of the display unit.

According to the above configuration, by controlling the electric current and/or electric voltage supplied to the light source of the display unit, advantages are provided in which reduction of the brightness due to the parallax barrier is prevented and a difference in brightness between when displaying a three-dimensional video image and when displaying a two-dimensional video image, that arises by moving the movable parallax barrier, is calibrated.

(F 18) Brightness control of the invention is preferably calibration of the color intensity of video images that calibrates a difference in brightness between a three-dimensional video image area and a two-dimensional video image area caused by whether or not the parallax barrier exists by increasing color intensity of a video image in the three-dimensional video image area that is covered by the parallax barrier and decreasing color intensity of the video image in the two-dimensional video image area that is not covered by the parallax barrier among video images displayed on the monitor surface.

According to the above configuration, by increasing the color intensity of three-dimensional video images and decreasing the color intensity of two-dimensional video images, an advantage is provided in which a difference in brightness between when displaying a three-dimensional video image and when displaying a two-dimensional video image is calibrated.

(F 19) Calibration of the color intensity of video images of the invention is preferably calibration that performs image processing in real time to video image data temporarily accumulated in a frame buffer for reproducing video images.

According to the above configuration, by conducting image processing in real time to video image data accumulated temporarily on a frame buffer for reproducing video images, an advantage is provided in which without preparing three-dimensional video images created by increasing color intensity in advance and two-dimensional images created by decreasing color intensity in advance, the color intensity is calibrated in real time to calibrate a difference in brightness between when displaying a three-dimensional video image and when displaying a two-dimensional video image.

(F20) The amusement game machine of the invention preferably further comprises a two-dimensional video image display device for displaying two-dimensional video images, and the naked eye three-dimensional video image display unit preferably displays only three-dimensional video images.

According to the above configuration, by further comprising a two-dimensional video image display unit for displaying two-dimensional video images, an advantage is provided in which reduction in brightness due to a parallax barrier when displaying two-dimensional video images can be prevented.

(F21) In the amusement game machine of the invention, preferably, the naked eye three-dimensional video image display unit of the invention displays images or video images that prompt operation, the game control unit controls the game based on an algorithm defined in correspondence with the operation time and/or the operation method and the input signal transmitted from the input unit, and the video image control unit controls the appearance count, display time, and/or popping out degree of three-dimensional video images in correspondence with control of the game by the game control unit.

According to the above configuration, as the appearance count, display time, and/or popping out degree of a three-dimensional video image changes according to the playing content of the game, an advantage is provided that arouses a player's passion for gambling and encourages the player's enthusiasm for playing a game.

(F22) The input unit of the invention is preferably any one of a button, lever, slider, joystick, mouse, keyboard, jog dial, and touch panel, or a combination of a plurality thereof.

(F23) It is preferable that the amusement game machine of the invention further comprises a detecting unit that detects the position of a ball for game and/or the trajectory of the ball for game, the game control unit controls the game based on the detected signal obtained from the detecting unit, and the video image control unit controls the appearance count, display time and/or popping out degree of three-dimensional video images according to the control of the game by the game control unit.

According to the above configuration, as the detecting unit detects the position of the ball for game and/or the trajectory of the ball for game, an advantage is provided in which the detected result by the detecting unit can be reflected in the game content and three-dimensional video image.

(F24) In the amusement game machine of the invention, preferably, the naked eye three-dimensional video image display unit displays an image or video image of a gimmick and/or decoration, and the game control unit controls the game based on position information of the pixels of the display unit that form the image or video image of the gimmick and/or decoration obtained from the video image control unit and the detected signal obtained from the detecting unit.

According to the above configuration, an advantage is provided in which the naked eye three-dimensional video image display unit not only displays the control result of the game controlled by the game control unit, but also causes a player to perceive as if the three-dimensional video image itself is one element of the control of the game content controlled by the game control unit.

(F25) The naked eye three-dimensional video image display unit of the invention is preferably usually hidden from a player and appears only when a predetermined appearing conditions are satisfied.

(F26) The parallax barrier of the invention is preferably not limited to the shape of the monitor surface and takes an arbitrary shape.

According to the above configuration, by making the parallax barrier an arbitrary shape, flexibility is enhanced in designing an amusement game machine.

(F27) In the amusement game machine of the invention, a two-dimensional image is preferably formed on at least part of the player side surface of the parallax barrier.

According to the above configuration, by forming a two-dimensional image on at least part of the player side surface of the parallax barrier, an advantage is provided in which when designing an amusement game machine that comprises a naked eye three-dimensional video image display unit, the design is not restricted by the existence of the naked eye three-dimensional video image display unit.

Further, an advantage is provided in which, a two-dimensional image is formed over almost the whole surface of the parallax barrier to give a player an impression as if there is no display device provided on the amusement game machine before starting playing the game, and a three-dimensional video image is displayed after starting playing the game, thereby encouraging the player's enthusiasm for playing the game.

(H1) The parallax barrier of the invention preferably also functions as an electromagnetic wave shield.

By having the parallax barrier also function as an electromagnetic wave shield, an advantage is provided in which an electromagnetic wave shield is not required to be separately prepared even for a display that requires an electromagnetic wave shield, such as a plasma display.

This is particularly advantageous when forming a parallax barrier and an electromagnetic wave shield by printing. It should be noted that the parallax barrier and electromagnetic wave shield may be formed by printing directly on a transparent medium, such as a glass plate or acrylic plate, or the parallax barrier and electromagnetic wave shield may be printed on a thin film transparent sheet and the thin film transparent sheet may be attached on the transparent medium.

(I1) The parallax barrier of the invention is preferably formed with electrically conductive material.

Using electrically conductive material for the parallax barrier, the parallax barrier also functions as an electromagnetic wave shield.

In this case, an advantage is provided in which the parallax barrier and electromagnetic wave shield may be formed in one process.

Particularly, it is very noticeable effect that a displacement of the positions of a parallax barrier and an electromagnetic wave shield can be eliminated regardless of the printing precision.

When forming a parallax barrier by printing, it is preferable to mix electrically conductive material in the material that forms the parallax barrier.

(I2) The parallax barrier of the invention is preferably formed by being superimposed by an electromagnetic wave shield.

As the parallax barrier is formed by being superimposed by the electromagnetic wave shield, the parallax barrier also functions as an electromagnetic wave shield.

In this case, usage amount of expensive electrically conductive material may be small.

(I3) The parallax barrier of the invention is preferably formed by being superimposed by an electromagnetic wave shield.

(I4) In the parallax barrier of the invention, when the length in a long axis direction of the slit or the visible light transmissive area exceeds a predetermined width required for blocking electromagnetic waves, the slit or the visible light transmissive area is preferably divided into two or more areas by the electromagnetic wave shield.

In this case, even when the height and width of the slit or hole that is the visible light transmissive area of the parallax barrier exceeds the design basis width required for the parallax barrier to also function as an electromagnetic wave shield, the height and width of the slit or hole may fall within the design basis by dividing or partitioning the slit or hole.

(1) To solve the above problems, the parallax barrier sheet of the invention is a parallax barrier sheet that is used with a display and attachable to and detachable from the display so as to make the display function as a naked eye three-dimensional display, and comprises a transparent medium and a parallax barrier formed on the transparent medium.

According to the above configuration, as the parallax barrier is produced separately from a display and supplied to the market, advantages are provided in which a user can view naked eye three-dimensional video images using his or her own low cost display, a naked eye three-dimensional display can be realized with low cost only by adding the parallax barrier sheet as hardware to an existing laptop PC or television monitor, a user can select a variety of parallax barrier sheets sold in the market, naked eye three-dimensional effects of a naked eye three-dimensional content can be easily presented at a client place or the like only by carrying, in addition to a normal mobile PC, a sheet of the parallax barrier appropriate to the screen size, resolution, processing capacity of the mobile PC, naked eye three-dimensional display is realized even with a mobile telephone device with improved display resolution, and thus, a naked eye three-dimensional content can be displayed wherever and whenever.

(2) In the parallax barrier sheet of the invention, the transparent medium is preferably made of glass or resin of hardness that can retain planarity when being used.
As the transparent medium is made of glass or resin of hardness that can retain planarity when being used, a further advantage is provided in which deformation of the parallax barrier sheet when being used is prevented and appropriate three-dimensional effects can be obtained.

(3) In the parallax barrier sheet of the invention, the parallax barrier is preferably formed by being directly photogravured on the transparent medium.
By directly photogravuring the parallax barrier, a further advantage is provided in which a phenomenon of air bubbles formed in a process of forming a parallax barrier on the transparent thin film sheet and adhering the transparent thin film sheet on the transparent medium is eliminated and the parallax barrier sheet can be produced by eliminating one process.

(4) In the parallax barrier sheet of the invention, the parallax barrier is preferably formed, after forming the parallax barrier on a transparent thin film sheet, by attaching the transparent thin film sheet on the transparent medium.
In a method of forming a parallax barrier on a transparent thin film sheet, and then attaching the transparent thin film sheet on a transparent medium, as the formed parallax barrier is sandwiched between the transparent thin film sheet and the transparent medium, a further advantage is provided in which the transparent medium and the transparent thin film sheet can be used as a protection film of the detachable parallax barrier.

(5) In the parallax barrier sheet of the invention, a graphic, such as an advertisement, is preferably added at least on the side of a subject person of image presentation among the mask surface of the parallax barrier.
As a user can see the graphic of the parallax barrier other than viewing and listening to a naked eye three-dimensional content by installing the parallax barrier on the naked eye three-dimensional display, a further advantage is provided in which the parallax barrier sheet can be used as an interior accessory or advertising medium.

(6) In the parallax barrier sheet of the invention, the mask part of the parallax barrier is preferably black that blocks visible light.
As the mask part is black, a further advantage is provided in which light from the display is highlighted and clearer naked eye three-dimensional video images can be viewed.

(7) In the parallax barrier sheet of the invention, spacers are preferably further provided for retaining air gap (Z value) from the image display surface of the display to the mask surface of the parallax barrier, which is calculated to set an appropriate range for three-dimensional viewing and/or best view point of the naked eye three-dimensional display.
By having spacers corresponding to the appropriately calculated air gap, a further advantage is provided in which three-dimensional effects can be more reliably attained.
It should be noted that the air gap (Z value) is a parameter that is considered when designing to obtain a desirable appropriate range for three-dimensional viewing and/or best view point of the naked eye three-dimensional display, and represents a distance from the image display surface of the display to the mask surface of the parallax barrier.

(8) In the parallax barrier sheet of the invention, the spacers are preferably transparent.
As spacers are transparent, a further advantage is provided in which, even when the spacers are installed on the image display surface of the display, the amount hidden by the spacers among the information displayed by the image display surface can be decreased.

(9) In the parallax barrier sheet of the invention, the spacers are preferably formed integratedly with the transparent medium using the same material as the transparent medium.
By integratedly forming the spacers with a transparent medium using the same material as the transparent medium, further advantages are provided in which, in addition to eliminating time and effort for adhering the spacers to the transparent medium, the strength of the parallax barrier sheet can be enhanced.

(10) In the parallax barrier sheet of the invention, the spacers preferably can easily change the air gap.

As the spacers can easily change the air gap, a further advantage is provided in which the thickness of the spacers can be easily adjusted by a user to obtain a desirable three-dimensional effect.

(11) In the parallax barrier sheet of the invention, preferably, when using the display as a normal two-dimensional display, preferably, the thickness of the spacers is adjusted to a first thickness, and when using the display as a naked eye three-dimensional display, the thickness of the spacers can be adjusted to a second thickness that is thinner than the first thickness.

In this configuration, a further advantage is provided in which viewing and listening of normal two-dimensional display and viewing and listening of naked eye three-dimensional display can be switched without detaching the parallax barrier sheet from the display.

The second thickness is to position the parallax barrier with an appropriate air gap, and the first thickness is to position the parallax barrier at a place where the air gap is extended to the distance where normal two-dimensional display can be viewed through the slits of the parallax barrier without bringing feeling of strangeness.

(12) In the parallax barrier sheet of the invention, at least part of the spacers is preferably substituted by the thickness of the transparent medium.

As the thickness of the transparent medium can be easily adjusted when producing the transparent medium, a further advantage is provided in which if the thickness required as spacers can be provided by the thickness of the transparent medium, spacers can be eliminated.

Even though all the required thickness cannot be provided from the thickness of the transparent medium, a further advantage is provided in which the thickness of spacers can be reduced.

(13) In the parallax barrier sheet of the invention, the spacers are preferably substituted by the frame of the display surface.

As the level difference between the image display surface and the frame surface is used instead of spacers, a further advantage is provided in which spacers can be eliminated.

It should be noted that most preferable case for substituting the spacers with the frame of the display surface is when the frame surrounding the image display surface is projected than the image display surface of the display and there is a level difference therebetween, and when the thickness of the level difference or the total thickness of the level difference and transparent medium equals to a required air gap.

(14) In the parallax barrier sheet of the invention, when setting the appropriate range for three-dimensional viewing and/or the best view point, the parallax barrier is preferably formed by adjusting the slit width of the parallax barrier instead of adjusting the frame thickness.

As the appropriate range for three-dimensional viewing and/or the best view point can be set by adjusting the parameter of the slit width of the parallax barrier for a predetermined air gap without adjusting the air gap by spacers, a further advantage is provided in which the parallax barrier can be designed to obtain an appropriate three-dimensional effect even when using of the level difference between the image display surface of the display and the frame is prioritized.

(15) In the parallax barrier sheet of the invention, when the slits of the parallax barrier are formed obliquely with reference to a horizontal line, the angle of the slits with reference to the horizontal line is preferably always retained as a predetermined angle θ when attaching the parallax barrier to the display.

As a parallax barrier is designed with an assumption that the inclinations of the slits of the parallax barrier are constant, a further advantage is provided in which, even with a detachable parallax barrier, if the inclination θ is always a predetermined angle, a naked eye three-dimensional effect as designed can be obtained.

(16) The parallax barrier sheet of the invention preferably comprises a protection unit that prevents the parallax barrier from being scratched, peeled, and stained.

As a protection unit is provided, a further advantage is provided in which, even when the parallax barrier is of a detachable type, the parallax barrier can be protected from being scratched, peeled, and stained.

(17) In the parallax barrier sheet of the invention, preferably, an index for calibration is formed by making images for predetermined one or two viewpoints white and images for other viewpoints black on the image display surface of the display, and calibration is performed by adjusting so that the index can be viewed as a continuous line through the slits of the parallax barrier.

At calibration for installing the parallax barrier sheet on the display, for example, in the case of a naked eye three-dimensional display for five viewpoints, if pixels for the third viewpoint is made white and pixels for other first, second, fourth, and fifth viewpoints are made black, only the place of the pixels for the third viewpoint is viewed as a white line on the image display surface.

As the parallax barrier can be aligned by seeing the white line through the slits of the parallax barrier and aligning so that the line looks continuous, a further advantage is provided in which the calibration can be easily done.

(18) In the parallax barrier sheet of the invention, preferably, the first index for calibration is formed on the transparent medium and the second index for calibration is formed on the frame of the display or the image display surface of the display, and, when installing the parallax barrier sheet on the display, calibration is performed by matching the first index and the second index.

A further advantage is provided in which, when calibrating for installing the parallax barrier sheet on the display, as indexes are used to align the position of the parallax barrier sheet and the position of the display, the calibration can be done easily.

(19) In the parallax barrier sheet of the invention, preferably, the first index is horizontal and/or vertical linear slits for calibration of a predetermined width provided at a predetermined position of the transparent medium, and the calibration is calibration that adjusts the position of the transparent medium so that the second index that is a line displayed at a corresponding position on the image display surface can be seen without missing part.

When calibrating for installing the parallax barrier sheet on the display, a further advantage is provided in which accurate calibration can be done as the superimposing indexes are both lines and even a slight displacement causes lacking of the second index.

<Supplementary Note>

The invention is not limited to the above-described embodiments and may vary in many ways within the scope of the claims, and embodiments that are obtained by combining different embodiments with disclosed technical means as needed also fall within the technical scope of the invention.

Industrial Applicability

(A) As the naked eye three-dimensional video image display device of the invention can control a displayed image/video image according to the condition of external light, the naked eye three-dimensional video image display device can be applied to a use purpose of outdoor advertisement or indoor advertisement at a place where indoor lighting varies.

(B) As the naked eye three-dimensional video image display device of the invention comprises a touch panel, the naked eye three-dimensional video image display device can be applied to a use purpose of advertisement that changes a displaying content according to input by a subject person of image presentation.

(C) As the naked eye three-dimensional video image display device of the invention can control the degree of viewmix precisely, the naked eye three-dimensional video image display device can be applied to a use purpose of displaying a three-dimensional video image with which jump points are desired to be alleviated.

By adding the parallax barrier sheet of the invention to a normal desktop PC or laptop PC having SVGA class resolution and processing capacity of lower-cost CPU, a low cost naked eye three-dimensional display can be realized. Therefore, the parallax barrier sheet can be applied to a use purpose of full-fledged naked eye three-dimensional viewing using an OS that performs pseudo three-dimensional display, such as a window.

If a user obtains a variety of parallax barrier sheets and organizes an environment where the user can use personally, the parallax barriers can be applied to a use purpose of increasing a possibility of providing a variety of software and contents in accordance with the features of the variety of parallax barrier sheets.

When television broadcasting of naked eye three-dimensional contents and three-dimensional video image players for house use are realized in the future, the parallax barrier sheet of the invention can be applied to a use purpose of enjoying three-dimensional video images easily and with low cost using an existing television monitor without using a special television monitor.

**Claims**

1. A naked eye three-dimensional video image display system comprising:

   a naked eye three-dimensional video image display device including a video image display unit that displays a two-dimensional video image and/or a three-dimensional video image, and a parallax barrier; and
   a touch panel that accepts a touch panel operation to the naked eye three-dimensional video image display device,

   wherein the touch panel comprises, on a glass surface, a touch surface that displays a menu video image and/or forms a menu image, and,
   in order to locate a position that is apart a predetermined distance required for the touch panel operation from an outer side of the glass surface within an appropriate range for three-dimensional viewing, the naked eye three-dimensional video image display device is equipped inside the glass surface with a predetermined distance from an inner side of the glass surface (that is, the distance to the appropriate range for three-dimensional viewing - the predetermined distance required for the touch panel operation).

2. The naked eye three-dimensional video image display system according to claim 1, wherein the touch panel comprises, on a glass surface, a detachable thin display that forms a touch surface, for displaying a menu video image.

3. The naked eye three-dimensional video image display system according to claim 1, wherein the touch panel comprises, on a glass surface, a detachable touch sheet printed with an icon, text, and the like that are formed by a photograph, graphic, or the like, as a menu image.

4. The naked eye three-dimensional video image display system according to claim 1, wherein the touch panel comprises, on a glass surface, a detachable medium, paper controller or paper keyboard printed with an icon, text, and the like that are formed by a photograph, graphic, or the like, as a menu image,
   and the touch panel accepts a touch panel operation to the naked eye three-dimensional video image display device caused by touching and reading using an optical reading unit (a scanner) by an operator, of a dot pattern superimposed and formed on the medium, paper controller, or paper keyboard.

5. The naked eye three-dimensional video image display system according to claim 1,
   wherein the naked eye three-dimensional video image display device further comprises an imaging unit that images a nearby object, and,
   when the video image display unit controls a display state of the two-dimensional video image and/or three-dimensional video image, the control unit controls analyzing of the image as well as a video image captured by the imaging unit and displaying of a three-dimensional video image according to a result of the analyzing.

6. A naked eye three-dimensional video image display device that uses a parallax barrier, wherein an edge shape of a slit of the parallax barrier is of a shape in which elliptic arcs of a certain shape are continuously connected, the elliptic arcs correspond to pixels for one or a plurality of viewpoints that are arranged on a display and that form a viewable area to be viewed by a subject person of image presentation through the slit,
   and the elliptic arcs are connected on each horizontal line that divides each pixel in a horizontal direction.

7. A naked eye three-dimensional video image display device that uses a parallax barrier, wherein, among a plurality of slit parts and a plurality of barrier parts that comprise the parallax barrier, each of the slit parts is replaced by and made of a plurality of holes that are a visible light transmissive area and correspond to each pixel for naked eye three-dimensional display,
   a maximum area on a pixel arranging surface to be viewed, through the holes, by a subject person of image presentation at a best view point where the subject person of image presentation can attain a maximum naked eye three-dimensional effect, is defined as a rectangular area with a predetermined width and a predetermined height on the pixel arranging surface,
   the holes are arranged independently on the parallax barrier surface,
   a shape of the holes is a shape of an elliptic arc or a convex polygon with six or more even number vertices,

83

the shape of the holes is a shape inscribed top, bottom, right, and left sides of an area that is a like figure as the rectangular area and formed by intersections of a line segment that connects either left or right eye of the subject person of image presentation at the best view point as a base point to the rectangular area with the parallax barrier surface, and

an area on the pixel arranging surface that is viewed by the subject person of image presentation through the holes, with either left or right eye of the subject person of image presentation at the best view point as a base point, forms an effective viewable area of a like figure as the holes.

8. The naked eye three-dimensional video image display device according to either claim 6 or 7, wherein the parallax barrier is an electrically controlled parallax barrier that can electrically control ON or OFF of a parallax barrier function, turning ON the parallax barrier function when displaying a three-dimensional video image, and turning OFF the parallax barrier function when displaying a two-dimensional video image.

9. The naked eye three-dimensional video image display device according to claim 8, wherein the electrically controlled parallax barrier is a liquid crystal parallax barrier that can control ON or OFF of the parallax barrier function by electrically controlling orientations of liquid crystal molecules.

10. The naked eye three-dimensional video image display device according to claim 8, wherein ON or OFF of the electrically controlled parallax barrier is electrically controlled and switched based on a two-dimension/three-dimension switching instruction obtained by the video image display unit.

11. The naked eye three-dimensional video image display device according to claim 8, wherein ON or OFF of the electrically controlled parallax barrier is electrically controlled and switched based on a two-dimension/three-dimension switching instruction by the touch panel operation.

12. The naked eye three-dimensional video image display device according to either claim 6 or 7, wherein the parallax barrier also functions as an electromagnetic wave shield.

13. The naked eye three-dimensional video image display device according to either claim 6 or 7, wherein the parallax barrier also functions as the electromagnetic wave shield by being formed of electrically conductive material.

14. The naked eye three-dimensional video image display device according to either claim 6 or 7, wherein the parallax barrier also functions as the electromagnetic wave shield by being formed with the electromagnetic wave shield superimposed thereon.

15. The naked eye three-dimensional video image display device according to either claim 6 or 7, wherein, when a length in a long axis direction of the slit or the visible light transmissive area exceeds a predetermined width required for blocking electromagnetic waves, the slit or the visible light transmissive area is divided into two or more areas by an electromagnetic wave shield.

16. A parallax barrier sheet wherein the parallax barrier according to either claim 10 or 11 is the parallax barrier sheet used with a display and attachable to and detachable from the display so that the display functions as a naked eye three-dimensional display, and the parallax barrier sheet comprises a transparent medium and a parallax barrier part formed on the transparent medium.

17. The parallax barrier sheet according to claim 16, wherein the transparent medium is made of glass or resin with a hardness that can retain planarity when being used.

18. The parallax barrier sheet according to claim 16, wherein the parallax barrier part is formed by being directly photogravured on the transparent medium.

19. The parallax barrier sheet according to claim 16, wherein the parallax barrier part is formed by, after forming the parallax barrier part on a thin film transparent sheet, adhering the thin film transparent sheet on the transparent medium.

20. The parallax barrier sheet according to claim 16, wherein a graphic, such as an advertisement, is added at least on a side of a subject person of image presentation within the parallax barrier part.

**21.** The parallax barrier sheet according to claim 16, wherein the parallax barrier part is black that blocks visible light.

**22.** The parallax barrier sheet according to claim 16, further comprising a spacer for retaining an air gap (Z value) from an image display surface of the display to a mask surface of the parallax barrier, which was calculated to set an appropriate range for three-dimensional viewing and/or a best view point in relation with the naked eye three-dimensional display, between the parallax barrier and the image display surface.

**23.** The parallax barrier sheet according to claim 22, wherein the spacer is transparent.

**24.** The parallax barrier sheet according to claim 22, wherein the spacer is integratedly formed with the transparent medium using same material as that of the transparent medium.

**25.** The parallax barrier sheet according to claim 22, wherein the spacer can easily change the air gap.

**26.** The parallax barrier sheet according to claim 22, wherein, when using the display as a normal two-dimensional display, a thickness of the spacer is adjusted to a first thickness, and, when using the display as a naked eye three-dimensional display, the thickness of the spacer is adjusted to a second thickness that is thinner than the first thickness.

**27.** The parallax barrier sheet according to claim 22, wherein at least part of the spacer is substituted by a thickness of the transparent medium.

**28.** The parallax barrier sheet according to claim 22, wherein the spacer is substituted by a frame of the display surface.

**29.** The parallax barrier sheet according to claim 28, wherein, when setting the appropriate range for three-dimensional viewing and/or the best view point, the parallax barrier part is formed by adjusting a width of a slit of the parallax barrier part instead of adjusting a thickness of the frame.

**30.** The parallax barrier sheet according to claim 28, wherein, when a slit of the parallax barrier part is formed obliquely to a horizontal line, an angle of the slit to the horizontal line is retained to always be a predetermined angle θ when attaching the parallax barrier part to the display.

**31.** The parallax barrier sheet according to claim 28, comprising a protective unit for preventing the parallax barrier part from being scratched, peeled, and stained.

**32.** The parallax barrier sheet according to claim 28, wherein an index for calibration is formed on an image display surface of the display by making images for one or two viewpoints white and images for other viewpoints black, and calibration is performed by adjusting the index so that the index can be seen as a continuous line through a slit of the parallax barrier part.

**33.** The parallax barrier sheet according to claim 28, wherein a first index for calibration is formed on the transparent medium and a second index for calibration is formed on a frame of the display or an image display surface of the display,
wherein, when setting the parallax barrier sheet on the display, calibration is performed by matching the first index and the second index.

**34.** The parallax barrier sheet according to claim 33, wherein the first index is a linear slit for calibration with a predetermined width provided horizontally and/or vertically at a predetermined position of the transparent medium, and the calibration is a calibration done by adjusting a position of the transparent medium so that the second index that is a line displayed at a corresponding position on the image display surface can be seen without missing part.

**35.** An amusement game machine comprising:

    a display unit;
    a naked eye three-dimensional video image display unit of a parallax barrier method including the parallax barrier according to either claim 6 or 7;
    a game control unit that controls a game content;
    an input unit that accepts operation by a player;

a timer that measures elapsed time and/or continuous playtime; and

a video image control unit that controls an appearance count, display time, and/or popping out degree of a three-dimensional video image displayed by the naked eye three-dimensional video image display unit.

36. The amusement game machine according to claim 35, wherein the video image control unit controls the appearance count, display time, and/or popping out degree of the three-dimensional video image by preparing a predetermined number of video images for naked eye three-dimensional display created by blending in advance predetermined video images for a plurality of viewpoints in accordance with a predetermined algorithm.

37. The amusement game machine according to claim 35, wherein the video image control unit controls the appearance count, display time, and/or popping out degree of the three-dimensional video image by selecting a plurality of video images for respective viewpoints of a number corresponding to the parallax barrier from a plurality of video images for respective viewpoints prepared in advance and blending the selected plurality of video images in real time so that parallaxes of adjacent viewpoints become equal.

38. The amusement game machine according to claim 35, wherein the video image control unit controls the appearance count, display time, and/or popping out degree of the three-dimensional video image

by moving multiple cameras that are viewpoints for drawing three-dimensional computer graphics close to or apart from a drawing object and/or moving the drawing object close to or apart from the multiple cameras, or

by moving a position of a convergence point of the multiple cameras back and forth by changing orientations of the multiple cameras corresponding to the parallax barrier.

39. The amusement game machine according to any one of claims 35 to 38, wherein the video image control unit controls the popping out degree based on an input signal transmitted from the input unit.

40. The amusement game machine according to any one of claims 35 to 39, further comprising a drive unit that moves the parallax barrier, the parallax barrier being a movable parallax barrier that covers at least part of a monitor surface of the display unit.

41. The amusement game machine comprising:

a naked eye three-dimensional video image display unit of a parallax barrier method including a display unit and a movable parallax barrier using the parallax barrier according to either claim 6 or 7;

a game control unit that controls a game content;

an input unit that accepts operation by a player;

a drive unit that moves the movable parallax barrier; and

the movable parallax barrier that covers at least part of a monitor surface of the display unit.

42. The amusement game machine according to either claim 40 or 41, wherein the drive unit maintains a predetermined distance from the movable parallax barrier to the monitor surface by an appropriate distance maintaining unit that allows the movable parallax barrier to move up, down, and/or left, right and is disposed around the monitor surface.

43. The amusement game machine according to either claim 40 or 41, further comprising an appropriate distance maintaining unit for maintaining a predetermined distance from the movable parallax barrier to the monitor surface, wherein the movable parallax barrier is part of a rollable sheet including a transparent part to be overlaid on the monitor surface when the display unit displays a two-dimensional video image, and the drive unit rolls up the rollable sheet in a horizontal direction or in a vertical direction.

44. The amusement game machine according to claim 43, wherein the appropriate distance maintaining unit comprising:

a transparent planar plate that is disposed between the rollable sheet and the monitor surface; and

a fixing unit that is disposed around the monitor surface and tightly fixes the rollable sheet to the transparent planar plate.

45. The amusement game machine according to claim 44, wherein the transparent planer plate is provided with a plurality of fine pores, and the fixing unit is a suction unit that sucks the rollable sheet through the fine pores and tightly fixes the rollable sheet to the transparent planer plate.

46. The amusement game machine according to claim 43, wherein the appropriate distance maintaining unit is a spacer and/or rail that is disposed around the monitor surface.

47. The amusement game machine according to either claim 40 or 41, wherein the drive unit is disposed around the monitor surface, and, depending on whether a video image displayed by the naked eye three-dimensional video image display unit is a three-dimensional video image or a two-dimensional video image, the drive unit moves the movable parallax barrier closer to the monitor surface to appropriately display a three-dimensional video image or moves the movable parallax barrier apart from the monitor surface to display a two-dimensional video image without missing part, by moving the movable parallax barrier back and forth.

48. The amusement game machine according to any one of claims 35 to 39, further comprising a brightness control unit that controls brightness when displaying a three-dimensional video image.

49. The amusement game machine according to any one of claims 40 to 47, further comprising a brightness control unit that controls brightness when displaying a three-dimensional video image.

50. The amusement game machine according to claim 49, wherein the brightness control unit performs brightness control by increasing brightness when a video image displayed by the naked eye three-dimensional video image display unit is a three-dimensional video image, and decreasing brightness when a video image displayed by the naked eye three-dimensional video image display unit is a two-dimensional video image.

51. The amusement game machine according to either claim 49 or 50, wherein the brightness control is performed by controlling electrical current and/or electrical voltage supplied to a light source of the display unit.

52. The amusement game machine according to claim 50, wherein the brightness control is video image color intensity calibration that increases color intensity of a video image in a three-dimensional video image area that is covered in the parallax barrier and decreases color intensity of a video image in a two-dimensional video image area that is not covered in the parallax barrier, thereby calibrating brightness difference between the three-dimensional video image area and the two-dimensional video image area due to the existence of the parallax barrier.

53. The amusement game machine according to claim 52, wherein the video image color intensity calibration is a calibration that performs image processing in real time to video image data temporarily stored in a frame buffer for reproducing a video image.

54. The amusement game machine according to any one of claims 35 to 53, further comprising a two-dimensional video image display device for displaying a two-dimensional video image, wherein the naked eye three-dimensional video image display unit displays only three-dimensional video images.

55. The amusement game machine according to any one of claims 35 to 40, wherein the naked eye three-dimensional video image display unit displays an image or video image that prompts operation,
the game control unit controls a game, based on an algorithm defined in accordance with time of the operation and/or a method of the operation and an input signal transmitted from the input unit, and
the video image control unit controls an appearance count, display time, and/or popping out degree of a three-dimensional video image in accordance with the control of the game by the game control unit.

56. The amusement game machine according to claim 55, wherein the input unit is any one of a button, lever, slider, joystick, mouse, keyboard, jog dial, and touch panel, or a combination of a plurality thereof.

57. The amusement game machine according to any one of claims 35 to 40, further comprising a detecting unit that detects a position of a ball for game and/or a trajectory of the ball for game, wherein the game control unit controls a game based on a detected signal obtained from the detecting unit, and the video image control unit controls an appearance count, display time, and/or popping out degree of a three-dimensional video image in accordance with the control of the game by the game control unit.

58. The amusement game machine according to claim 57, wherein the naked eye three-dimensional video image display unit displays an image or video image of a gimmick and/or decoration, and the game control unit controls a game based on:

position information of a pixel of the display unit that forms the image or video image of the gimmick and/or decoration obtained from the video image control unit; and
a detected signal obtained from the detecting unit.

59. The amusement game machine according to any one of claims 35 to 58, wherein the naked eye three-dimensional video image display unit is normally hidden from a player, yet appears when a predetermined appearing condition is satisfied.

60. The amusement game machine according to any one of claims 35 to 59, wherein the parallax barrier is of an arbitrary shape without being limited to a shape of the monitor screen.

61. The amusement game machine according to any one of claims 35 to 60, wherein a two-dimensional image is formed on at least part of a surface of a player side of the parallax barrier.

62. The naked eye three-dimensional video image display system according to claim 1, wherein the parallax barrier is an electrically controlled parallax barrier that can electrically control ON or OFF of a parallax barrier function, turning ON the parallax barrier function when displaying a three-dimensional video image and turning OFF the parallax barrier function when displaying a two-dimensional video image.

63. The naked eye three-dimensional video image display system according to claim 62, wherein the electrically controlled parallax barrier is a liquid crystal parallax barrier that can control ON or OFF of a parallax barrier function by electrically controlling orientations of liquid crystal molecules.

64. The naked eye three-dimensional video image display system according to claim 62, wherein the ON or OFF of the electrically controlled parallax barrier is electrically controlled and switched based on a two-dimension/three-dimension switching instruction obtained by the video image display unit.

65. The naked eye three-dimensional video image display system according to claim 62, wherein the ON or OFF of the electrically controlled parallax barrier is electrically controlled and switched based on a two-dimension/three-dimension switching instruction by the touch panel operation.

FIG.1A

FIG.1B

FIG.1C

FLOODLIGHT
UNIT

FLOODLIGHT

DISPLAY
UNIT

CONTROL
UNIT

EXTERNAL
LIGHT

ILLUMINANCE
SENSOR

FIG.2A

FIG.2B

BUTTERFLY MOVES FROM THE FLOWER IS THREE-DIMENSIONAL VIDEO IMAGE

FIG.3A

FIG.3B

FIG.3C

FIG.3D

FIG.3E

FIG.3F

LIGHT EMITTING IMAGE PART 5d

AIR GAP
PART

OPAQUE PART

MASK PRINT
LAYER

REINFORCED
GLASS

GRAPHIC PRINT

## FIG.4A

LIGHT EMITTING IMAGE PART 5d

TRANSPARENT
MATERIAL

OPAQUE PART

MASK PRINT
LAYER

PROTECTION
SHEET

GRAPHIC PRINT

## FIG.4B

BACKLIGHT

THREE-
DIMENSIONAL
PRINT PART

TRANSPARENT
MATERIAL

PROTECTION
SHEET

FIG.5A

LIQUID CRYSTAL,
PLASMA, OR LED

AIR GAP
PART

REINFORCED
GLASS

FIG.5B

LIQUID CRYSTAL,
PLASMA, OR LED

TRANSPARENT
MATERIAL

PROTECTION
SHEET

FIG.5C

LIGHT EMITTING IMAGE PART 5d

THREE-
DIMENSIONAL
PRINT PART          · DETACHABLE
TRANSPARENT        · ROLLABLE
MATERIAL              SINGLE FACED
(OR AIR GAP PART)   DOUBLE FACED
PROTECTION
SHEET

## FIG.6A

5

5d

ROLLER

## FIG.6B

FIG.7A

FIG.7A

FIG.8A

THREE-DIMENSIONAL DISPLAY AREA

MENU

THREE-DIMENSIONAL MOVIE

NORMAL MONITOR AREA

PRINTED AREA

FIG.8B

FIG.9

STORE WINDOW

PROJECTOR

NAKED EYE THREE-DIMENSIONAL DISPLAY

TOUCH PANEL

## FIG.10A

TOUCH PANEL

PROJECTOR

50cm

1. 5m

NAKED EYE THREE-DIMENSIONAL DISPLAY

## FIG.10B

IR CAMERA

IRLED

PROJECTOR

TOUCH PANEL

STORE WINDOW

FIG.11A

TOUCH PANEL

FIG.11B

PROJECTOR

REFLECTOR

TOUCH PANEL

STORE WINDOW

FIG.12

NAKED EYE THREE-DIMENSIONAL DISPLAY

GLASS SURFACE

TOUCH PANEL

L

K

FIG.13

THIN TOUCH PANEL OF LIQUID CRYSTAL/ORGANIC EL

VIDEO IMAGE

FIG.14A

PRESSURE SENSITIVE TOUCH SHEET + PRINTED IMAGE

PHOTOGRAPH, ILLUSTRATION

FIG.14B

DOT SHEET

DOT PRINT

PHOTOGRAPH, ILLUSTRATION

SCANNER

FIG.14C

W

h | R | G | B

G | B | R

B | R | G

FIG.15A

n VIEW POINTS

θ

θ

h

FIRST ROW $\frac{1}{2}h$ $\frac{1}{2}h$

r

SECOND ROW

THIRD ROW

FOURTH ROW

W × n

FIG.15B

FIG.16A

FIG.16B

FIG.16C

FIG.16D

FIG.17A

FIG.17B

FIG.17C

FIG.18A

FIG.18B

2D

FLAG IS 1

3D

3D

FLAG IS 0

FIG.19A

| 1 | 2 | 3 |
|---|---|---|
| 4 | 5 | |
| | | |

3D

2D

FIG.19B

CAMERA

5  4  3  2  1

FIG.19C

3D

1 2 3

BACK~
GROUND

4 5

## FIG.20A

24 BITS

1 2 3

4 5

MASK FOR FIVE
VIEWPOINTS (5 BITS)

## FIG.20B

2D

BLACK (ALSO FUNCTIONS AS MASK)

3D

## FIG.20C

FOUR VIEWPOINTS

| 1 | 2 | 3 |
|---|---|---|
| 4 | TWO-DIMENSIONAL IMAGE OF SCREEN SURFACE | MASK FOR FOUR VIEWPOINTS (+ MASK FOR TWO-DIMENSIONAL IMAGE) |

FIG.21

FIVE VIEWPOINTS

TWO-DIMENSIONAL
IMAGE OF
SCREEN
SURFACE

MASK FOR FIVE
VIEWPOINTS
(+ MASK FOR
TWO-DIMENSIONAL
IMAGE)

FIG.22

SIX VIEWPOINTS

| 1 | 2 | 3 |
| 4 | 5 | 6 |

TWO-DIMENSIONAL
IMAGE OF
SCREEN
SURFACE

MASK FOR SIX
VIEWPOINTS
(+ MASK FOR
TWO-DIMENSIONAL

FIG.23

SEVEN VIEWPOINTS

| | | |
|---|---|---|
| 1 | 2 | 3 |
| 4 | 5 | 6 |
| ~ | TWO-DIMENSIONAL | MASK FOR SEVEN VIEWPOINTS |

FIG.24

EIGHT VIEWPOINTS

| 1 | 2 | 3 |
| 4 | 5 | 6 |
| 7 | | 8 |

TWO-DIMENSIONAL
IMAGE OF
SCREEN
SURFACE

MASK FOR EIGHT
VIEWPOINTS
(+ MASK FOR
TWO-DIMENSIONAL
IMAGE)

FIG.25

ALL MASK
VALUES ARE 0

MASK VALUES
ARE 1

FIG.26

RGB SUBPIXEL ARRANGEMENT

FIG.27A

IMAGE FOR K-TH VIEWPOINT

FIG.27B

COMPRESSED IMAGE FOR K-TH VIEWPOINT

HORIZONTAL RESOLUTION

$$\frac{1920 \times 3}{3 \times 6} = 320$$

FIG.27C

R G B R G B R G B R G B R G B R G B R G B

| | | | | | |
|---|---|---|---|---|---|
| $_1P_{11}$ | $_2P_{11}$ | $_3P_{11}$ | $_4P_{11}$ | $_5P_{11}$ | $_6P_{11}$ |
| $_1P_{21}$ | $_2P_{21}$ | $_3P_{21}$ | $_4P_{21}$ | $_5P_{21}$ | $_6P_{21}$ | $_1P_{22}$ |
| $_1P_{31}$ | $_2P_{31}$ | $_3P_{31}$ | $_4P_{31}$ | $_5P_{31}$ | $_6P_{31}$ | $_1P_{32}$ |
| $_1P_{41}$ | $_2P_{41}$ | $_3P_{41}$ | $_4P_{41}$ | $_5P_{41}$ | $_6P_{41}$ | $_1P_{42}$ |
| $_1P_{51}$ | $_2P_{51}$ | $_3P_{51}$ | $_4P_{51}$ | $_5P_{51}$ | $_6P_{51}$ | $_1P_{52}$ | $_2P_{52}$ |
| $_1P_{61}$ | $_2P_{61}$ | $_3P_{61}$ | $_4P_{61}$ | $_5P_{61}$ | $_6P_{61}$ | $_1P_{62}$ | $_2P_{62}$ |

FIG.28

IN THE CASE OF SIX VIEWPOINTS

RGB SUBPIXEL ARRANGEMENT

FIG.29A

IMAGE FOR K-TH VIEWPOINT

FIG.29B

COMPRESSED IMAGE
FOR K-TH VIEWPOINT

COLUMN n

640

HORIZONTAL
RESOLUTION

$$\frac{1920 \times 3}{9} = 640$$

VERTICAL
RESOLUTION

$$\frac{1080}{2} = 540$$

ROW
m

540

$_kP_{mn}$

FIG.29C

117

FIG.30

FIG.31A

IMAGE FOR K-TH VIEWPOINT

FIG.31B

COMPRESSED IMAGE FOR K-TH VIEWPOINT

FIG.31C

FIG.32

V: HORIZONTAL
DIRECTION VIEWABLE
AREA LENGTH
W: PARALLAX
L: BVP DISTANCE
Z: AIR GAP
S: SLIT WIDTH

FIG.33A

V/2: DISTANCE
BETWEEN
CONVERGENCE POINTS

FIG.33B

FIG.34

D D

RIGHT LEFT

V

FIG.35A

2D

RIGHT LEFT

V

FIG.35B

FIG.36A

FIG.36B

WHEN V ≦ 3D

VIEWABLE AREA

V

M

Z

L

W

FIG.37A

D

D

PIXEL FOR
RIGHT EYE

PIXEL FOR
LEFT EYE

FIG.37B

WHEN V＞3D

VIEWABLE AREA V

M

Z

L

W

FIG.38A

D        D        D

PIXEL FOR
RIGHT EYE

PIXEL FOR
LEFT EYE

FIG.38B

FIG.39

FIG.40

FIG.41

MONITOR
SURFACE

Ln

APPROPRI
RANGE FOR T
DIMENSIOI
VIEWIN(

FIG.42

FIG.43

ONE
PIXEL

G | B

R | G

G | B

REPEAT

R | G

R | G

B | R

G | B

R | G

FIG.44

FIG.45

FIG.46

FIG.47

FIG.48

FIG.49

FIG.50A

FIG.50B

FIG.50C

FIG.50D

FIG.50E

FIG.51

FIG.52A     FIG.52B     FIG.52C     FIG.52D     FIG.52E

FIG.52F     FIG.52G     FIG.52H     FIG.52I     FIG.52J

FIG.53A

FIG.53B

FIG.53C

EFFECTIVE VIEWABLE
AREA

VISIBLE LIGHT
TRANSMISSIVE AREA

VIEWPOINT USED WHEN
CALCULATING VISIBLE LIGHT
TRANSMISSIVE AREA

ACTUAL
VIEWPOINT

VIEWPOINT USED WHEN
CALCULATING VISIBLE LIGHT
TRANSMISSIVE AREA

FIG.54

AMUSEMENT GAME MACHINE

NAKED EYE THREE-DIMENSIONAL VIDEO IMAGE DISPLAY UNIT

DISPLAY ←

GAME CONTROL UNIT

VIDEO IMAGE CONTROL UNIT

BRIGHTNESS CONTROL UNIT

TIMER

INPUT UNIT

DETECTING UNIT

INPUT

FIG.55

POPPING OUT DEGREE 0 (0 cm)

FIG.56A

POPPING OUT DEGREE 1 (1 cm)

FIG.56B

POPPING OUT DEGREE 2 (2 cm)

FIG.56C

POPPING OUT DEGREE 3 (3 cm)

FIG.56D

VIDEO IMAGE FILE

FIG.57A

FIG.57B

CAMERAS (MOVING CLOSE/AWAY)

BEFORE MONITOR SURFACE

## FIG.58A

ON MONITOR SURFACE

## FIG.58B

BEHIND MONITOR SURFACE

## FIG.58C

OBJECT POSITION MOVING CLOSE/AWAY

(1)    (2)    (3)

FIG.59A

(1) BEFORE MONITOR SURFACE    (2) ON MONITOR SURFACE

(3) BEHIND MONITOR SURFACE

FIG.59B

CHANGE OF CONVERGENCE POINT

BEFORE MONITOR SURFACE

FIG.60A

ON MONITOR SURFACE

FIG.60B

BEHIND MONITOR SURFACE

FIG.60C

FIG.61A

FIG.61B

FIG.61C

FIG.62

EP 2 312 375 A1

FIG.63

RAIL

FIG.64

SPACERS EXPAND AND CONTRACT

FILTER

FRAME

SPACER

MONITOR
SURFACE

## FIG.65A

SPACER

FILTER

MONITOR
SURFACE

## FIG.65B

## FIG.65C

MONITOR
SURFACE

COCKPIT OF AIRPLANE

FIG.66

WITH DECORATION

FIG.67A

WITHOUT DECORATION

FIG.67B

MAGNIFIER

FIG.68

**EP 2 312 375 A1**

FIG.69

157

2D DISPLAY

FLUORESCENT LIGHT

3D DISPLAY

## FIG.70A

LED

## FIG.70B

EP 2 312 375 A1

3D MONITOR

MONITOR

FIG.71

159

FIG.72

FIG.73

DOORS OPEN AT A PREDETERMINED
TIMING, AND A MONITOR APPEARS

FIG.74

FIG.75

FIG.76

FIG.77

FIG.78

WHEN A RAIL ALSO FUNCTIONS AS A SPACER

RAIL

FILTER

MONITOR
SURFACE

FIG.79

FIG.80

FIG.81

FIG.82

WHEN RINGS ALSO FUNCTION AS SPACERS

RING

FILTER

MONITOR
SURFACE

RING

FIG.83

ADHESIVE PAD    FILTER    FRAME

SPACER

SPACER

FILTER

MONITOR
SURFACE

MONITOR
SURFACE

FIG.84

FIG.85

FILTER    FRAME

SPACER

MONITOR
SURFACE

FIG.86

FIG.87

FIG.88

FIG.89

FIG.90

FIG.91

FIG.92

SPACER    FRAME    FILTER

FIG.93

THREE-DIMENSIONAL
VIEW

NORMAL VIEW

VARIABLE
SPACER

FILETER

MONITOR
SURFACE

VARIABLE
SPACER

FILTER

MONITOR
SURFACE

FIG.94

IMAGE FOR FIRST
VIEWPOINT

IMAGE FOR SECOND
VIEWPOINT

IMAGE FOR THIRD
VIEWPOINT

IMAGE FOR FOURTH
VIEWPOINT

IMAGE FOR FIFTH
VIEWPOINT

3D BLENDING

FILTER

SPACER

WHITE OBLIQUE
LINE

FIG.95

EP 2 312 375 A1

MASK

OBLIQUE SLITS FOR THREE-
DIMENSIONAL VIEWING
(THE SHAPE OF THE SLIT CAN BE
CUSTOMIZED)

VERTICAL
SLIT

HORIZONTAL
SLIT

FIG.96

FRAME    FILTER   YELLOW LINE

CHANGED TO RED

FIG.97

FIG.98A

FIG.98B

FIG.98C

FIG.98D

SUBPIXEL RESOLUTION m´ x n´(RESOLUTION m x n)

1  2  · · · · · ·  i

$(rx, ry)$     $(rx+1, ry)$     $(rx+n-1, ry)$

FIG.98A

RESOLUTION Lx K

| IMAGE FOR FIRST VIEWPOINT | IMAGE FOR SECOND VIEWPOINT | IMAGE FOR THIRD VIEWPOINT |
|---|---|---|
| $(Rx, Ry)$ | $(Rx, Ry)$ | $(Rx, Ry)$ |
| IMAGE FOR FOURTH VIEWPOINT | IMAGE FOR FIFTH VIEWPOINT | IMAGE FOR SIXTH VIEWPOINT |
| $(Rx, Ry)$ | $(Rx, Ry)$ | $(Rx, Ry)$ |

FIG.99B

FIG.100A

FIG.100B

FIG.100C

FIG.101A

FIG.101B

FIG.101C

FIG.102A

FIG.102B

FIG.102C

FIG.103A

FIG.103A

FIG.103C

FIG.104A

FIG.104B

FIG.104C

FIG.104D

FIG.105A

FIG.105B

FIG.105C

FIG.105D

FIG.106A

FIG.106B

FIG.106C

FIG.106D

FIG.106E

FIG.106F

17 INCH

$D = 0.088$

$h = 0.264$

## FIG.107A

$D' = 0.0878$

$h = 0.264$, $h' = 0.248$, $S = 0.124$

$W = 65$
$D = 0.088$
$V = \sqrt{2} \times 2 \times D$
$\fallingdotseq 0.2489$
$S = \dfrac{WV}{2W + V}$
$= \dfrac{65 \times 0.2489}{2 \times 65 + 0.2489}$
$\fallingdotseq 0.124$
$D' = \dfrac{S}{\sqrt{2}} = 0.0878$

$h' = 0.9 \times h \fallingdotseq 0.248$

40 INCH

$D = 0.15375$

$h = 0.46125$

## FIG.107B

$D' = 0.1532$

$h = 0.46125$, $h' = 0.208$, $S = 0.217$

$W = 65$
$D = 0.15375$
$V = \sqrt{2} \times 2 \times D$
$\fallingdotseq 0.4349$
$S = \dfrac{WV}{2W + V}$
$= \dfrac{65 \times 0.4349}{2 \times 65 + 0.4349}$
$\fallingdotseq 0.217$
$D' = \dfrac{S}{\sqrt{2}} = 0.1532$

$h' = 0.45 \times h \fallingdotseq 0.208$

65 INCH

$D = 0.25$

$h = 0.75$

## FIG.107C

$D' = 0.2479$

$h = 0.75$, $h' = 0.225$, $h' = 0.208$

$W = 65$
$D = 0.25$
$V = \sqrt{2} \times 2 \times D$
$\fallingdotseq 0.705$
$S = \dfrac{WV}{2W + V}$
$= \dfrac{65 \times 0.705}{2 \times 65 + 0.705}$
$\fallingdotseq 0.3506$
$D' = \dfrac{S}{\sqrt{2}} = 0.2479$

$h' = 0.3 \times h \fallingdotseq 0.225$

COVER

SPACER

NEAR INFRARED
BLOCKING
LAYER

Z

ELECTROMAGNETIC
WAVE SHIELD LAYER

GLASS OR
TRANSPARENT
MEDIUM

ANTI-GLARE LAYER

AIR
GAP

PLASMA PANEL

ANTI-GLARE LAYER

GLASS OR
TRANSPARENT
MEDIUM

PARALLAX
BARRIER
LAYER

AIR GAP

## FIG.108A

COVER

NEAR INFRARED
BLOCKING
LAYER

Z

ANTI-GLARE LAYER

PLASMA PANEL

AIR GAP

GLASS OR
TRANSPARENT
MEDIUM

PARALLAX BARRIER &
ELECTROMAGNETIC
WAVE SHIELD LAYER

## FIG.108B

## INTERNATIONAL SEARCH REPORT

| International application No. |
| --- |
| PCT/JP2009/003350 |

| A. CLASSIFICATION OF SUBJECT MATTER |
| --- |
| G02B27/22(2006.01)i, H04N13/04(2006.01)i |
| According to International Patent Classification (IPC) or to both national classification and IPC |

| B. FIELDS SEARCHED |
| --- |
| Minimum documentation searched (classification system followed by classification symbols) |
| G02B27/22, H04N13/04 |

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 10-224825 A (Canon Inc.), 21 August 1998 (21.08.1998), entire text; all drawings & US 6285368 B1 & EP 860807 A2 | 1-5,62-65 |
| Y | JP 11-84131 A (Sharp Corp.), 26 March 1999 (26.03.1999), paragraph [0075] & US 6055103 A & EP 887666 A2 & DE 69818915 T2 | 1-5,62-65 |
| Y | JP 2008-134617 A (NEC LCD Technologies, Ltd.), 12 June 2008 (12.06.2008), paragraphs [0254] to [0257]; fig. 45 & US 2008/0094700 A1 & CN 101201498 A | 1-5,62-65 |

| ☒ Further documents are listed in the continuation of Box C. | ☐ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 October, 2009 (20.10.09) | 02 November, 2009 (02.11.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

## INTERNATIONAL SEARCH REPORT

International application No.

PCT/JP2009/003350

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2004/029871 A  (Kenji YOSHIDA),<br>08 April 2004 (08.04.2004),<br>entire text; all drawings<br>& EP 1548635 A1          & US 2006/154559 A1 | 1-5,62-65 |
| Y | JP 2008-86744 A  (IP Solutions, Inc.),<br>17 April 2008 (17.04.2008),<br>entire text; all drawings<br>& EP 2071437 A1          & WO 2008/029941 A1<br>& KR 20090068206 A      & CA 2662313 A1 | 1-5,62-65 |
| Y | JP 2001-92595 A  (Fujitsu General Ltd.),<br>06 April 2001 (06.04.2001),<br>entire text; all drawings<br>(Family: none) | 2-4 |
| Y | JP 8-211359 A  (Gunze Ltd.),<br>20 August 1996 (20.08.1996),<br>entire text; all drawings<br>(Family: none) | 2-4 |
| A | JP 2005-115364 A  (Toshiba Corp.),<br>28 April 2005 (28.04.2005),<br>fig. 21, 23, 28<br>& US 2005/0099689 A1    & KR 10-2005-0028860 A | 6-61 |
| A | JP 2003-158752 A  (Sanyo Electric Co., Ltd.),<br>30 May 2003 (30.05.2003),<br>fig. 2, 10<br>(Family: none) | 6-61 |

Form PCT/ISA/210 (continuation of second sheet) (April 2007)

# EP 2 312 375 A1

## INTERNATIONAL SEARCH REPORT

International application No.

PCT/JP2009/003350

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an
    extent that no meaningful international search can be carried out, specifically:

3. ☐ Claims Nos.:
    because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:

    See extra sheet.

1. ☒ As all required additional search fees were timely paid by the applicant, this international search report covers all searchable
    claims.

2. ☐ As all searchable claims could be searched without effort justifying additional fees, this Authority did not invite payment of
    additional fees.

3. ☐ As only some of the required additional search fees were timely paid by the applicant, this international search report covers
    only those claims for which fees were paid, specifically claims Nos.:

4. ☐ No required additional search fees were timely paid by the applicant.   Consequently, this international search report is
    restricted to the invention first mentioned in the claims; it is covered by claims Nos.:

**Remark on Protest**      ☐ The additional search fees were accompanied by the applicant's protest and, where applicable,
the                              payment of a protest fee.

                           ☐ The additional search fees were accompanied by the applicant's protest but the applicable protest
                             fee was not paid within the time limit specified in the invitation.

                           ☒ No protest accompanied the payment of additional search fees.

Form PCT/ISA/210 (continuation of first sheet (2)) (April 2007)

**INTERNATIONAL SEARCH REPORT**

International application No.

PCT/JP2009/003350

Continuation of Box No.III of continuation of first sheet(2)

A feature common to the inventions in claim 1 and claims 2-5 and 62-65 dependent on claim 1 and the inventions in claims 6 and 7 and claims 8-61 dependent on claims 6 and 7 is directed to that a parallax barrier is used in a naked eye three-dimensional video image display device and a system thereof.

Since a result of the search shows, however, that a parallax barrier used in a naked three-dimensional video image display device and a system thereof is disclosed in the document of JP 11-296124 A (U Efu Sangyo Kabushiki Kaisha), 29 October 1999 (29.10.1999), all the descriptions and all the drawings, it has become clear that the common feature is not novel.

As a result, since that a parallax barrier is used in a naked eye three-dimensional video image display device and a system thereof does not make any contributions over the prior art, the common feature is not the special technical feature in the meaning of PCT Rule 13.2, second sentence, and no technical relationships between the inventions in claims 1-5 and 62-65 and the inventions in claims 6-61 can be found in the meaning of PCT Rule 13, so that the International Searching Authority deems that the following two inventions are included in the application.

(Invention 1) The inventions in claims 1-5 and 62-65
The special technical feature is that a naked eye three-dimensional video image display system with a parallax barrier is further provided with a glass plate having a touch panel, and a naked eye three-dimensional video image display device is arranged inside the glass plate at a predetermined distance from the inside of the glass plate (a distance up to a properly viewable three-dimensional area—a predetermined distance required for the operation of the touch panel), so that a position apart at the distance required for the operation of the touch panel from the outside of the glass plate is in the properly viewable three-dimensional area.

(Invention 2) The inventions in claims 6-61
The special technical feature is a naked eye three-dimensional video image display device with a parallax barrier, in which a slit of the parallax barrier is composed of continuously connected elliptic arcs and a hole is composed of an elliptic arc-like shape or a shape of a convex polygon with even-numbered (6 or more) multiple angles.

Form PCT/ISA/210 (extra sheet) (April 2007)

**EP 2 312 375 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007230776 A
- JP 4023626 B
- JP 11296124 A
- JP 2004294861 A
- JP 11290520 A
- JP 2004313562 A
- JP 2007240559 A
- WO 3706385 A
- WO 3771252 A
- JP 4019114 B
- JP 4042065 B
- JP 2006234683 A
- JP 2008060280 A
- JP 2006140559 A
- JP 2007311646 A